# EUROPÄISCHE PATENTSCHRIFT

(11) **EP 0 538 785 B1**
(45) Veröffentlichungstag und Bekanntmachung des Hinweises auf die Patenterteilung: **09.04.1997**
(21) Anmeldenummer: 92117908.1
(22) Anmeldetag: 20.10.1992
(51) Int. Cl.: C09B 62/503

(54) **Wasserlösliche faserreaktive Farbstoffe, Verfahren zu ihrer Herstellung und ihre Verwendung**
Water-soluble fiber-reactive dyes, process for their preparation and their use
Colorants réactifs avec les fibres et solubles dans l'eau, procédé pour leur préparation et leur utilisation

(30) Priorität: 23.10.1991 DE 4134892
(43) Veröffentlichungstag der Anmeldung: 28.04.1993
(73) Patentinhaber: HOECHST AKTIENGESELLSCHAFT, 65926 Frankfurt am Main (DE)
(72) Erfinder: Beck, Thomas, Dr., W-6232 Bad Soden/Ts. (DE); Russ, Werner Hubert, Dr., W-6093 Flörsheim/M. (DE); Mühlig, Wilhelm, W-6230 Frankfurt/M. 80 (DE)

(56) Entgegenhaltungen:
- EP-A- 0 264 137
- EP-A- 0 377 166
- EP-A- 0 385 120

## Beschreibung

Die Erfindung liegt auf dem technischen Gebiet der faserreaktiven Farbstoffe.

Aus der US-Patentschrift Nr. 4 740 592, aus der Europäischen Patentanmeldungs-Veröffentlichung Nr. 0 377 166 und aus der japanischen Patent-Auslegung Sho-40-17113 sind faserreaktive Farbstoffe bekannt, die einen s-Triazinrest enthalten, an den eine faserreaktive Gruppe aus der Vinylsulfon-Reihe gebunden ist und dessen dritter Substituent eine gegebenenfalls substituierte Aminogruppe ist.

Die Praxis des Färbens mit Reaktivfarbstoffen hat in neuerer Zeit zu erhöhten Anforderungen an die Qualität der Färbungen und die Wirtschaftlichkeit des Färbeprozesses geführt. Infolgedessen besteht weiterhin ein Bedarf nach neuen Reaktivfarbstoffen, die verbesserte Eigenschaften, nicht nur in Bezug auf die Echtheiten, besitzen und insbesondere einen hohen Fixiergrad auf dem zu färbenden Material aufweisen und Färbungen mit hoher Farbstärke liefern. Des weiteren werden in zunehmendem Maße Farbstoffe verlangt, mit denen Druckmuster hoher Qualität in dem Ätz- und Reservedruck erhalten werden.

Beim Ätzdruck wird auf eine gefärbte Stoffbahn (Fond) in einem gewünschten Muster ein Ätzmittel aufgedruckt; das Ätzmittel zerstört den Farbstoff, sofern dieser ätzbar ist, sodaß nach Fertigstellung des Ätzverfahrens ein weißes Muster auf der Färbung erscheint (Weißätze). Enthält die aufgedruckte Ätze zusätzlich einen ätzestabilen Farbstoff, so erhält man nach Fertigstellung des Ätzvorganges und üblicher Behandlung zur Fixierung dieses beigegebenen Farbstoffes auf dem Fond ein Druckmuster in einem anderen Farbton (Buntätze).
Bei dem Reservedruck wird zunächst das Gewebe mit einem geeigneten Reservierungsmittel in einem gewünschten Muster bedruckt. Das so vorgedruckte Gewebe wird anschließend mit einem Farbstoff, dessen faserreaktive Gruppen sich mit dem Reservierungsmittel zu verbinden vermag und somit nicht mehr in der Lage ist, auf dem Gewebe zu fixieren, uberfärbt (überklotzt oder überdruckt) mit der Folge, daß an den reservierten Stellen keine Farbstoffixierung eintritt und somit die erhaltene Färbung (Druck) ein weißes Muster gemäß dem Muster des Reservierungsmittels besitzt.

Des weiteren werden in der europäischen Patentanmeldungs-Veröffentlichung Nr. 0 385 120 Triphendioxazinfarbstoffe beschrieben, die als faserreaktive Gruppierung einen Triazinylamino-Rest enthalten, der durch zwei weitere Aminogruppen substituiert ist, wobei mindestens einer dieser Aminogruppen über einen Alkylen-, Phenylen- oder Naphthylenrest gebunden eine faserreaktive Gruppe der Vinylsulfonreihe besitzt.

Mit der vorliegenden Erfindung wurden nunmehr neue, wasserlösliche Farbstoffe mit solchen guten Eigenschaften gefunden, die der nachstehenden allgemeinen Formel (1) entsprechen. 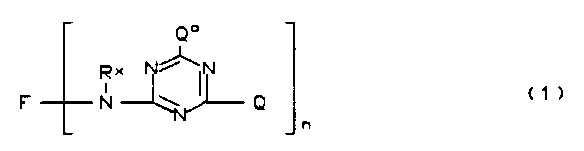 In Formel (1) bedeuten:
- F: ist der Rest eines Monoazo-, Disazo- oder Polyazofarbstoffes, oder eines davon abgeleiteten Schwermetallkomplex-Azofarbstoffes oder eines Anthrachinon-, Phthalocyanin-, Formazan-, Azomethin-, Dioxazin-, Phenazin-, Stilben-, Triphenylmethan-, Xanthen-, Thioxanthen-, Nitroaryl-, Naphthochinon-, Pyrenchinon- oder Perylentetracarbimid-Farbstoffes;
- R^{x}: ist ein Wasserstoffatom oder eine Alkylgruppe von 1 bis 4 C-Atomen, wie die Methyl- oder Ethylgruppe, die durch Halogen, wie Chlor und Brom, Hydroxy, Cyano, Alkoxy von 1 bis 4 C-Atomen, wie Methoxy und Ethoxy, Alkoxycarbonyl von 2 bis 5 C-Atomen, Carboxy, Sulfamoyl, Sulfo oder Sulfato substituiert sein kann, bevorzugt die Methyl- oder Ethylgruppe und insbesondere ein Wasserstoffatom;
- n: ist die Zahl 1 oder 2, bevorzugt 1;
- Q: ist eine Gruppe der allgemeinen Formel (2a) oder (2b) 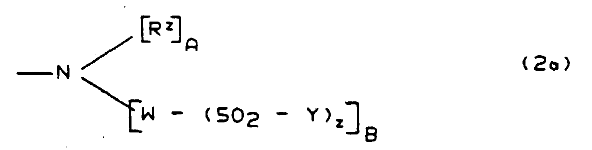 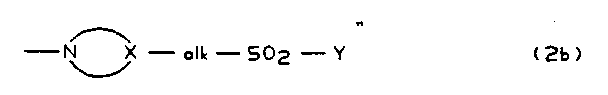 in welchen
R^{z} ein Wasserstoffatom oder eine Alkylgruppe von 1 bis 4 C-Atomen, wie insbesondere die Methyl- oder Ethylgruppe, ist, die durch Halogen, wie Chlor und Brom, Hydroxy, Cyano, Alkoxy von 1 bis 4 C-Atomen, wie Methoxy und Ethoxy, Carboxy, Sulfamoyl, Sulfo oder Sulfato oder durch einen gegebenenfalls durch Substituenten aus der Gruppe Halogen, wie Chlor und Brom, Alkoxy von 1 bis 4 C-Atomen, wie Methoxy und Ethoxy, Alkyl von 1 bis 4 C-Atomen, wie Methyl, Sulfo und Carboxy substituierten Phenylrest substituiert sein kann, oder ein Cyclohexylrest oder ein gegebenenfalls durch Substituenten aus der Gruppe Halogen, wie Chlor und Brom, Alkoxy von 1 bis 4 C-Atomen, wie Methoxy und Ethoxy, Alkyl von 1 bis 4 C-Atomen, wie Methyl, Sulfo und Carboxy substituierter Phenylrest ist,
W ein gegebenenfalls substituierter Arylenrest oder ein Alkylen-arylen- oder Arylen-alkylen- oder Alkylen-arylen-alkylen- oder Arylen-alkylen-arylen-Rest ist, wobei die Alkylenreste solche von 1 bis 8 C-Atomen, vorzugsweise von 2 bis 6 C-Atomen, insbesondere von 2 bis 4 C-Atomen, sind und substituiert sein können und die Arylenreste gegebenenfalls substituierte Phenylen- oder Naphthylenreste sind, und wobei die Alkylenreste durch 1 oder mehrere, wie 2 oder 3, Heterogruppen, wie Gruppen der Formeln -NH- , -N(R)- mit R gleich Alkyl von 1 bis 4 C-Atomen, das durch Sulfo, Sulfato, Carboxy oder Phosphato substituiert sein kann, -SO₂-, -CO- , -NH-SO₂- , -NH-CO- , -SO₂-NH- und -CO-NH- , unterbrochen sein können und die Alkylen- und Arylenanteile in den kombinierten Alkylen/Arylen-Resten jeweils durch eine solche Gruppe voneinander getrennt sein können,
Y die Vinylgruppe oder eine β-Sulfatoethyl-, β-Thiosulfatoethyl- oder β-Phosphatoethyl-Gruppe oder eine β-Alkanoyloxy-ethyl-Gruppe mit 2 bis 5 C-Atomen im Alkanoylrest, wie die β-Acetyloxyethyl-Gruppe, oder die β-Benzoyloxy-ethyl-, β-(Sulfobenzoyloxy)ethyl- oder die β-(p-Toluolsulfonyloxy)-ethyl-Gruppe oder eine β-Halogenethyl-Gruppe, wie die β-Bromethyl- oder β-Chlorethyl-Gruppe, bevorzugt die Vinylgruppe und insbesondere die β-Sulfatoethyl-Gruppe, ist,
z die Zahl 1 oder 2 ist,
A die Zahl Null oder 1 bedeutet und
B die Zahl 1 oder 2 bedeutet, wobei die Summe von (A + B) gleich der Zahl 2 ist und wobei im Falle von B gleich 2 die Gruppen der Formel -W-(SO₂-Y)_{z} zueinander die gleiche Bedeutung oder voneinander eine verschiedene Bedeutung haben können,
X zusammen mit dem N-Atom den bivalenten Rest eines aus 1 oder 2 Alkylengruppen von 1 bis 5 C-Atomen und gegebenenfalls 1 oder 2 Heterogruppen, wie Stickstoff- und Sauerstoffatomen oder einer Gruppe -NH- , bestehenden heterocyclischen Ringes bildet, wie beispielsweise den Piperazin-1,4-ylen- oder einen Piperidinylen-Rest, und
alk einen Alkylenrest von 1 bis 4 C-Atomen, bevorzugt von 2 oder 3 C-Atomen, wie den Ethylen- oder n-Propylen-Rest, bedeutet;
- Q^{o}: ist eine Gruppe der allgemeinen Formel (2A) 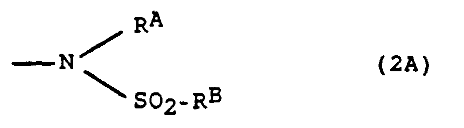 in welcher
R^{A} ein Wasserstoffatom oder eine Alkylgruppe von 1 bis 4 C-Atomen, wie die Methyl oder Ethylgruppe, ist, die substituiert sein kann, wie beispielsweise durch Halogen, wie Chlor und Brom, Hydroxy, Cyano, Alkoxy von 1 bis 4 C-Atomen, wie Methoxy und Ethoxy, Alkoxycarbonyl von 2 bis 5 C-Atomen, Carboxy, Sulfamoyl, Sulfo oder Sulfato, oder ein Arylrest, wie ein Naphthylrest oder Phenylrest, ist, der substituiert sein kann, wie beispielsweise durch Substituenten aus der Gruppe Halogen, wie Chlor und Brom, Alkoxy von 1 bis 4 C-Atomen, wie Methoxy und Ethoxy, Alkyl von 1 bis 4 C-Atomen, wie Methyl oder Ethyl, Sulfo und Carboxy, bevorzugt jedoch Methyl oder Ethyl und insbesondere bevorzugt Wasserstoff ist, und
R^{B} ein gegebenenfalls substituierter Aryl-, Alkylenaryl-, Arylen-alkyl-, Alkylen-arylen-alkyl- oder Arylen-alkylen-aryl-Rest ist, wobei die gegebenenfalls substituierten Alkylenreste solche von 1 bis 8 C-Atomen, vorzugsweise von 2 bis 6 C-Atomen, insbesondere von 2 bis 4 C-Atomen, sind, die gegebenenfalls substituierten Alkylreste solche von 1 bis 6 C-Atomen, vorzugsweise von 1 bis 4 C-Atomen, insbesondere Methyl oder Ethyl, sind und die Arylenreste bzw. Arylreste gegebenenfalls substituierte Phenylen- oder Naphthylen- bzw. Phenyl- oder Naphthylreste sind, und wobei die Alkylenreste oder Alkylreste durch 1 oder mehrere, wie 2 oder 3, Heterogruppen, wie Gruppen der Formeln -NH- , -N(R)- mit R gleich Alkyl von 1 bis 4 C-Atomen, das durch Sulfo, Sulfato, Carboxy oder Phosphato substituiert sein kann, -O- , -S- , -SO₂- , -CO- , -NH-SO₂- , -NH-CO- , -SO₂-NH- und -CO-NH- , bevorzugt hiervon Amino oder Sauerstoff, unterbrochen sein können und wobei die Alkylen- bzw. Alkyl- und Arylen- bzw. Arylanteile in den kombinierten Alkyl(en)/Aryl(en)-Resten jeweils durch eine solche Heterogruppe voneinander getrennt sein können, oder R^{B} eine Aminogruppe der allgemeinen Formel -NR^{C}R^{D} ist, in welcher R^{C} und R^{D}, unabhängig voneinander, jedes Wasserstoff oder Alkyl von 1 bis 4 C-Atomen ist, das durch Sulfo, Carboxy, Sulfato, Phenyl, Cyano, Nitro, Chlor oder Brom substituiert sein kann, oder ein gegebenenfalls durch 1 bis 3 Methylgruppen substituierter Cycloalkylrest von 5 bis 8 C-Atomen ist, wie beispielsweise Cyclopentylen und Cyclohexylen, oder ein gegebenenfalls durch 1 bis 3 Sulfogruppen substituierter Naphthylrest oder ein Phenylrest ist, der durch 1 bis 3 Substituenten, bevorzugt 1 oder 2 Substituenten, substituiert sein kann, die aus der Gruppe der Substituenten Alkyl von 1 bis 4 C-Atomen, wie Methyl und Ethyl, Alkoxy von 1 bis 4 C-Atomen, wie Methoxy und Ethoxy, Halogen, wie Chlor und Brom, Carboxy, Nitro und Sulfo ausgewählt sind.

Bevorzugt ist F der Rest eines Mono- oder Disazofarbstoffes oder der Rest eines Metallkomplex-Azofarbstoffes, wie eines o,o'-1:1-Kupferkomplex-Mono oder -Disazofarbstoffes, oder eines Triphendioxazin- oder eines Anthrachinon-, Kupferformazan- oder eines Phthalocyaninfarbstoffes, wie eines Nickel- oder Kupferphthalocyaninfarbstoffes.

Der Rest F kann in seinem Grundgerüst die bei organischen Farbstoffen üblichen Substituenten, einschließlich faserreaktive Gruppen, wie beispielsweise solche der oben definierten Formel -SO₂-Y , gebunden enthalten. Solche Substituenten sind beispielsweise: Alkylgruppen von 1 bis 4 C-Atomen, wie Methyl, Ethyl, Propyl, Isopropyl oder Butyl, hiervon bevorzugt Ethyl und insbesondere Methyl; Alkoxygruppen von 1 bis 4 C-Atomen, wie Methoxy, Ethoxy, Propoxy, Isopropoxy und Butoxy, bevorzugt hiervon Ethoxy und insbesondere Methoxy; Acylaminogruppen von 2 bis 8 C-Atomen, wie die Acetylamino-, Propionylamino- oder Benzoylaminogruppe; primäre und mono- oder disubstituierte Aminogruppen, wie beispielsweise durch Alkylgruppen von 1 bis 4 C-Atomen und/oder Phenylgruppen, wie Monoalkylamino- und Dialkylaminogruppen mit 1 bis 4 C-Atomen im Alkylrest, Phenylamino- oder N-(C₁-C₄-Alkyl)-N-phenyl-amino-Gruppen, wobei die Alkylreste noch substituiert sein können, beispielsweise durch Phenyl, Sulfophenyl, Hydroxy, Sulfato, Sulfo und Carboxy, und die Phenylgruppen noch subsituiert sein können, wie durch Chlor, Sulfo, Carboxy, Methyl und/oder Methoxy, so beispielsweise Methylamino-, Ethylamino-, Propylamino-, Isopropylamino-, Butylamino-, N,N-Di-(β-hydroxyethyl)-amino-, N,N-Di-(β-sulfatoethyl)-amino-, Sulfobenzylamino-, N,N-Di-(sulfobenzyl)-amino- und Diethylaminogruppen sowie Phenylamino- und Sulfophenylaminogruppen; Alkoxycarbonylgruppen mit einem Alkylrest von 1 bis 4 C-Atomen, wie Methoxycarbonyl und Ethoxycarbonyl; Alkylsulfonylgruppen von 1 bis 4 C-Atomen, wie Methylsulfonyl und Ethylsulfonyl; Trifluormethyl-, Nitro- und Cyanogruppen; Halogenatome, wie Fluor, Chlor und Brom; Carbamoylgruppen, die durch Alkyl von 1 bis 4 C-Atomen mono- und disubstituiert sein können, wobei die Alkylreste wiederum substituiert sein können, wie beispielsweise durch Hydroxy, Sulfato, Sulfo, Carboxy, Phenyl und Sulfophenyl, wie beispielsweise N-Methyl-carbamoyl und N-Ethyl-carbamoyl; Sulfamoylgruppen, die durch Alkylgruppen von 1 bis 4 C-Atomen mono- oder disubstituiert sein können, und N-Phenyl-N-alkylsulfamoylgruppen mit einer Alkylgruppe von 1 bis 4 C-Atomen, wobei diese Alkylgruppen wiederum durch Hydroxy, Sulfato, Sulfo, Carboxy, Phenyl und Sulfophenyl substituiert sein können, wie beispielsweise N-Methyl-sulfamoyl, N-Ethylsulfamoyl, N-Propyl-sulfamoyl, N-Isopropyl-sulfamoyl, N-Butyl-sulfamoyl, N-(β-Hydroxyethyl)-sulfamoyl und N,N-Di-(β-hydroxyethyl)-sulfamoyl; N-Phenyl-sulfamoyl-, Ureido-, Hydroxy-, Carboxy-, Sulfomethyl- und Sulfogruppen; β-Sulfatoethylsulfonyl-, β-Thiosulfatoethylsulfonyl-, β-Phosphatoethylsulfonyl-, β-Acetyloxiethylsulfonyl-, β-Chlorethylsulfonyl- und Vinylsulfonylgruppen.

Vorzugsweise ist der Farbstoffrest F durch eine oder mehrere, wie 2 bis 4, Sulfogruppen substituiert, und weiterhin kann er bevorzugt Substituenten enthalten, die aus der Gruppe Sulfo, Methyl, Ethyl, Methoxy, Ethoxy, Alkanoylamino von 2 bis 5 C-Atomen, wie Acetylamino, Benzoylamino, Amino, Chlor, Brom, Ureido, Hydroxy, Carboxy und Sulfomethyl ausgewählt sind.

Der Farbstoffrest F kann auch andere, aus der Literatur bekannte faserreaktive Gruppen besitzen, die nicht der Konstitution der allgemeinen Formel (3) 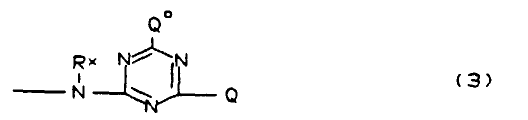 in welcher R^{x}, Q und Q^{o} die obengenannten Bedeutungen haben, entsprechen. Solche bekannten faserreaktiven Gruppen sind beispielsweise eine Gruppe der Vinylsulfonreihe, wie die oben bereits erwähnte Gruppe der Formel -SO₂-Y mit Y der obigen Bedeutung, die über einen Alkylenrest von 1 bis 4 C-Atomen, wie eine Methylengruppe, oder über eine Methylamino- oder Ethylaminogruppe an F gebunden sein kann, oder ein niedrigmolekularer, durch ein abspaltbares Atom oder eine abspaltbare Gruppe substituierter Alkenoylamino- oder Alkensulfonylamino-Rest oder ein durch ein abspaltbares Atom oder eine abspaltbare Gruppe substituierter carbocyclischer, carbocyclisch-heterocyclischer oder heterocyclischer Rest, die über eine Carbonylamino- oder Sulfonylamino-Gruppe an den Rest F gebunden sind, wobei die heterocyclischen Anteile dieser Reste vier-, fünf- oder sechs-gliedrig sind, oder ein über eine Amino-, Methylamino- oder Ethylamino-Gruppe an den Rest F gebundener, durch ein abspaltbares Atom oder eine abspaltbare Gruppe substituierter Triazinyl- oder Pyrimidinyl-Rest. Solche Reste sind beispielsweise ein über eine Amino-, Methylamino- oder Ethylamino-Gruppe gebundener halogensubstituierter sechsgliedriger heterocyclischer Rest, wie beispielsweise ein Halogentriazinyl- oder Halogenpyrimidinyl-Rest, oder sind aliphatische Acylaminoreste, wie ein Halogenacetylamino- oder Halogenpropionylamino-Rest.

Formelreste R^{x} sind beispielsweise: Wasserstoff, Methyl, Ethyl, Propyl, Isopropyl, Butyl, Isobutyl, sek.-Butyl, tert.-Butyl, Carboxymethyl, β-Carboxyethyl, β-Carboxypropyl, Methoxycarbonylmethyl, Ethoxycarbonylmethyl, β-Methoxyethyl, β-Ethoxyethyl, β-Methoxypropyl, β-Chlorethyl, γ-Brompropyl, β-Hydroxyethyl, β-Hydroxybutyl, β-Cyanoethyl, Sulfomethyl, β-Sulfoethyl, Amidosulfonylmethyl und β-Sulfatoethyl.

Formelreste R^{z} sind beispielsweise: Wasserstoff, Methyl, Ethyl, Carboxymethyl, Carbomethoxymethyl, Carbethoxymethyl, Sulfomethyl, Sulfamidomethyl, β-Carboxyethyl, β-Sulfoethyl, n-Propyl, β-Carboxypropyl, β-Sulfatoethyl, β-Ethoxyethyl, β-Methoxypropyl, γ-Chlorpropyl, γ-Brompropyl, n-Butyl, Isobutyl, n-Pentyl, n-Hexyl, n-Nonyl, n-Dodecyl, n-Hexadecyl, n-Pentadecyl, Cyclohexyl, Phenyl, 2-Chlorphenyl, 3-Chlorphenyl, 4-Chlorphenyl, 2- oder 3- oder 4-Sulfophenyl, 2-Methyl-phenyl, 4-Methoxy-phenyl, 3-Methyl-phenyl und 4-Ethyl-phenyl. Hiervon bevorzugt sind die gegebenenfalls substituierten Alkylgruppen und insbesondere bevorzugt die Methyl- und die Ethylgruppe und das Wasserstoffatom.

Beispiele für Gruppen der allgemeinen Formel (2a) und (2b) sind beispielsweise: 2-(β-Sulfatoethylsulfonyl)-phenyl-amino, 3-(β-Sulfatoethylsulfonyl)-phenyl-amino, 4-(β-Sulfatoethylsulfonyl)-phenyl-amino, 2-Carboxy-5-(β-sulfatoethylsulfonyl)-phenyl-amino, 2-chlor-3-(β-Sulfatoethylsulfonyl)-phenyl-amino, 2-chlor-4-(β-sulfatoethylsulfonyl)-phenyl-amino, 2-Ethoxy-4- oder -5-(β-sulfatoethylsulfonyl)-phenyl-amino, 2-Ethyl-4-(β-sulfatoethylsulfonyl)-phenyl-amino, 2-Methoxy-5-(β-sulfatoethylsulfonyl)-phenyl-amino, 2,4-Diethoxy-5-(β-sulfatoethylsulfonyl)-phenyl-amino, 2,4-Dimethoxy-5-(β-sulfatoethylsulfonyl)-phenyl-amino, 2,5-Dimethoxy-4-(β-sulfatoethylsulfonyl)-phenyl-amino, 2-Methoxy-5-methyl-4-(β-sulfatoethylsulfonyl)-phenyl-amino, 2- oder 3- oder 4-(β-Thiosulfatoethylsulfonyl)-phenyl-amino, 2-Methoxy-5-(β-thiosulfatoethylsulfonyl)-phenyl-amino, 2-Sulfo-4-(β-phosphatoethylsulfonyl)-phenyl-amino, 2-Sulfo-4-vinylsulfonyl-phenyl-amino, 2-Hydroxy-4- oder -5-(β-sulfatoethylsulfonyl)-phenyl-amino, 2-Chlor-4- oder -5-(β-chlorethylsulfonyl)-phenyl- amino, 2-Hydroxy-3-sulfo-5-(β-sulfatoethylsulfonyl)-phenyl-amino, 3- oder 4-(β-Acetoxyethylsulfonyl)-phenyl-amino, 2-Methoxy-4-[β-(N-methyl-tauryl)-ethylsulfonyl]-phenyl-amino, 5-(β-Sulfatoethylsulfonyl)naphth-2-yl-amino, 6- oder 7- oder 8-(β-Sulfatoethylsulfonyl)-naphth-2-yl-amino, 6-(β-Sulfatoethylsulfonyl)-1-sulfo-naphth-2-yl-amino, 5-(β-Sulfatoethylsulfonyl)-1-sulfo-naphth-2-yl-amino, 8-(β-Sulfatoethylsulfonyl)-6-sulfo-naphth-2-yl-amino, β-[4-(β'-Sulfatoethylsulfonyl)-phen]-ethylamino, β-[2-Sulfo-4-(β'-sulfatoethylsulfonyl)-phen]-ethylamino, β-(β'-Chlorethylsulfonyl)-ethylamino, β-(β'-Sulfatoethylsulfonyl)-ethylamino, β-(Vinylsulfonyl)-ethylamino, γ-(β'-Chlorethylsulfonyl)-propylamino, γ-(β'-Sulfatoethylsulfonyl)-propylamino, γ-(β'-Bromethylsulfonyl)propylamino, γ-(Vinylsulfonyl)-propylamino, 1-Methyl-1-(β-sulfatoethylsulfonyl)-1-ethylamino, δ-(β'-Sulfatoethylsulfonyl)-butylamino, 2-Methyl-2-(β-chlorethylsulfonyl)-1-propylamino, ω-(β'-Chlorethylsulfonyl)pentylamino, β-(β'-Chlorethylsulfonyl)-n-hexylamino, N-Methyl-N-[β-(β'-chlorethylsulfonyl)-ethyl]-amino, N-Ethyl-N-[β-(β'-chlorethylsulfonyl)-ethyl]-amino, N-n-Propyl-N-[β-(β'-chlorethylsulfonyl)-ethyl]-amino, N-n-Butyl-N-[β-(β'-chlorethylsulfonyl)-ethyl]-amino, N-n-Pentyl-N-[β-(β'-chlorethylsulfonyl)-ethyl]-amino, N-n-Hexyl-N-[β-(β'-chlorethylsulfonyl)-ethyl]-amino, N-n-Nonyl-N -[β-(β'-chlorethylsulfonyl)-ethyl]-amino, N-n-Dodecyl-N-[β-(β'-chlorethylsulfonyl)-ethyl]-amino, N-n-Hexadecyl-N-[β-(β'-chlorethylsulfonyl)-ethyl]-amino, N-n-Octadecyl-N-[β-(β'-chlorethylsulfonyl)-ethyl]-amino, N-Carboxymethyl-N-[β-(β'-bromethylsulfonyl)-ethyl]-amino, N-Sulfatomethyl-N-[β-(β'-chlorethylsulfonyl)-ethyl]-amino, N- (β-Carboxyethyl)-N-[γ'-(β"-chlorethylsulfonyl)-propyl]amino, N-(β-Sulfatoethyl)-N-[γ'-(β"-chlorethylsulfonyl)-propyl]-amino, N-(β-Sulfatoethyl)-N-[δ'-(β"-chlorethylsulfonyl)-butyl]-amino, N-(β-Ethoxyethyl)-N-[δ'-(β"-chlorethylsulfonyl)-butyl]-amino, N-(γ-Chlorpropyl)-N-[β'-(β"-chlorethylsulfonyl)-ethyl]-amino, N-Phenyl-N-[β-(β'-chlorethylsulfonyl)-ethyl]-amino, N-(4-Chlorphenyl)-N-[β-(β'-chlorethylsulfonyl)-ethyl]-amino, N-(2-Methylphenyl)-N-[β-(β'-chlorethylsulfonyl)-ethyl]-amino, N-(4-Methoxyphenyl)-N-[β-(β'-chlorethylsulfonyl)-ethyl]-amino, N-(3-Sulfophenyl)-N-[β-(β'-chlorethylsulfonyl)-ethyl]-amino, N-(4-Sulfophenyl)-N-[β-(β'-chlorethylsulfonyl)-ethyl]-amino, Bis-[β-(β'-chlorethylsulfonyl)-ethyl]-amino, Bis-[β-(β'-bromethylsulfonyl)-ethyl]-amino, Bis-[γ-(β'-chlorethylsulfonyl)-propyl]-amino, Bis-[δ-(β'-chlorethylsulfonyl)-butyl]-amino, Bis-(β-vinylsulfonyl-ethyl)-amino, N-(β-Cyanoethyl)-N- [γ'-(β"-chlorethylsulfonyl)-propyl]-amino, β-[β'-(β"-Chlorethylsulfonyl)-ethylamino]-ethylamino, β-[β'-(β"-Sulfatoethylsulfonyl)-ethylamino]-ethylamino, β-[β'-(β"-Chlorethylsulfonyl)-ethoxy]-ethylamino, β-[β'-(β"-Sulfatoethylsulfonyl)-ethoxy]-ethylamino, 4-[β-(β'-Chlorethylsulfonyl)-ethyl]-piperazin-1-yl, 4-[γ-(β'-Chlorethylsulfonyl)-propyl]-piperazin-1-yl, 4-[β-(β'-Sulfatoethylsulfonyl)-ethyl]-piperazin-1-yl, 4-[γ-(β'-Sulfatoethylsulfonyl)-propyl]-piperazin-1-yl, 4-{N-[β-(4'-β'-Sulfatoethylsulfonyl-phenyl)-ethyl]-amidocarbonyl-methoxy}-phenylamino, 4-{N-[3'- oder -4'-(β-Sulfatoethylsulfonyl)-phenyl]-amidocarbonyl-methoxy}-phenylamino, 3,4-Di-(β-sulfatoethylsulfonyl)-phenylamino, 2,5-Di-(β-sulfatoethylsulfonyl)-phenylamino, 4-[γ-(β'-Sulfatoethylsulfonyl)-propoxy]-phenylamino, 2,5-Bis-[(β-sulfatoethylsulfonyl)-methyl]-phenylamino, 3- oder 4-{N-[γ-(β'-Sulfatoethylsulfonyl)-propyl-amidocarbonyl]}-phenylamino,3,5-Bis-{N-[γ-(β'-sulfatoethylsulfonyl)-propyl-amidocarbonyl]}-phenylamino, 3-Sulfo-4-{[N-γ-(β'-sulfatoethylsulfonyl)-propyl-amidocarbonyl]-methoxy}phenylamino, 4-{[N-γ-(β'-Sulfatoethylsulfonyl)-propyl-amidocarbonyl]-methoxy}-phenylamino.

In dem Brückenglied W und im Rest R^{B} sind Arylenreste bevorzugt Phenylen- und Naphthylenreste, die einen oder mehrere, wie 1, 2 oder 3, bevorzugt 1 oder 2, Substituenten enthalten können, die beispielsweise der Gruppe der Substituenten Alkyl von 1 bis 4 C-Atomen, wie Methyl und Ethyl, Halogen, wie Fluor, Chlor und Brom, Hydroxy, Cyano, Alkoxy von 1 bis 4 C-Atomen, wie Methoxy und Ethoxy, Carboxy, Sulfamoyl, Sulfo, Trifluormethyl und Alkoxycarbonyl von 2 bis 5 C-Atomen, wie Methoxycarbonyl und Ethoxycarbonyl, angehören. Bevorzugt ist hiervon W ein Phenylenrest, der durch die oben angegebenen Substituenten substituiert sein kann, wobei die Substituenten aus der Gruppe Alkyl von 1 bis 4 C-Atomen, Chlor, Alkoxy von 1 bis 4 C-Atomen, Carboxy und Sulfo bevorzugt sind.

Ist in Formel (2A) der Rest R^{B} ein gegebenenfalls substituierter Arylrest, so ist dieser bevorzugt ein Phenylrest, der durch 1 bis 3 Substituenten, bevorzugt 1 oder 2 Substituenten substituiert sein kann, wobei diese der Gruppe der Substituenten Alkyl von 1 bis 4 C-Atomen, wie Methyl und Ethyl, Alkoxy von 1 bis 4 C-Atomen, wie Methoxy und Ethoxy, Halogen, wie Chlor und Brom, Carboxy, Nitro und Sulfo angehören.

Alkylenreste in den Formelresten W und R^{B} sind bevorzugt geradkettige und verzweigte Alkylengruppen von 2 bis 6 C-Atomen, die durch die angegebenen Heterogruppen, wie 1 oder 2 dieser Heterogruppen, unterbrochen sein können. Bevorzugt hiervon sind geradkettige Alkylengruppen von 2 bis 4 C-Atomen oder eine durch ein Sauerstoffatom oder eine Amino- oder Methylamino-Gruppe unterbrochene Butylengruppe. Insbesondere bevorzugt ist von den Alkylengruppen der 1,3-Propylen-Rest. Substituenten in den Alkylengruppen von W können beispielsweise Sulfo-, Carboxy-, Hydroxy- und Cyanogruppen sein.

Ist der Formelrest R^{B} ein Alkylrest, so ist dieser bevorzugt die Methylgruppe oder die Ethylgruppe. Die Ethylgruppe kann bevorzugt durch Sulfo, Hydroxy, Sulfato, Cyano, Nitro, Carboxy, Chlor oder Brom substituiert sein.

Ist der Formelrest W ein aus Alkylen- und Arylenresten kombinierter Rest und der Rest R^{B} ein aus Alkylen- und/oder Arylresten mit einem Alkyl- bzw. Arylrest kombinierter Rest, so ist in diesen Gruppen der Alkylenrest bevorzugt ein geradkettiger Alkylenrest von 1 bis 3 C-Atomen und der Arylenrest bevorzugt ein 1,3- oder insbesondere 1,4-Phenylenrest. Alkylen-arylen-Reste sind insbesondere die Reste der Formeln -CH₂-CH₂-phenylen- und -CH₂-phenylen- .

Die faserreaktive Gruppierung der Formel (3) ist bevorzugt ein Rest der allgemeinen Formel (3a) oder insbesondere bevorzugt ein Rest der allgemeinen Formel (3b) 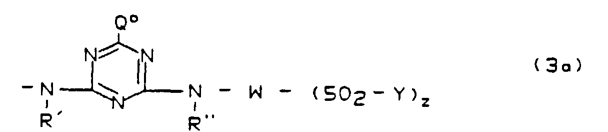 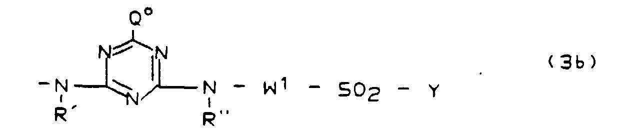 wobei in Formel (3a) R' die Methyl- oder Ethylgruppe oder insbesondere ein Wasserstoffatom bedeutet, R'' ein Wasserstoffatom oder die Methyl- oder Ethylgruppe bedeutet und W, Q^{o}, Y und z eine der obengenannten, insbesondere bevorzugten Bedeutungen besitzen, und in Formel (3b) R' die Methyl- oder Ethylgruppe oder insbesondere ein Wasserstoffatom bedeutet, R'' die Methylgruppe oder insbesondere ein Wasserstoffatom ist, Q^{o} und Y eine der obengenannten insbesondere bevorzugten Bedeutungen besitzen und W¹ eine Alkylengruppe von 2 bis 4 C-Atomen, bevorzugt von 2 oder insbesondere von 3 C-Atomen, bedeutet oder ein Phenylenrest ist, der durch 1 oder 2 Substituenten aus der Gruppe Methyl, Methoxy, Ethoxy und Chlor substituiert sein kann, bevorzugt hiervon der 1,3- oder 1,4-Phenylenrest ist, oder eine Gruppe der allgemeinen Formel (a)

-(CH₂)_{w}-phenylen- (a)

bedeutet, in welcher w die Zahl 1, 2, 3 oder 4, bevorzugt 2, ist und phenylen den 1,3- oder 1,4-Phenylenrest bedeutet.

In den Formeln (3a) und (3b) ist Q^{o} bevorzugt der Methylsulfonamido-, Ethylsulfonamido-, Propylsulfonamido-, Butylsulfonamido- oder Phenylsulfonamido-Rest.

Wichtige Azofarbstoffe entsprechend der allgemeinen Formel (1) sind solche, in denen F einen Rest eines Farbstoffes der Benzol-azo-naphthol-, der Benzol-azo-1-phenyl-5-pyrazolon-, der Benzol-azo-benzol-, der Naphthalin-azo-benzol-, der Benzol-azo-aminonaphthalin-, der Naphthalinazo-naphthalin-, der Naphthalin-azo-1-phenyl-5-pyrazolon-, der Benzol-azo-pyridon- und der Naphthalin-azo-pyridon-Reihe bedeutet, wobei auch hier die sulfogruppenhaltigen Farbstoffe bevorzugt sind.

Von den erfindungsgemäßen 1:1-Kupferkomplex-Azofarbstoffen, sind diejenigen der Benzol- und Naphthalinreihe bevorzugt.

Bevorzugte Mono- und Disazofarbstoffe der allgemeinen Formel (1) sind beispielsweise solche der allgemeinen Formeln (4a), (4b) und (4c)

D₁ - N = N(̵E - N = N)ᵥ -K-Z (4a)

Z-D₁-N = N(̵E -N = N)ᵥ -K (4b)

Z-D₁ - N = N (̵E - N = N)ᵥ - K - Z (4c)

und die davon abgeleiteten Schwermetallkomplex-Verbindungen, wie 1:1-Kupferkomplex-Verbindungen,
in welchen
- D₁: der Rest einer Diazokomponente der Benzol- oder Naphthalinreihe ist,
- E: der Rest einer Mittelkomponente der Benzol- oder Naphthalinreihe bedeutet,
- K: der Rest einer Kupplungskomponente der Benzol-, Naphthalin-, Pyrazolon-, 6-Hydroxypyridon(2)- oder Acetessigsäurearylamid-Reihe ist,
wobei D₁, E und K für Azofarbstoffe übliche Substituenten, wie beispielsweise Hydroxy-, Amino-, Methyl-, Methoxy-, Ethoxy-, Sulfo-, Carboxy-, gegebenenfalls substituierte Alkanoylaminogruppen von 2 bis 4 C-Atomen im Alkanoylrest, gegebenenfalls substituierte Benzoylaminogruppen und Halogenatome, wie Brom- und Chloratome, enthalten können und D₁, E und K zusammen mindestens zwei Sulfogruppen, vorzugsweise drei oder vier Sulfogruppen, besitzen,
- v: für die Zahl Null oder 1 steht und
- Z: eine Gruppe der Formel (3) oder bevorzugt der Formel (3a) oder (3b) ist.

Bevorzugt sind weiterhin Disazofarbstoffe der allgemeinen Formel (4d) oder (4e)

D₁ - N = N - K^{o} - N = N - D₂ - Z (4d)

Z - D₁ - N = N - K^{o} - N = N - D₂ - Z (4e)

in welchen D₁ und D₂ unabhängig voneinander den Rest einer Diazokomponente der Benzol- oder Naphthalinreihe und K^{o} den Rest einer bivalenten Kupplungskomponente der Naphthalinreihe darstellt, wobei D₁, D₂ und K^{o} die für Azofarbstoffe üblichen Substituenten, wie die oben bereits erwähnten, tragen können, wobei D₁, D₂ und K^{o} zusammen mindestens zwei Sulfogruppen, vorzugsweise drei oder vier Sulfogruppen, enthalten.

Solche Azofarbstoffe der allgemeinen Formel (1) sind insbesondere Farbstoffe der allgemeinen Formeln (4f), (4g) und (4h) 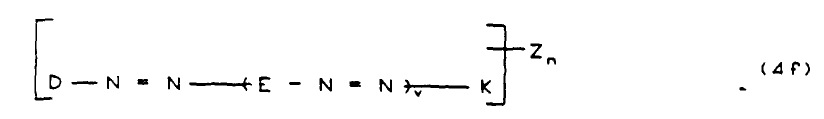 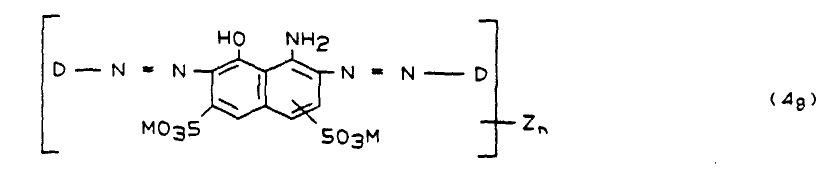 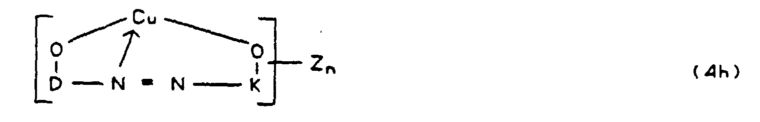 in welchen
- D: jeweils für den Rest einer Diazokomponente steht, die zueinander gleiche oder voneinander verschiedene Bedeutungen besitzen können, wie beispielsweise einen Rest D₁ obiger Bedeutung darstellt,
- E: den bivalenten Rest einer kupplungsfähigen und diazotierbaren Verbindung, beispielsweise obiger Bedeutung, ist,
- K: den Rest einer Kupplungskomponente, beispielsweise obiger Bedeutung, darstellt,
- v: für die Zahl Null oder 1 steht,
- Z: einen Rest der allgemeinen Formel (3) oder (3a) oder (3b) bedeutet,
- n: die Zahl 1 oder 2, bevorzugt 1, ist und der Rest Z an den Rest D oder den Rest K oder im Falle von n = 2 jeweils an D und K bzw. an beide D gebunden ist sowie
- M: ein Wasserstoffatom oder ein Alkalimetall, wie Natrium, Kalium oder Lithium, ist.

In allen obigen und nachstehenden Formeln können die einzelnen Formelglieder, sowohl verschiedener als auch gleicher Bezeichnung innerhalb einer allgemeinen Formel, im Rahmen ihrer Bedeutung zueinander gleiche und voneinander verschiedene Bedeutungen haben.

Die Gruppen "Sulfo", "Carboxy", "Phosphato", "Thiosulfato" und "Sulfato" schließen sowohl deren Säureform als auch deren Salzform ein. Demgemäß bedeuten Sulfogruppen Gruppen entsprechend der allgemeinen Formel -SO₃M , Carboxygruppen Gruppen entsprechend der allgemeinen Formel -COOM , Phosphatogruppen Gruppen entsprechend der allgemeinen Formel -OPO₃M₂, Thiosulfatogruppen Gruppen entsprechend der allgemeinen Formel -S-SO₃M und Sulfatogruppen Gruppen entsprechend der allgemeinen Formel -OSO₃M, jeweils mit M der obengenannten Bedeutung.

Die vorliegende Erfindung betrifft weiterhin Verfahren zur Herstellung der erfindungsgemäßen Farbstoffe der allgemeinen Formel (1). Sie lassen sich in an und für sich üblicher Weise analog bekannten, für die jeweilige Farbstoffklasse spezifischen Synthesewegen herstellen, indem man für den jeweiligen Farbstoff typische Vorprodukte, von denen mindestens eines eine Gruppe der allgemeinen Formel (3) enthält, miteinander umsetzt oder indem man von einer aminogruppenhaltigen Ausgangsverbindung der allgemeinen Formel (60) 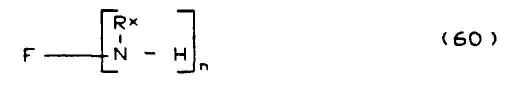 in welcher F, R^{x} und n die obengenannten Bedeutungen haben, ausgeht und diese mit einem Trihalogen-s-triazin der allgemeinen Formel (61) 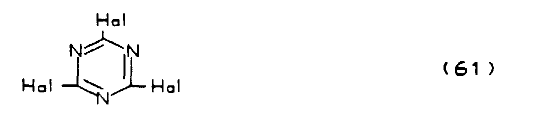 in welcher Hal für ein Halogenatom, wie insbesondere Chlor- oder Fluoratom, steht, mit einem Sulfonamid der allgemeinen Formel H-Q^{o} mit Q^{o} der obengenannten Bedeutung oder einem Alkalimetallsalz davon und mit einem Amin der allgemeinen Formel H-Q mit Q der obengenannten Bedeutung in stöchometrischen Mengen in beliebiger Reihenfolge miteinander umsetzt und gegebenenfalls anschließend weitere, dem Fachmann geläufige, erforderliche Umwandlungsreaktionen durchführt.

Insbesondere lassen sich die erfindungemäßen Farbstoffe erfindungsgemäß herstellen, indem man eine Verbindung entsprechend der allgemeinen Formel (62) 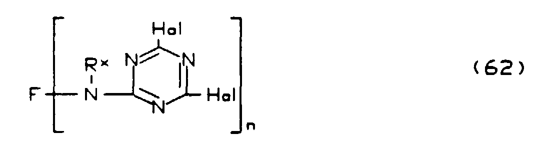 in welcher F, R^{x} und n die obengenannten Bedeutungen haben und Hal für ein Halogenatom, wie insbesondere ein Chlor- oder Fluoratom, steht, mit einer Verbindung H-Q^{o} der obengenannten Bedeutung oder einem Alkalimetallsalz davon umsetzt und die so erhaltene Verbindung der allgemeinen Formel (63) 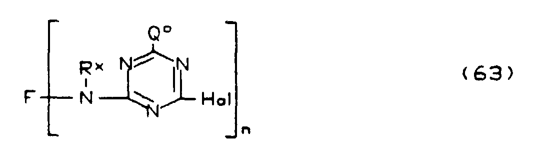 in welcher F, Q^{o}, R^{x} und Hal die obengenannten Bedeutungen haben, mit einem Amin der allgemeinen Formel H-Q mit Q der obengenannten Bedeutung umsetzt,
oder daß man eine Verbindung der allgemeinen Formel (64) 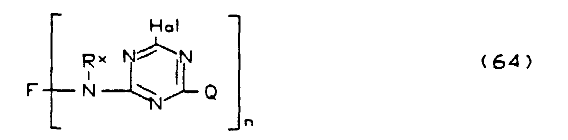 in welcher F, R^{x}, Hal, Q und n die obengenannten Bedeutungen haben, mit einer Verbindung H-Q^{o} der obengenannten Bedeutung oder einem Alkalimetallsalz davon umsetzt,
oder daß man eine Verbindung der allgemeinen Formel (60) mit einer Verbindung der allgemeinen Formel (65) 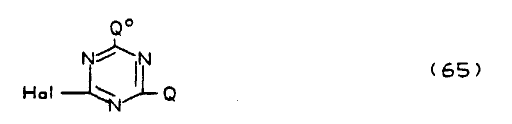 mit Hal, Q^{o} und Q der obengenannten Bedeutung umsetzt.

Die Umsetzung einer Ausgangsverbindung der allgemeinen Formel (63) mit dem Amin der allgemeinen Formel H-Q erfolgt im wäßrigen oder wäßrig-organischen Medium in Suspension oder Lösung bei einer Temperatur zwischen 30 und 100°C, vorzugsweise zwischen 65 und 85°C, und bei einem pH-Wert zwischen 3 und 7, vorzugsweise zwischen 3,0 und 4. Führt man die Umsetzung in einem wäßrig-organischem Medium durch, so ist das organische Medium beispielsweise Aceton, Dimethylformamid und N-Methyl-pyrrolidon. Vorteilhaft wird der bei der Kondensation freiwerdende Halogenwasserstoff laufend durch Zugabe wäßriger Alkalihydroxide, -carbonate oder -bicarbonate neutralisiert.

Die Umsetzung der Verbindung der Formel (60) mit der Verbindung der allgemeinen Formel (65) erfolgt vorzugsweise bei einer Temperatur zwischen 25 und 90°C, insbesondere zwischen 45 und 75°C, und bei-einem pH-Wert zwischen 3 und 8, insbesondere zwischen 3,5 und 6,5.

Die Umsetzung einer Ausgangsverbindung der allgemeinen Formel (62) mit einem Amin der allgemeinen Formel H-Q erfolgt ebenfalls wie die Umsetzung der Verbindung (63) mit dem Amin H-Q im wäßrigen oder wäßrig-organischen Medium in Suspension oder Lösung, wobei hier eine Temperatur zwischen 15 und 70°C, vorzugsweise zwischen 25 und 45°C, und ein pH-Wert zwischen 3 und 11,5, bevorzugt zwischen 3,5 und 7, eingehalten wird.

Verbindungen der allgemeinen Formel (63) lassen sich außer der Umsetzung einer Verbindung der Formel (62) mit einer Verbindung H-Q^{o} oder einem Alkalimetallsalz davon auch so herstellen, daß man, analog bekannten Verfahrensweisen, eine Verbindung der Formel (66) 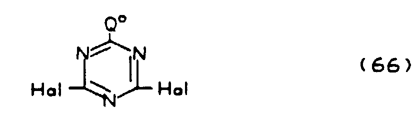 mit Hal und Q^{o} der obengenannten Bedeutung mit einer Ausgangsverbindung der allgemeinen Formel (60) umsetzt, oder, ebenfalls analog bekannter Verfahrensweisen, durch Reaktion eines für den Farbstofftyp üblichen Farbstoffvorproduktes, das jedoch eine Gruppe der allgemeinen Formel (67) 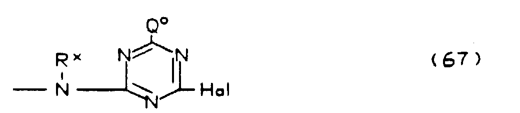 enthält, in welcher R^{x}, Q^{o} und Hal die obengannten Bedeutungen haben, mit einem weiteren, gegebenenfalls eine Gruppe der Formel (67) enthaltendem Vorprodukt.

Das Amin der Formel H-Q wird in der Regel in Form eines Salzes, wie eines Sulfats oder bevorzugt in Form des Hydrochlorids, in die Umsetzungen eingesetzt.

Die Ausgangsverbindungen der allgemeinen Formel (64) lassen sich herstellen, indem man, analog bekannten Verfahrensweisen, beispielsweise eine Verbindung der allgemeinen Formel (62) mit einem Amin der allgemeinen Formel H-Q mit Q der obengenannten Bedeutung oder eine Verbindung der allgemeinen Formel (68) 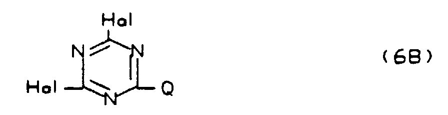 in welcher Hal und Q die obengenannten Bedeutungen haben, mit einer Ausgangsverbindung der allgemeinen Formel (60) umsetzt. Die Ausgangsverbindung (68) selbst kann wiederum analog bekannten Verfahrensweisen durch Umsetzung von einem Trihalogen-s-triazin mit einem Amin der allgemeinen Formel H-Q mit Q der obengenannten Bedeutung hergestellt werden.

Die Kondensation des Halogentriazins der Formel (61) mit einer Verbindung der Formel H-Q erfolgt, ebenfalls vorzugsweise in wäßriger Lösung oder Suspension, bei 0 bis 30°C bei einem pH-Wert zwischen 1,8 und 9,5. Auch hier wird der bei der Kondensation freiwerdende Halogenwasserstoff vorteilhafterweise durch laufende Zugabe von wäßrigen Alkalihydroxiden, -carbonaten oder -bicarbonaten neutralisiert.

Unter bestimmten Reaktionsbedingungen kann bei einem Halogentriazinrest Hydrolyse auftreten; deswegen muß bei einem Zwischenprodukt bzw. Vorprodukt, das eine Schutzgruppe, wie beispielsweise eine Acetylaminogruppe enthält, die Abspaltung der Acetylgruppe durch Verseifung vorgenommen werden, bevor die Umsetzung mit dem Halogentriazin erfolgt. In welcher Reihenfolge die verschiedenen oben erwähnten Umsetzungen zwischen den Halogentriazin- und Aminoausgangsverbindungen zweckmäßig zuerst ausgeführt werden, ist von Fall zu Fall verschieden und richtet sich vor allem nach der Löslichkeit der beteiligten Aminoverbindungen und der Basizität der Aminogruppen, die mit dem Halogentriazin umgesetzt werden sollen. Geht man bei der erfindungsgemäßen Synthese der Azofarbstoffe von Diazo- und Kupplungskomponenten aus, von denen eine oder beide eine Gruppe der allgemeinen Formel (3) enthalten, erfolgen die Umsetzungen in der üblichen Verfahrensweise der Diazotierungs- und Kupplungsreaktionen, so die Diazotierung in der Regel bei einer Temperatur zwischen -5°C und +15°C und einem pH-Wert unterhalb von 2 mittels einer starken Säure und Alkalinitrit in bevorzugt wäßrigem Medium und die Kupplungsreaktion in der Regel bei einem pH-Wert zwischen 1,5 und 4,5 im Falle einer aminogruppenhaltigen Kupplungskomponente und bei einem pH-Wert zwischen 3 und 7,5 im Falle einer hydroxygruppenhaltigen Kupplungskomponente und bei einer Temperatur zwischen 0 und 25°C, ebenso bevorzugt im wäßrigen Medium.

Ausgangsverbindungen, die als Diazokomponenten dienen können, sind beispielsweise:
Aminobenzol, 1-Amino-2-, -3- oder -4-methylbenzol, 1-Amino-2-, -3- oder -4-methoxybenzol, 1-Amino-2-, -3- oder -4-chlorbenzol, 1-Amino-2,5-dichlorbenzol, 1-Amino-2,5-dimethylbenzol, 1-Amino-3-methyl-6-methoxybenzol, 1-Amino-2-methoxy-4-nitrobenzol, 4-Aminobiphenyl, 1-Aminobenzol-2-, -3- oder -4-carbonsäure, 2-Aminodiphenyläther, 1-Aminobenzol-2-, -3- oder -4-sulfonsäureamid, -N-methylamid, -N-ethylamid, -N,N-dimethylamid oder -N,N-diethylamid, Dehydrothio-p-toluidin-sulfonsäure, 1-Amino-4-trifluormethyl-6-sulfonsäure, 1-Amino-3- oder -4-nitrobenzol, 1-Amino-3- oder -4-acetylaminobenzol, 1-Aminobenzol-2-, -3- oder -4-sulfonsäure, 1-Aminobenzol-2,4- und -2,5-disulfonsäure, 1-Amino-4-methylbenzol-2-sulfonsäure, 1-Amino-3-methylbenzol-6-sulfonsäure, 1-Amino-6-methylbenzol-3- oder -4-sulfonsäure, 1-Amino-2-carboxybenzol-4-sulfonsäure, 1-Amino-4-carboxybenzol-2-sulfonsäure, 1-Amino-4- oder -5-chlorbenzol-2-sulfonsäure, 1-Amino-6-chlorbenzol-3- oder -4-sulfonsäure, 1-Amino-3,4-dichlorbenzol-6-sulfonsäure, 1-Amino-2,5-dichlorbenzol-6-sulfonsäure, 1-Amino-2,5-dichlorbenzol-4-sulfonsäure, 1-Amino-4-methyl-5-chlorbenzol-2-sulfonsäure, 1-Amino- 5-methyl-4-chlorbenzol-2-sulfonsäure, 1-Amino-4- oder -5-methoxybenzol-2-sulfonsäure, 1-Amino-6-methoxybenzol-3- oder -4-sulfonsäure, 1-Amino-6-ethoxybenzol-3- oder -4-sulfonsäure, 1-Amino-2,4-dimethoxybenzol-6-sulfonsäure, 1-Amino-2,5-dimethoxybenzol-4-sulfonsäure, 1-Amino-3-acetylaminobenzol-6-sulfonsäure, 1-Amino-4-acetylaminobenzol-2-sulfonsäure, 1-Amino-3-acetylamino-4-methylbenzol-6-sulfonsäure, 2-Amino-1-methylbenzol-3,5-disulfonsäure, 1-Amino-4-methoxybenzol-2,5-disulfonsäure, 1-Amino-3- oder -4-nitrobenzol-6-sulfonsäure, 1-Aminonaphthalin, 2-Aminonaphthalin, 1-Aminonaphthalin-2-, -4-, -5-, -6-, -7- oder -8-sulfonsäure, 2-Aminonaphthalin-1-, -3-, -4-, -5-, -6-, -7- oder -8-sulfonsäure, 1-Aminonaphthalin-3,6- oder -5,7-disulfonsäure, 2-Aminonaphthalin-1,5-, -1,7-, -3,6-, -5,7-, -4,8- oder -6,8-disulfonsäure, 1-Aminonaphthalin-2,5,7-trisulfonsäure, 2-Aminonaphthalin-1,5,7-, -3,6,8- oder -4,6,8-trisulfonsäure, 1-Hydroxy-2-aminobenzol-4-sulfonsäure, 1-Hydroxy-2-aminobenzol-5-sulfonsäure, 1-Hydroxy-2-aminobenzol-4,6-disulfonsäure, 1-Hydroxy-2-amino-4-acetylaminobenzol-6-sulfonsäure, 1-Hydroxy-2-amino-6-acetylaminobenzol-4-sulfonsäure, 1-Hydroxy-2-amino-4-chlorbenzol-5-sulfonsäure, 1-Hydroxy-2-amino-4-methylsulfonylbenzol, 1-Amino-2-hydroxy-6-nitronaphthalin-4-sulfonsäure, 2-Amino-1-hydroxynaphthalin-4,8-disulfonsäure, 4-Aminoazobenzol-3,4'-disulfonsäure, 3-Methoxy-4-amino-6-methylazobenzol-2',4'-disulfonsäure, 3-Methoxy-4-amino-6-methylazobenzol-2',5'-disulfonsäure, 1,3-Diaminobenzol, 1,4-Diaminobenzol, 1,3-Diamino-4-chlorbenzol, 1,3-Diamino-4-methylbenzol, 1,3-Diamino-4-ethylbenzol, 1,3-Diamino-4-methoxybenzol, 1,3-Diamino-4-ethoxybenzol, 1,4-Diamino-2-methylbenzol, 1,4-Diamino-2-methoxybenzol, 1,4-Diamino-2-ethoxybenzol, 1,4-Diamino-2-chlorbenzol, 1,4-Diamino-2,5-dimethylbenzol, 1,4-Diamino-2,5-diethylbenzol, 1,4-Diamino-2-methyl-5-methoxybenzol, 1,4-Diamino-2,5-dimethoxybenzol, 1,4-Diamino-2,5-diethoxybenzol, 2,6-Diamino-naphthalin, 1,3-Diamino-2,4,6-trimethylbenzol, 1,4-Diamino-2,3,5,6-tetramethylbenzol, 1,3-Diamino-4-nitrobenzol, 4,4'-Diaminostilben, 4,4'-Diaminodiphenylmethan, 4,4'-Diaminobiphenyl (Benzidin), 3,3'-Dimethylbenzidin, 3,3'-Dimethoxybenzidin, 3,3'-Dichlorbenzidin, 3,3'-Dicarboxybenzidin, 3,3'-Dicarboxymethoxybenzidin, 2,2'-Dimethylbenzidin, 4,2'-Diaminodiphenyl (Diphenylin), 2,6-Diaminonaphthalin-4,8-disulfonsäure, 1,4-Diaminobenzol-2-sulfonsäure, 1,4-Diaminobenzol-2,5-disulfonsäure, 1,4-Diaminobenzol-2,6-disulfonsäure, 1,3-Diaminobenzol-4-sulfonsäure, 1,3-Diaminobenzol-4,6-disulfonsäure, 1,4-Diamino-2-chlorbenzol-5-sulfonsäure, 1,4-Diamino-2-methylbenzol-5-sulfonsäure, 1,5-Diamino-6-methylbenzol-3-sulfonsäure, 1,3-Diamino-6-methylbenzol-4-sulfonsäure, 3-(3'-Aminobenzoylamino)-1-aminobenzol-6-sulfonsäure, 3-(4'-Aminobenzoylamino)-1-aminobenzol-6-sulfonsäure, 1-(4'-Aminobenzoylamino)-4-aminobenzol-2,5-disulfonsäure, 1,4-Diaminobenzol-2-carbonsäure, 1,3-Diaminobenzol-4-carbonsäure, 1,2-Diaminobenzol-4-carbonsäure, 1,3-Diaminobenzol-5-carbonsäure, 1,4-Diamino-2-methylbenzol, 4,4'-Diaminodiphenyloxid, 4,4'-Diamino-diphenylharnstoff-2,2'-disulfonsäure, 4,4'-Diaminodiphenyloxyethan-2,2'-disulfonsäure, 4,4'-Diaminostilben-2,2'-disulfonsäure, 4,4'-Diaminodiphenylethan-2,2'-disulfonsäure, 2-Amino-5-aminomethylnaphthalin-1-sulfonsäure, 2-Amino-5-aminomethylnaphthalin-1,7-disulfonsäure, 1-Amino-4-methoxy-5-aminomethylbenzol-6-sulfonsäure, 2-(β-Sulfatoethylsulfonyl)-phenyl-anilin, 3-(β-Sulfatoethylsulfonyl)-anilin, 4-(β-Sulfatoethylsulfonyl)-anilin, 2-Carboxy-5-(β-sulfatoethylsulfonyl)-anilin, 2-chlor-3-(β-Sulfatoethylsulfonyl)-anilin, 2-Chlor-4-(β-sulfatoethylsulfonyl)-anilin, 2-Ethoxy-4- oder -5-(β-sulfatoethylsulfonyl)-anilin, 2-Ethyl-4-(β-sulfatoethylsulfonyl)-anilin, 2-Methoxy-5-(β-sulfatoethylsulfonyl)-anilin, 2,4-Diethoxy-5-(β-sulfatoethylsulfonyl)-anilin, 2,4-Dimethoxy-5-(β-sulfatoethylsulfonyl)-anilin, 2,5-Dimethoxy-4-(β-sulfatoethylsulfonyl)-anilin, 2-Methoxy-5-methyl-4-(β-sulfatoethylsulfonyl)-anilin, 2- oder 3- oder 4-(β-Thiosulfatoethylsulfonyl)-anilin, 2-Methoxy-5-(β-thiosulfatoethylsulfonyl)-anilin, 2-Sulfo-4-(β-phosphatoethylsulfonyl)-anilin, 2-Sulfo-4-vinylsulfonyl-anilin, 2-Hydroxy-4- oder -5-(β-sulfatoethylsulfonyl)-anilin, 2-Chlor-4- oder -5-(β-chlorethylsulfonyl)-anilin, 2-Hydroxy-3-sulfo-5-(β-sulfatoethylsulfonyl)-anilin, 3- oder 4-(β-Acetoxyethylsulfonyl)-anilin, 2-Methoxy-4-[β-(N-methyltauryl)-ethylsulfonyl]-anilin, 5-(β-Sulfatoethylsulfonyl)-2-amino-naphthalin, 6- oder 7- oder 8-(β-Sulfatoethylsulfonyl)-2-amino-naphthalin, 6-(β-Sulfatoethylsulfonyl)-1-sulfo-2-amino-naphthalin, 5-(β-Sulfatoethylsulfonyl)-1-sulfo-2-amino-naphthalin, 8-(β-Sulfatoethylsulfonyl)-6-sulfo-2-amino-naphthalin.

Wenn bei der erfindungsgemäßen Synthese als Diazokomponente statt eines Diamins eine Amino-acetylaminoverbindung eingesetzt wird, aus der nachträglich die Acetylgruppe durch Verseifen wieder abgespalten wird, kommen die Monoacetylverbindungen der oben genannten Diazokomponenten in Frage, wie beispielsweise 1-Acetylamino-3-aminobenzol-4-sulfonsäure und 1-Acetylamino-4-aminobenzol-3-sulfonsäure.

Kupplungskomponenten, die zur Synthese der erfindungsgemäßen Azofarbstoffe dienen können, sind beispielsweise: Phenol, 1-Hydroxy-3- oder -4-methylbenzol, 1-Hydroxybenzol-4-sulfonsäure, 1-Hydroxynaphthalin, 2-Hydroxynaphthalin, 2-Hydroxynaphthalin-6- oder -7-sulfonsäure, 2-Hydroxynaphthalin-3,6- oder -6,8-disulfonsäure, 1-Hydroxynaphthalin-4-sulfonsäure, 1-Hydroxynaphthalin-4,6-oder -4,7-disulfonsäure, 1-Amino-3-methylbenzol, 1-Amino-2-methoxy-5-methylbenzol, 1-Amino-2,5-dimethylbenzol, 3-Aminophenylharnstoff, 1-Amino-3-acetylaminobenzol, 1-Amino-3-hydroxyacetylaminobenzol, 1,3-Diaminobenzol-4-sulfonsäure, 1-Aminonaphthalin-6- oder -8-sulfonsäure, 1-Amino-2-methoxynaphthalin-6-sulfonsäure, 2-Aminonaphthalin-5,7-disulfonsäure, 1-Amino-8-hydroxynaphthalin-4-sulfonsäure, 1-Amino-8-hydroxynaphthalin-6-sulfonsäure, 1-Amino-8-hydroxynaphthalin-2,4-disulfonsäure, 2-Hydroxy-3-aminonaphthalin-5,7-disulfonsäure, 1-Amino-8-hydroxynaphthalin-2,4,6-trisulfonsäure, 1-Hydroxy-8-acetylaminonaphthalin-3-sulfonsäure, 1-Benzoylamino-8-hydroxynaphthalin-3,6- oder -4,6-disulfonsäure, 2-Benzoylamino-5-hydroxynaphthalin-7-sulfonsäure, 2-Amino-5-hydroxynaphthalin-7-sulfonsäure, 2-Methyl- bzw. 2-Ethylamino-5-hydroxynaphthalin-7-sulfonsäure, 2-(N-Acetyl-N-methylamino)-5-hydroxynaphthalin-7-sulfonsäure, 2-Acetylamino-5-hydroxynaphthalin-7-sulfonsäure, 2-Amino-5-hydroxynaphthalin-1,7-disulfonsäure, 2-Amino-8-hydroxynaphthalin-6-sulfonsäure, 2-Methylamino- oder 2-Ethylamino-8-hydroxynaphthalin-6-sulfonsäure, 2-(N-Acetyl-N-methylamino)-8-hydroxynaphthalin-6-sulfonsäure, 2-Acetylamino-8-hydroxynaphthalin-6-sulfonsäure, 2-Amino-8-hydroxynaphthalin-3,6-disulfonsäure, 2-Acetylamino-8-hydroxynaphthalin-3,6-disulfonsäure, 1-Amino-5-hydroxynaphthalin-7-sulfonsäure, 1-Amino-8-hydroxynaphthalin-3,6- oder -4,6-disulfonsäure, 1-Acetylamino-8-hydroxynaphthalin-3,6- oder -4,6-disulfonsäure, 1-(4'-Aminobenzoylamino)-8-hydroxynaphthalin-3,6- oder -4,6-disulfonsäure, 1-(4'-Nitrobenzoylamino)-8-hydroxynaphthalin-3,6- oder -4,6-disulfonsäure, 1-(3'-Aminobenzoylamino)-8-hydroxynaphthalin-3,6- oder -4,6-disulfonsäure,1-(3'-Nitrobenzoylamino)-8-hydroxynaphthalin-3,6- oder -4,6-disulfonsäure, 2-(4'-Amino-3'-sulfophenylamino)-5-hydroxynaphthalin-7-sulfonsäure, 3-Methyl-5-pyrazolon, 1-Phenyl-3-methyl-5-pyrazolon, 1-(4'-Sulfophenyl)-5-pyrazolon-3-carbonsäure, 1-(3'-Aminophenyl)-3-methyl-5-pyrazolon, 1-(2',5'-Disulfonphenyl)-3-methyl-5-pyrazolon, 1-(2'-Methyl-4'-sulfophenyl)-5-pyrazolon-3-carbonsäure, 1-(4',8'-Disulfonaphthyl-[2'])-3-methyl-5-pyrazolon, 1-(5',7'-Disulfonaphthyl-[2'])-3-methyl-5-pyrazolon, 1-(2',5'-Dichlor-4'-sulfophenyl)-3-methyl-5-pyrazolon, 3-Aminocarbonyl-4-methyl-6-hydroxy-2-pyridon, 1-Ethyl-3-cyan- oder -3-chlor-4-methyl-6-hydroxy-2-pyridon, 1-Ethyl-3-sulfomethyl-4-methyl-6-hydroxy-2-pyridon, 2,4,6-Triamino-3-cyanpyridin, 2-(3'-Sulfophenylamino)-4,6-diamino-3-cyanpyridin, 2-(2'-Hydroxyethylamino)-3-cyan-4-methyl-6-aminopyridin, 2,6-Bis-(2'-hydroxyethylamino)-3-cyan-4-methylpyridin, 1-Ethyl-3-carbonyl-4-methyl-6-hydroxy-2-pyridon, 1-Ethyl-3-sulfomethyl-4-methyl-5-carbonyl-6-hydroxy-2-pyridon, N-Acetoacetylaminobenzol, 1-(N-Acetoacetylamino)-2-methoxybenzol-5-sulfonsäure, 4-Hydroxychinol-2-on, 1-Amino-8-hydroxy-2-(phenylazo)-naphthalin-3,6-disulfonsäure, 1-Amino-8-hydroxy-2-(4'-sulfophenylazo)-naphthalin-3,6-disulfonsäure, 1-Amino-8-hydroxy-2-(2',5'-disulfonphenylazo)-naphthalin-3,6-disulfonsäure, 1-(β-Aminoethyl)-3-cyan-4-methyl-6-hydroxy-2-pyridon, 1-(γ-Aminopropyl)-3-sulfomethyl-4-methyl-6-hydroxy-2-pyridon, 1,3-Diaminobenzol, 1-Amino-3-N,N-di-(β-hydroxyethyl)-aminobenzol,1-Amino-3-N,N-di-(β-sulfatoethyl)-aminobenzol, 1-Amino-3-N,N-di-(β-hydroxyethyl)-amino-4-methoxybenzol, 1-Amino-3-N,N-di-(β-sulfatoethyl)-amino-4-methoxybenzol, 1-Amino-3-sulfo-benzylamino-benzol, 1-Amino-3-sulfo-benzylamino-4-chlorbenzol, 1-Amino-3-N,N-di-(sulfobenzyl)-aminobenzol, 2-(4-β-Sulfatoethylsulfonyl-phenyl)-3-methyl-5-pyrazolon und 1-(4-β-Sulfatoethylsulfonyl-phenyl)-3-carboxy-5-pyrazolon.

Bei der erfindungsgemäßen Synthese der erfindungsgemäßen Schwermetallkomplex-Azofarbstoffe kann man beispielsweise auch von solchen metallfreien Azofarbstoffen ausgehen, die der allgemeinen Formel (1) entsprechen, in welchen jedoch die Diazo- und Kupplungskomponenten in ortho-Stellung zur Azogruppe jeweils eine zur Komplexbildung befähigte Hydroxygruppe oder Carboxygruppe enthalten. Diese o,o'-Dihydroxy- oder o-Carboxy-o'-hydroxy-azo-Ausgangsverbindung entsprechend der allgemeinen Formel (1) wird sodann in üblicher und bekannter Verfahrensweise mit einem ein Schwermetallion abgebenden Agenz, wie beispielsweise Kupferchlorid, Kupfersulfat, Chromchlorid, Chromsulfat und Kobaltchlorid, zum erfindungsgemäßen Schwermetallkomplex-Azofarbstoff umgesetzt.

Beispielsweise kann man die erfindungsgemäßen Kupferkomplex-Azoverbindungen der allgemeinen Formel (4h) in der Weise herstellen, daß man eine Verbindung der allgemeinen Formel (4z) 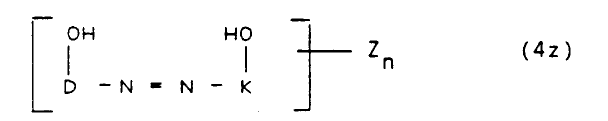 in welcher die einzelnen Formelglieder eine der obengenannten Bedeutungen besitzen, mit einem ein Kupferion abgebenden Agenz, wie beispielsweise Kupferchlorid oder Kupfersulfat, in wäßrigem Medium bei einer Temperatur zwischen 0 und 30°C umsetzt.

Aromatische Aminoverbindungen der Formeln D-NH₂ bzw. D₁-NH₂ , die keine faserreaktive Gruppe der allgemeinen Formel (3) tragen und die als Diazokomponenten bei der Synthese der Azofarbstoffen dienen können, sind beispielsweise solche der allgemeinen Formeln (5a) und (5b) 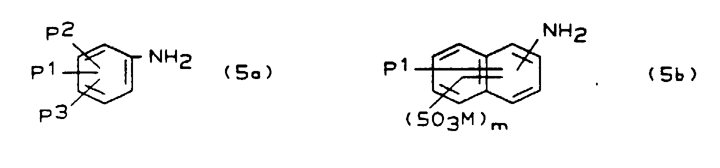 in welchen
- P¹: Wasserstoff, Sulfo oder eine Gruppe der allgemeinen Formel -SO₂-Y mit Y der obengenannten Bedeutung ist,
- P²: Wasserstoff, Methyl, Ethyl, Methoxy, Ethoxy, Alkanoyl von 2 bis 5 C-Atomen, wie Acetyl und Propionyl, Cyano, Carboxy, Sulfo, Alkoxycarbonyl von 2 bis 5 C-Atomen, Carbamoyl, N-(C₁-C₄-Alkyl)-carbamoyl, Fluor, Chlor, Brom oder Trifluormethyl ist,
- P³: Wasserstoff, Methyl, Ethyl, Methoxy, Ethoxy, Cyan, Carboxy, Sulfo, Alkanoylamino von 2 bis 5 C-Atomen, wie Acetylamino, Alkoxycarbonyl von 2 bis 5 C-Atomen, Carbamoyl, N-(C₁-C₄-Alkyl)-carbamoyl, Fluor, Chlor, Nitro, Sulfamoyl, N-(C₁-C₄-Alkyl)-sulfamoyl, Alkylsulfonyl von 1 bis 4 C-Atomen, Phenylsulfonyl oder Phenoxy ist,
wobei der Benzol- oder Naphthalinkern außerdem in ortho-Stellung zur NH₂-Gruppe eine Hydroxygruppe enthalten kann,
- m: die Zahl Null, 1 oder 2 bedeutet (wobei diese Gruppe im Falle von m gleich Null ein Wasserstoffatom bedeutet) und
- M: die obengenannte Bedeutung hat.

Bevorzugt ist hiervon P² gleich Wasserstoff, Methyl, Methoxy, Brom, Chlor, Carboxy und Sulfo sowie P³ gleich Wasserstoff, Methyl, Methoxy, Chlor, Carboxy, Sulfo und Acetylamino.

Aromatische Amine der allgemeinen Formel D-NH₂ oder D₁-NH₂ entsprechend den Formeln (5a) und (5b) sind beispielsweise:
2-Amino- oder 4-Aminobenzoesäure, 3-Amino-benzoesäure, 3-Chloranilin-6-carbonsäure, Anilin-2- oder -3- oder -4-sulfonsäure, 2,5-Disulfo-anilin, 2,4-Disulfo-anilin, 3,5-Disulfoanilin, 2-Aminotoluol-4-sulfonsäure, 2-Amino-anisol-4-sulfonsäure, 2-Amino-anisol-5-sulfonsäure, 4-Amino-anisol-2-sulfonsäure, 2-Ethoxy-anilin-5-sulfonsäure, 2-Ethoxy-anilin-4-sulfonsäure, 4-Sulfo-2-aminobenzoesäure, 2,5-Dimethoxy-anilin-4-sulfonsäure, 2,4-Dimethoxyanilin-5-sulfonsäure, 2-Methoxy-5-methyl-anilin-4-sulfonsäure, 4-Amino-anisol-3-sulfonsäure, 4-Amino-toluol-3-sulfonsäure, 2-Amino-toluol-5-sulfonsäure, 2-Chlor-anilin-4-sulfonsäure, 2-Chlor-anilin-5-sulfonsäure, 2-Brom-anilin-4-sulfonsäure, 2,6-Dichloranilin-4-sulfonsäure, 2,6-Dimethylanilin-3-sulfonsäure oder -4-sulfonsäure, 3-Acetylamino-6-sulfoanilin, 4-Acetyl-amino-2-sulfo-anilin, 1-Aminonaphthalin-4-sulfonsäure, 1-Aminonaphthalin-3-sulfonsäure, 1-Aminonaphthalin-5-sulfonsäure, 1-Aminonaphthalin-6-sulfonsäure, 1-Aminonaphthalin-7-sulfonsäure, 1-Aminonaphthalin-3,7-disulfonsäure, 1-Aminonaphthalin-3,6,8-trisulfonsäure, 1-Aminonaphthalin-4,6,8-trisulfonsäure, 2-Naphthylamin-5-sulfonsäure oder -6- oder -8-sulfonsäure, 2-Aminonaphthalin-3,6,8-trisulfonsäure, 2-Aminonaphthalin-6,8-disulfonsäure, 2-Aminonaphthalin-1,6-disulfonsäure, 2-Aminonaphthalin-1-sulfonsäure, 2-Aminonaphthalin-1,5-disulfonsäure, 2-Aminonaphthalin-3,6-disulfonsäure, 2-Aminonaphthalin-4,8-disulfonsäure, 4-(β-Sulfatoethylsulfonyl)-anilin, 3-(β-Sulfatoethylsulfonyl)-anilin, 2-Sulfo-5-(β-sulfatoethylsulfonyl)-anilin, 2-Sulfo-4-(β-sulfatoethylsulfonyl)-anilin, 2-Methoxy-5-(β-sulfatoethylsulfonyl)-anilin, 2-Methoxy-5-methyl-4-(β-sulfatoethylsulfonyl)-anilin, 2,5-Dimethoxy-4-(β-sulfatoethylsulfonyl)-anilin, 2-Amino-5-(β-sulfatoethylsulfonyl)-phenol, 2-Amino-4-(β-sulfatoethylsulfonyl)phenol, 2-Amino-6-(β-sulfatoethylsulfonyl)-naphthalin-8-sulfonsäure, 2-Amino-8-(β-sulfatoethylsulfonyl)-naphthalin-6-sulfonsäure, 2-Amino-5-(β-sulfatoethylsulfonyl)-naphthalin-7-sulfonsäure und 2-Amino-7-(β-sulfatoethyl-sulfonyl)-naphthalin-5-sulfonsäure.

Aromatische Amine der Diazokomponente Z-D-NH₂ oder Z-D₁-NH₂ oder Z-D₂-NH₂ mit dem faserreaktiven Rest Z gehen bevorzugt von aromatischen Aminen der allgemeinen Formeln (6a) und (6b) 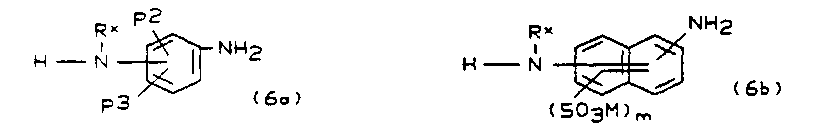 aus, in welchen R^{x}, M, m, P² und P³ die oben angegebenen, insbesondere bevorzugten Bedeutungen haben, wobei der Benzolkern in Formel (6a) und (6b) zusätzlich in ortho-Stellung zur Aminogruppe -NH₂ eine Hydroxygruppe enthalten kann.

Amine der allgemeinen Formeln (6) sind beispielsweise: 1,3-Diaminobenzol, 1,3-Diaminobenzol-4-sulfonsäure, 1,3-Diaminobenzol-4,6-disulfonsäure, 1,4-Diaminobenzol, 1,4-Diaminobenzol-2-sulfonsäure, 1,4-Diaminobenzol-2,5-disulfonsäure, 1,4-Diamino-2-methyl-benzol, 1,4-Diamino-2-methoxybenzol, 1,3-Diamino-4-methyl-benzol, 1,5-Diamino-4-methylbenzol-2-sulfonsäure, 1,3-Diamino-4-methyl-benzol-2-sulfonsäure, 1,3-Diaminobenzol-5-sulfonsäure, 1,3-Diamino-5-methyl-benzol, 2,6-Diamino-naphthalin, 2,6-Diamino-naphthalin-4,8-disulfonsäure, 2-Amino-5-methylamino-naphthalin-1-sulfonsäure, 2-Amino-5-methylamino-naphthalin-1,7-disulfonsäure und 1,4-Diamino-naphthalin-6-sulfonsäure.

Bevorzugte Reste D, D₁ oder D₂ ohne oder mit dem Rest Z sind in den Formeln (4a) bis (4g) solche der allgemeinen Formeln (5c) und (5d) bzw. (5g) und in Formel (4h) solche der allgemeinen Formeln (5e) und (5f) bzw. (5h): 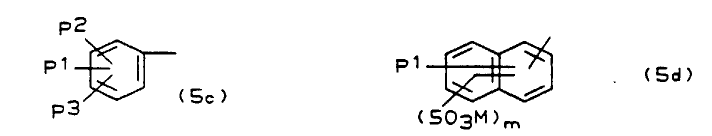 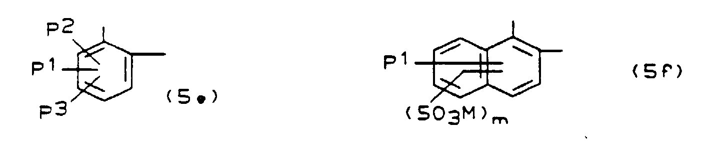 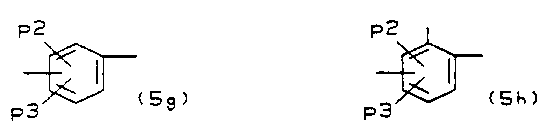 in welchen P¹, P², P³, m und M die obengenannten Bedeutungen haben.

Aromatische Reste E einer kupplungsfähigen und diazotierbaren Verbindung der allgemeinen Formel H-E-NH₂ sind beispielsweise solche der allgemeinen Formeln (7a), (7b) und (7c) 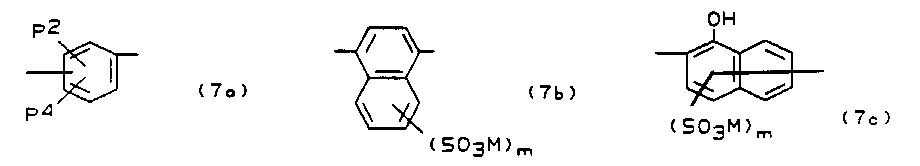 in welchen
- P²: und M die oben angegebenen Bedeutungen haben,
- P⁴: Wasserstoff, Alkyl von 1 bis 4 C-Atomen, wie Methyl oder Ethyl, Alkoxy von 1 bis 4 C-Atomen, wie Methoxy und Ethoxy, Chlor, Alkanoylamino von 2 bis 5 C-Atomen, wie Acetylamino und Propionylamino, Benzoylamino, Ureido, Phenylureido, Alkylureido mit 1 bis 4 C-Atomen im Alkylrest, Phenylsulfonyl oder eine Alkylsulfonyl von 1 bis 4 C-Atomen ist und
- m: für die Zahl Null, 1 oder 2 steht (wobei diese Gruppe im Falle von m gleich Null Wasserstoff bedeutet).

Verbindungen der Formel H-E-NH₂ sind beispielsweise: Anilin, 3-Methylanilin, 3-Chloranilin, 2,5-Dimethylanilin, 2,5-Dimethoxyanilin, 3-Methoxyanilin, 3-Methyl-6-methoxyanilin, 3-Aminophenylharnstoff, 3-Acetylamino-6-methylanilin, 2-Amino-4-acetyl-aminobenzol-1-sulfonsäure, 1-Aminonaphthalin, 1-Aminonaphthalin-6- oder -7- oder -8-sulfonsäure, 3-Acetylaminoanilin, 2-Methylanilin, 2-Methoxyanilin, 3-Benzoylamino-anilin, 2,3-Dimethylanilin, 3,5-Dimethylanilin, 1-Amino-2-methoxy-5-acetylamino-benzol, 3-Propionylamino-anilin, 3-Butyrylamino-anilin, 2-Sulfo-5-acetylamino-anilin, 2-Amino-5-naphthol-7-sulfonsäure und 2-Amino-8-naphthol-6-sulfonsäure.

Die Reste K der Kupplungskomponente entstammen vorzugsweise der Anilin-, Naphthalin-, Pyrazol- und Acylacetarylid-Reihe; sie können faserreaktive Gruppen besitzen.

Kupplungskomponenten der Formel H-K der Anilin- und Naphthalinreihe sind beispielsweise die Aniline, N-mono- und N,N-disubstituierte Aniline, m-Phenylendiamine und deren Derivate, Naphtholsulfonsäuren, Aminonaphthaline, Naphthole, Hydroxynaphthoesäurederivate, Aminonaphthalinsulfonsäuren oder Aminonaphtholsulfonsäuren.

Kupplungskomponenten der Formel H-K , die keine faserreaktive Gruppe der allgemeinen Formel (3) tragen, sind beispielsweise Verbindungen der allgemeinen Formeln (8a) bis (8g) 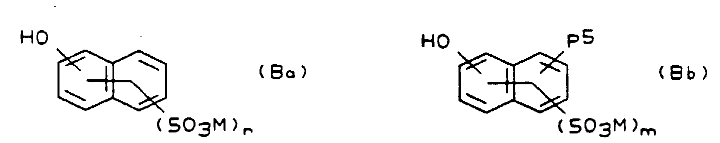 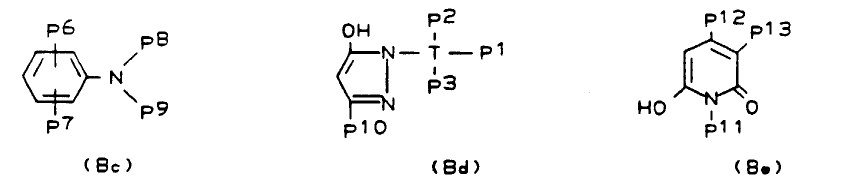 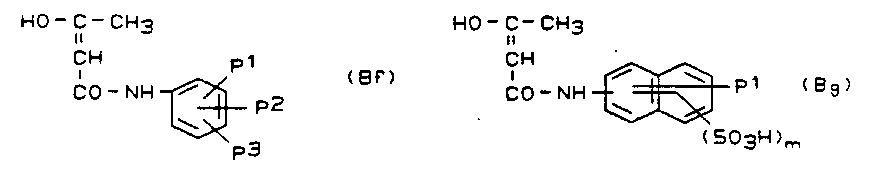 in welchen
- P¹, P², P³, m und M: die obengenannten Bedeutungen haben,
- r: die Zahl Null, 1, 2 oder 3 ist (wobei diese Gruppe im Falle r gleich Null Wasserstoff bedeutet),
- P⁵: Alkylureido mit Alkylgruppen von 1 bis 6 C-Atomen, Phenylureido, im Phenylrest durch Chlor, Methyl, Methoxy, Nitro, Sulfo und/oder Carboxy und/oder eine Gruppe -SO₂-Y mit Y der obigen Bedeutung substituiertes Phenylureido, Alkanoylamino von 2 bis 7 C-Atomen, wie beispielsweise Acetylamino und Propionylamino, Cyclohexanoylamino, Benzoylamino oder im Benzolrest durch Chlor, Methyl, Methoxy, Nitro, Sulfo und/oder Carboxy und/oder eine Gruppe -SO₂-Y mit Y der obigen Bedeutung substituiertes Benzoylamino bedeutet,
- P⁶: Wasserstoff, Alkyl von 1 bis 4 C-Atomen, wie Methyl und Ethyl, Alkoxy von 1 bis 4 C-Atomen, wie Methoxy und Ethoxy, Brom, Chlor oder Alkanoylamino von 2 bis 7 C-Atomen, wie Acetylamino und Propionylamino, ist,
- P⁷: Wasserstoff, Alkyl von 1 bis 4 C-Atomen, wie Methyl und Ethyl, Alkoxy von 1 bis 4 C-Atomen, wie Methoxy und Ethoxy, Chlor oder Alkanoylamino von 2 bis 7 C-Atomen, wie Acetylamino und Propionylamino, Ureido oder Phenylureido ist,
- P⁸: Wasserstoff oder Alkyl von 1 bis 4 C-Atomen, das durch Hydroxy, Cyan, Carboxy, Sulfo, Sulfato, Methoxycarbonyl, Ethoxycarbonyl oder Acetoxy substituiert sein kann, ist,
- P⁹: Alkyl von 1 bis 4 C-Atomen ist, das durch Hydroxy, Cyan, Carboxy, Sulfo, Sulfato, Methoxycarbonyl, Ethoxycarbonyl oder Acetoxy substituiert sein kann, oder Benzyl oder Phenyl oder durch Alkyl von 1 bis 4 C-Atomen, Alkoxy von 1 bis 4 C-Atomen, Chlor und/oder Sulfo substituiertes Phenyl ist,
- P¹⁰: Wasserstoff, Alkyl von 1 bis 4 C-Atomen, wie Methyl, Cyano, Carboxy, Carbalkoxy von 2 bis 5 C-Atomen, wie Carbomethoxy und Carbethoxy, Carbamoyl oder Phenyl, bevorzugt Methyl, Carboxy, Methoxycarbonyl, Ethoxycarbonyl oder Phenyl und insbesondere Methyl oder Carboxy, ist,
- T: für einen Benzol- oder Naphthalinring, bevorzugt Benzolring, steht,
- P¹¹: Wasserstoff, Alkyl von 1 bis 6 C-Atomen, bevorzugt von 1 bis 4 C-Atomen, das durch Phenyl oder Sulfophenyl oder durch Hydroxy, Amino, Methoxy, Ethoxy, Carboxy, Sulfo, Acetylamino, Benzoylamino oder Cyano substituiert sein kann, Cyclohexyl, Phenyl oder durch Carboxy, Sulfo, Benzoylamino, Acetylamino, Methyl, Methoxy, Cyano oder Chlor substituiertes Phenyl ist und bevorzugt Wasserstoff oder Alkyl von 1 bis 4 C-Atomen, das durch Phenyl, Sulfo oder Sulfophenyl substituiert sein kann, ist,
- P¹²: Wasserstoff oder Alkyl von 1 bis 4 C-Atomen, wie Methyl, oder durch Alkoxy von 1 bis 4 C-Atomen, wie Methoxy, oder Cyano substituiertes Alkyl von 1 bis 4 C-Atomen ist, bevorzugt Alkyl von 1 bis 4 C-Atomen oder Phenyl ist, und
- P¹³: Wasserstoff, Chlor, Brom, Sulfo, Carbamoyl, Methylsulfonyl, Phenylsulfonyl, Cyano oder Sulfoalkyl von 1 bis 4 C-Atomen bedeutet, bevorzugt Wasserstoff, Sulfo oder Sulfoalkyl mit einem Alkylrest von 1 bis 4 C-Atomen, wie Sulfomethyl, oder Cyano oder Carbamoyl ist.

Verbindungen der allgemeinen Formeln (8) sind beispielsweise:
1-Naphthol-3-sulfonsäure, 1-Naphthol-4-sulfonsäure, 1-Naphthol-5-sulfonsäure, thol-5-sulfonsäure, 1-Naphthol-3,6-disulfonsäure, 1-Naphthol-3,8-disulfonsäure, 2-Naphthol-5-sulfonsäure, 2-Naphthol-6-sulfonsäure, 2-Naphthol-7-sulfonsäure, 2-Naphthol-8-sulfonsäure, 2-Naphthol-3,6-disulfonsäure, 2-Naphthol-6,8-disulfonsäure, 2-Naphthol-3,6,8-trisulfonsäure, 1-Acetylamino-8-hydroxynaphthalin-3,6-disulfonsäure, 1-Benzoylamino-8-hydroxynaphthalin-3,6-disulfonsäure, 1-Acetylamino-8-hydroxynaphthalin-4,6-disulfonsäure, amino-5-hydroxy-naphthalin-7-sulfonsäure, hydroxy-naphthalin-6-sulfonsäure 3-Acetylamino-5-hydroxy-naphthalin-7-sulfonsäure, 2-Methyl-amino-8-hydroxy-naphthalin-6-sulfonsäure oder 2-(3'- und 4'-Sulfophenyl)-amino-8-hydroxynaphthalin-6-sulfonsäure, 3-(3'- und 4'-Sulfophenyl)-amino-8-hydroxy-naphthalin-6-sulfonsäure, N,N-Di-(β-sulfoethyl)-anilin und dessen im Benzolkern durch Methyl, Methoxy und/oder Ethoxy mono- oder disubstituierten Derivate, N-Ethyl-N-(β-sulfoethyl)-anilin, N-(β-Sulfoethyl)-anilin, N-(β-Carboxyethyl)-anilin und deren im Benzolkern durch Methyl, Methoxy und/oder Ethoxy mono- oder disubstituierten Derivate, des weiteren 1-[3'-(β-Chlorethylsulfonyl)-benzoylamino]-3,6-disulfo-8-naphthol, 1-[3'-(Vinylsulfonyl)-benzoylamino]-3,6-disulfo-8-naphthol, 1-[3'-(Vinylsulfonyl)-benzoylamino]-4,6-disulfo-8-naphthol, 1-[3'-(β-Sulfatoethylsulfonyl)-benzoylamino]-4,6-disulfo-8-naphthol, 2-[3'-(β-Chlorethylsulfonyl)-benzoylamino]-6-sulfo-8-naphthol, 2-[3'-(Vinylsulfonyl)-benzoylamino]-6-sulfo-8-naphthol, 3-[3'-(β-Chlorethylsulfonyl)-benzoylamino]-6-sulfo-8-naphthol, 3-[3'-(Vinylsulfonyl)-benzoylamino]-6-sulfo-8-naphthol, 2-[N-Methyl-N-(β-sulfatoethylsulfonyl)-amino]-6-sulfo-8-naphthol, 3-[N-Methyl-N-(β-sulfatoethylsulfonyl)-amino]-6-sulfo-8-naphthol, 2-[N-Ethyl-N-(β-sulfatoethylsulfonyl)-amino]-6-sulfo-8-naphthol, 1-[N'-(3'-β-Chlorethylsulfonyl-phenyl)-ureido]-3,6-disulfo-8-naphthol, 1-[N'-(3'-Vinylsulfonyl-phenyl)-ureido]-3,6-disulfo-8-naphthol, 1-[N'-(3'-Vinylsulfonyl-propyl)-ureido]-3,6-disulfo-8-naphthol, 1-[N'-(3'-β-chlorethylsulfonyl-phenyl)-ureido]-4,6-disulfo-8-naphthol, 1-[N'-(3'-Vinylsulfonyl-phenyl)-ureido]-4,6-disulfo-8-naphthol, 1-[N'-(3'-β-chlorethylsulfonyl-propyl)-ureido]-4,6-disulfo-8-naphthol, 2-[N'-(3'-β-Sulfatoethylsulfonyl-phenyl)-ureido]-6-sulfo-8-naphthol, 2-[N'-(3'-β-Chlorethylsulfonyl-propyl)-ureido]-6-sulfo-8-naphthol, 3-[N'-(3'-β-Chlorethylsulfonyl-phenyl)-ureido]-6-sulfo-8-naphthol und 3-[N'-(3'-Vinylsulfonyl-propyl)-ureido]-6-sulfo-8-naphthol.

Von besonderer Bedeutung sind hiervon sulfogruppenhaltige, gegebenenfalls Azogruppen, wie 1 oder 2 Azogruppen, tragende Kupplungskomponenten, die in o- oder p-Stellung zu einer Hydroxy- und/oder Aminogruppe kuppeln, wie beispielsweise 2-Acetylamino-5-hydroxy-naphthalin-7-sulfonsäure, 2-Acetyl-amino-8-hydroxynaphthalin-6-sulfonsäure, 1-Acetylamino-8-hydroxynaphthalin-3,6-disulfonsäure, 1-Benzoylamino-8-hydroxynaphthalin-3,6-disulfonsäure, 1-Acetylamino-8-hydroxynaphthalin-4,6-disulfonsäure oder 1-Benzoylamino-8-hydroxynaphthalin-4,6-disulfonsäure.

Pyrazolon-Kupplungskomponenten sind beispielsweise 3-Methyl-, 3-Carboxy- und 3-(C₂-C₅-Alkoxycarbonyl)-5-pyrazolone, die in 1-Stellung Wasserstoff, gegebenenfalls durch Methyl, Ethyl, Fluor, Chlor, Brom, Trifluormethyl, Methoxy, Ethoxy, Cyano, Phenoxy, Phenylsulfonyl, Methylsulfonyl, Sulfo, Benzoyl, Acetyl, Acetylamino, Nitro, Hydroxy, Carboxy, Carbamoyl und/oder Sulfamoyl substituiertes Phenyl oder sulfosubstituiertes 1- oder 2-Naphthyl tragen,
beispielsweise:
1-(2'-Methoxy-5'-methylphenyl)-, 1-(2'-Chlor-5'-sulfophenyl)-, 1-(2'-Methoxy-5'-sulfophenyl)-, 1-(2'-Methoxy-4'-sulfophenyl)-, 1-(2',5'-Dichlor-4'-sulfophenyl)-, 1-(2',5'-Disulfophenyl)-, 1-(2'-Carboxyphenyl)-, 1-(3'-Sulfophenyl)-, 1-(4'-Sulfophenyl)-, 1-(3'-Sulfamoylphenyl)-3-carboxy-5-pyrazolon, 1-(3'- oder 4'-Sulfophenyl)-, 1-(2'-Chlor-4'- oder -5'-sulfophenyl)-, 1-(2'-Methyl-4'-sulfophenyl)-, 1-(4',8'-Disulfo-2'-naphthyl)- und 1-(6'-Sulfo-1'-naphthyl)-3-methyl-5-pyrazolon, 1-Phenyl-5-pyrazolon-3-carbonsäureethylester, 5-Pyrazolon-3-carbonsäureethylester, 5-Pyrazolon-3-carbonsäure, 1-[4'-(β-Sulfatoethylsulfonyl)-2'-sulfo]-phenyl-3-methyl-pyrazol-5-on, 1-[4'-(β-Sulfatoethylsulfonyl)]-phenyl-3-carboxy-pyrazol-5-on, 1-[4'-(β-Sulfatoethylsulfonyl)]-phenyl-3-methyl-pyrazol-5-on, 1-[3'-(β-Sulfatoethylsulfonyl)]-phenyl-3-carboxy-pyrazol-5-on, 1-[3'-(β-Sulfatoethylsulfonyl)]-phenyl-3-methyl-pyrazol-5-on, und 1-(4'-Sulfophenyl)-3-carboxy-pyrazol-5-on.

Pyridonkupplungskomponenten sind beispielsweise 1-Ethyl-2-hydroxy-4-methyl-5-carbonamido-pyridon-6, 1-(2'-Hydroxyethyl)-2-hydroxy-4-methyl-5-carbonamido-pyridon-6, 1-(4'-Sulfo-phenyl)-2-hydroxy-4-methyl-5-carbonamidopyridon-6, 1-(2'-Sulfoethyl)-2-hydroxy-4-methyl-5-cyanopyridon-6, 1-Ethyl-2-hydroxy-4-sulfomethyl-5-carbonamidopyridon-6, 1-Ethyl-2-hydroxy-4-methyl-5-sulfomethylpyridon-6, 1-Methyl-2-hydroxy-4-methyl-5-cyano-pyridon-6, 1-Methyl-2-hydroxy-5-acetyl-pyridon-6, 1,4-Dimethyl-2-hydroxy-5-cyanpyridon-6, 1,4-Dimethyl-2-hydroxy-5-carbonamido-pyridon-6, 2,6-Dihydroxy-4-ethyl-5-cyanopyridin, 2,6-Dihydroxy-4-ethyl-5-carbonamido-pyridin, 1-Ethyl-2-hydroxy-4-methyl-5-sulfomethyl-pyridon-6, 1-Methyl-2-hydroxy-4-methyl-5-methylsulfonyl-pyridon-6, 1-Carboxymethyl-2-hydroxy-4-ethyl-5-phenylsulfonylpyridon-6 und 1-(2'-Sulfo-ethyl)-2-hydroxy-4-carboxypyridon-6, und Acetoacetyl-arylamid-Kupplungskomponenten sind beispielsweise Acetoacetyl-(2-methoxy-4-sulfo-5-methyl)-anilin, Acetoacetyl-(2,4-dimethoxy-5-methyl)-anilin und Acetoacetyl-(4-β-sulfatoethylsulfonyl)-anilin.

Als Kupplungskomponenten H-K sind weiterhin besonders zu nennen: 1-Amino-8-hydroxynaphthalin-3,6- und -4,6-disulfonsäure sowie deren durch saure Kupplung erhaltene Arylazokupplungsprodukte der Formel (9a) 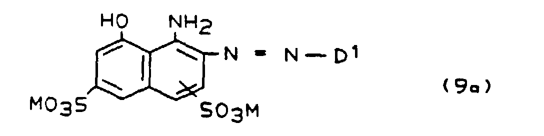 in welcher
- D¹: der Rest einer Diazokomponente, beispielsweise ein Rest der Formel (10a) oder (10b) 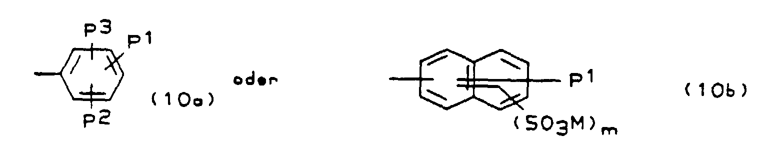
sein kann, worin P¹, P², P³, M und m die oben angegebenen Bedeutungen haben.

Einzelne Reste D¹ sind beispielsweise: Phenyl, 2-Sulfophenyl, 3-Sulfo-phenyl, 4-Sulfo-phenyl, 2,4-Disulfo-phenyl, 2,5-Disulfo-phenyl, 3,5-Disulfo-phenyl, 1,5-Disulfo-naphth-2-yl, 4,8-Disulfo-naphth-2-yl, 3,6,8-Trisulfo-naphth-2-yl, 4,6,8-Trisulfo-naphth-2-yl, 3,6,8-Trisulfo-naphth-1-yl, 4,6,8-Trisulfo-naphth-1-yl, 4-Sulfo-naphth-1-yl, 4-Sulfo-naphth-1-yl, 3-Acetylamino-phenyl, 4-Acetylamino-phenyl, 4-Acetylamino-2-sulfo-phenyl, 5-Acetylamino-2-sulfo-phenyl, 4-Nitro-phenyl, 4-Nitro-2-sulfo-phenyl, 6-Acetylamino-4,8-disulfo-naphth-2-yl, 4-(β-Sulfatoethylsulfonyl)-phenyl und 3-(β-Sulfatoethylsulfonyl)-phenyl.

Kupplungskomponenten, die erfindungsgemäß die faserreaktive Gruppe der Formel (3) enthalten bzw. in die die faserreaktive Gruppe, gegebenenfalls erst nach der Kupplungsreaktion, eingeführt werden kann, sind beispielsweise Verbindungen der allgemeinen Formeln (11a) bis (11h) bzw. deren Z^{o}-freien Vorprodukte (d.h. Verbindungen, die statt der Gruppe -N(R^{x})-Z^{o} die Gruppe -N(R^{x})-H enthalten): 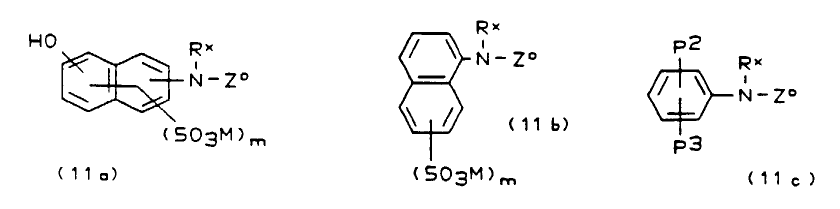 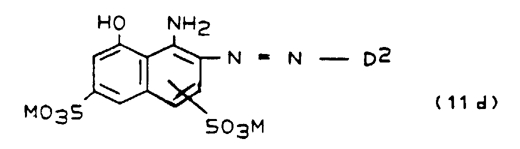 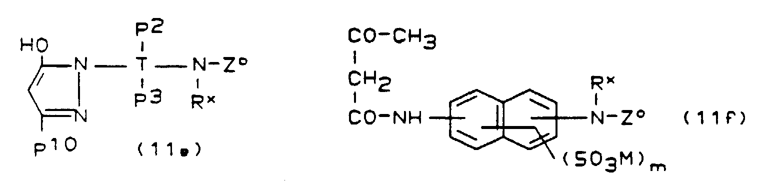 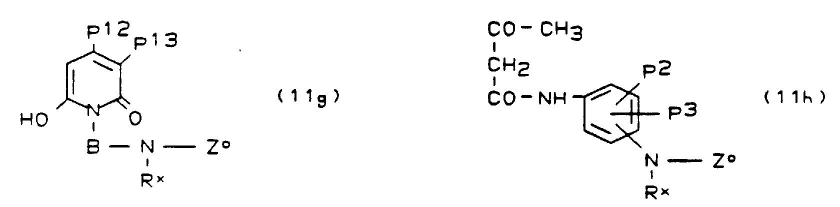 in welchen
- R^{x}, P², P³, P¹⁰, P¹², P¹³, D², M, m und T: die oben angegebenen, insbesondere bevorzugten Bedeutungen haben,
- B: Alkyl von 1 bis 4 C-Atomen, Benzyl oder Phenethyl oder Phenyl oder im Benzolrest durch Fluor, Chlor, Brom, Methyl, Methoxy, Cyano, Sulfo, Carboxy, Acetyl, Nitro, Carbamoyl und/oder Sulfamoyl substituiertes Benzyl, Phenethyl oder Phenyl ist, wobei im Falle von "Benzyl" und "Phenethyl" die Gruppe -N(R^{x})-Z^{o} an den Benzolkern gebunden ist,
- Z^{o}: ein von der Gruppe -N(R^{x})- bzw. -N(R')- freier Rest der Formel (3), (3a) oder (3b) ist,
- D²: der Rest einer Diazokomponente mit einer faserreaktiven Gruppe, insbesondere der Formel (3), ist, vorzugsweise ein Rest der obengenannten Formel (10a) oder (10b) mit P¹ gleich einer Gruppe der Formel -SO₂-Y oder ein Rest der Formel (10c) 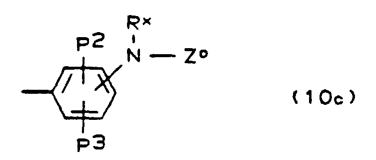 ist, in welcher R^{x}, P², P³ und Z^{o} die oben angegebenen, insbesondere bevorzugten Bedeutungen haben.

Aromatische Diamine aus dem Rest der Formel (10c) sind beispielsweise:
1,3-Diaminobenzol, 1,3-Diaminobenzol-4-sulfonsäure, 1,3-Diaminobenzol-4,6-disulfonsäure, 1,3-Diaminobenzol, 1,3-Diaminobenzol-4-sulfonsäure, aminobenzol-2-sulfonsäure, 1,4-Diamino-2-methyl-benzol, 1,4-Diamino-2-methoxybenzol, 1,3-Diamino-4-methyl-benzol, 1,4-Diaminobenzol-2,6-disulfonsäure, 1,5-Diamino-4-methylbenzol-2-sulfonsäure, 1,5-Diamino-4-methoxybenzol-2-sulfonsäure, wobei in allen diesen Diaminoverbindungen die eine primäre oder sekundäre Aminogruppe durch den faserreaktiven Rest Z^{o} substituiert ist.

Reste K in den Formeln (4b) und (4f), die die Gruppe Z nicht enthalten, sind insbesondere Reste der allgemeinen Formeln (12a) bis (12h) 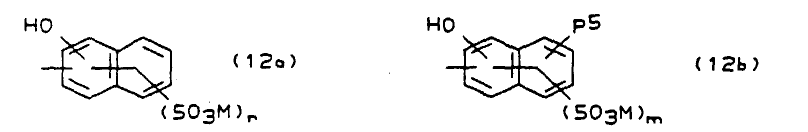 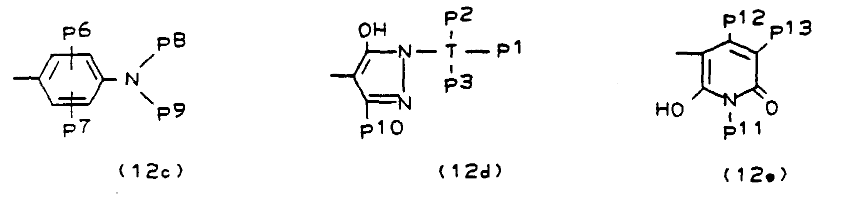 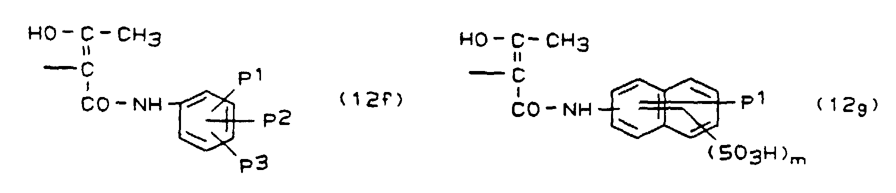 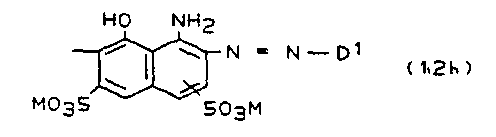 in welchen die einzelnen Formelglieder die obengenannten Bedeutungen haben.

Reste K in den Formeln (4a), (4c) und (4f), die die Gruppe Z enthalten, sind insbesondere Reste der allgemeinen Formeln (12j) bis (12p) 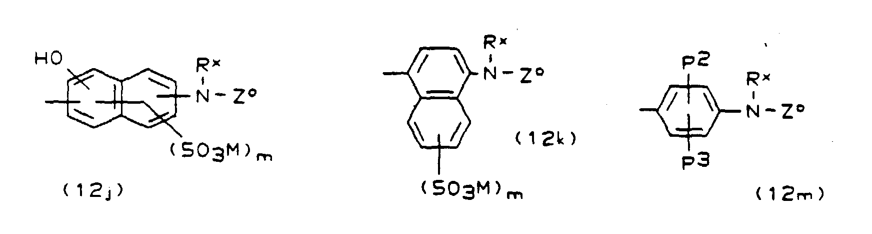 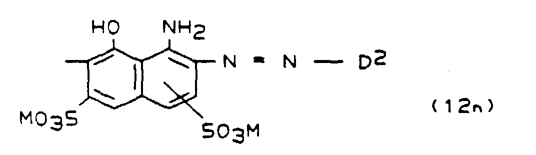 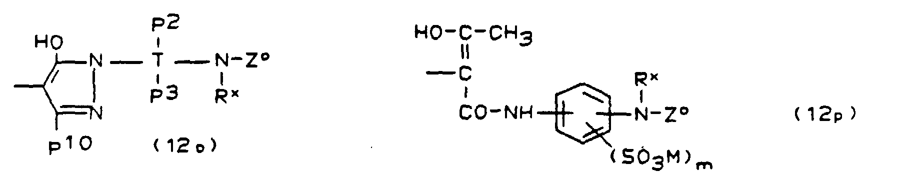 in welchen die einzelnen Formelglieder die obengenannten Bedeutungen haben.

Reste K in der Formel (4h) mit einem metallkomplex-bindenden Sauerstoffatom, die gegebenenfalls die Gruppe Z enthalten, sind insbesondere solche der Formeln (13a) bis (13f) 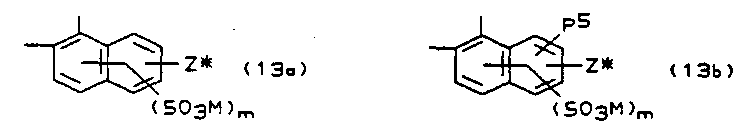 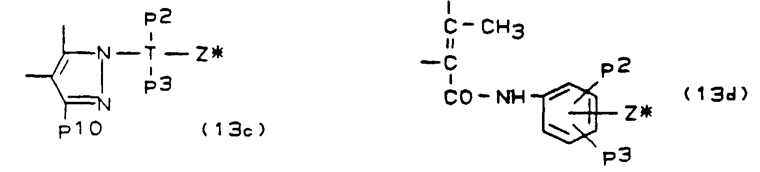 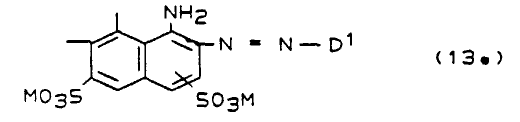 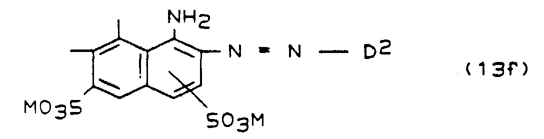 in welchen Z* eine der Bedeutungen von P¹ oder Z besitzt und die Formelglieder eine der obengenannten Bedeutungen haben.

Die obengenannten Verbindungen der allgemeinen Formeln (11b) und (11c) können selbst als Kupplungskomponenten nicht eingesetzt werden. Als Kupplungskomponenten zur Synthese der erfindungsgemäßen Azofarbstoffe dienen deren Z^{o}-freien Vorprodukte, d.h. deren Vorprodukte, die anstelle der Gruppe -N(R^{x})-Z^{o} eine Aminogruppe der Formel -N(R^{x})-H enthalten. Nach Kupplung dieser aminogruppenhaltigen Vorprodukte mit einer entsprechenden Diazokomponente zur Azoverbindung kann der faserreaktive Rest Z^{o} durch Umsetzung mit einer Verbindung der allgemeinen Formel Hal-Z^{o}, in welcher Hal ein Halogenatom, bevorzugt ein Fluor- oder Chloratom, darstellt und Z^{o} die obengenannte Bedeutung besitzt, in die Aminogruppe -N(R^{x})-H eingeführt werden. Analog können auch die Z^{o}-freien Aminoverbindungen der Verbindungen der allgemeinen Formeln (11a) und (11d) bis (11h) selbst zunächst als Kupplungskomponenten zur Herstellung einer Amino-Azo-Ausgangsverbindung dienen, in die sodann der faserreaktive Rest in gleicher Weise eingeführt werden kann. Die Kupplungskomponenten mit dem faserreaktiven Rest Z^{o} der allgemeinen Formeln (11a) und (11d) bis (11h) selbst lassen sich ebenso durch Umsetzung dieser Z^{o}-freien, aminogruppenhaltigen Ausgangsverbindungen mit einer Verbindung der Formel Hal-Z^{o} analog bekannter Verfahrensweisen herstellen.

Von den erfindungsgemäßen Anthrachinonfarbstoffen sind diejenigen bevorzugt, die der allgemeinen Formel (14) 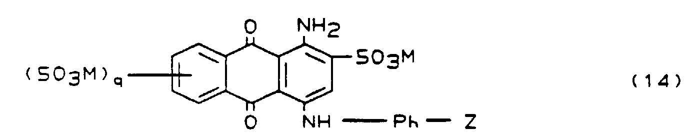 entsprechen, in welcher
- M: ein Wasserstoffatom oder ein Alkalimetall, wie Natrium, Kalium oder Lithium, ist,
- q: die Zahl Null oder 1 bedeutet (wobei im Falle von g gleich Null diese Gruppe ein Wasserstoffatom darstellt),
- Ph: ein Phenylenrest ist, der durch 1 oder 2 Substituenten aus der Gruppe Alkyl von 1 bis 4 C-Atomen, wie Methyl und Ethyl, Alkoxy von 1 bis 4 C-Atomen, wie Methoxy und Ethoxy, Halogen, wie Chlor und Brom, Carboxy und Sulfo substituiert sein kann, und
- Z: die faserreaktive Gruppe der allgemeinen Formel (3) oder bevorzugt (3a) oder (3b) ist.

Von den erfindungsgemäßen Triphendioxazinfarbstoffen sind bevorzugt diejenigen, die der allgemeinen Formel (15) 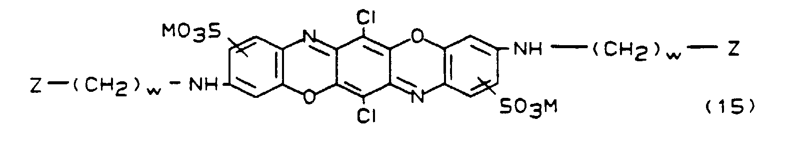 entsprechen, in welcher M ein Wasserstoffatom oder ein Alkalimetall, wie Natrium, Kalium oder Lithium ist, Z die faserreaktive Gruppe der allgemeinen Formel (3) oder bevorzugt (3a) oder (3b) ist und w für die Zahl 2, 3 oder 4 steht, wobei die beiden Sulfogruppen -SO₃M bevorzugt in ortho-Stellung zum Sauerstoffatom des heterocyclischen Ringes an den Benzolkern gebunden sind.

Von den erfindungsgemäßen Phthalocyaninfarbstoffen sind diejenigen bevorzugt, die der allgemeinen Formel (16A) 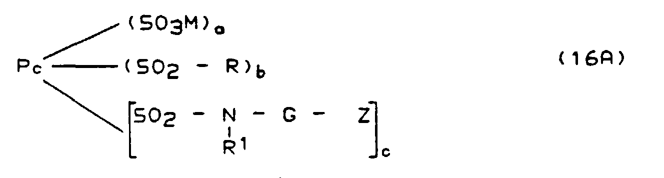 entsprechen, in welcher bedeuten:
- Pc: ist der Rest eines Kupfer- oder Nickelphthalocyanins;
- R: ist eine Aminogruppe der Formel -NR²R³, in welcher R² und R³ unabhängig voneinander Wasserstoff oder Alkyl von 1 bis 4 C-Atomen, das durch Hydroxy oder Sulfo substituiert sein kann, bedeuten, oder ist ein heterocyclischer, N-haltiger Rest, wie der Morpholino- oder Piperidino-Rest;
- R¹: ist Wasserstoff oder Alkyl von 1 bis 4 C-Atomen, wie Methyl und Ethyl;
- G: ist Phenylen, das durch 1 oder 2 Substituenten aus der Gruppe Alkyl von 1 bist 4 C-Atomen, wie Ethyl und Methyl, Halogen, wie Chlor und Brom, Carboxy und Sulfo substituiert sein kann, beispielsweise Sulfophenylen, oder ist Alkylen von 2 bis 6 C-Atomen, wie Ethylen;
- Z: ist die faserreaktive Gruppe der Formel (3) oder bevorzugt (3a) oder (3b);
- a: ist eine Zahl von 2 bis 3,
- b: ist eine Zahl von Null bis 3 und
- c: ist eine Zahl von 1 bis 2,
wobei die Summe von (a+b+c) gleich einer Zahl von 3 bis 4 ist.

Von den erfindungsgemäßen Kupferformazanfarbstoffen sind diejenigen bevorzugt, die der allgemeinen Formel (16B) entsprechen: 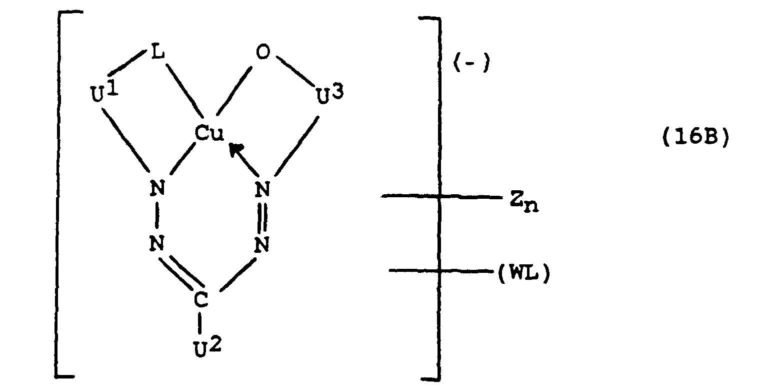 in welcher bedeuten:
- n: ist die Zahl 1 oder 2, bevorzugt 1;
- Z: ist eine faserreaktive Gruppe der allgemeinen Formel (3) oder bevorzugt der allgemeinen Formel (3a) oder (3b), die an ein aromatisches Kohlenstoffatom von U¹ oder U³ oder an ein aliphatisches Kohlenstoffatom eines Substituenten von U¹ oder U³ gebunden ist, wobei im Falle von n gleich 2 beide Z nicht gleichzeitig an U¹ oder an U³ gebunden sind;
- U¹: ist ein Benzol- oder Naphthalinring, bevorzugt ein Benzolring, die beide durch Substituenten aus der Gruppe Halogen, wie Chlor und Brom, Nitro, Alkyl von 1 bis 5 C-Atomen, wie Methyl und Ethyl, Alkoxy von 1 bis 4 C-Atomen, wie Methoxy und Ethoxy, Alkylsulfonyl von 1 bis 4 C-Atomen, wie Methylsulfonyl und Ethylsulfonyl, Phenylsulfonyl, Sulfamoyl, N-Monoalkyl- und N,N-Dialkylsulfamoyl mit jeweils 1 bis 4 C-Atomen im Alkyl substituiert sein können;
- U²: ist ein Wasserstoffatom oder eine geradkettige oder verzweigt-kettige Alkylengruppe von 1 bis 8 C-Atomen, bevorzugt von 1 bis 4 C-Atomen, oder eine geradkettige oder verzweigt-kettige Alkenylengruppe von 2 bis 8 C-Atomen, bevorzugt von 2 bis 4 C-Atomen, wobei diese Alkylen- und Alkenylengruppen noch durch einen Phenylrest substituiert sein können und dieser Phenylrest durch Substituenten aus der Gruppe Methyl, Ethyl, Methoxy, Ethoxy, Fluor, Brom, Chlor und Sulfamoyl substituiert sein kann, oder ist ein Alkylen-phenylen-Rest mit 1 bis 4 C-Atomen im Alkylenteil oder ein Alkenylen-phenylen-Rest mit 2 bis 4 C-Atomen im Alkenylenteil, wobei jeweils der Phenylenrest durch Substituenten aus der Gruppe Methyl, Ethyl, Methoxy, Ethoxy, Fluor, Chlor, Brom und Sulfamoyl substituiert sein kann, oder ist ein Phenylen- oder Naphthylenrest, bevorzugt ein Phenylenrest, die beide durch Substituenten aus der Gruppe Hydroxy, Nitro, Halogen, wie Chlor und Brom, Alkyl von 1 bis 5 C-Atomen, wie Methyl und Ethyl, Alkoxy von 1 bis 4 C-Atomen, wie Methoxy und Ethoxy, und Carbalkoxy mit 1 bis 4 C-Atomen im Alkylrest, wie Carbomethoxy und Carbethoxy, substituiert sein können, oder ist der bivalente Rest des Furans, Thiophens, Pyrrols, Imidazols, Indols, Pyrazols, Pyridins, Pyrimidins, Chinolins und Benzimidazols;
- U³: ist ein Benzol- oder Naphthalinring, bevorzugt ein Benzolring, die beide durch Substituenten aus der Gruppe Halogen, wie Chlor und Brom, Nitro, Alkyl von 1 bis 5 C-Atomen, wie Methyl und Ethyl, Alkoxy von 1 bis 4 C-Atomen, wie Methoxy und Ethoxy, Alkylsulfonyl von 1 bis 4 C-Atomen, wie Methylsulfonyl und Ethylsulfonyl, Phenylsulfonyl, Sulfamoyl, N-Monoalkyl- und N,N-Dialkylsulfamoyl mit jeweils 1 bis 4 C-Atomen im Alkyl substituiert sein können;
- WL: ist eine wasserlöslich machende Gruppe, wie eine Carboxygruppe und vorzugsweise eine Sulfogruppe, als ein zu den obengenannten, gegebenenfalls vorhandenen Substituenten von U¹, U² und U³ zusätzlicher Substituent an U¹, U² und/oder U³, der an ein aromatisches Kohlenstoffatom oder ein aliphatisches Kohlenstoffatom von U¹, U² oder U³ oder an ein aliphatisches Kohlenstoffatom eines Substituenten, wie einer Methylgruppe, von U¹, U² oder U³ gebunden ist;
- q: ist die Zahl 1, 2 oder 3, vorzugsweise 1 oder 2; sofern WL im Molekül zwei- oder dreimal enthalten ist, kann es innerhalb der angegebenen Bedeutung verschiedene Bedeutungen besitzen;
- L: ist ein Sauerstoffatom oder die Carbonyloxygruppe der Formel -CO-O- , wobei die Gruppe L und das N-Atom in ortho-Stellung zueinander an den aromatischen Kern von U¹ gebunden sind.

Weiterhin bevorzugt sind von den Azofarbstoffen solche, die den allgemeinen Formeln (17A) bis (17J) 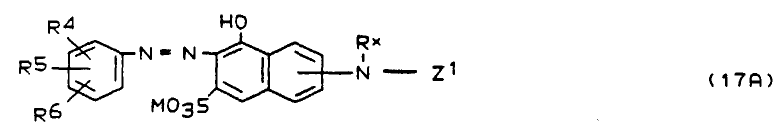 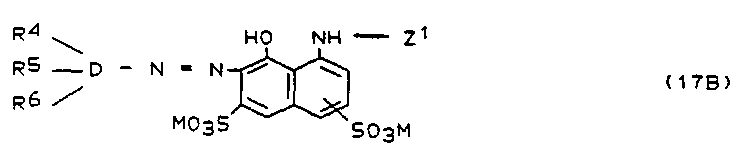 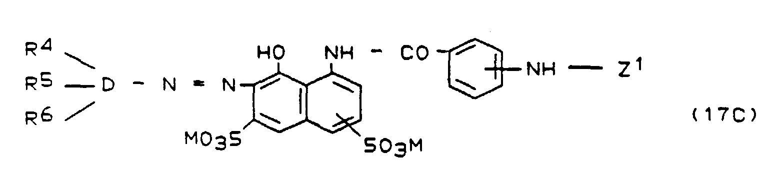 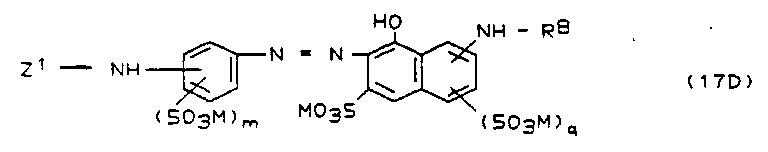 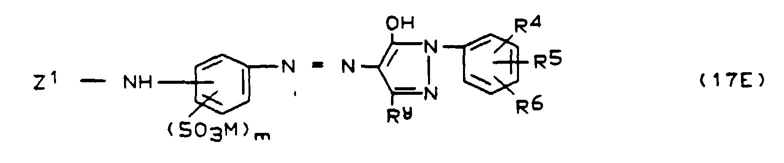 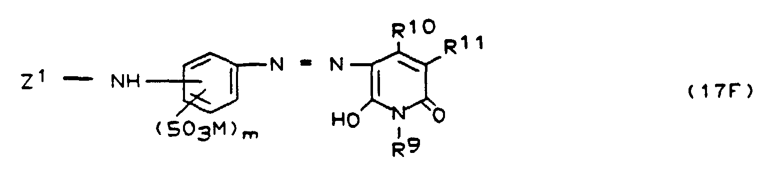 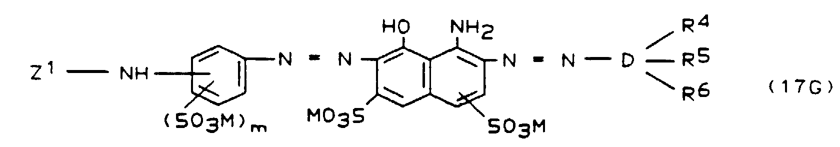 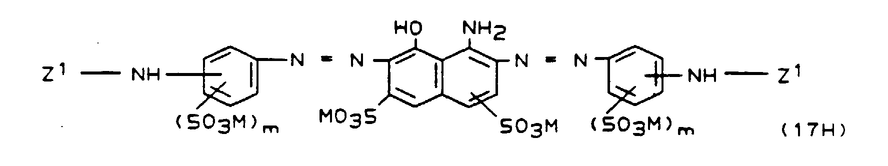 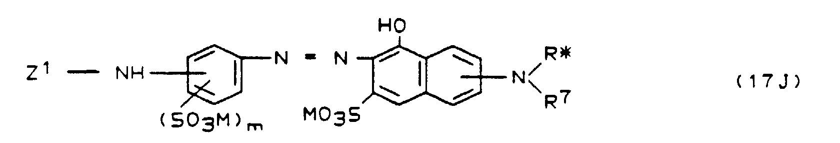 entsprechen, in welchen bedeuten:
- M: hat eine der obengenannten Bedeutungen;
- R^{x}: ist Wasserstoff oder Alkyl von 1 bis 4 C-Atomen, wie Methyl;
- R⁴: ist Wasserstoff, Alkyl von 1 bis 4 C-Atomen, wie Ethyl und insbesondere Methyl, Alkoxy von 1 bis 4 C-Atomen, wie Ethoxy und insbesondere Methoxy, Halogen, wie Chlor und Brom, Carboxy, Sulfo, β-Sulfatoethylsulfonyl, β-Chlorethylsulfonyl oder Vinylsulfonyl;
- R⁵: ist Wasserstoff, Alkyl von 1 bis 4 C-Atomen, wie Ethyl und insbesondere Methyl, Alkoxy von 1 bis 4 C-Atomen, wie Ethoxy und insbesondere Methoxy, Halogen, wie Chlor und Brom, Carboxy oder Sulfo;
- R⁶: ist Wasserstoff oder Sulfo;
- R*: ist Wasserstoff oder Methyl;
- R⁷: ist Alkanoyl von 2 bis 5 C-Atomen, wie Acetyl, oder ist Benzoyl, β-Sulfatoethylsulfonyl oder 3-(β-Chlorethylsulfonyl)-benzoyl;
- R⁸: ist Alkanoyl von 2 bis 5 C-Atomen, wie Acetyl, oder Benzoyl;
- R^{y}: ist Methyl oder Carboxy;
- R⁹: ist Wasserstoff oder Alkyl von 1 bis 4 C-Atomen, wie Methyl oder Ethyl, das durch Sulfo oder Carboxy substituiert sein kann, oder ist Phenyl;
- R¹⁰: ist Wasserstoff oder Alkyl von 1 bis 4 C-Atomen, wie Methyl, oder ist Phenyl;
- R¹¹: ist Wasserstoff, Cyano, Carbamoyl, Sulfamoyl oder Sulfomethyl;
- Z¹: ist ein Rest der allgemeinen Formel (3A) oder bevorzugt der allgemeinen Formel (3B) oder (3C) 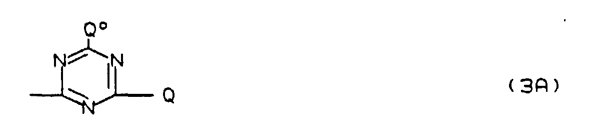 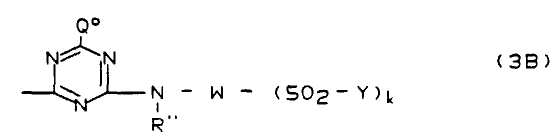 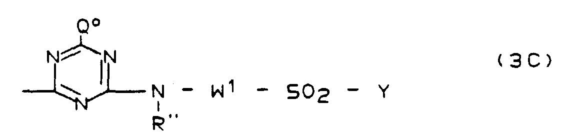 in welchen R^{x}, Q^{o}, Q, R', R", W, W¹, Y und k eine der obengenannten Bedeutungen haben;
- D: ist ein Benzolring oder ist ein Naphthalinring, an den die Azogruppe in β-Stellung gebunden ist, wobei im Falle, daß D den Naphthalinring bedeutet, R⁴ und R⁵ bevorzugt jedes, unabhängig voneinander, ein Wasserstoffatom oder eine Sulfogruppe bedeuten und R⁶ eine Sulfogruppe ist;
- m: ist die Zahl Null, 1 oder 2 (wobei im Falle von m gleich Null diese Gruppe Wasserstoff ist).

Weitere bevorzugte erfindungsgemäße Farbstoffe entsprechend der allgemeinen Formel (1) sind diejenigen der nachstehend angegebenen Formeln (18A), (18B), (19) und (20) bis (30): 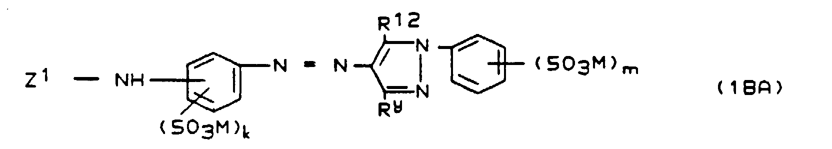 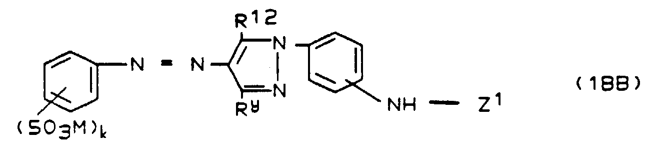 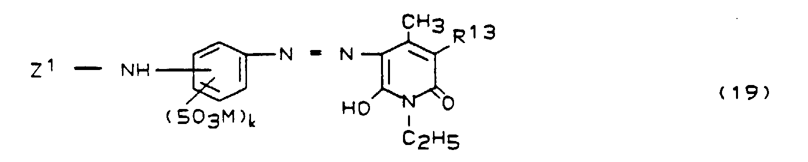 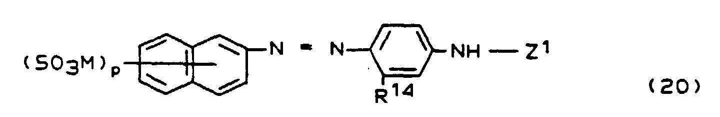 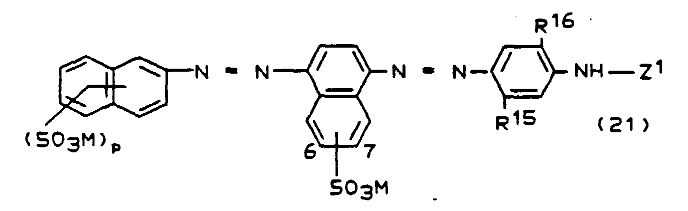 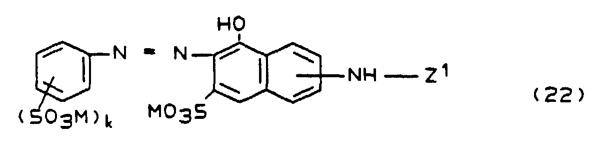 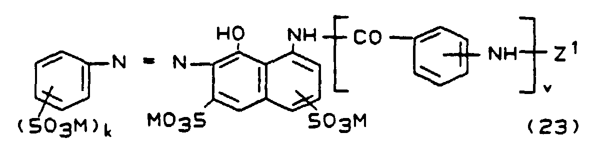 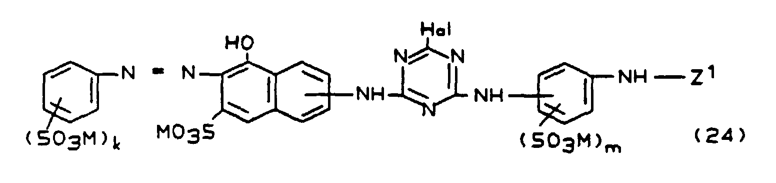 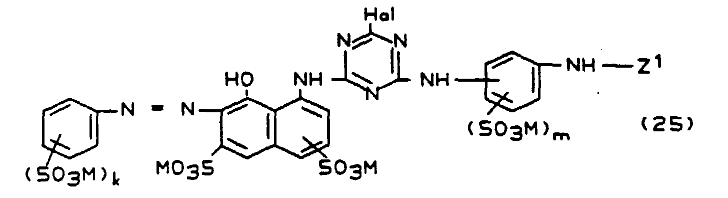 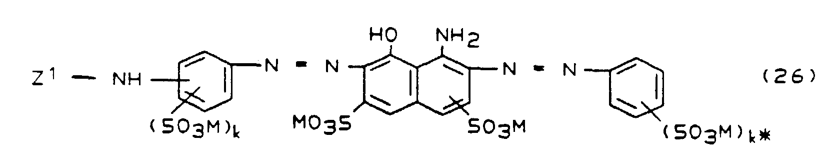 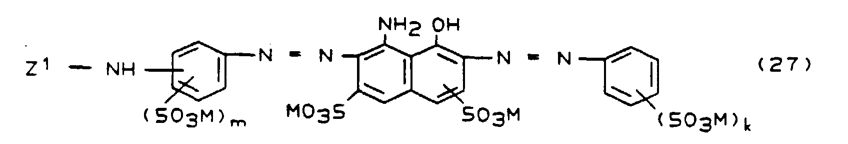 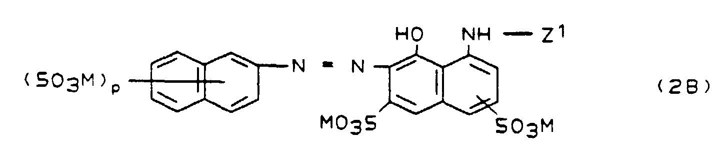 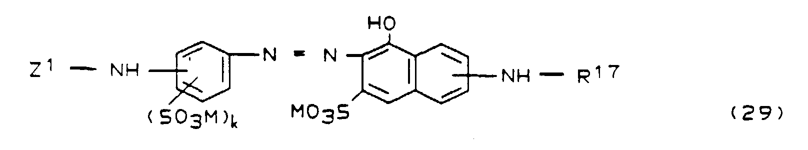 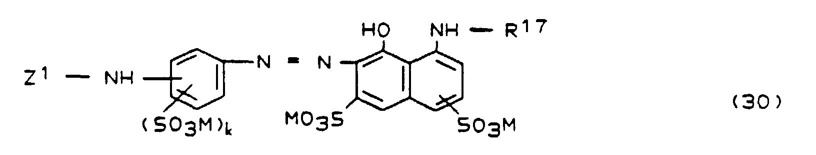 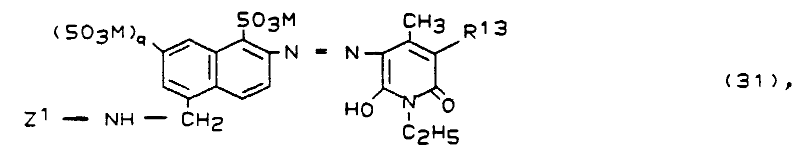 des weiteren die Metallkomplexfarbstoffe, wie die 1:2-Chrom- und 1:2-Kobalt- und insbesondere die 1:1-Kupferkomplex-Farbstoffe der Verbindungen der Formeln (32) bis (37): 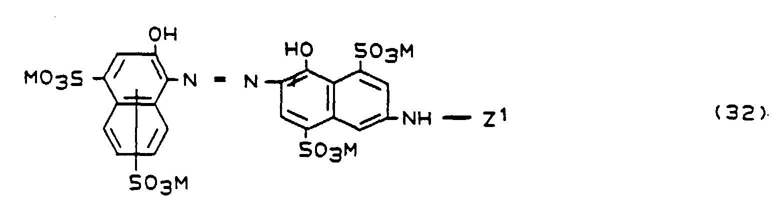 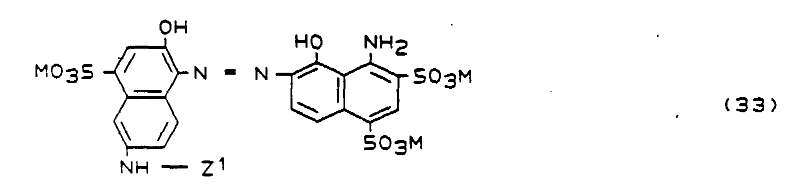 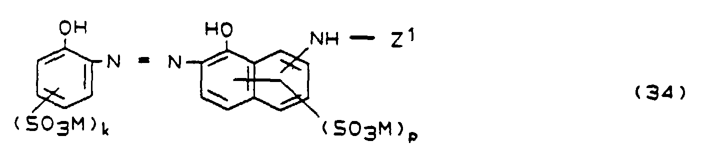 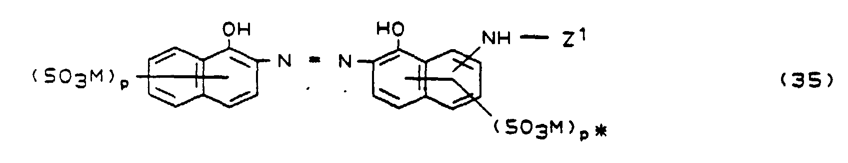 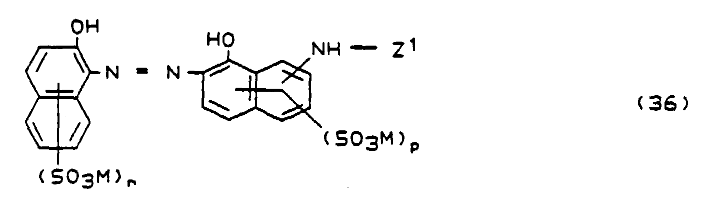 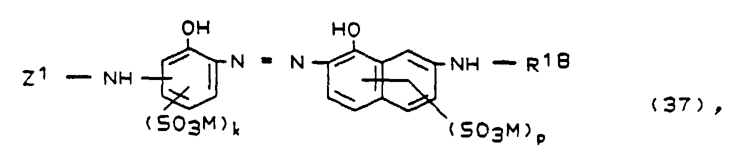 des weiteren die Farbstoffe der Formeln (38) bis (55):

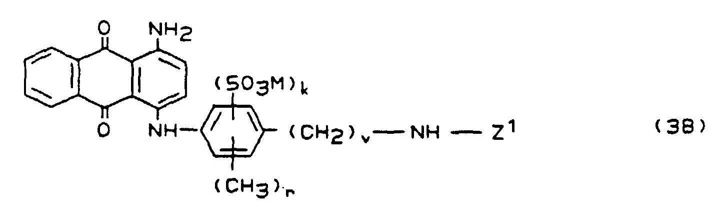

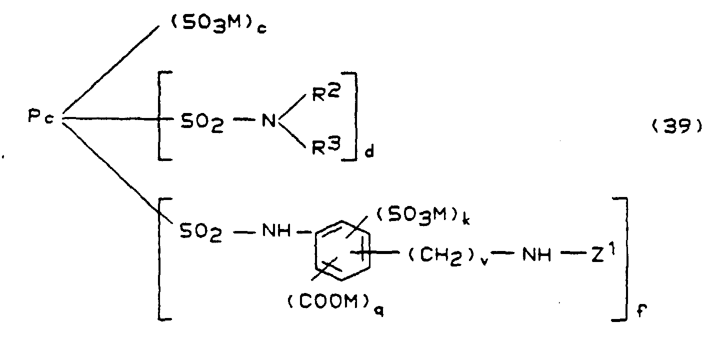

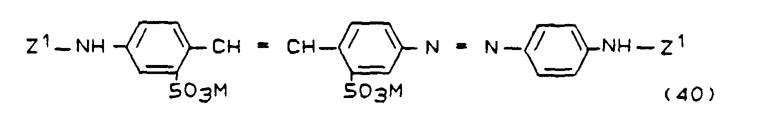

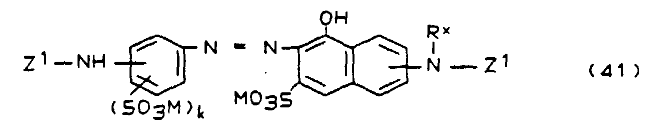

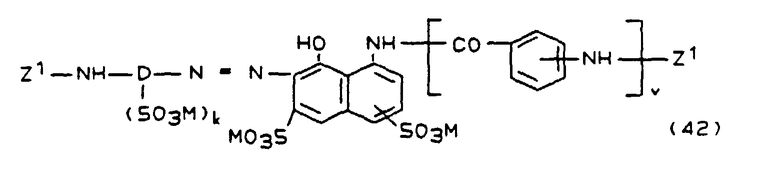

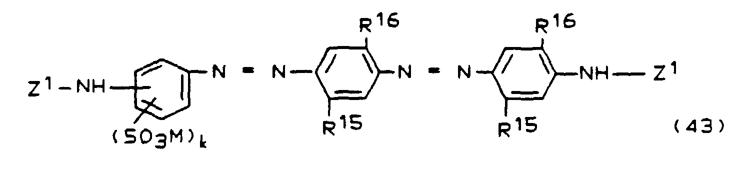

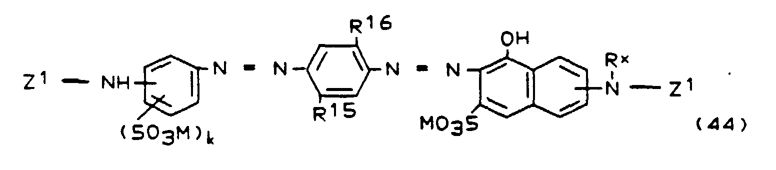

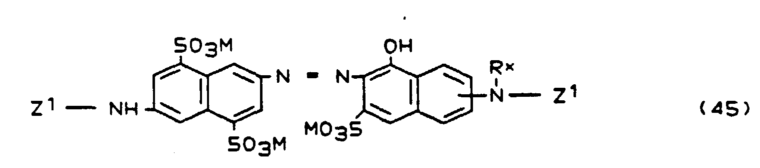

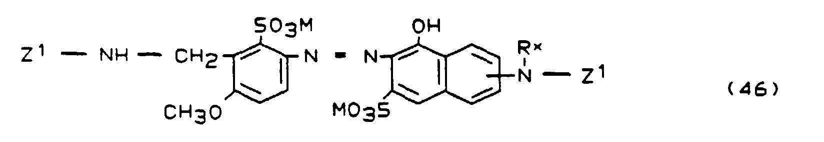

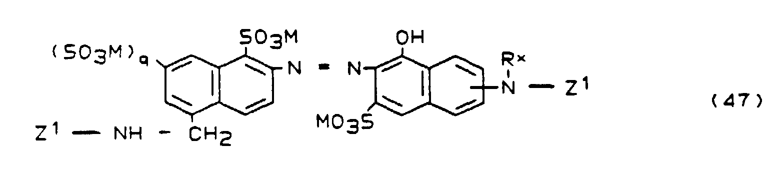

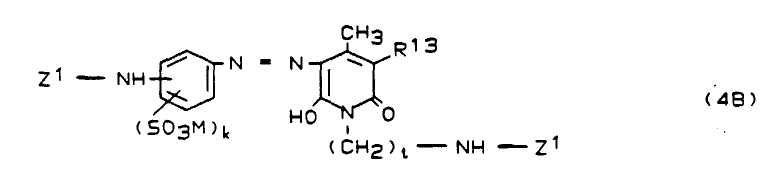

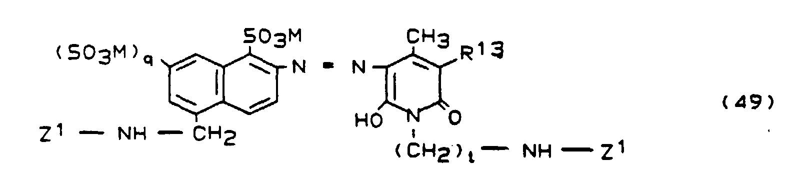

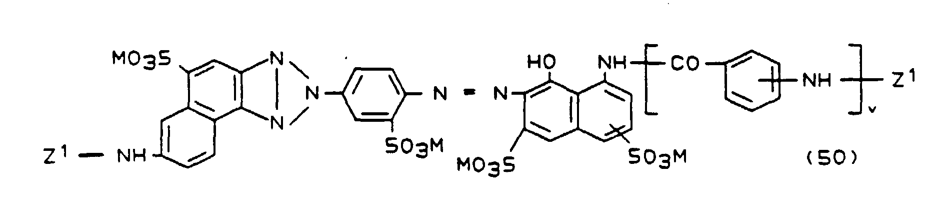

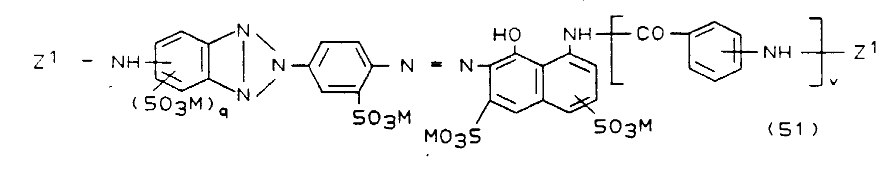

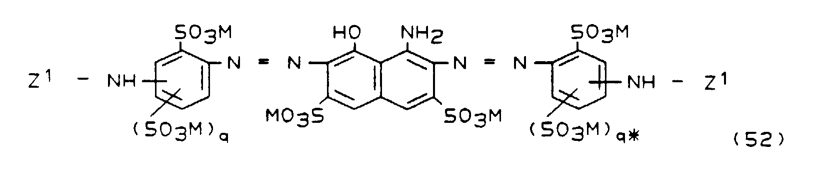

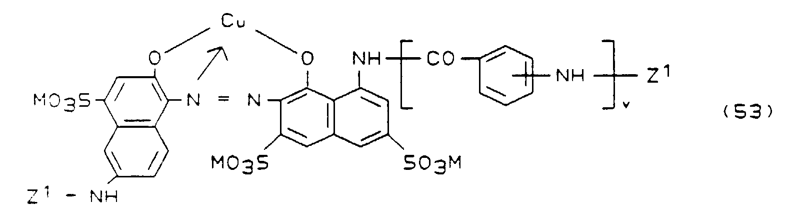

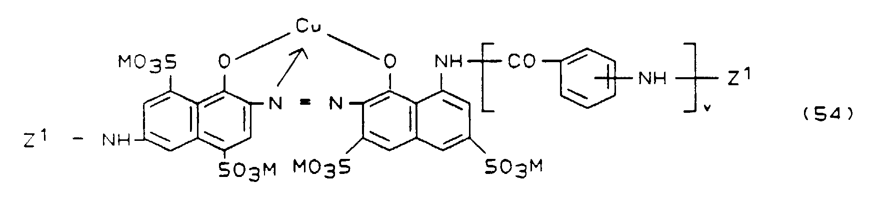

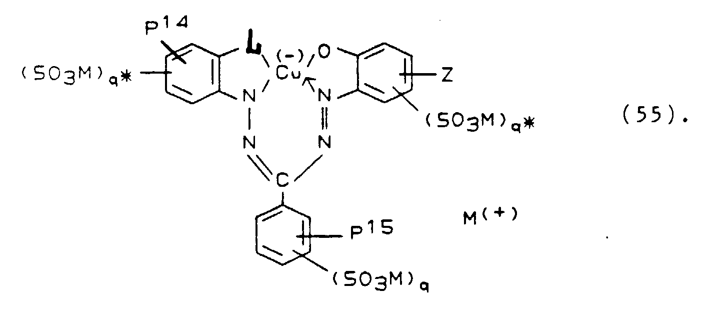

In diesen Formeln bedeuten:
- M, m, Z¹ und R^{y}: haben die obengenannten, insbesondere bevorzugten, Bedeutungen;
- k: steht für die Zahl 1 oder 2;
- k*: steht für die Zahl 1 oder 2;
- R¹²: ist Hydroxy oder Amino;
- R¹³: ist Cyano-, Carbamoyl oder Sulfomethyl;
- R¹⁴: ist Methyl, Acetylamino oder Ureido;
- p: steht für die Zahl 1, 2 oder 3;
- p*: ist die Zahl 1, 2 oder 3;
- R¹⁵: ist Wasserstoff oder Alkyl von 1 bis 4 C-Atomen, wie Methyl und Ethyl, Alkoxy von 1 bis 4 C-Atomen, wie Methoxy und Ethoxy, Alkanoylamino von 2 bis 5 C-Atomen, wie Acetylamino, Ureido, Halogen, wie Brom und insbesondere Chlor, vorzugsweise jedoch Wasserstoff, Methyl, Ethyl, Methoxy, Ethoxy, Acetylamino, Ureido oder Chlor;
- R¹⁶: ist Wasserstoff, Alkyl von 1 bis 4 C-Atomen, wie Methyl und Ethyl, Alkoxy von 1 bis 4 C-Atomen, wie Methoxy und Ethoxy, Halogen, wie Brom und insbesondere Chlor, vorzugsweise jedoch Wasserstoff, Methyl, Ethyl, Methoxy, Ethoxy oder Chlor;
- v: ist die Zahl Null oder 1;
- Hal: ist Chlor oder Fluor;
- R¹⁷: ist Acetyl oder Benzoyl;
- R¹⁸: ist Wasserstoff oder Acetyl;
- r: ist die Zahl Null oder 1, 2 oder 3 (wobei im Falle von r gleich Null diese Gruppe Wasserstoff bedeutet);
- R²: ist Wasserstoff oder Alkyl von 1 bis 4 C-Atomen, wie Methyl oder Ethyl, und
- R³: ist Wasserstoff oder Alkyl von 1 bis 4 C-Atomen, wie Methyl oder Ethyl, oder
- R² und R³: bilden zusammen mit dem N-Atom einen eine Alkylengruppe von 3 bis 7 C-Atomen oder eine oder zwei Alkylengruppen von 1 bis 5 C-Atomen und eine weitere Heterogruppe, wie ein N- oder O-Atom oder eine Gruppe -NH- oder -N(CH₃)- oder -N(C₂H₅)- , enthaltenden heterocyclischen Rest, wie beispielsweise den N-Piperidino- oder N-Morpholino-Rest;
- q: steht für die Zahl Null oder 1 (wobei im Falle von q gleich Null diese Gruppe Wasserstoff darstellt);
- q*: steht für die Zahl Null oder 1 (wobei im Falle von q* gleich Null diese Gruppe Wasserstoff darstellt);
- Pc: ist der Rest des Kupfer- oder Nickelphthalocyanins;
- c: steht für eine Zahl von 1 bis 3,
- d: steht für eine Zahl von 0,5 bis 1,5 und
- f: steht für eine Zahl von 1 bis 2,
wobei die Summe von (c+d+f) eine Zahl von 3 bis 4 ist;
- R^{x}: ist Wasserstoff oder Alkyl von 1 bis 4 C-Atomen, wie Methyl;
- t: steht für die Zahl 2 oder 3;
- P¹⁴: ist Wasserstoff, Alkyl von 1 bis 4 C-Atomen, wie Methyl und Ethyl, Alkoxy von 1 bis 4 C-Atomen, wie Methoxy und Ethoxy, oder Carboxy;
- P¹⁵: ist Wasserstoff, Chlor, Alkyl von 1 bis 4 C-Atomen, wie Methyl und Ethyl, oder Alkoxy von 1 bis 4 C-Atomen, wie Methoxy und Ethoxy;
- L: ist Carbonyloxy oder bevorzugt ein Sauerstoffatom;
- Z: ist eine Gruppe der Formel (3) oder bevorzugt der Formel (3a) oder (3b)
die in den obigen Farbstofformeln angegebenen Benzolringe können zusätzlich noch substituiert sein, wie beispielsweise durch 1 oder 2 Substituenten aus der Gruppe Methyl, Ethyl, Methoxy, Ethoxy , Methylsulfonyl, Ethylsulfonyl, Carboxy, Acetylamino und Chlor, und die Naphthalinringe durch einen Substituenten aus der Gruppe Methoxy, Carboxy, Acetylamino, Nitro und Chlor.

Weiterhin sind bevorzugt Verbindungen der allgemeinen Formeln (17B), (20), (21) und (42), in welchen Z¹ ein Rest der oben angegebenen allgemeinen Formel (3C) ist, in welcher W¹ eine Alkylengruppe von 2 bis 4 C-Atomen, bevorzugt von 3 C-Atomen, ist oder ein Phenylenrest ist, der durch 1 oder 2 Substituenten aus der Gruppe Methyl, Ethyl, Methoxy, Ethoxy und Chlor substituiert sein kann, Y eine der oben genannten Bedeutungen hat und bevorzugt die β-Sulfatoethyl-Gruppe ist und R'' Wasserstoff, Methyl oder Ethyl ist, wobei weiterhin bevorzugt in Formel (17B) D ein Naphthalinring oder bevorzugt ein Benzolring ist, R⁴ die Vinylsulfonyl- oder bevorzugt die β-Sulfatoethylsulfonyl-Gruppe bedeutet und R⁵ und R⁶ die obengenannten Bedeutungen haben, M ein Wasserstoffatom oder Alkalimetall ist und Z¹ ein Rest der allgemeinen Formel (3C) ist, und wobei weiterhin bevorzugt in Formel (21) p für die Zahl 2 steht, wobei die beiden Gruppen -SO₃M in 4- und 8-Stellung an den Naphth-2-yl-Rest gebunden sind und die Gruppe -SO₃M in der Naphthylen-Mittelkomponente in 6-Stellung gebunden ist, und wobei weiterhin bevorzugt in Formel (42) die eine Gruppe -SO₃M im Aminonaphtholrest in meta-Stellung zur Gruppe NH steht und v die Zahl Null bedeutet.

Erfindungsgemäße Phthalocyaninfarbstoffe können erfindungsgemäß auch beispielsweise so hergestellt werden, daß man von einem Phthalocyaninsulfochlorid oder einem sulfogruppenhaltigen Phthalocyaninsulfochlorid ausgeht und dieses mit einem Amin der allgemeinen Formel H-Q mit Q der obengenannten Bedeutung und gegebenenfalls mit einem weiteren Amin, wie beispielsweise einem Amin der allgemeinen Formel -NR²R³ mit R² und R³ der obengenannten Bedeutung, umsetzt. Solche Verfahrensweisen der Umsetzung von Phthalocyaninsulfochloriden mit Aminen sind zahlreich in der Literatur beschrieben, wie beispielsweise in der US-Patentschrift 4 745 178 und der darin diesbezüglich zusätzlich aufgeführten Literatur.

Die Ausgangs-Sulfonamide der Formel H-Q^{o} sind in der Regel altbekannt und sind zahlreich in der Literatur beschrieben oder können analog bekannten und dem Allgemeinwissen eines Chemikers zugehörigen Verfahrensweisen hergestellt werden.

Die Ausgangsamine der allgemeinen Formel H-Q sind ebenso zahlreich in der Literatur beschrieben, so beispielsweise in den Deutschen Patentschriften Nrs. 887 505 und 965 902, in den Deutschen Offenlegungsschriften Nrs. 2 040 620 und 2 614 550 und in den Europäischen Patentanmeldungs-Veröffentlichungen Nrs. 0 107 614, 0 144 766, 0 159 292 und 0 278 904.

Die erfindungsgemäßen Farbstoffe können, ausgehend von einem oder mehreren Ausgangsprodukten mit einer β-Hydroxyethylsulfonyl-Gruppe, wie von einem Amin der allgemeinen Formel H-Q mit Q der obengenannten Bedeutung, jedoch mit dem Unterschied, daß die Gruppe(n) der Formel -SO₂-Y β-Hydroxyethylsulfonyl-Gruppen sind, erfindungsgemäß auch so hergestellt werden, daß man analog den oben angegebenen erfindungsgemäßen Verfahrensweisen zunächst eine Ausgangsverbindung herstellt, der der allgemeinen Formel (1) mit der angegebenen Bedeutung entspricht, jedoch mit dem Unterschied, daß die Gruppe(n) -SO₂-Y β-Hydroxyethylsulfonyl-Gruppen sind, und in dieser Verbindung die β-Hydroxyethylsulfonyl-Gruppen analog bekannten Verfahrensweisen in andere Gruppen -SO₂-Y entsprechend der erfindungsgemäßen Verbindung (1) überführt, so beispielsweise in deren Esterderivate, wie beispielsweise von mehrwertigen anorganischen Säuren oder von aliphatischen und aromatischen Carbon- oder Sulfonsäuren, so beispielsweise in Verbindungen, in welchen Y für die β-Chlorethyl-, β-Sulfatoethyl-, β-Phosphatoethyl-, β-Thiosulfatoethyl-, β-Acetyloxyethyl- oder β-Toluylsulfonyloxyethyl-Gruppe steht. Hierfür geeignete Veresterungs- und Acylierungsmittel sind beispielsweise die entsprechenden anorganischen oder organischen Säuren oder deren Anhydride oder Halogenide oder Amide, wie beispielsweise Schwefelsäure, Schwefeltrioxid enthaltende Schwefelsäure, Chlorsulfonsäure, Amidosulfonsäure, Phosphorsäure, Polyphosphorsäure, Phosphoroxychlorid, Gemische aus Phosphorsäure und Phosphorpentoxid, Acetanhydrid, Toluolsulfochlorid und Thionylchlorid.

Die Sulfatierung erfolgt beispielsweise durch Umsetzung mit konzentrierter Schwefelsäure bei einer Temperatur zwischen 0 und 20°C oder durch Umsetzung mit Chlorsulfonsäure in einem polaren organischen Lösemittel, wie beispielsweise N-Methyl-pyrrolidon bei einer Temperatur zwischen 10 und 80°C. Vorzugsweise erfolgt die Sulfatierung durch Eintragen des β-hydroxyethylsulfonylgruppen-haltigen Ausgangsfarbstoffes in Schwefelsäuremonohydrat bei einer Temperatur zwischen 5 und 15°C.

Diejenigen Verbindungen, in welchen Y für die Vinylgruppe steht, können aus deren analogen Esterderivaten mittels Alkali, so in wäßrigem Medium bei einem pH-Wert von 10 bis 12 und einer Temperatur zwischen 30 und 50°C während 10 bis 20 Minuten, hergestellt werden. Die Synthese von beispielsweise β-(Dialkylamino)-ethylsulfonyl- und β-Thiosulfatoethylsulfonyl-Derivaten erfolgt durch Umsetzung von deren Vinylsulfonyl-Verbindungen mit dem entsprechenden Dialkylamin oder mit einem Alkalisalz der Thioschwefelsäure, wie Natriumthiosulfat. Alle diese Verfahrensweisen der Überführung von einer Gruppe -SO₂-Y in eine andere sind dem Fachmann auf diesem faserreaktiven Gebiet geläufig und zahlreich in der Literatur beschrieben.

Die erfindungsgemäßen Farbstoffe der Formel (1) eignen sich zum Färben und Bedrucken der verschiedensten Materialien, wie Seide, Leder, Wolle, Polyamidfasern und Polyurethanen, und insbesondere cellulosehaltiger Fasermaterialien aller Art. Solche Fasermaterialien sind beispielsweise die natürlichen Cellulosefasern, wie Baumwolle, Leinen und Hanf, sowie Zellstoff und regenerierte Cellulose. Die Farbstoffe der Formel (1) sind auch zum Färben oder Bedrucken von hydroxygruppenhaltigen Fasern geeignet, die in Mischgeweben enthalten sind, z.B. von Gemischen aus Baumwolle mit Polyesterfasern oder Polyamidfasern.

Die erfindungsgemäßen Farbstoffe lassen sich auf verschiedene Weise auf das Fasermaterial applizieren und auf der Faser fixieren, insbesondere in Form von wäßrigen Farbstofflösungen und -druckpasten. Sie eignen sich sowohl für das Ausziehverfahren als auch zum Färben nach dem Foulard-Färbeverfahren, wonach die Ware mit wäßrigen, gegebenenfalls salzhaltigen Farbstofflösungen imprägniert und der Farbstoff nach einer Alkalibehandlung oder in Gegenwart von Alkali, gegebenenfalls unter Wärmeeinwirkung, fixiert wird. Besonders geeignet sind die erfindungsgemäßen Farbstoffe für das sogenannte Kaltverweilverfahren, wonach der Farbstoff zusammen mit dem Alkali auf dem Foulard aufgebracht und danach durch mehrstündiges Lagern bei Raumtemperatur fixiert wird. Nach dem Fixieren werden die Färbungen oder Drucke mit kaltem und heißem Wasser, gegebenenfalls unter Zusatz eines dispergierend wirkenden und die Diffusion der nicht fixierten Anteile fördernden Mittels, gründlich gespült.

Gegenstand der vorliegenden Erfindung ist deshalb auch die Verwendung der erfindungsgemäßen Verbindungen der allgemeinen Formel (1) zum Färben (einschließlich des Bedruckens) dieser Materialien bzw. Verfahren zum Färben (und Bedruckens) solcher Materialien in an und für sich üblicher Verfahrensweise, bei welchen eine Verbindung der allgemeinen Formel (1) als Farbmittel eingesetzt wird, indem man die Verbindung der allgemeinen Formel (1) im wäßrigen Medium auf das Material appliziert und es mittels Wärme oder mittels einer alkalisch wirkenden Verbindung oder mittels beidem auf dem Material fixiert.

Falls erfindungsgemäße Anthrachinonfarbstoffe eine ungenügende Löslichkeit in der alkalischen Färbeflotte aufweisen, kann dieser Mangel in der aus der Literatur bekannten Weise durch Zusatz von Dispergatoren oder anderen nichtfarbigen Verbindungen, z.B. einem Naphthalinsulfonsäure-Formaldehyd-Kondensat oder insbesondere Anthrachinon-2-sulfonsäure, behoben werden.

Die Farbstoffe der Formel (1) zeichnen sich durch hohe Reaktivität, gutes Fixiervermögen und ein sehr gutes Aufbauvermögen aus. Sie können daher nach dem Ausziehfärbeverfahren bei niedrigen Färbetemperaturen eingesetzt werden und erfordern beim Pad-Steam-Verfahren nur kurze Dämpfzeiten. Die Fixiergrade sind hoch, und die nicht fixierten Anteile können leicht ausgewaschen werden, wobei die Differenz zwischen Ausziehgrad und Fixiergrad bemerkenswert klein, d.h. der Seifverlust sehr gering ist. Die Farbstoffe der Formel (1) eignen sich auch besonders zum Druck, vor allem auf Baumwolle, ebenso aber auch zum Bedrucken von stickstoffhaltigen Fasern, z.B. von Wolle oder Seide oder von Mischgeweben, die Wolle oder Seide enthalten.

Die mit den erfindungsgemäßen Farbstoffen hergestellten Färbungen und Drucke auf Cellulosefasermaterialien besitzen eine hohe Farbstärke und eine hohe Faser-Farbstoff-Bindungsstabilität, sowohl in saurem als auch in alkalischem Bereich, weiterhin eine gute Lichtechtheit und sehr gute Naßechtheitseigenschaften, wie Wasch-, Wasser-, Seewasser-, Ueberfärbe- und Schweißechtheiten, sowie eine gute Plissierechtheit, Bügelechtheit und Reibechtheit.

Die nachfolgenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Die in diesen Beispielen formelmäßig beschriebenen Verbindungen sind in Form der freien Säuren angegeben; im allgemeinen werden sie in Form ihrer Alkalimetallsalze, wie Lithium-, Natrium- oder Kaliumsalze, hergestellt und isoliert und in Form ihrer Salze zum Färben verwendet.

Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalimetallsalze, in die Synthese eingesetzt werden.

Die für die erfindungsgemäßen Verbindungen angegebenen Absorptionsmaxima (λₘₐₓ) im sichtbaren Bereich wurden anhand derer Alkalimetallsalze in wäßriger Lösung ermittelt. In den Tabellenbeispielen sind die λₘₐₓ-Werte bei der Farbtonangabe in Klammern gesetzt; die Wellenlängenangabe bezieht sich auf nm.

### Beispiel 1

45,3 Teile 3-(2'-Sulfo-4'-methoxy-phenylazo)-4-hydroxy-7-amino-naphthalin-2-sulfonsäure werden in wäßriger Lösung bei einer Temperatur von 0 bis 5°C und einem pH-Wert von 4 mit 19 Teilen Cyanurchlorid umgesetzt. Anschließend gibt 9,7 Teile Methansulfonsäureamid hinzu, stellt mittels Natronlauge einen pH-Wert von 11 ein und führt die Umsetzung während etwa vier Stunden bei einer Temperatur von 40°C und bei einem pH-Wert zwischen 10 und 11 durch. Die so hergestellte Monochlortriazin-Azoverbindung wird in der Syntheselösung mit 29,5 Teilen 3-(β-Sulfatoethylsulfonyl)-anilin bei einem pH-Wert von 4 und einer Temperatur von 85°C umgesetzt. Nach Beendigung dieser Kondensationsreaktion wird der gebildete erfindungsgemäße Farbstoff, der, in Form der freien Säure geschrieben, der Formel 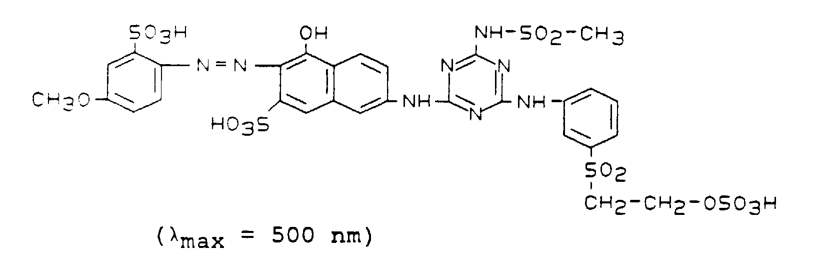 entspricht, durch Eindampfen unter reduziertem Druck oder durch Sprühtrocknung als Alkalimetallsalz (Natriumsalz) isoliert. Er besitzt sehr gute faserreaktive Farbstoffeigenschaften und liefert nach den für faserreaktive Farbstoffe üblichen Anwendungsverfahren farbstarke, brillante scharlachrote Färbungen und Drucke mit guten Echtheitseigenschaften, von denen insbesondere die Wasserechtheit und Schweißechtheit hervorgehoben werden können. Er zeichnet sich insbesondere durch einen hohen Fixiergrad sowohl in den Ausziehverfahren bei Temperaturen zwischen 40 und 80°C als auch in den Klotz-Kaltverweil-Färbeverfahren aus. Im Ätzdruck werden auf dem scharlachroten Fond rein weiße Muster erhalten.

### Beispiel 2

Zu einer feinverteilten Suspension von 19 Teilen Cyanurchlorid in 200 Teilen Eiswasser gibt man 9,7 Teile Methansulfonsäureamid, stellt anschließend mit Natronlauge einen pH-Wert von 10 bis 11 ein und führt die Umsetzung während einer Stunde bei 0 bis 3°C und einem pH-Wert von 11 unter weiterem Rühren zu Ende. Die entstandene Lösung wird anschließend mit wäßriger Salzsäure auf einen pH-Wert von 5 eingestellt; es werden 24,3 Teile 4-Hydroxy-7-methylaminonaphthalin-2-sulfonsäure zugesetzt, und die Kondensationsreaktion wird während 2 Stunden bei 20°C und einem pH-Wert von 3 bis 3,5 durchgeführt. Anschließend gibt man zu der Lösung der so erhaltenen Kupplungskomponente die schwefelsaure Suspension des auf üblichem Wege hergestellten Diazoniumsalzes von 28,8 Teilen 2-Aminonaphthalin-1,5-disulfonsäure und führt die Kupplungsreaktion bei 10 bis 20°C und einem pH-Wert von 6 bis 6,5 durch. Sodann gibt man 29,5 Teile 3-(β-Sulfatoethylsulfonyl)-anilin hinzu und führt die Kondensationsreaktion bei 85°C und unter Einhaltung eines pH-Wertes von 3,5 bis 4 durch.

Der erhaltene faserreaktive Farbstoff, der, in Form der freien Säure geschrieben, die Formel 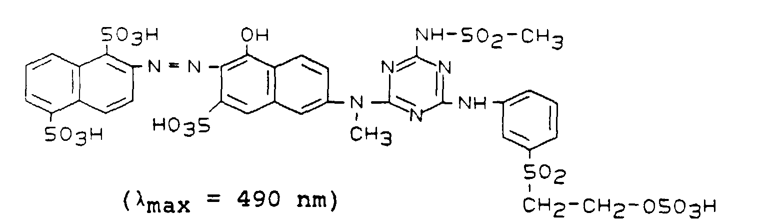 besitzt, wird als Alkalimetallsalz (Natriumsalz) isoliert, beispielsweise nach Klären der Syntheselösung mittels Kieselgur und Filtration durch Eindampfen des Filtrates unter reduziertem Druck oder durch Sprühtrocknung. Der erfindungsgemäße Farbstoff liefert nach den in der Technik üblichen Applikations- und Fixierverfahren für faserreaktive Farbstoffe auf den in der Beschreibung genannten Materialien, wie insbesondere Cellulosefasermaterialien, beispielsweise Baumwolle, farbstarke orange Färbungen mit guten Echtheitseigenschaften, von denen insbesondere guten Wasser- und Überfärbeechtheiten hervorgehoben werden können. Er zeichnet sich weiterhin durch einen hohen Fixiergrad auf Baumwolle aus.

### Beispiel 3

Zu einer feinverteilten Suspension von 19 Teilen Cyanurchlorid in 200 Teilen Eiswasser gibt man 9,7 Teile Methansulfonsäureamid, stellt mittels Natronlauge einen pH-Wert von 10 bis 11 ein und führt die Umsetzung bei 0 bis 3°C und unter Einhaltung des angegebenen pH-Bereiches während einer Stunde unter weiterem Rühren zu Ende. Die entstandene Lösung wird mit wäßriger Salzsäure auf einen pH-Wert von 4,5 eingestellt. Man gibt 29,5 Teile 4-(β-Sulfatoethylsulfonyl)-anilin hinzu und führt die Kondensationsreaktion zunächst während drei Stunden bei 20°C, danach noch etwa zwei Stunden bei 40°C, und bei einem pH-Wert von 4 bis 5 durch.
Zu diesem Ansatz gibt man sodann eine Lösung von 54,5 Teilen 3-Ureido-4-(3',6',8'-trisulfo-naphth-2'-yl)-azo-anilin hinzu und führt die dritte Kondensationsreaktion bei einem pH-Wert von 3,5 und bei 85°C durch.
Der gebildete erfindungsgemäße Farbstoff wird durch Aussalzen mittels Kaliumchlorid als Alkalimetallsalz (vorwiegend Kaliumsalz) isoliert. Er besitzt, in Form der freien Säure geschrieben, die Formel 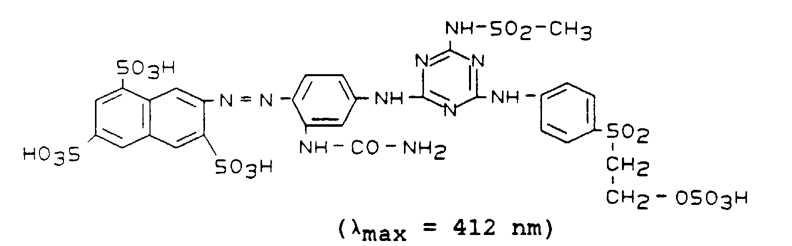 und färbt die in der Beschreibung genannten Materialien, wie insbesondere Cellulosefasermaterialien, beispielsweise Baumwolle, in farbstarken, rotstichig gelben, echten Tönen.

### Beispiel 4

45,3 Teile 3-(2'-Sulfo-4'-methoxy-phenyl)-azo-4-hydroxy-7-amino-naphthalin-2-sulfonsäure werden in wäßriger Lösung bei einer Temperatur von 0 bis 3°C und einem pH-Wert von 3,5 bis 4 mit 19 Teilen Cyanurchlorid umgesetzt. Nach beendeter Kondensationsreaktion gibt man 11 Teile Ethansulfonsäureamid bei einem pH-Wert von 10 bis 11 hinzu und führt die zweite Kondensationsreaktion innerhalb dieses pH-Bereiches bei 40°C während etwa drei Stunden zu Ende. Danach gibt man zu diesem Ansatz 29,5 Teile 3-(β-Sulfatoethylsulfonyl)-anilin hinzu und führt die dritte Kondensationsreaktion bei einem pH-Wert von 3 bis 3,5 und einer Temperatur von 85°C durch.

Der als Alkalimetallsalz (Natriumsalz) erhaltene erfindungsgemäße Azofarbstoff, aus der auf einen pH-Wert von 7 eingestellten Syntheselösung mit Natriumchlorid ausgesalzen und isoliert, besitzt (in Form der freien Säure geschrieben) die Formel

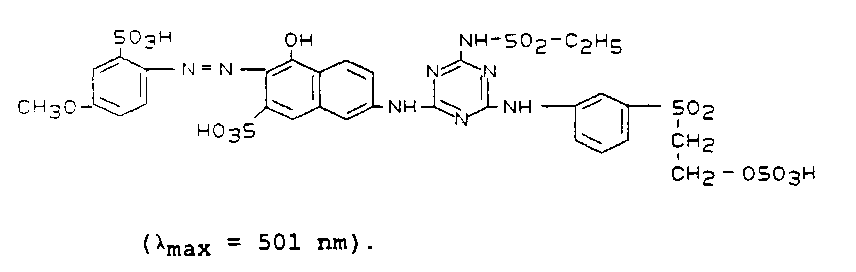

Er zeigt sehr gute faserreaktive Farbstoffeigenschaften und färbt die in der Beschreibung genannten Materialien, wie insbesondere Cellulosefasermaterialien, wie Baumwolle, in farbstarken, leuchtend scharlachroten Tönen mit hohem Fixiergrad.

### Beispiel 5

Zu einer feinverteilten Suspension von 19 Teilen Cyanurchlorid gibt man eine Suspension von 16 Teilen Benzolsulfonamid in 200 Teilen Eiswasser, stellt den Ansatz mit Natronlauge auf einen pH-Wert von 10 bis 11 ein und führt die Umsetzung innerhalb dieses pH-Bereiches während einer Stunde bei 0 bis 3°C unter weiterem Rühren zu Ende. Die erhaltene Lösung wird sodann mit Salzsäure auf einen pH-Wert von 4 eingestellt und mit einer Lösung von 31,9 Teilen 8-Hydroxy-1-amino-3,6-disulfonsäure in 800 Teilen Wasser versetzt; man führt die zweite Kondensationsreaktion bei 20°C und einem pH-Wert von 2,5 bis 3 durch.

Die so hergestellte Kupplungskomponente wird in der Syntheselösung mit der auf üblichem Wege hergestellten wäßrigen, salzsauren Lösung des Diazoniumsalzes von 51,1 Teilen 2-Amino-6-(β-sulfatoethylsulfonyl)-naphthalin-1-sulfonsäure versetzt, und die Kupplungsreaktion wird bei 15 bis 30°C und einem pH-Wert von 6 durchgeführt. Anschließend stellt man einen pH-Wert von 3 bis 3,5 ein, gibt 29,5 Teile 3-(β-Sulfatoethylsulfonyl)-anilin hinzu und führt die dritte Kondensationsreaktion innerhalb dieses pH-Bereiches und bei 85°C durch.

Der erhaltene erfindungsgemäße Farbstoff wird nach Klären der Syntheselösung bei einem pH-Wert von 5,5 durch Sprühtrocknung als Alkalimetallsalz (Natriumsalz) isoliert. Er besitzt, in Form der freien Säure geschrieben, die Formel 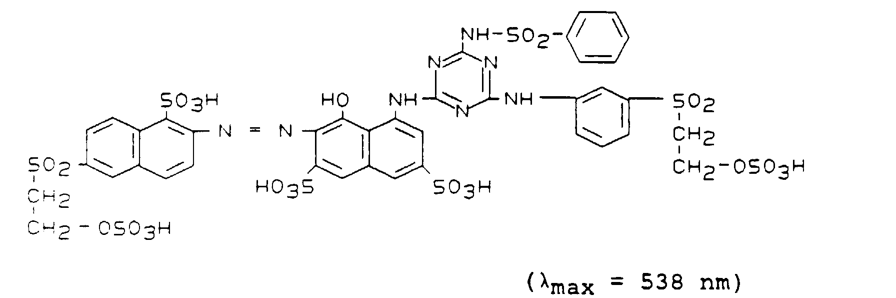 und zeigt sehr gute faserreaktive Farbstoffeigenschaften.

Nach den in der Technik für faserreaktive Farbstoffe üblichen Applikation- und Fixierverfahren liefert er beispielsweise auf Cellulosefasermaterialien, wie Baumwolle, farbstarke, blaustichig rote, echte Färbungen und Drucke bei einem hohen Fixiergrad.

### Beispiele 6 bis 123

In den nachfolgenden Tabellenbeispielen sind weitere erfindungsgemäße Azofarbstoffe mit Hilfe der Komponenten entsprechend der allgemeinen Formel (A) 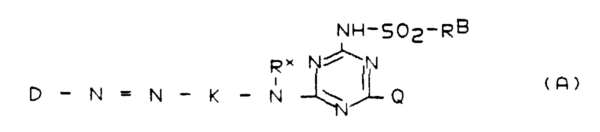 beschrieben. Sie lassen sich in erfindungsgemäßer Weise, beispielsweise analog einem der obigen Ausführungsbeispiele, unter Einsatz der aus dem jeweiligen Tabellenbeispiel in Verbindung mit der allgemeinen Formel (A) ersichtlichen Komponenten (wie der Diazokomponente D-NH₂, der Kupplungskomponente H-K-NR^{x}H, einem Halogentriazin, dem Amid der Formel H₂N-SO₂-R^{B} und dem Amin der Formel H-Q) herstellen. Sie besitzen sehr gute faserreaktive Farbstoffeigenschaften und färben die in der Beschreibung genannten Materialien, insbesondere Cellulosefasermaterialien, wie Baumwolle, in den in dem jeweiligen Tabellenbeispiel (hierfür Baumwolle) angegebenen Tönen in hoher Farbstärke und mit guten Echtheiten.

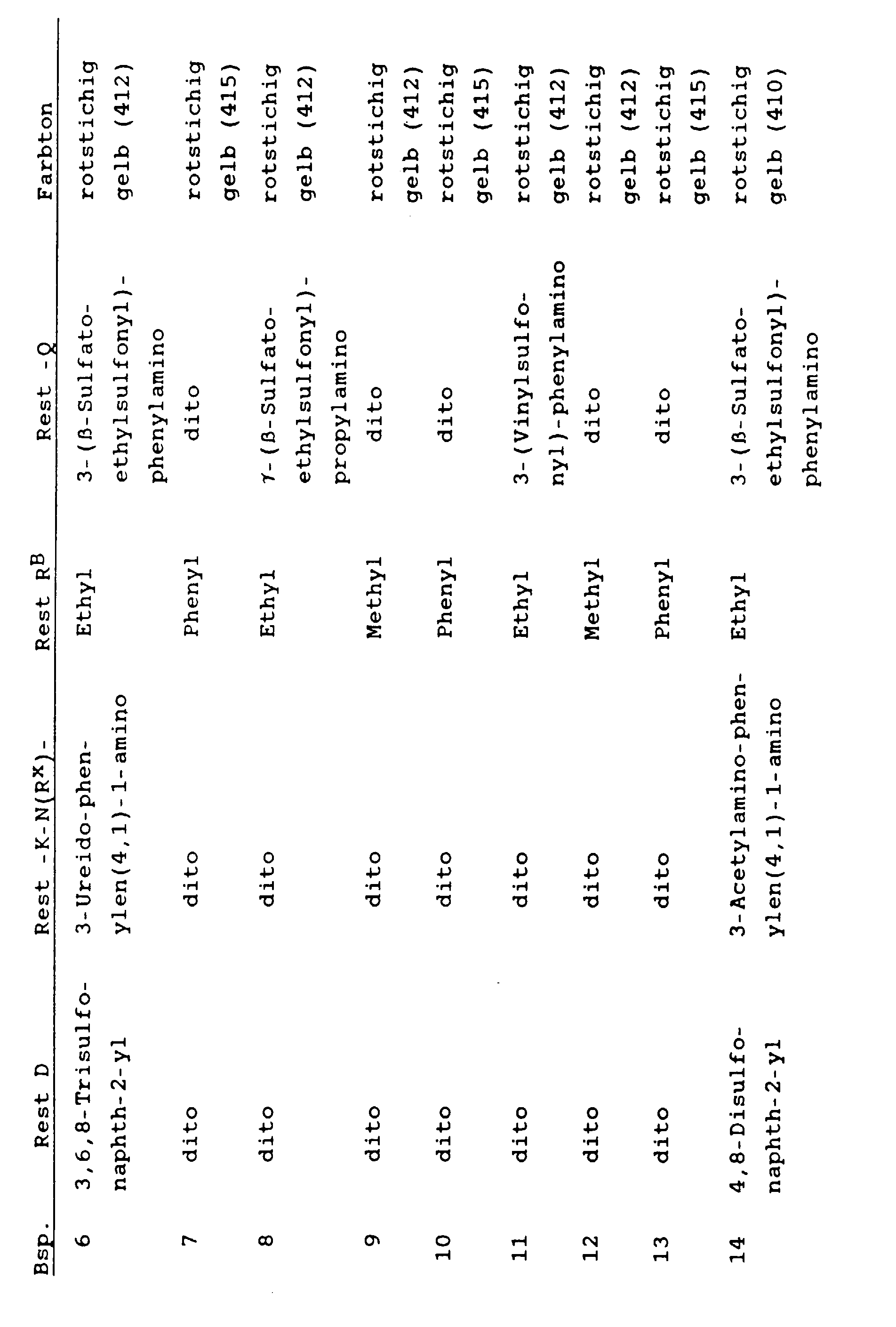

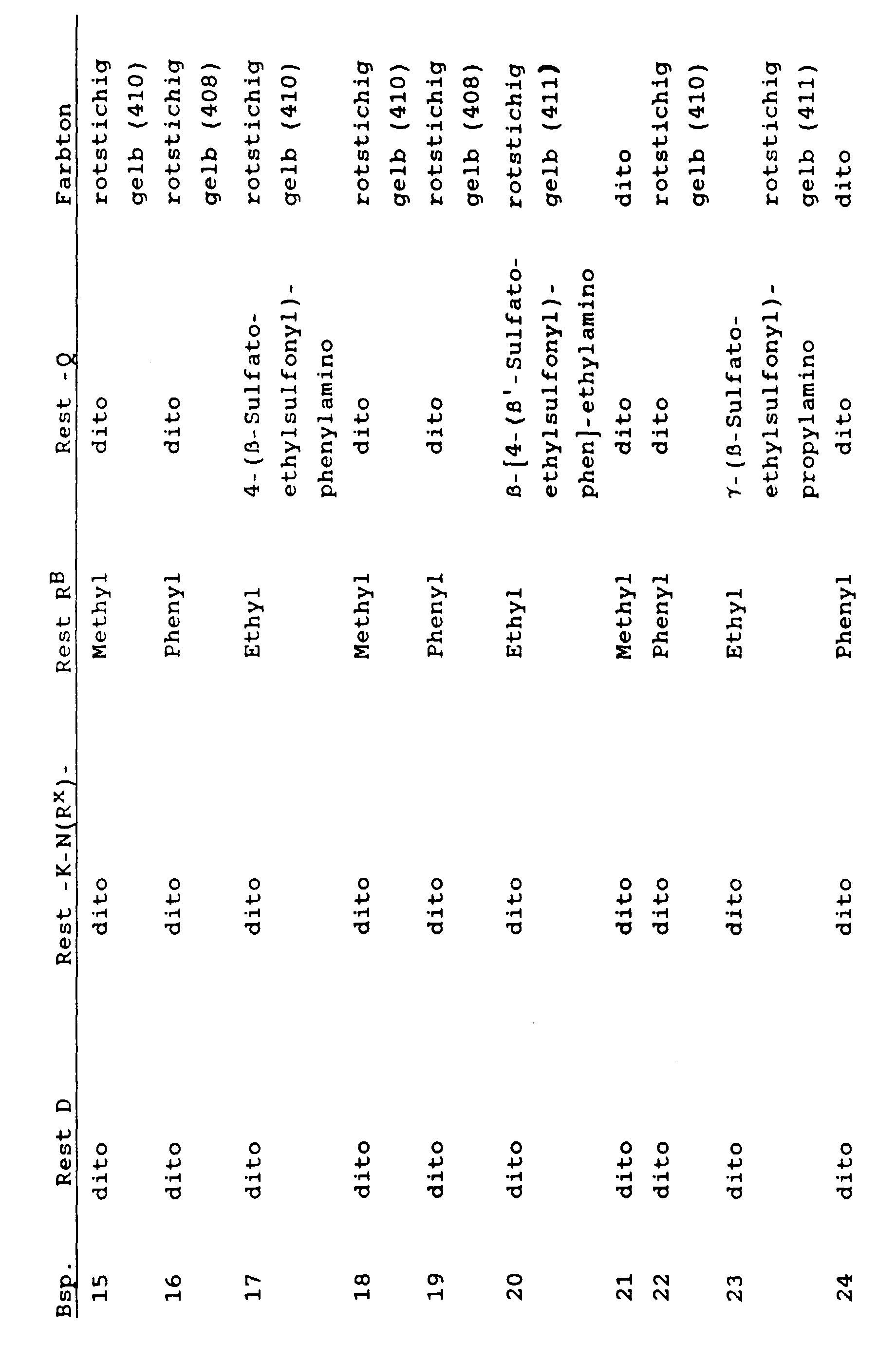

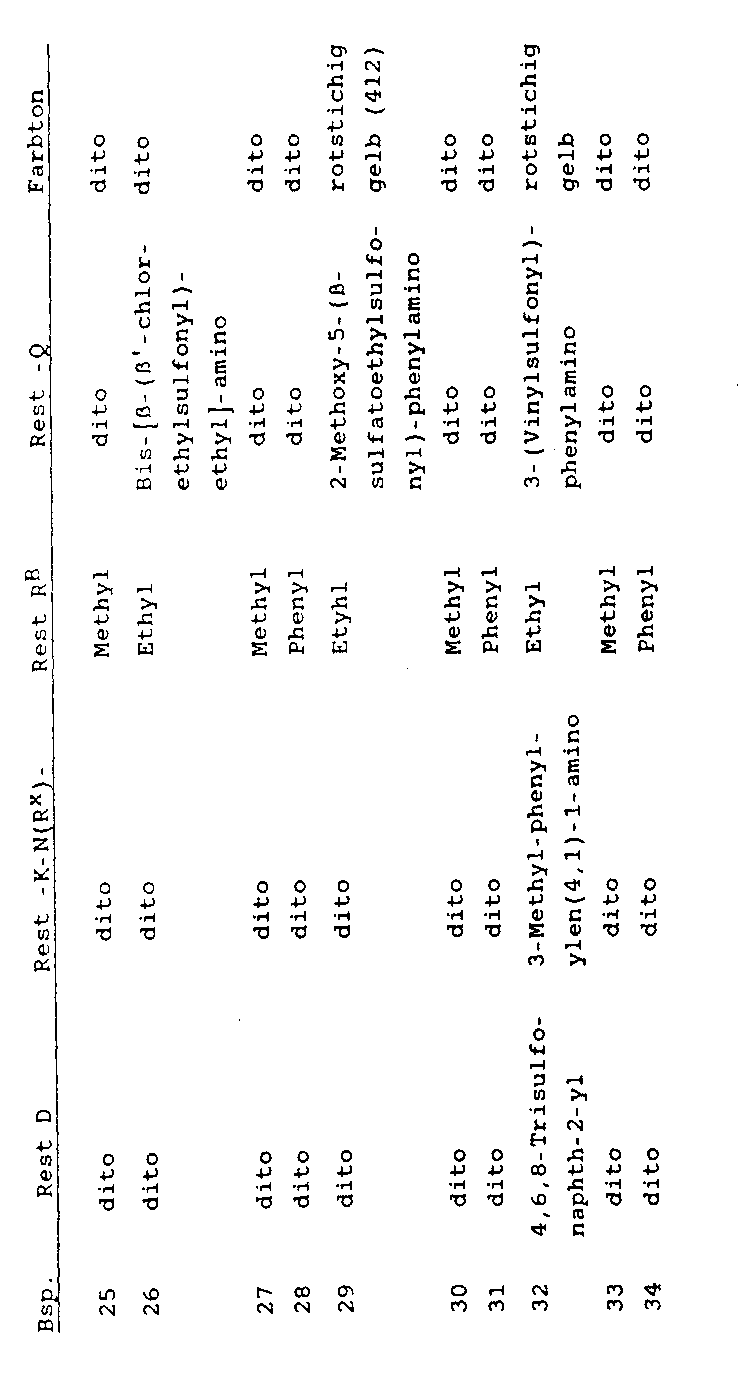

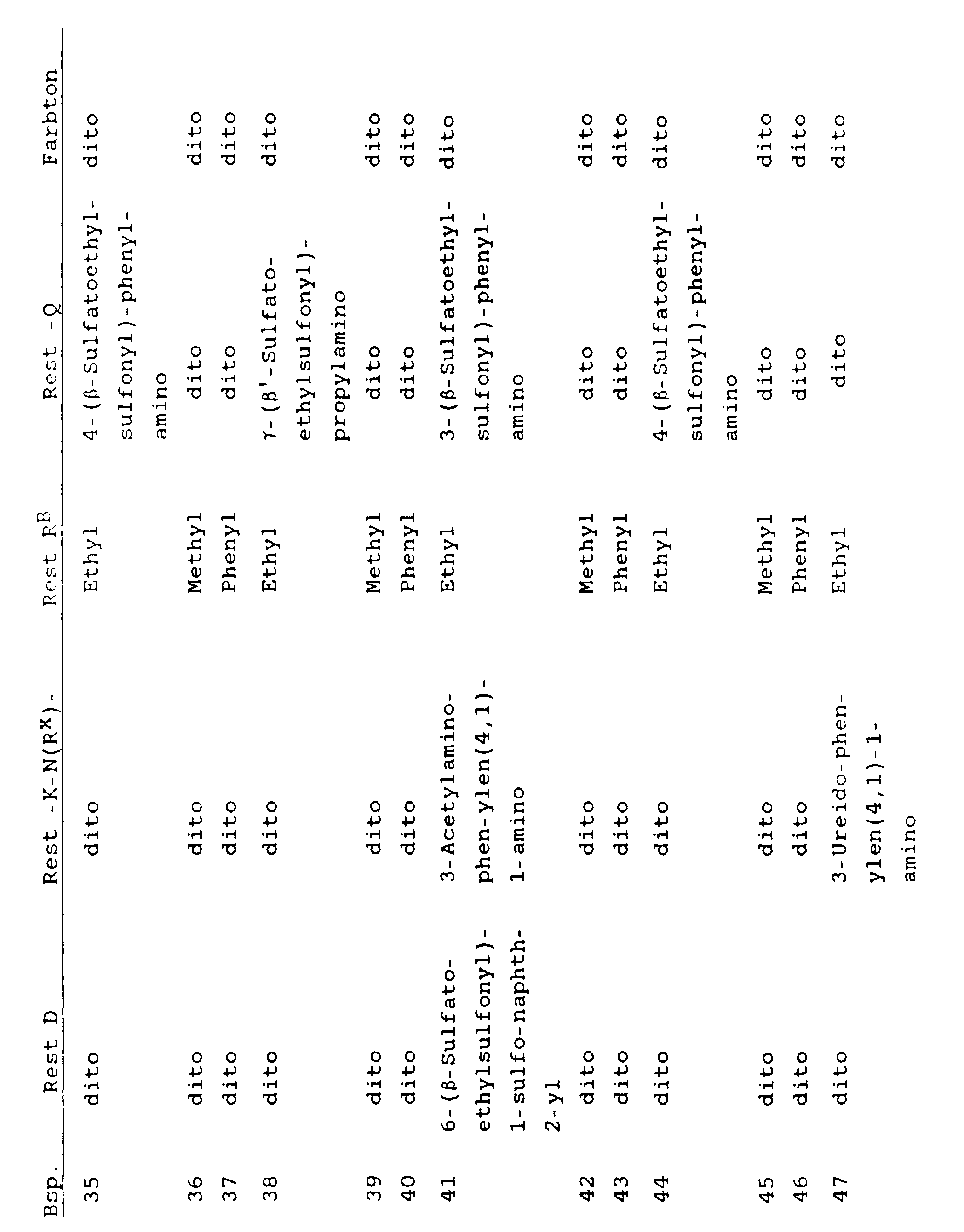

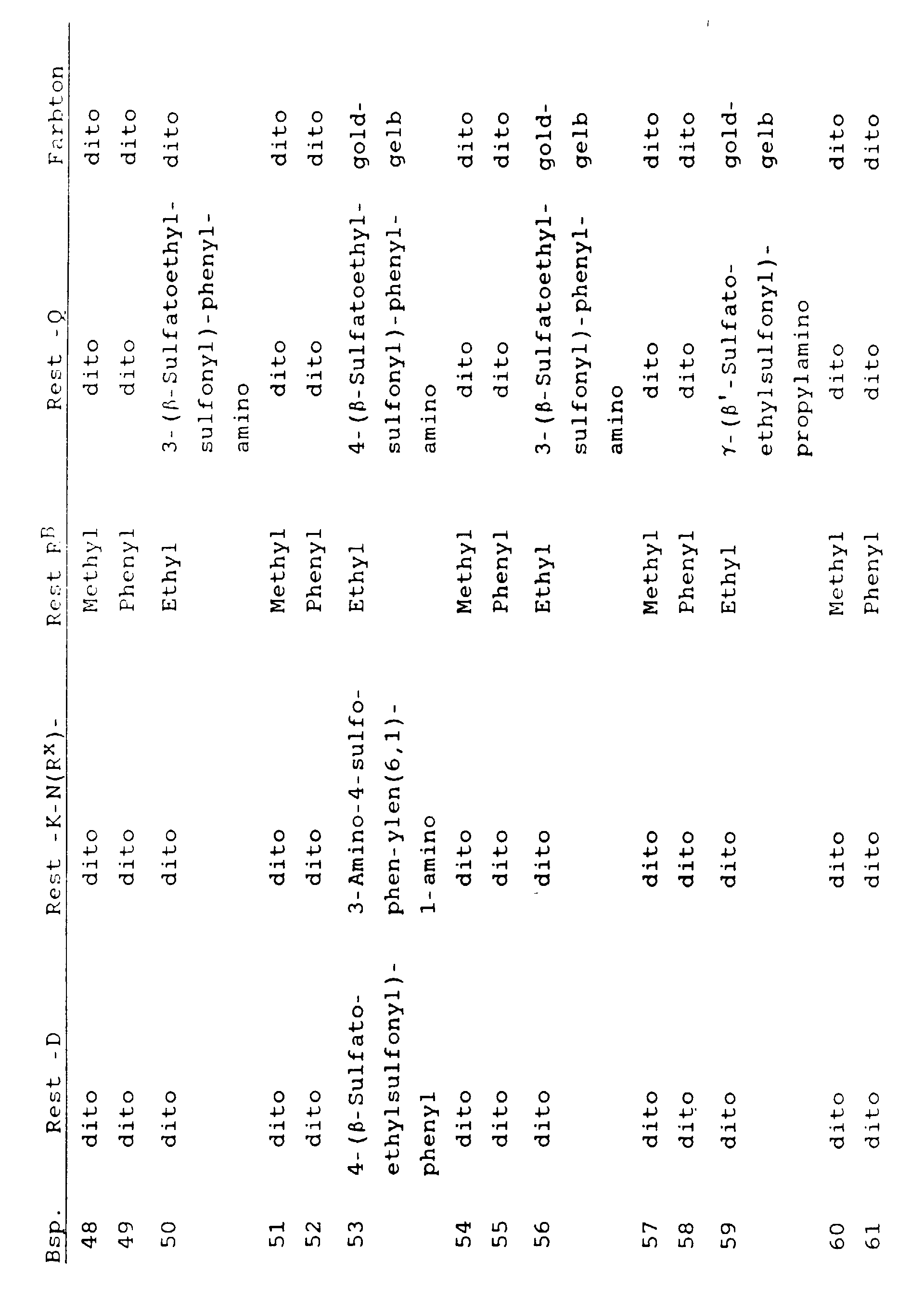

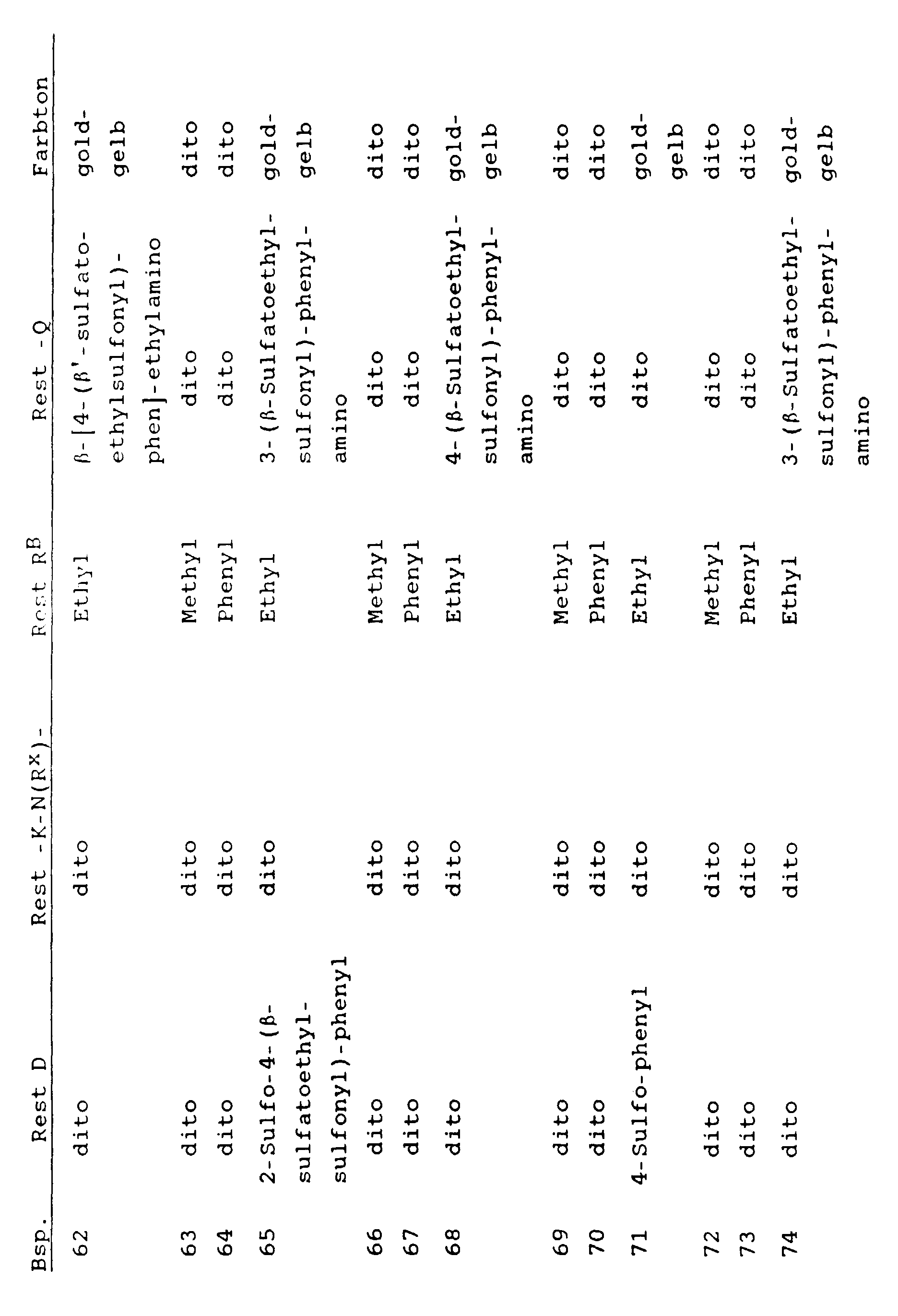

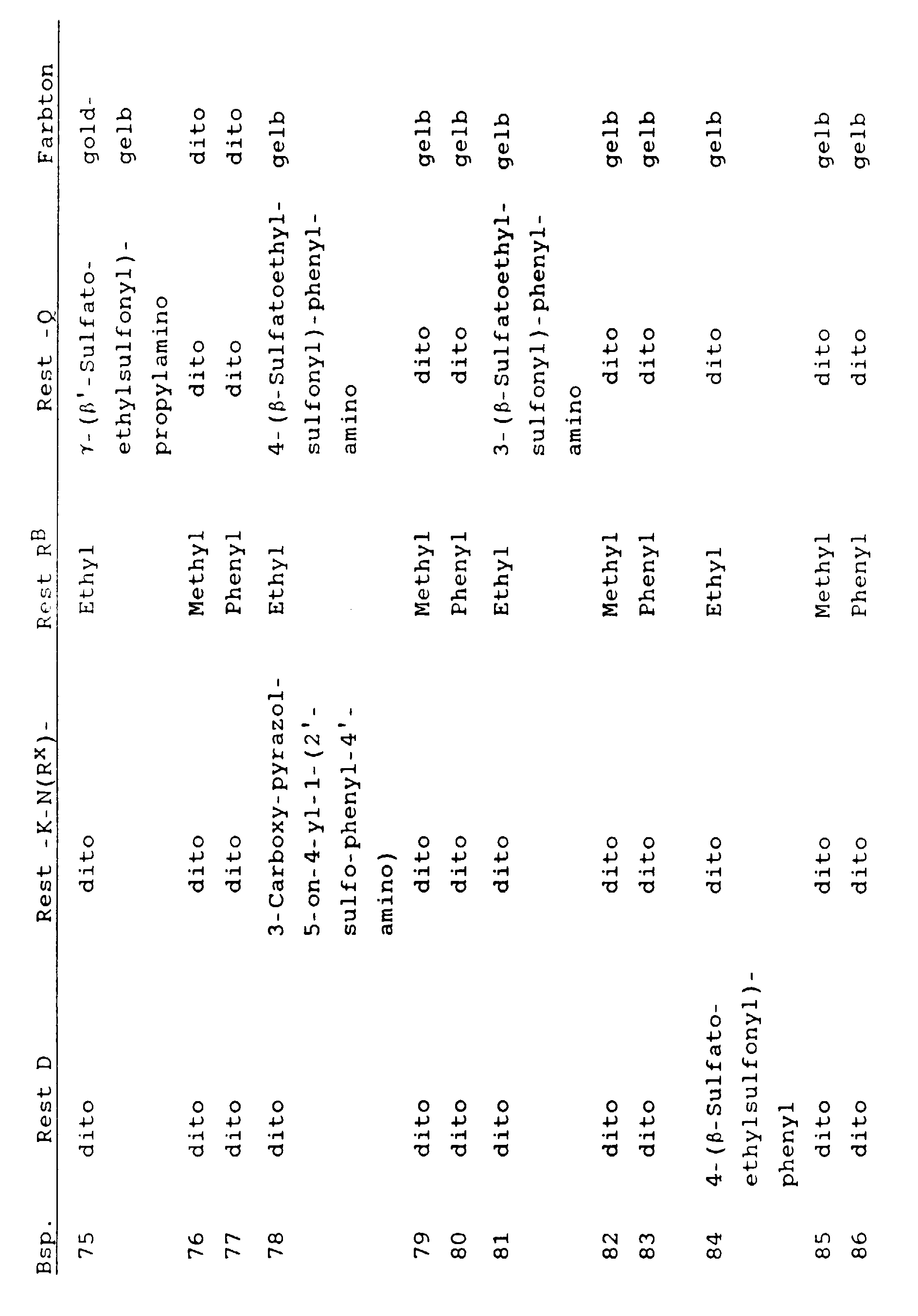

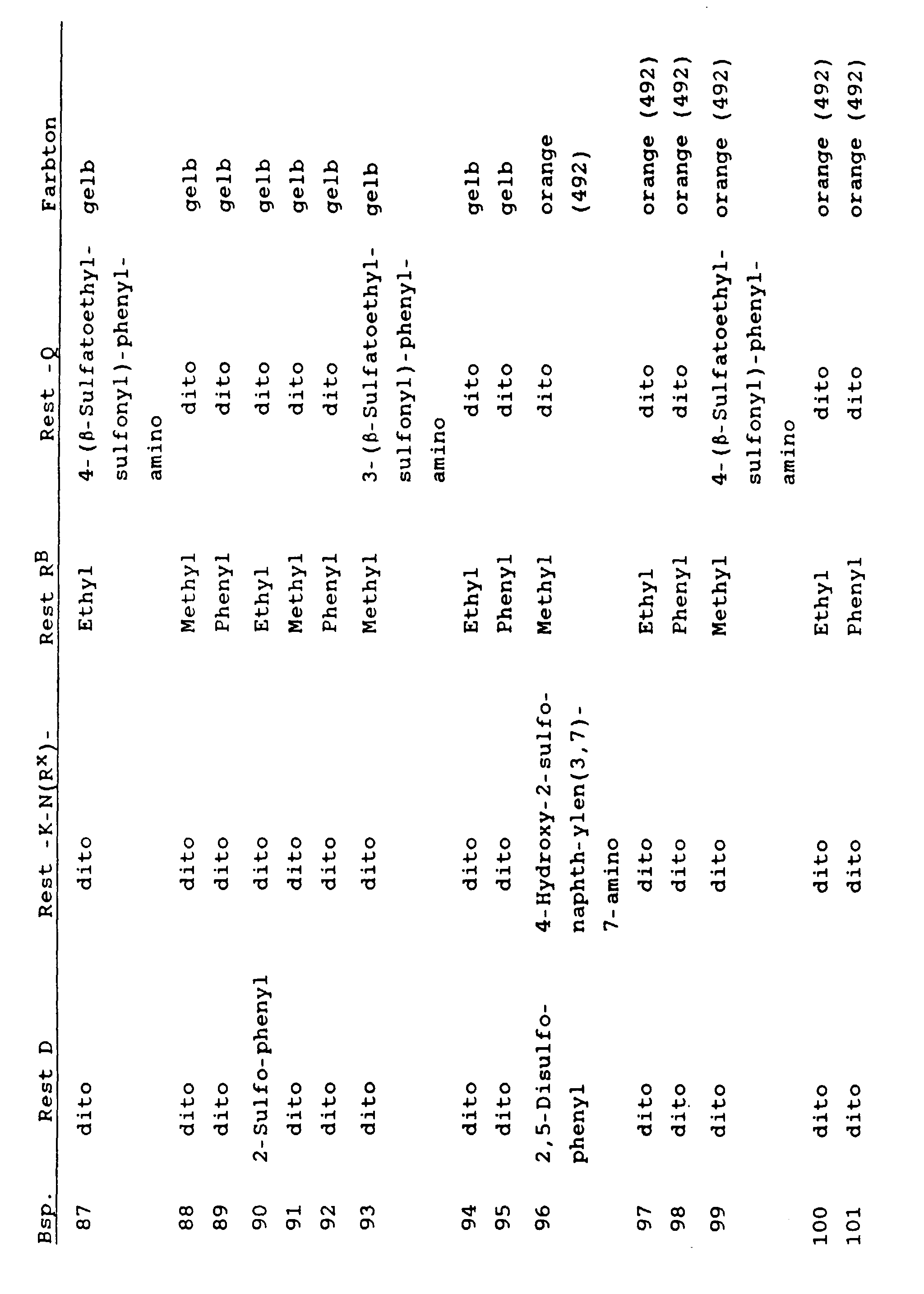

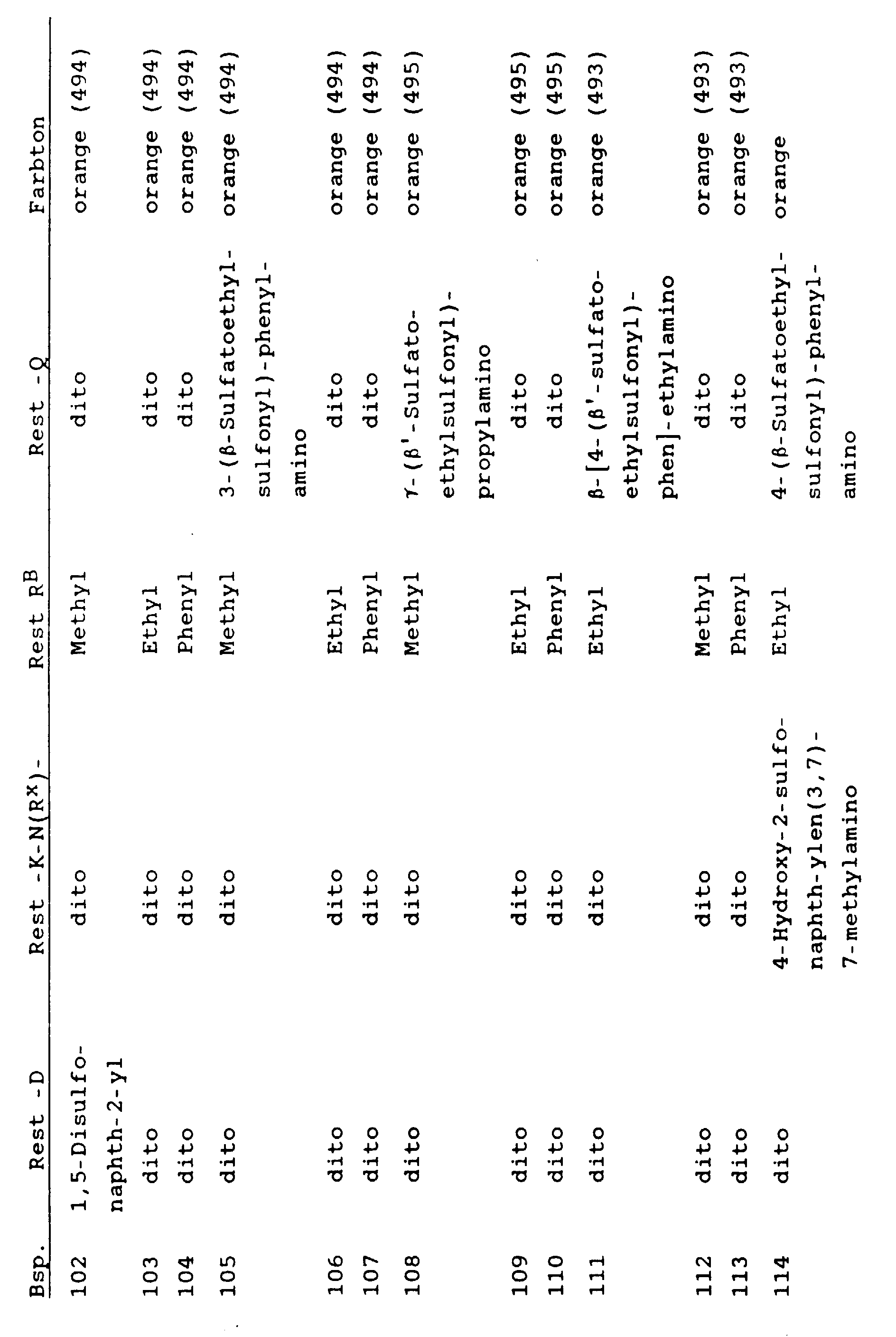

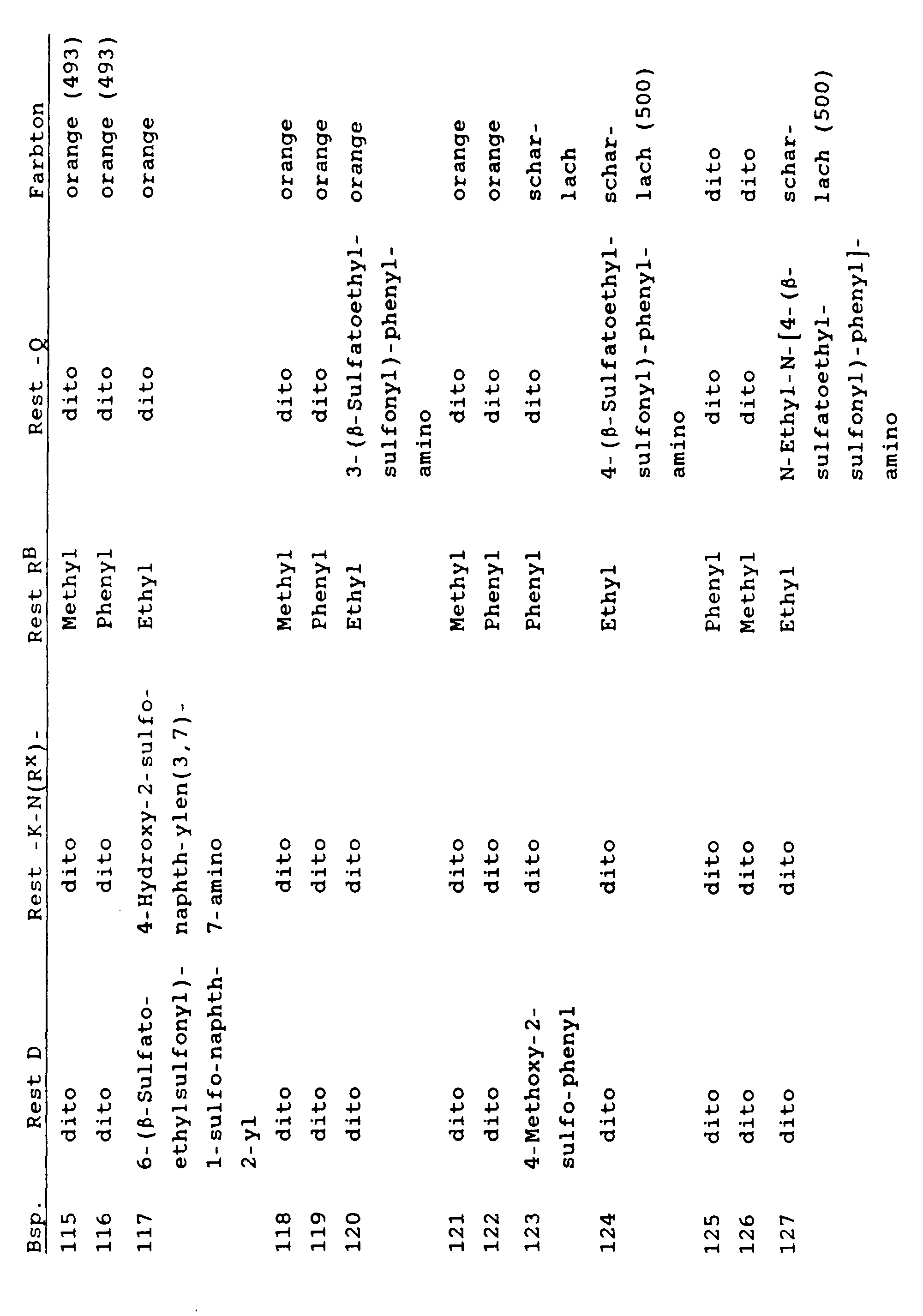

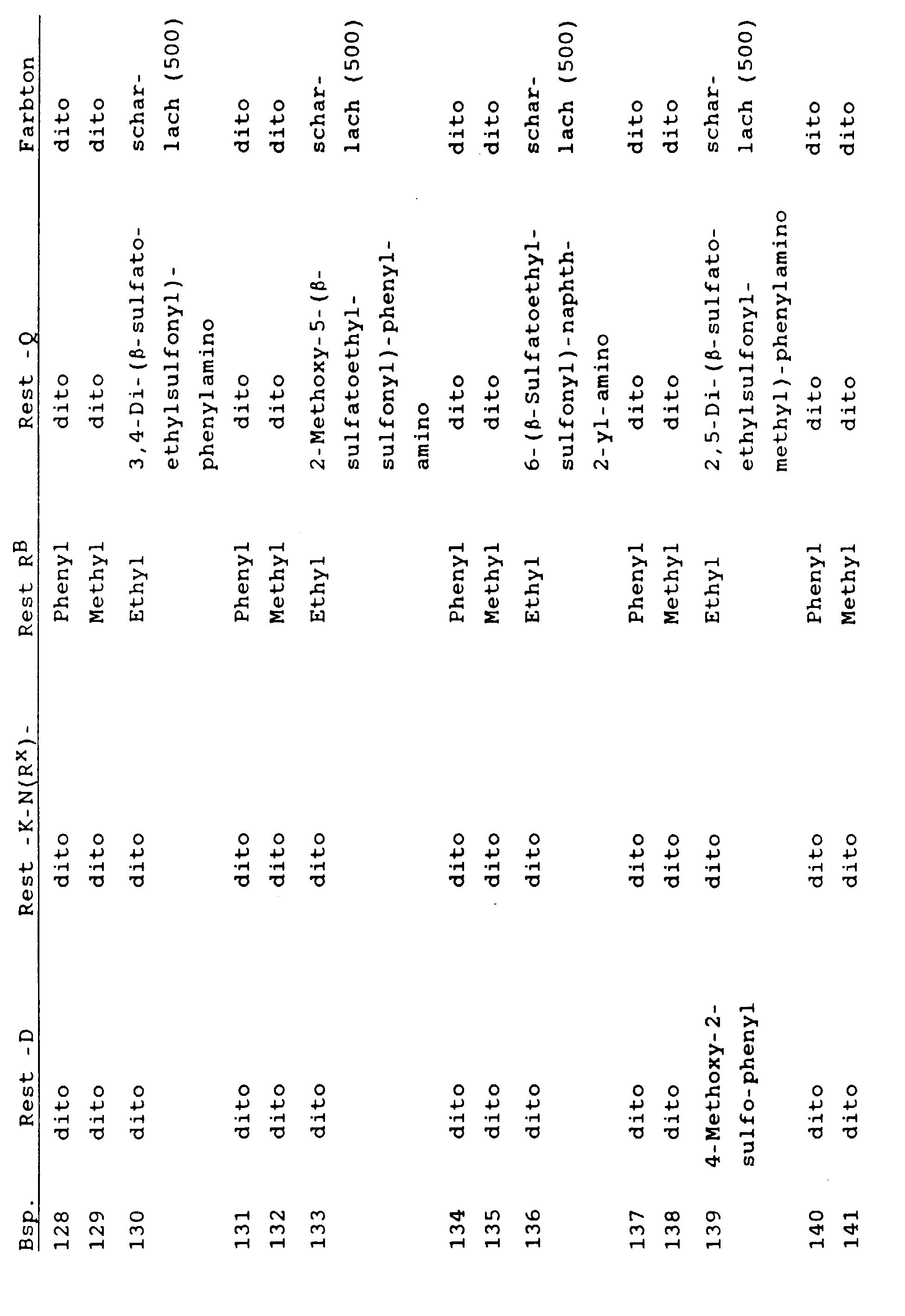

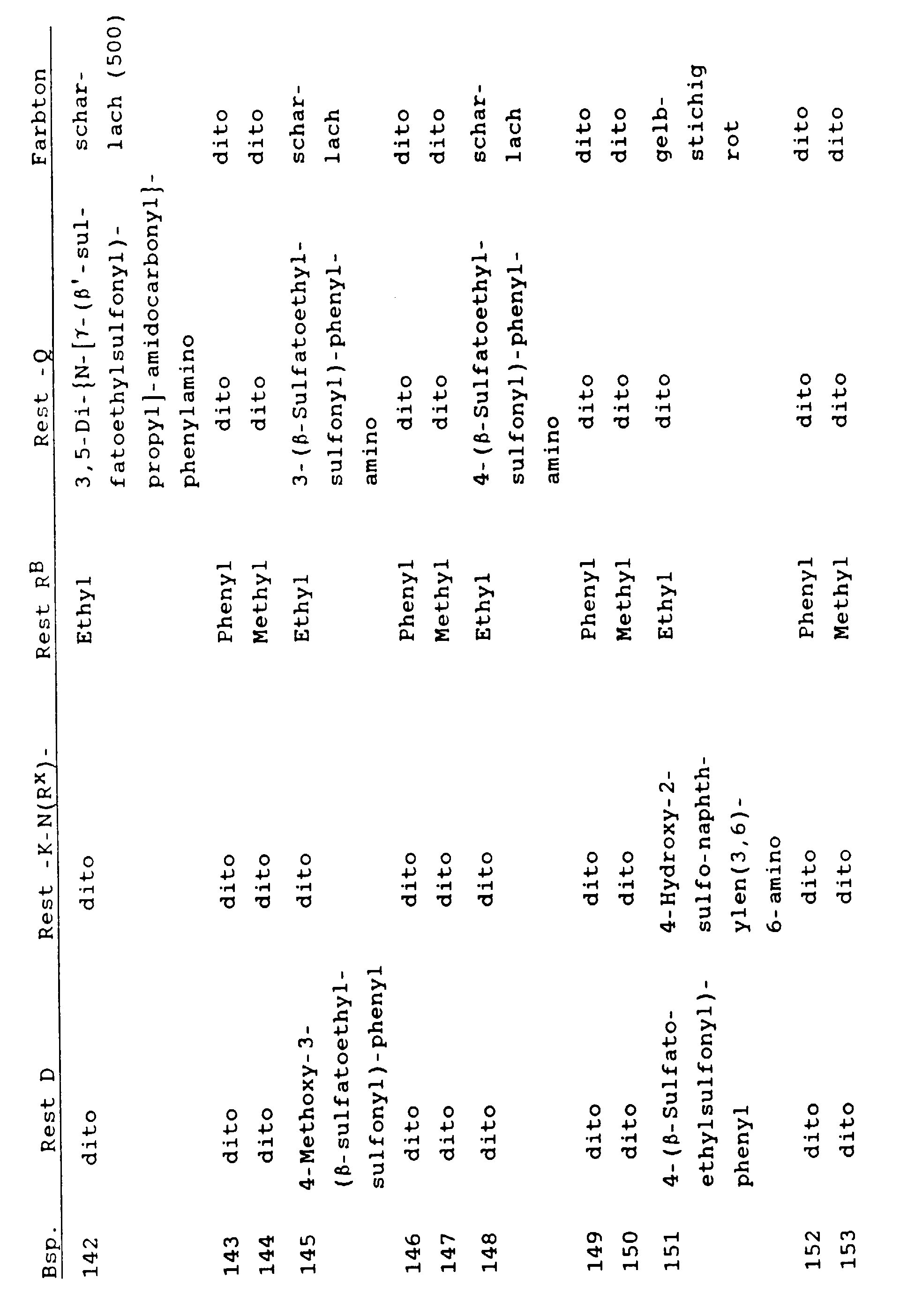

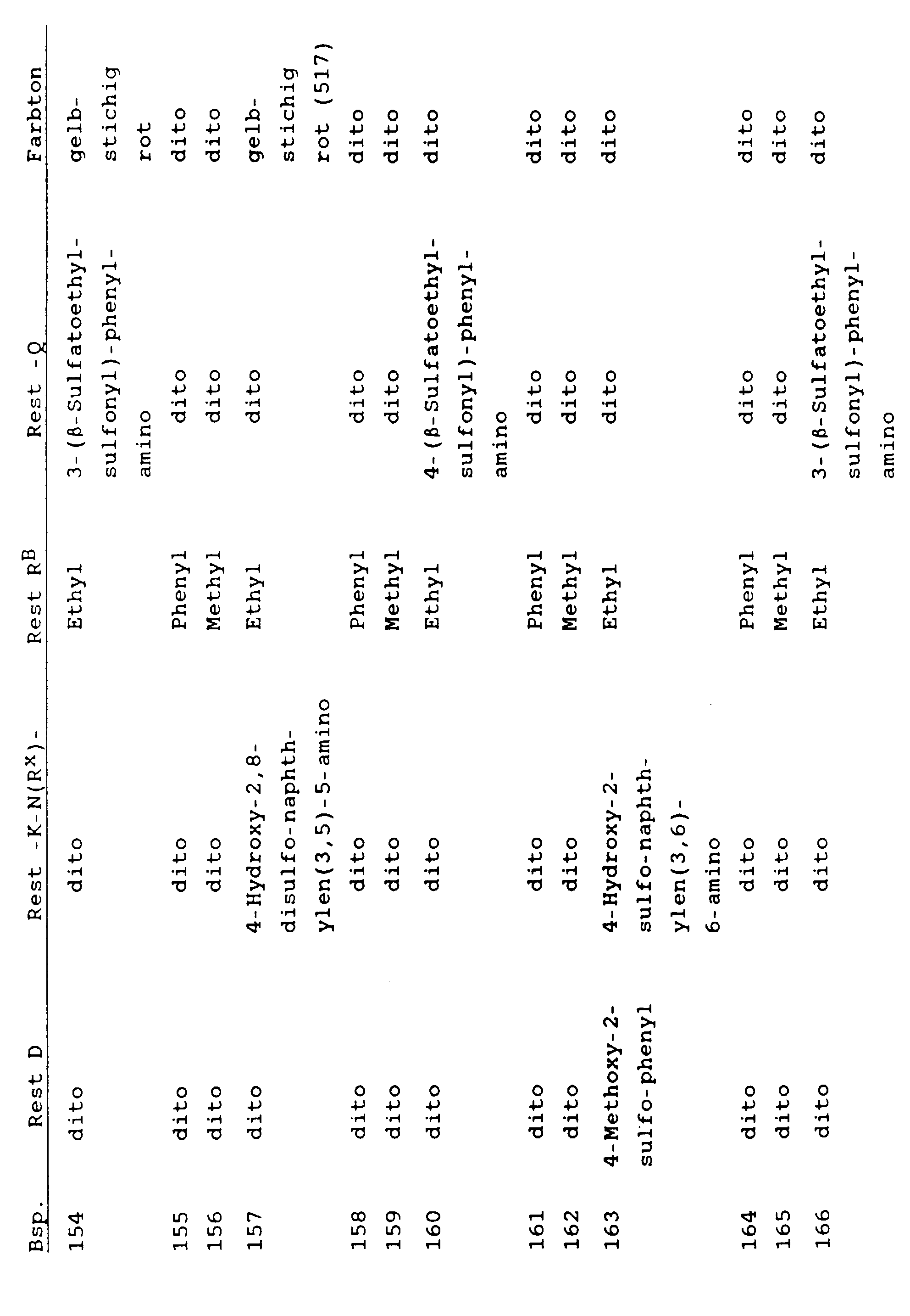

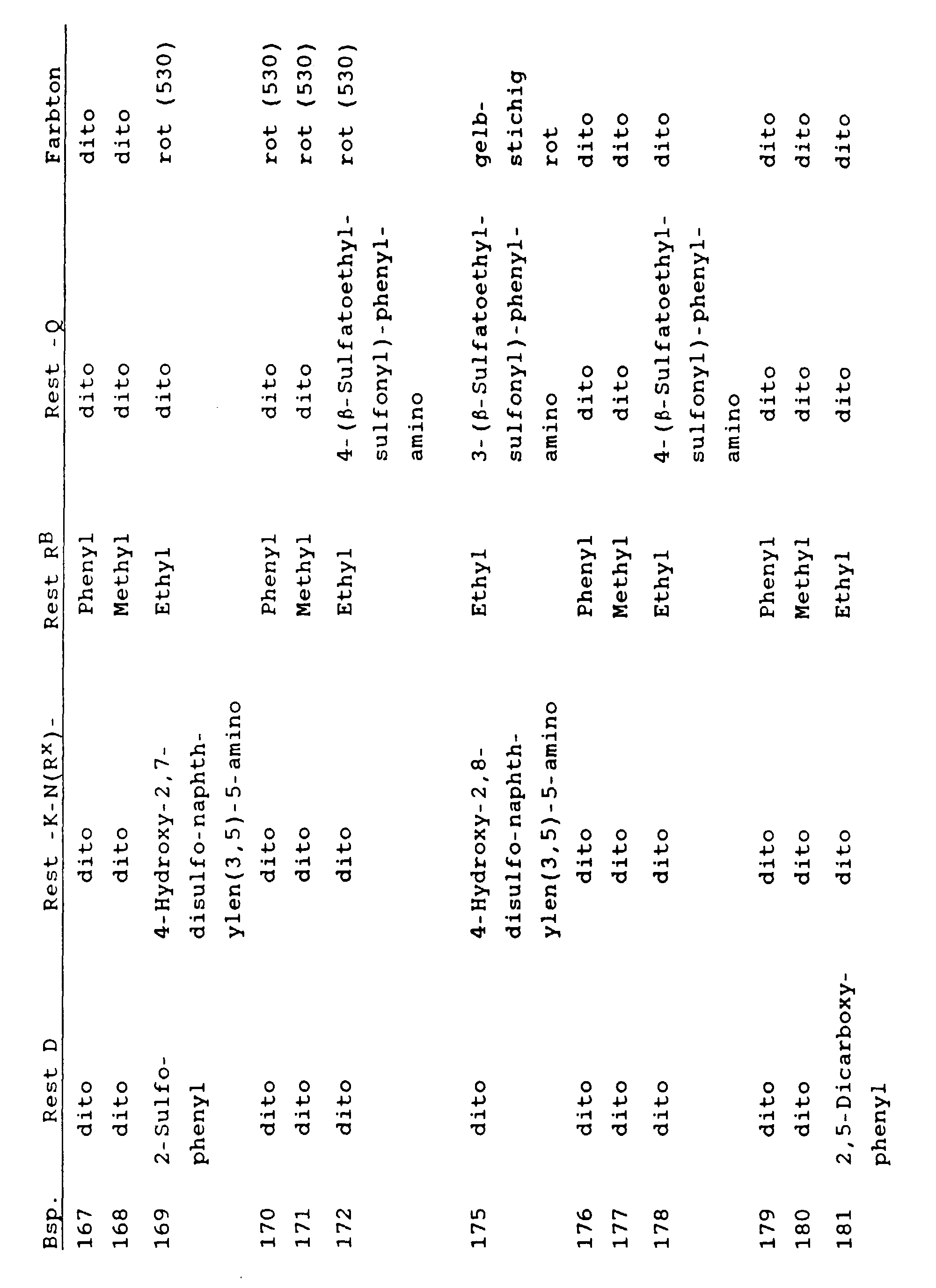

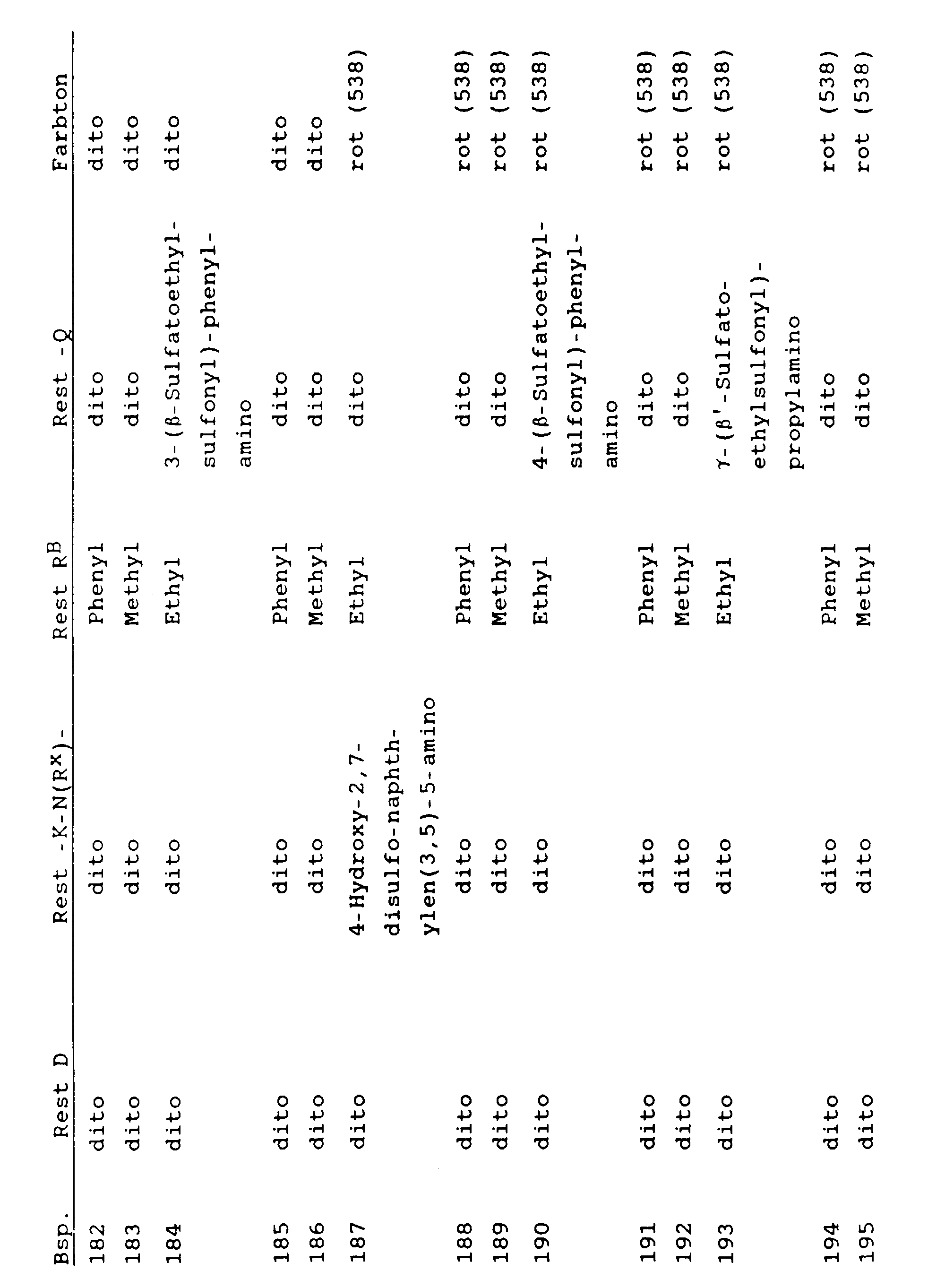

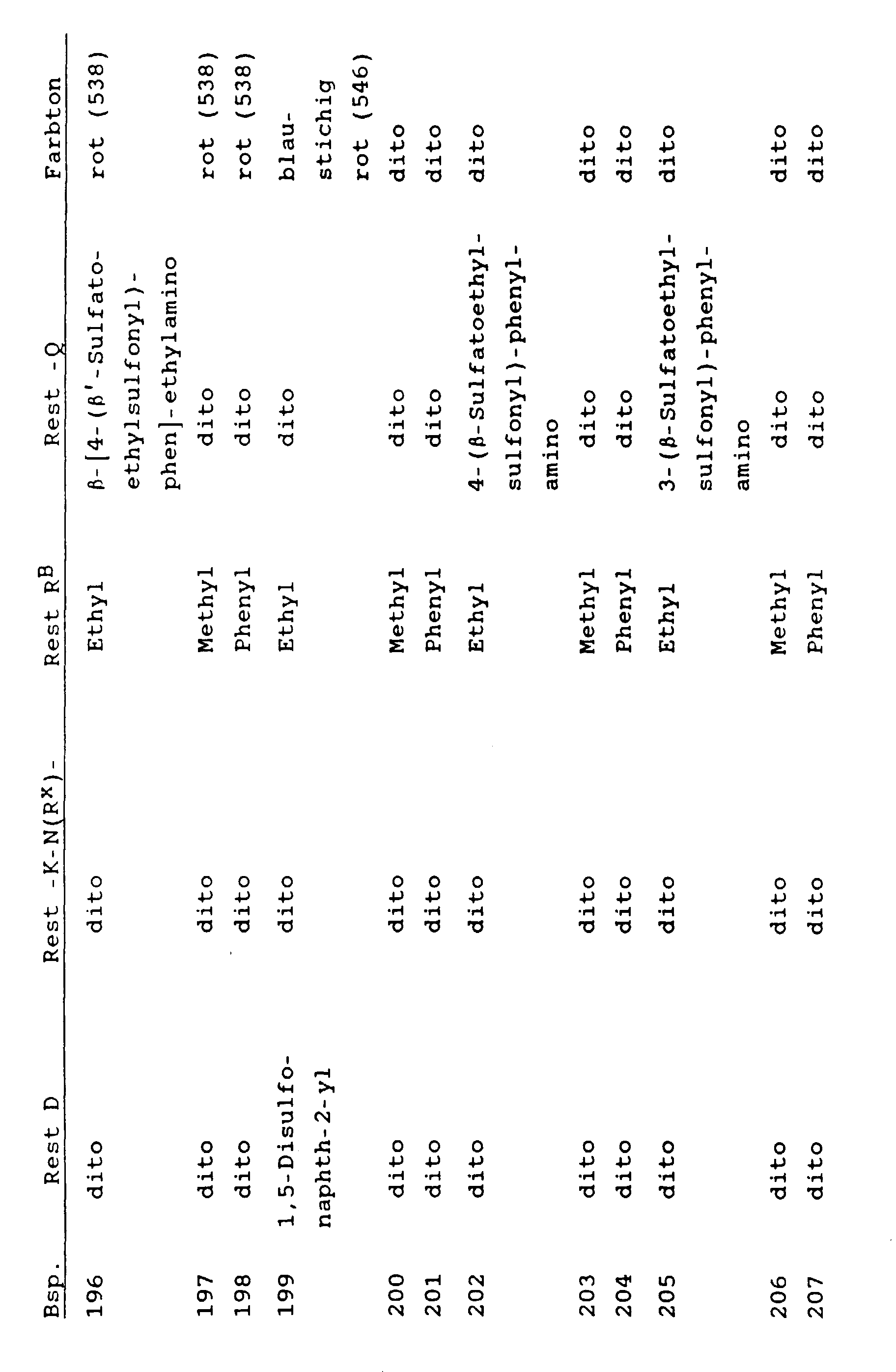

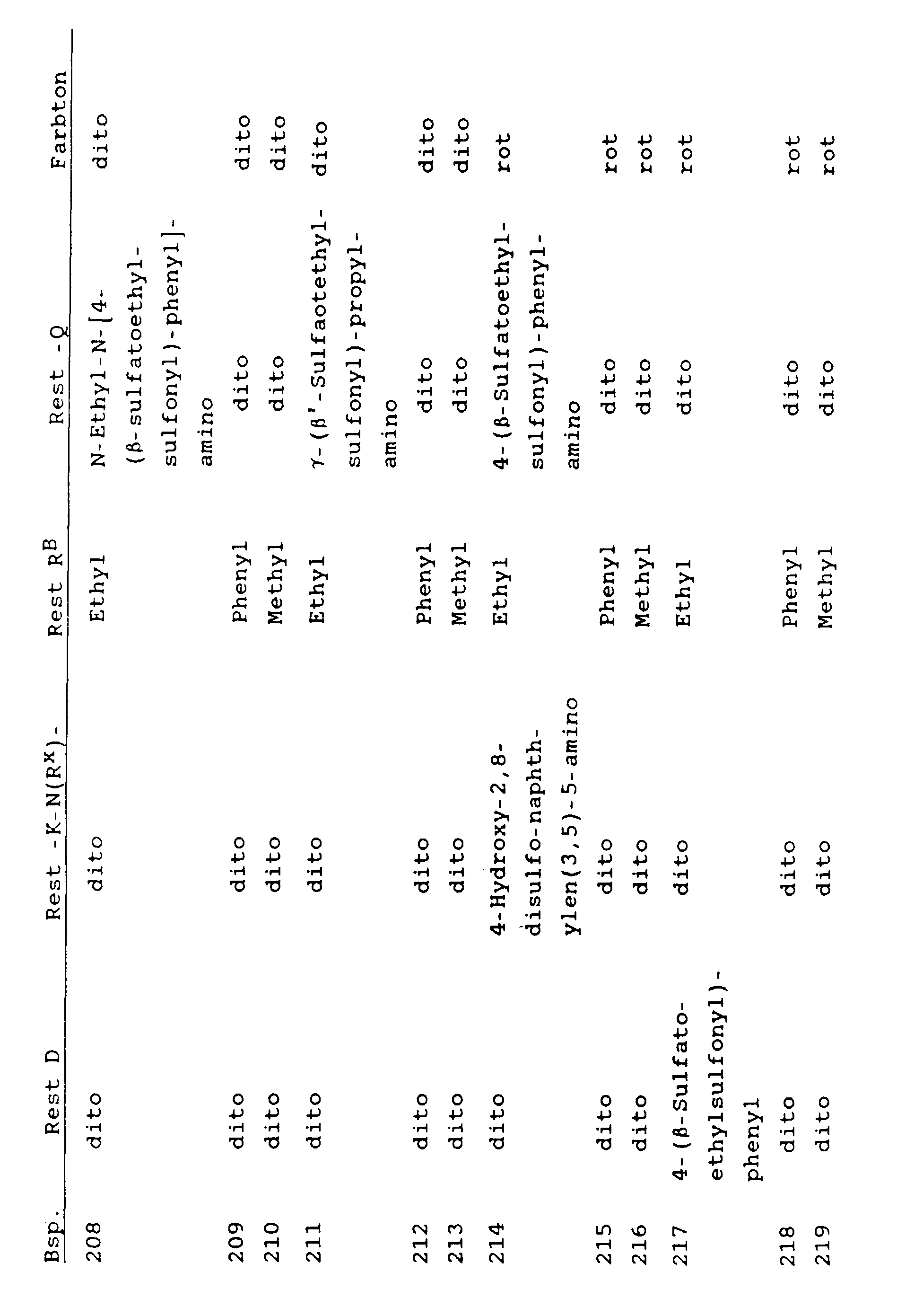

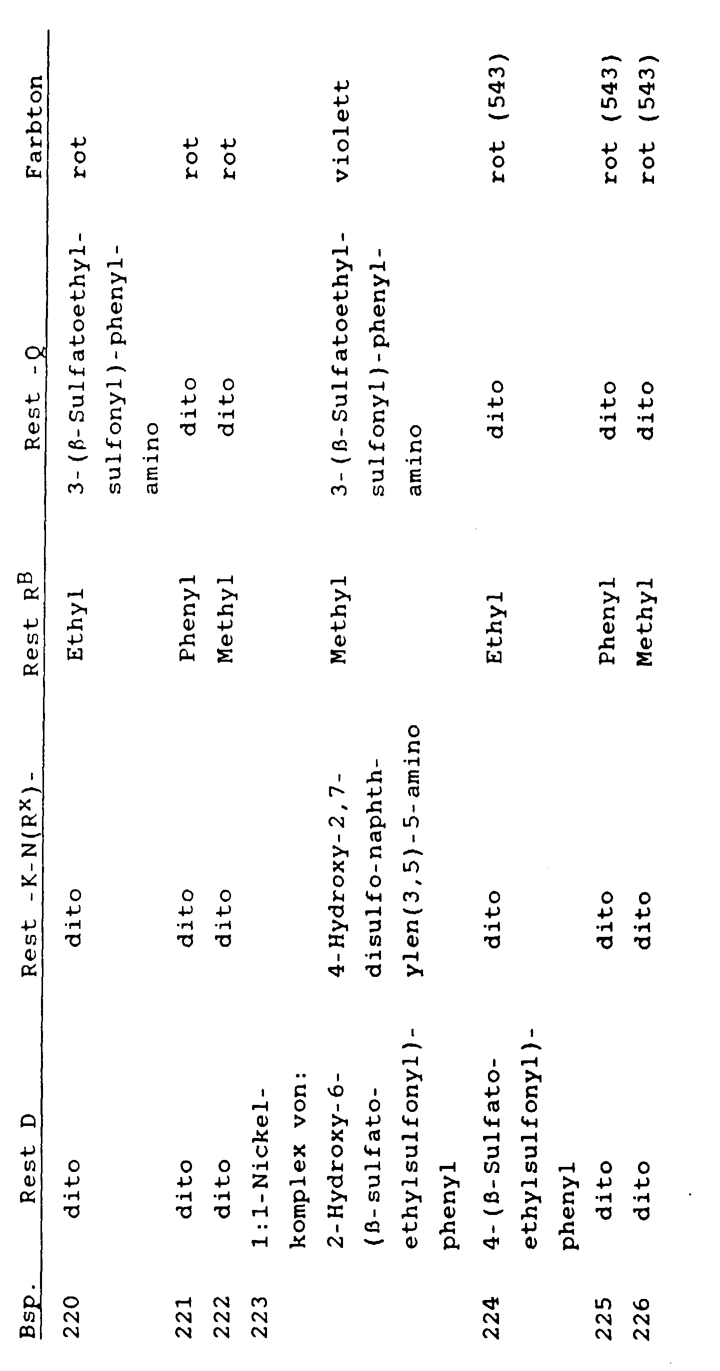

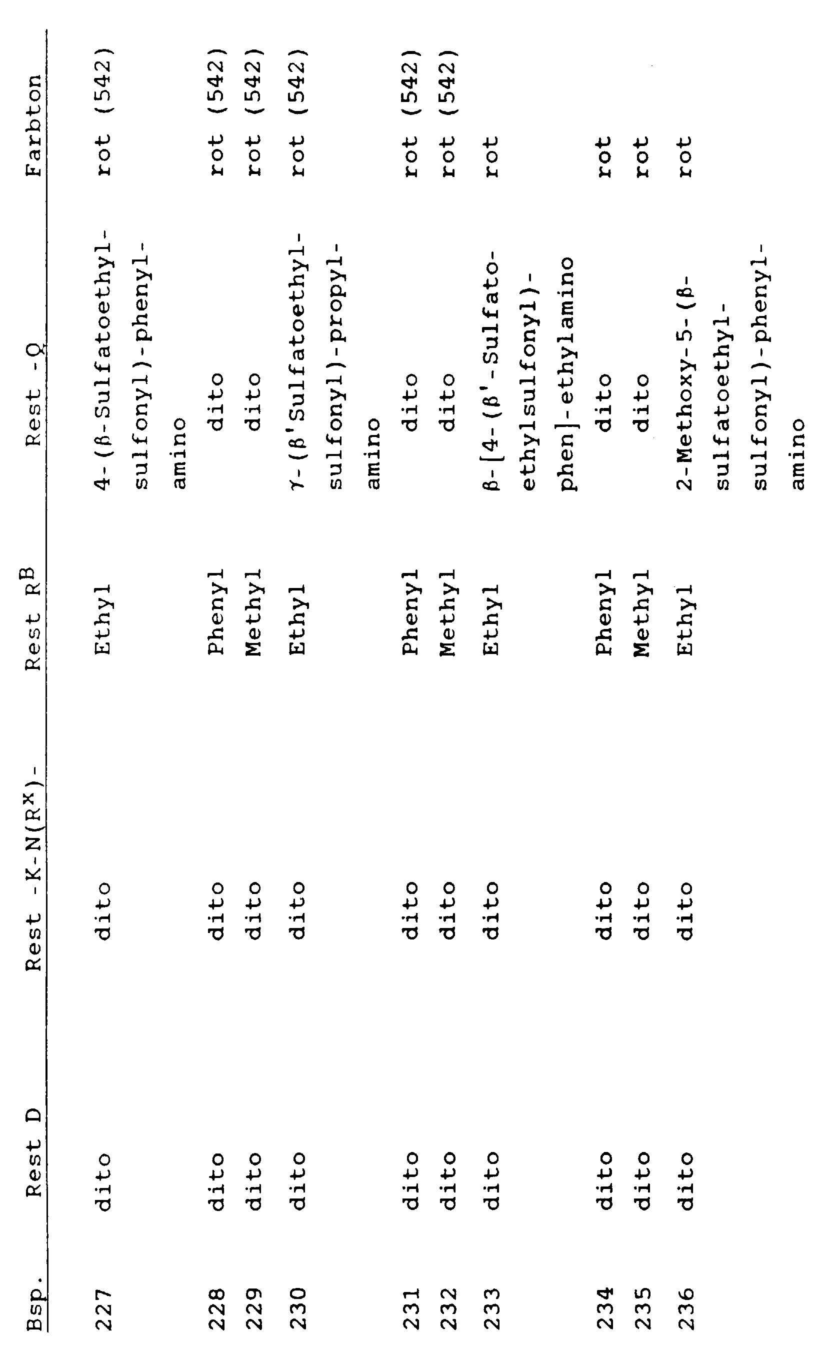

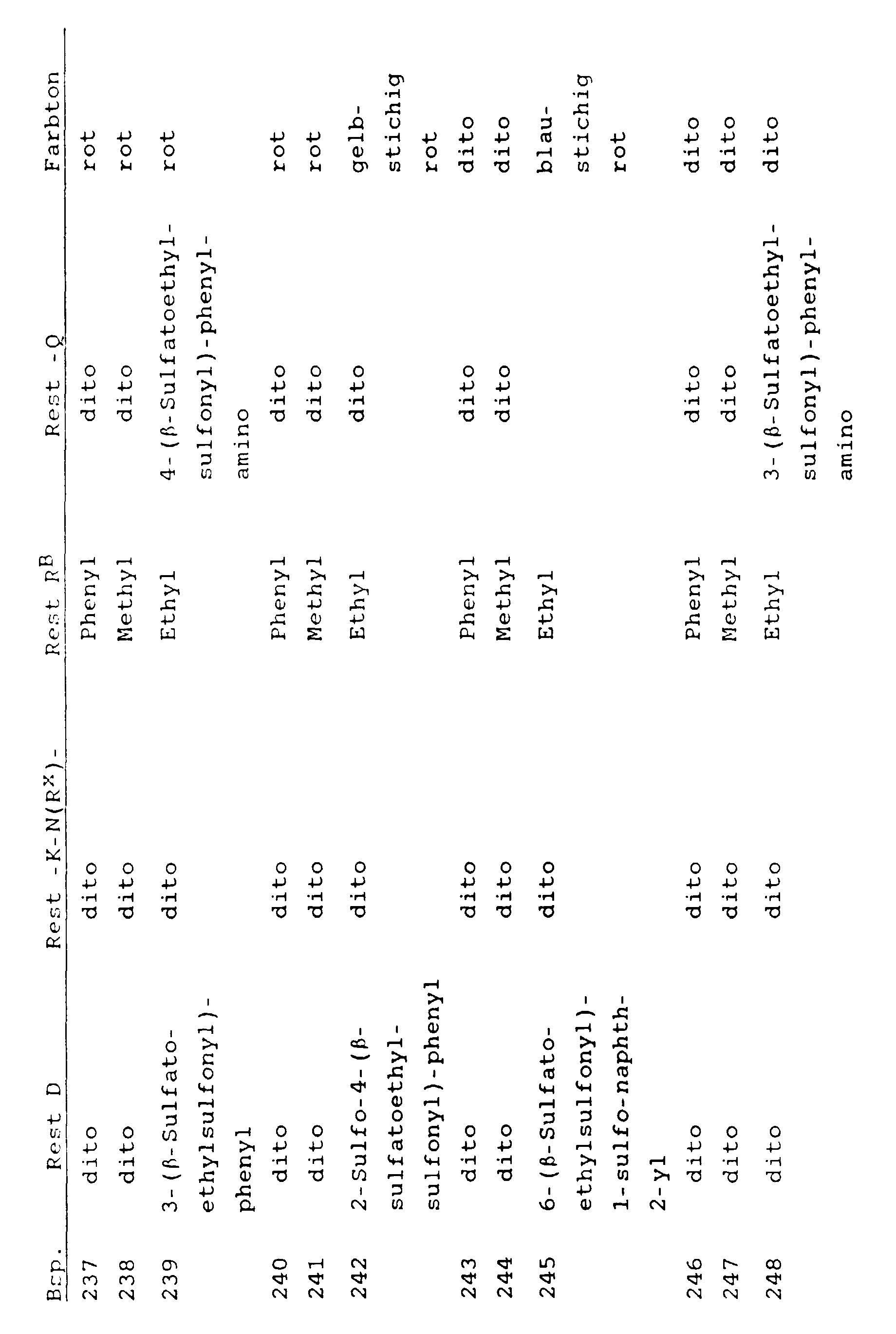

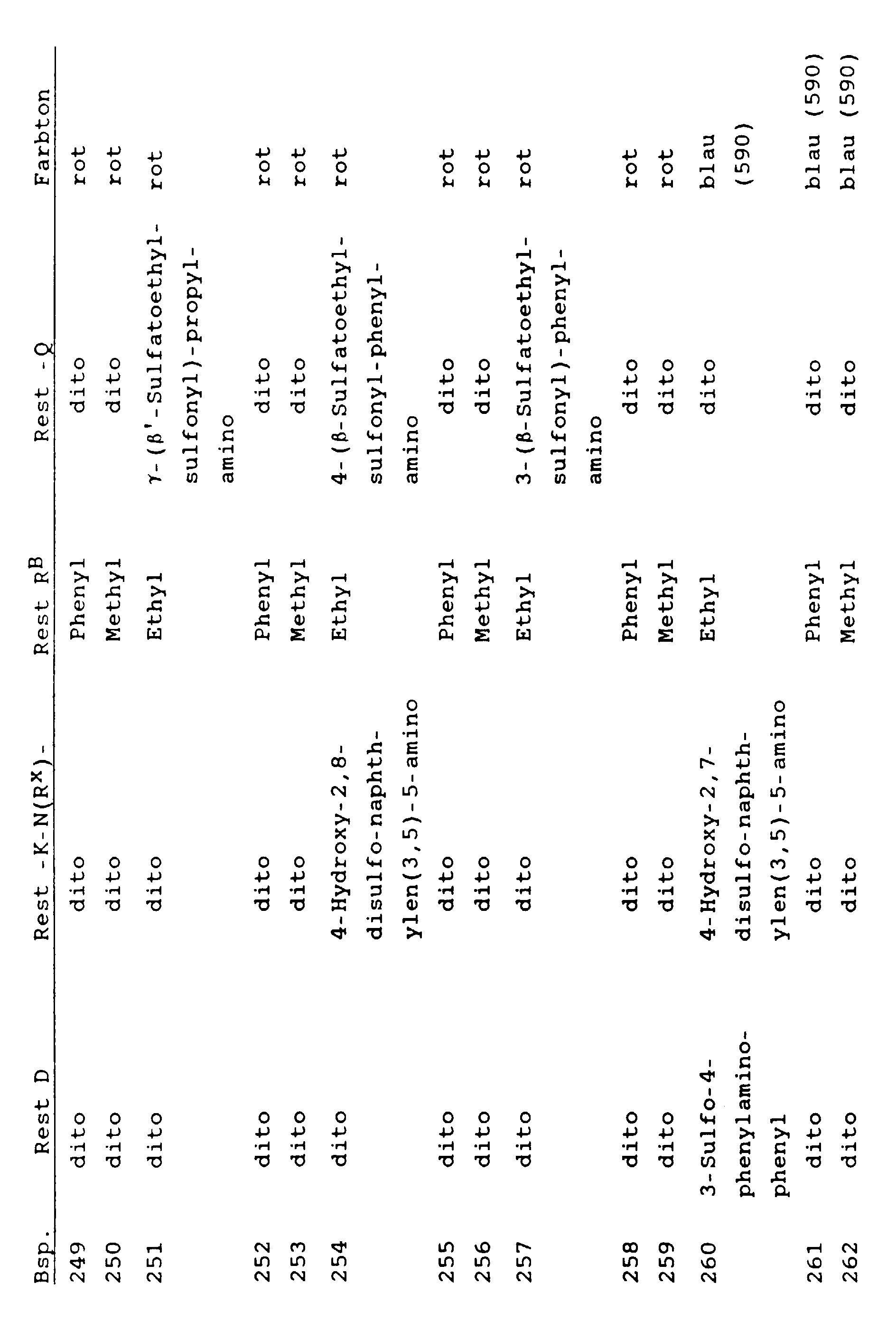

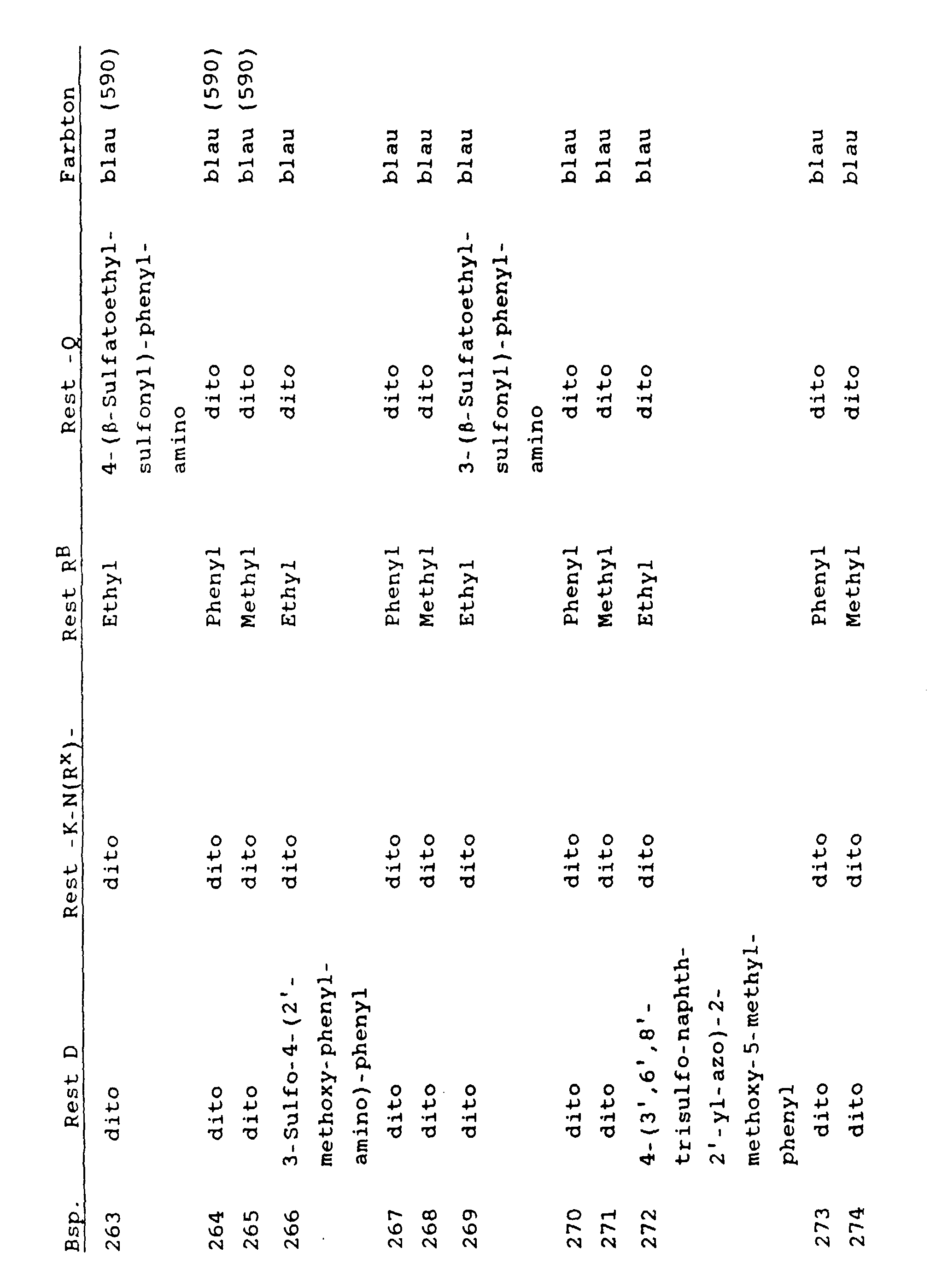

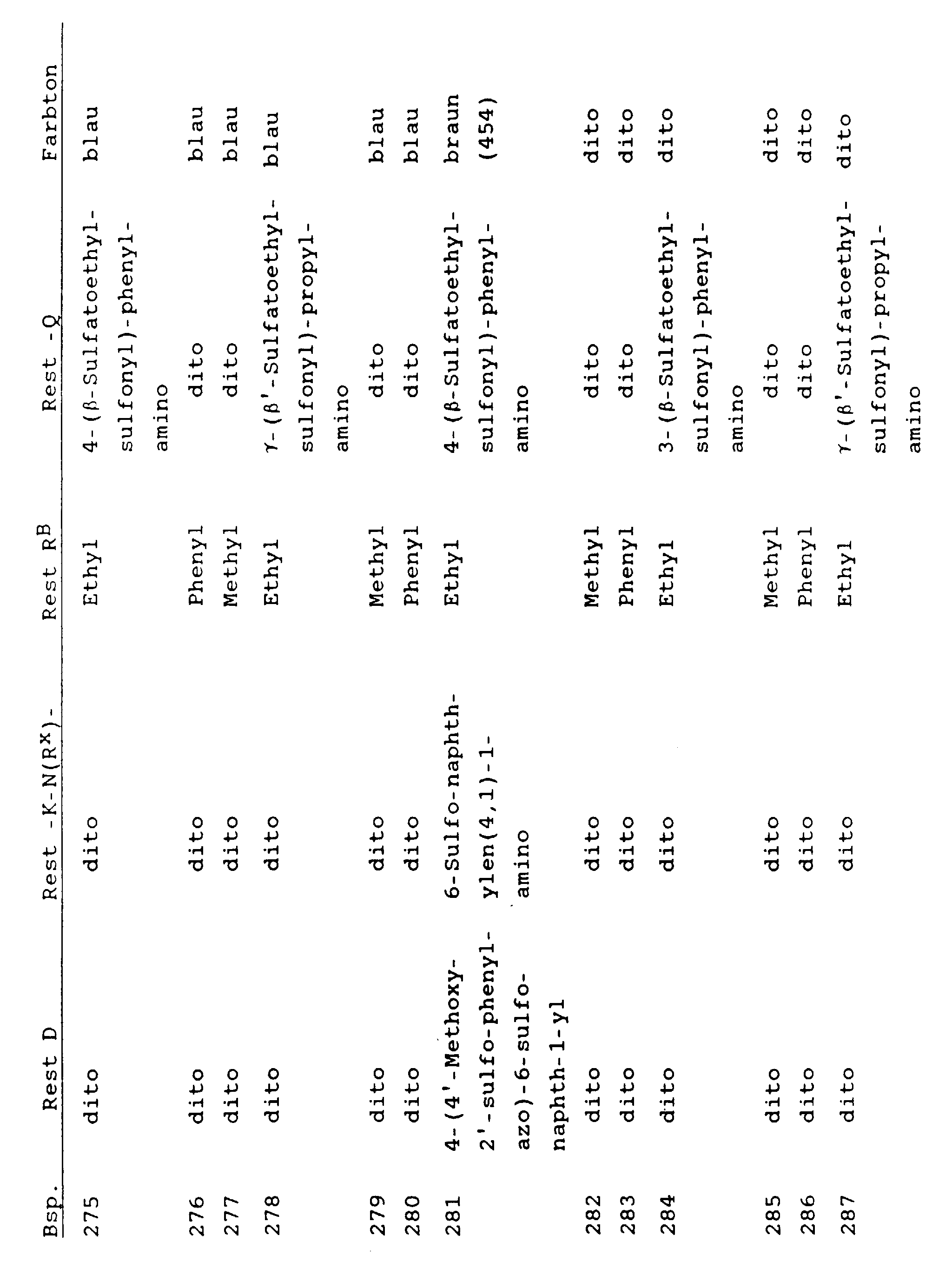

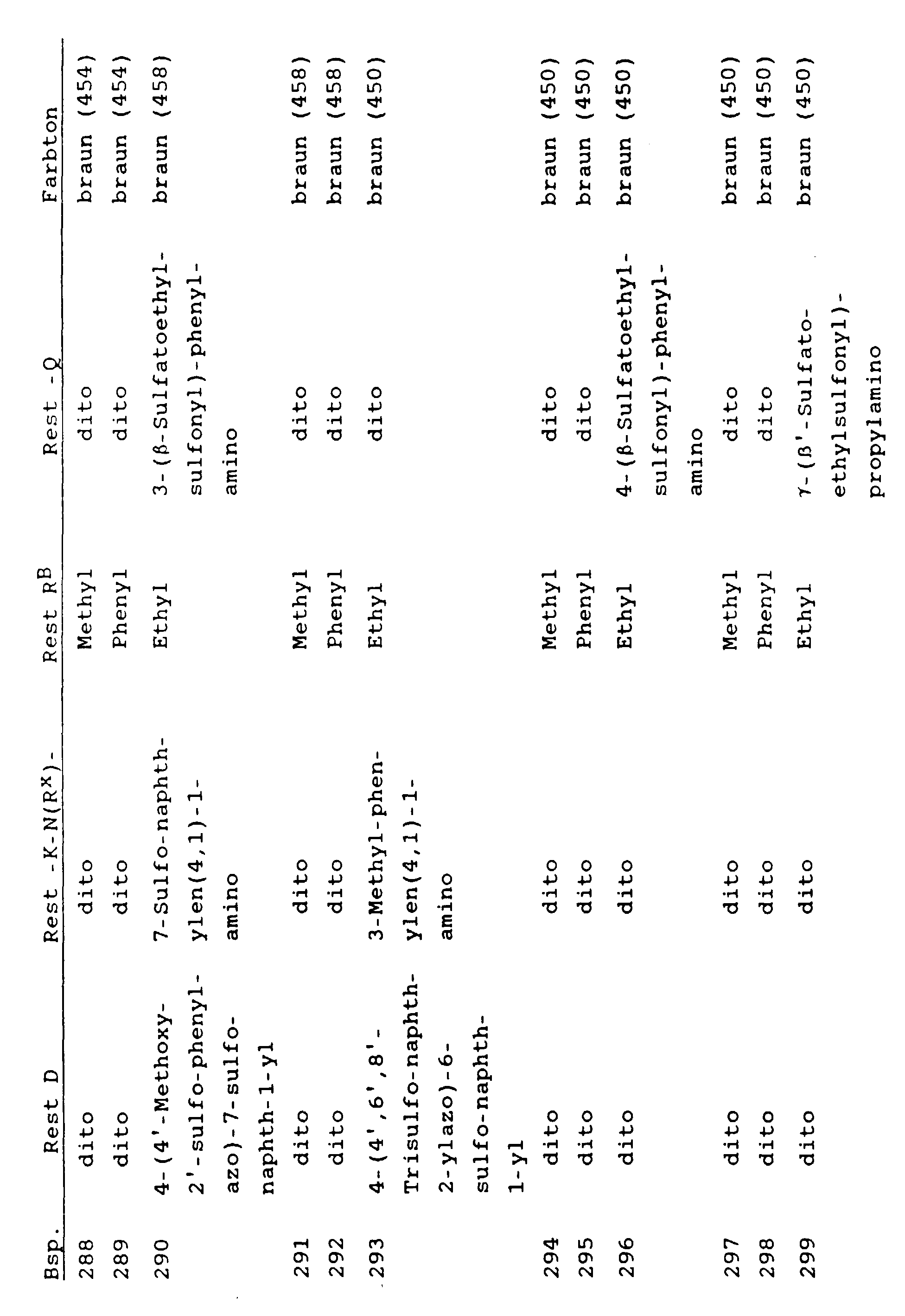

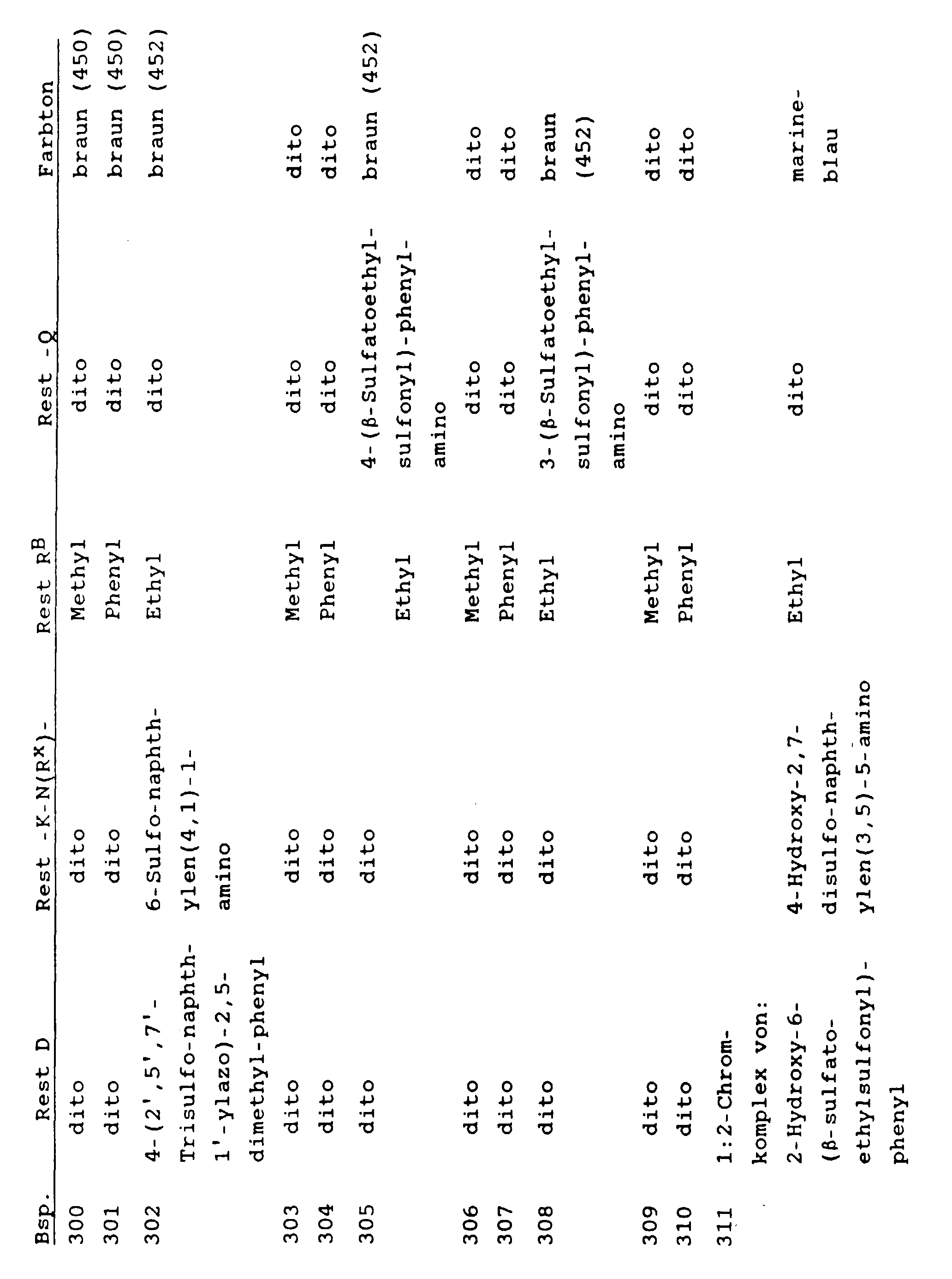

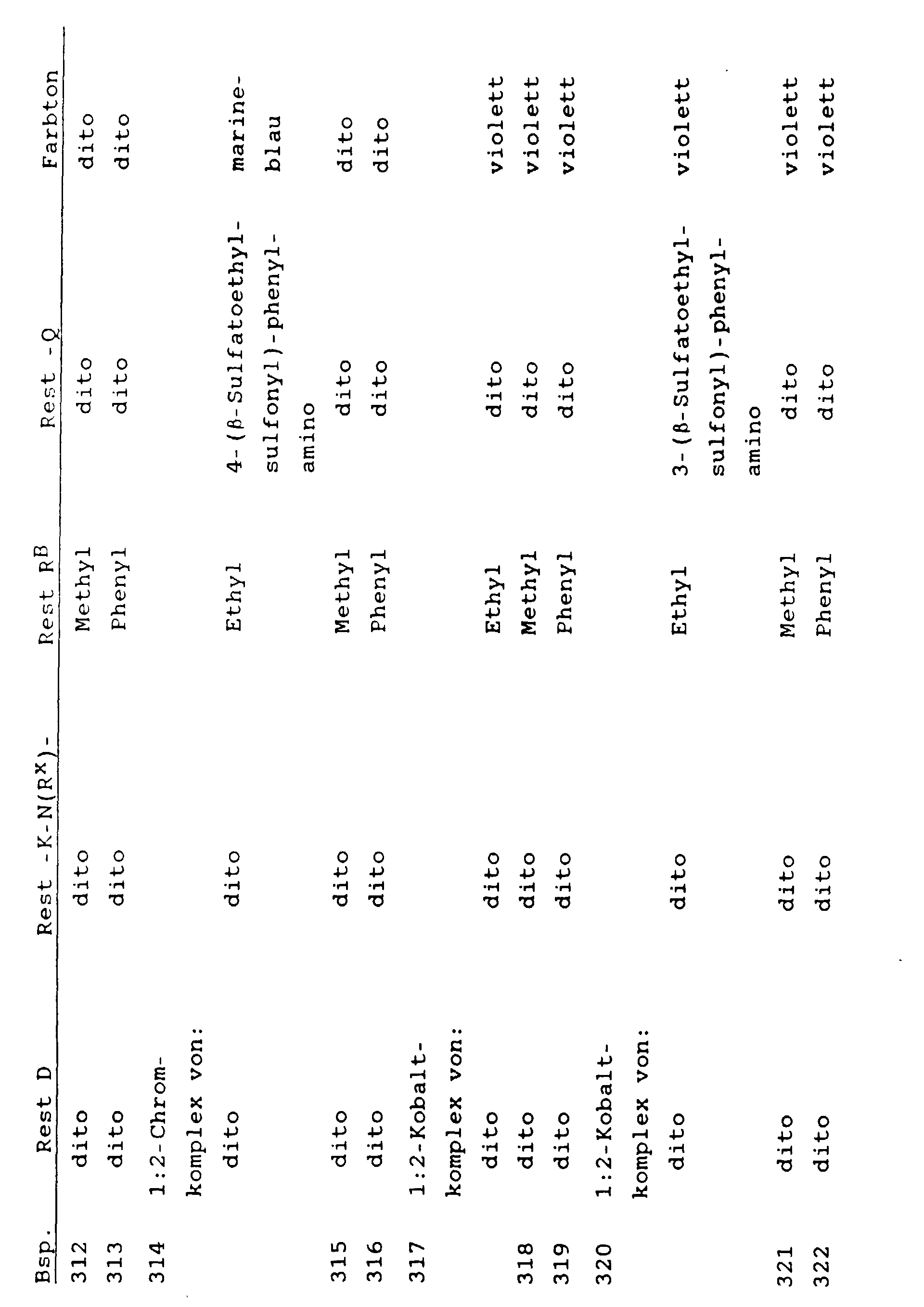

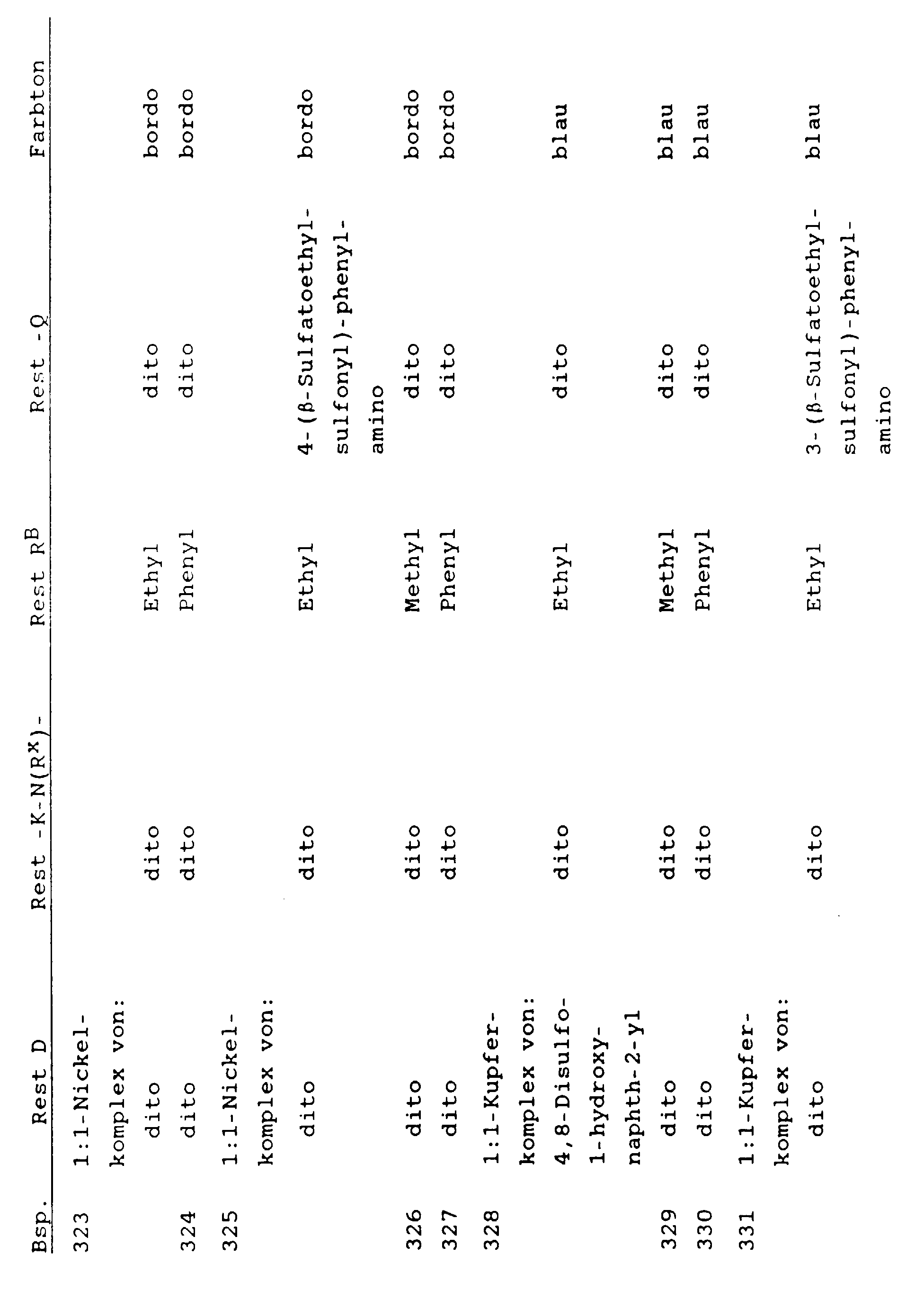

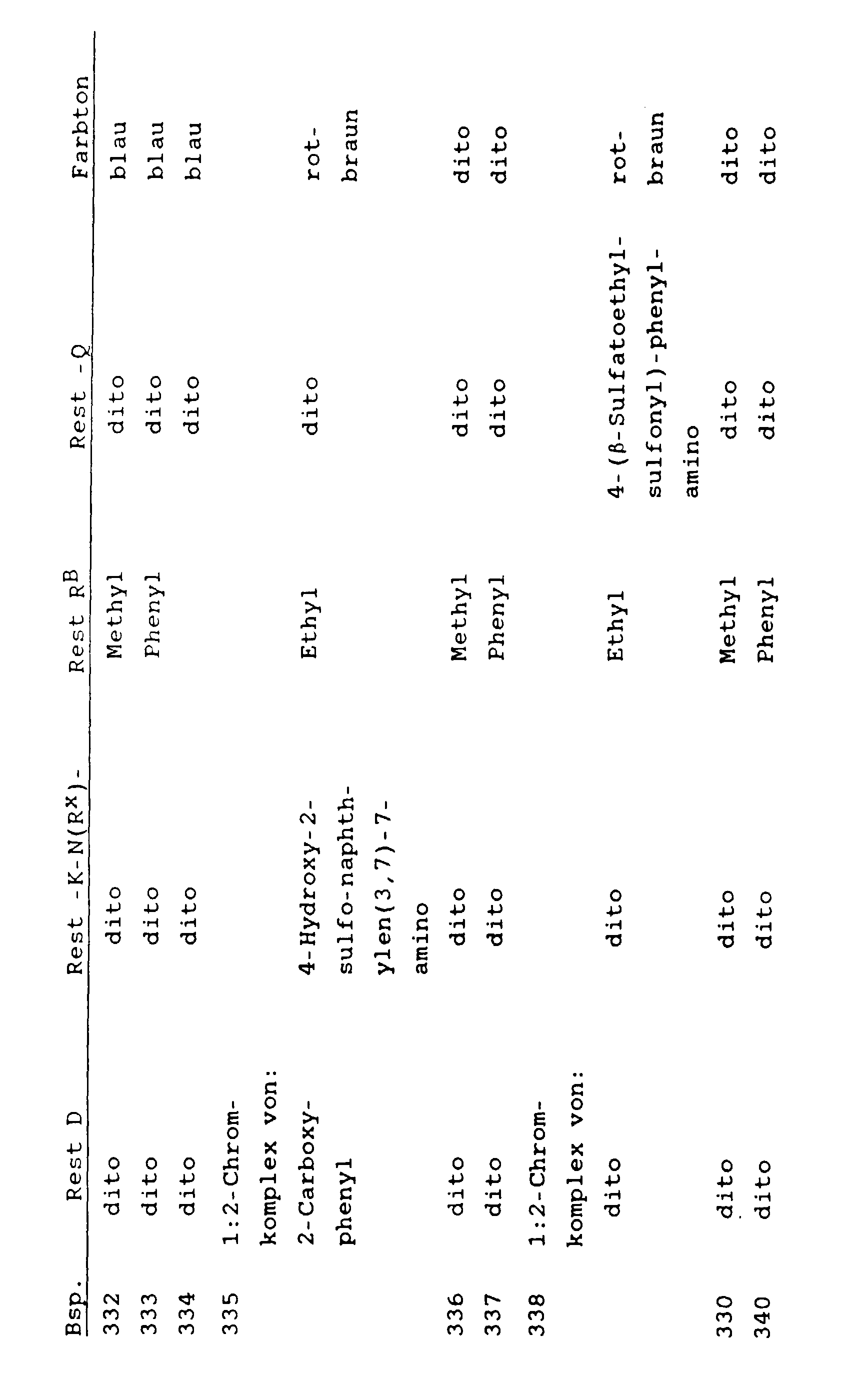

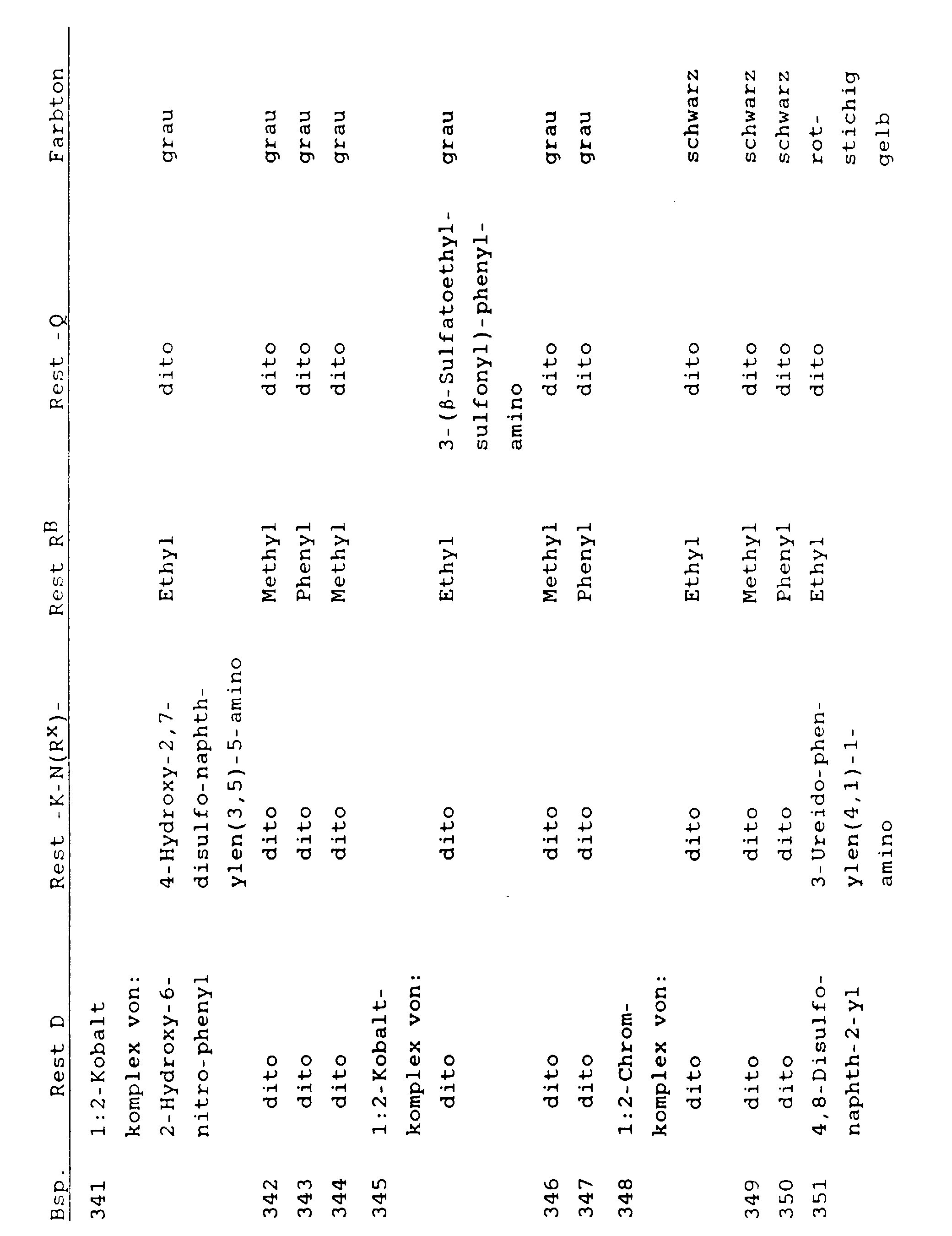

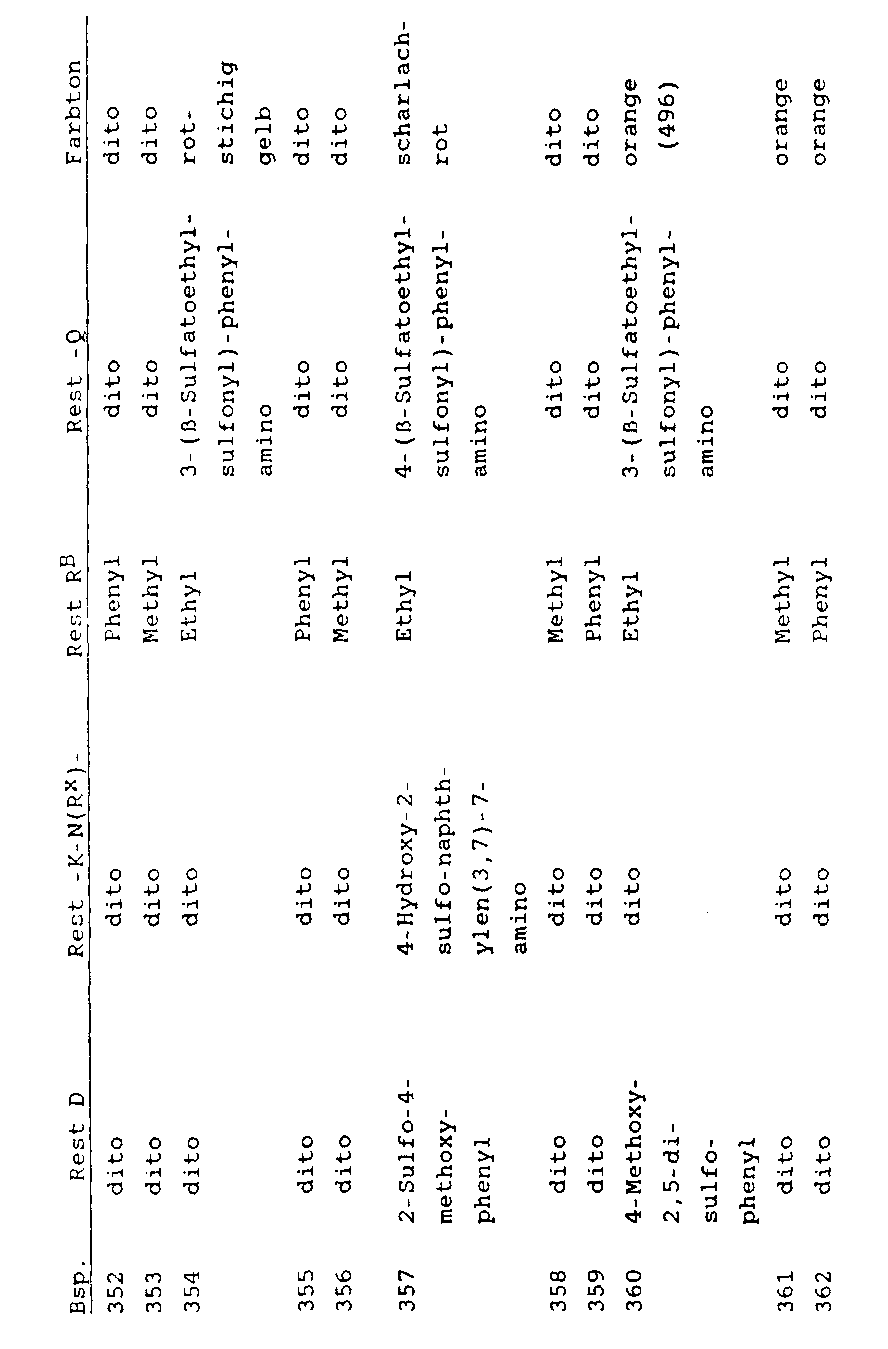

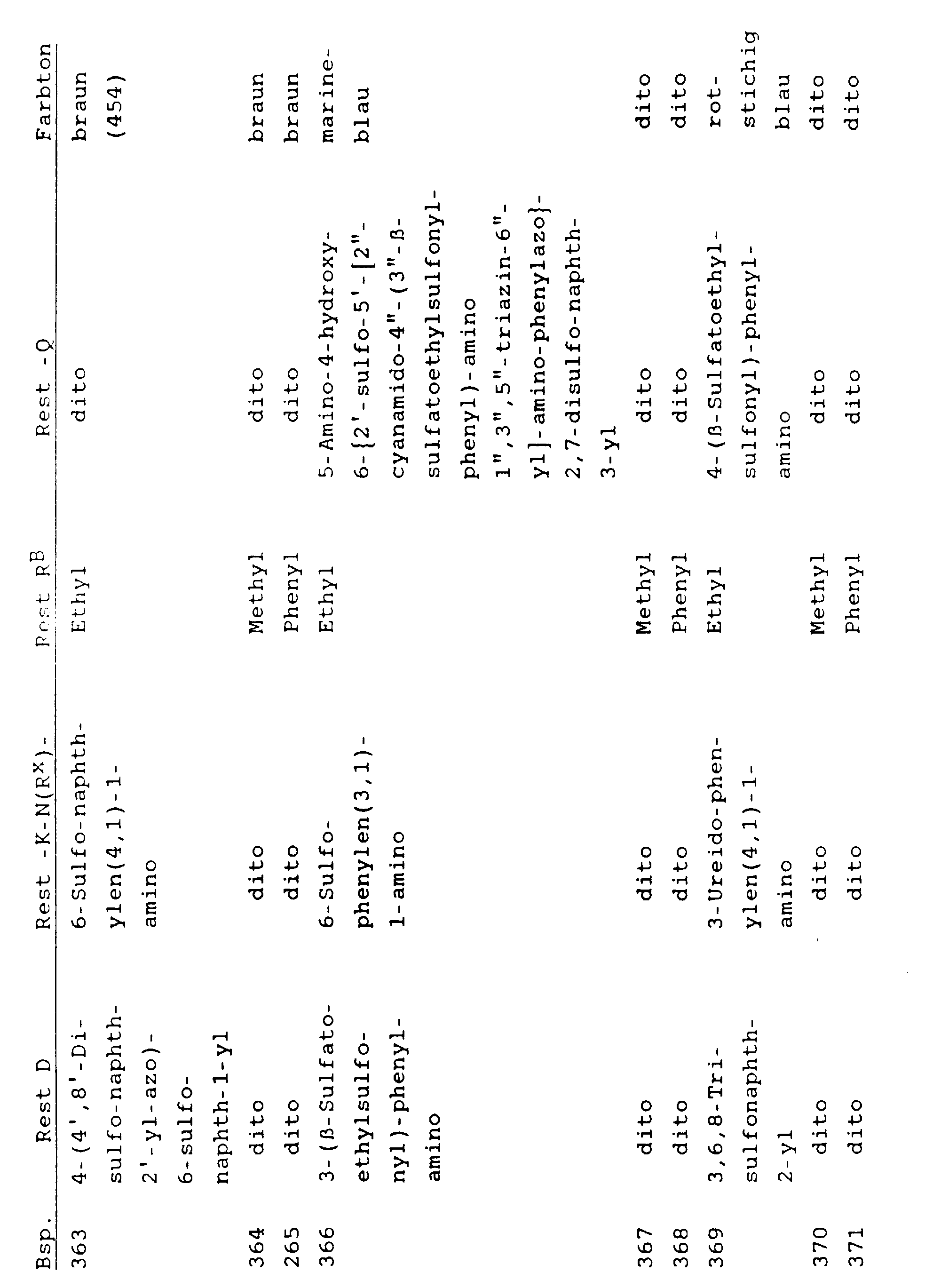

### Beispiel 372

48,3 Teile 1-(4'-Sulfophenyl)-3-carboxy-4-(5"-amino-2"-sulfo-phenylazo)-5-pyrazolon werden in wäßriger Lösung bei 0 bis 3°C und einem pH-Wert von 3,5 bis 4 mit 19 Teilen Cyanurchlorid umgesetzt. Anschließend gibt man 9,7 Teile Methansulfonsäureamid hinzu, stellt mittels wäßriger Natronlauge den pH-Wert auf 11 und erwärmt den Ansatz auf 50 bis 60°C. Man rührt noch 90 bis 120 Minuten bei 50 bis 60°C unter Einhaltung des pH-Wertes zwischen 10 und 11 nach und gibt nach beendeter Kondensationsreaktion wäßrige Salzsäure bis zu einem pH-Wert von 5 und anschließend 29,5 Teile 3-(β-Sulfatoethylsulfonyl)anilin hinzu, erwärmt den Ansatz auf 85°C und rührt ihn unter Einhaltung eines pH-Werts von 3,5 bis 4 bis zur vollständigen Kondensationsreaktion weiter.

Der gebildete erfindungsgemäße Azofarbstoff wird in Form seines Alkalimetallsalzes (Natriumsalzes) durch Eindampfen der Syntheselösung unter reduziertem Druck oder durch Sprühtrocknung isoliert. Er besitzt, in Form der freien Säure geschrieben, die Formel 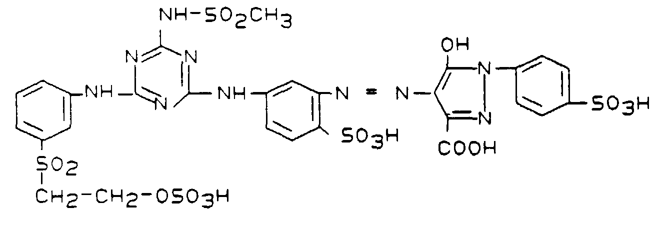 und weist sehr gute faserreaktive Farbstoffeigenschaften auf. Er färbt gemäß den bekannten Anwendungstechniken die in der Beschreibung genannten Materialien, wie insbesondere Cellulosefasermaterialien, in farbstarken, gelben Tönen mit guten Echtheitseigenschaften.

Des weiteren zeichnet er sich durch eine sehr hohe Fixierausbeute sowohl beim Färben im Ausziehverfahren zwischen 40 und 80°C als auch in den Klotz-Kaltverweil-Färbeverfahren aus.

### Beispiel 373

Eine Suspension von 19 Teilen Cyanurchlorid in 200 Teilen Eiswasser wird mit 18,8 Teilen 1,3-Diaminobenzol-4-sulfonsäure versetzt. Man rührt den Ansatz zunächst etwa zwei Stunden bei 0 bis 5°C und bei einem pH-Wert von 2,5 und danach etwa 30 Minuten bei 0 bis 5°C und einem pH-Wert von 4. Sodann gibt man 16 Teile Ethansulfonsäureamid hinzu, stellt mittels Natronlauge einen pH-Wert von 11 ein, erhöht die Temperatur langsam auf 50 bis 60°C und rührt noch etwa 1,5 Stunden unter Einhaltung eines pH-Wertes von 10,5 und einer Temperatur von 50 bis 60°C weiter. Sodann stellt man mittels wäßriger Salzsäure einen pH-Wert von 7 ein, gibt 20 Volumenteile einer wäßrigen 5n-Natriumnitrit-Lösung hinzu und diazotiert durch langsame Zugabe dieses Ansatzes in ein Gemisch aus 50 Volumenteilen konzentrierter Salzsäure und 600 Teilen Eis. Man rührt noch etwa 2 Stunden nach und zerstört in üblicher Weise einen eventuellen Überschuß an salpetriger Säure mittels Amidosulfonsäure.

Die erhaltene Diazoniumsalzsuspension wird sodann in eine wäßrige Lösung des Natriumsalzes von 60 Teilen 4-Hydroxy-5-amino-6-[4'-(β-sulfatoethylsulfonyl)-phenylazo]-naphthalin-2,7-disulfonsäure gegeben. Man führt die Kupplungsreaktion bei 15 bis 25°C und einem pH-Wert von 4,5 bis 5,5 durch, gibt anschließend 29,5 Teile 4-(β-Sulfatoethylsulfonyl)-anilin hinzu und führt die Kondensationsreaktion bei 85°C und einem pH-Wert von 3,5 bis 4 während etwa 2 Stunden durch. Den Ansatz klärt man anschließend mit wenig Kieselgur bei etwa 40°C, filtriert ihn und dampft das Filtrat ein.

Man erhält ein schwarzes, elektrolythaltiges Pulver des Alkalimetallsalzes (Natriumsalzes) der Disazoverbindung der Formel 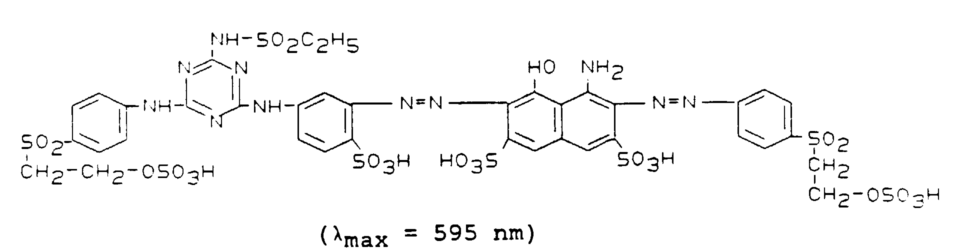 Sie zeigt sehr gute faserreaktive Farbstoffeigenschaften und färbt beispielsweise Baumwolle in kräftigen, marineblauen Tönen.

### Beispiel 374

Zur Herstellung eines erfindungsgemäßen Azofarbstoffs verfährt man gemäß der Verfahrensweise des Beispiels 373, setzt jedoch anstelle der 29,5 Teile 4-(β-Sulfatoethylsulfonyl)-anilin bei der Umsetzung mit der Chlortriazinverbindung die gleiche Menge an 3-(β-Sulfatoethylsulfonyl)-anilin und anstelle von 11 Teilen Ethansulfonsäureamid 16 Teile Benzolsulfonamid ein. Man erhält das Alkalimetallsalz der Disazoverbindung der Formel 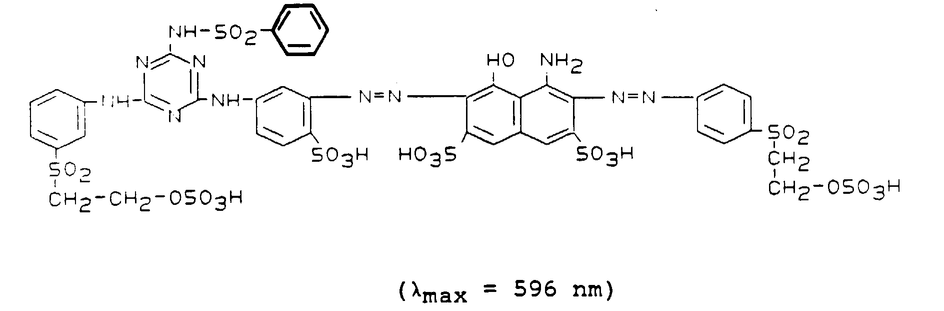 der beispielsweise Baumwolle in kräftigen, marineblauen Tönen färbt.

### Beispiele 375 bis 483

In den nachfolgenden Tabellenbeispielen sind weitere erfindungsgemäße Azofarbstoffe mit Hilfe der Komponenten entsprechend der allgemeinen Formel (B) 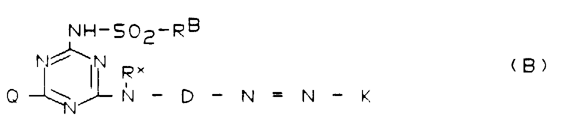 beschrieben. Sie lassen sich in erfindungsgemäßer Weise, beispielsweise analog einem der obigen Ausführungsbeispiele, unter Einsatz der aus dem jeweiligen Tabellenbeispiel in Verbindung mit der allgemeinen Formel (B) ersichtlichen Komponenten (wie einem Diaminophenylen oder -naphthylen der Formel HR^{x}N-D-NH₂, der Kupplungskomponente H-K, einem Halogentriazin, einer Verbindung derFormel H₂N-SO₂-R^{B} und einem Amin der Formel H-Q) herstellen. Sie besitzen sehr gute faserreaktive Farbstoffeigenschaften und färben die in der Beschreibung genannten Materialien, insbesondere Cellulosefasermaterialien, wie Baumwolle, in den in dem jeweiligen Tabellenbeispiel (hierfür Baumwolle) angegebenen Tönen in hoher Farbstärke und mit guten Echtheiten.

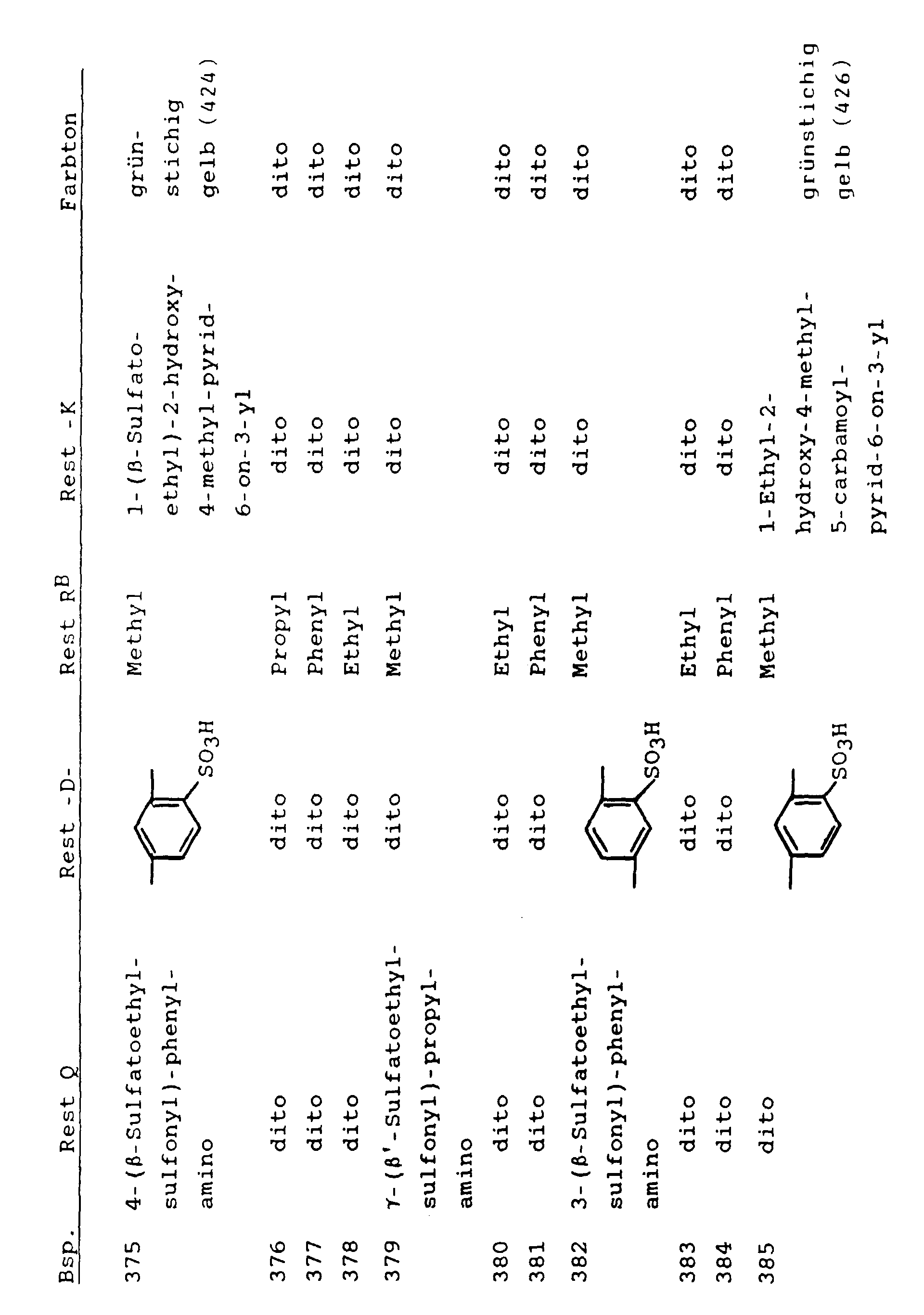

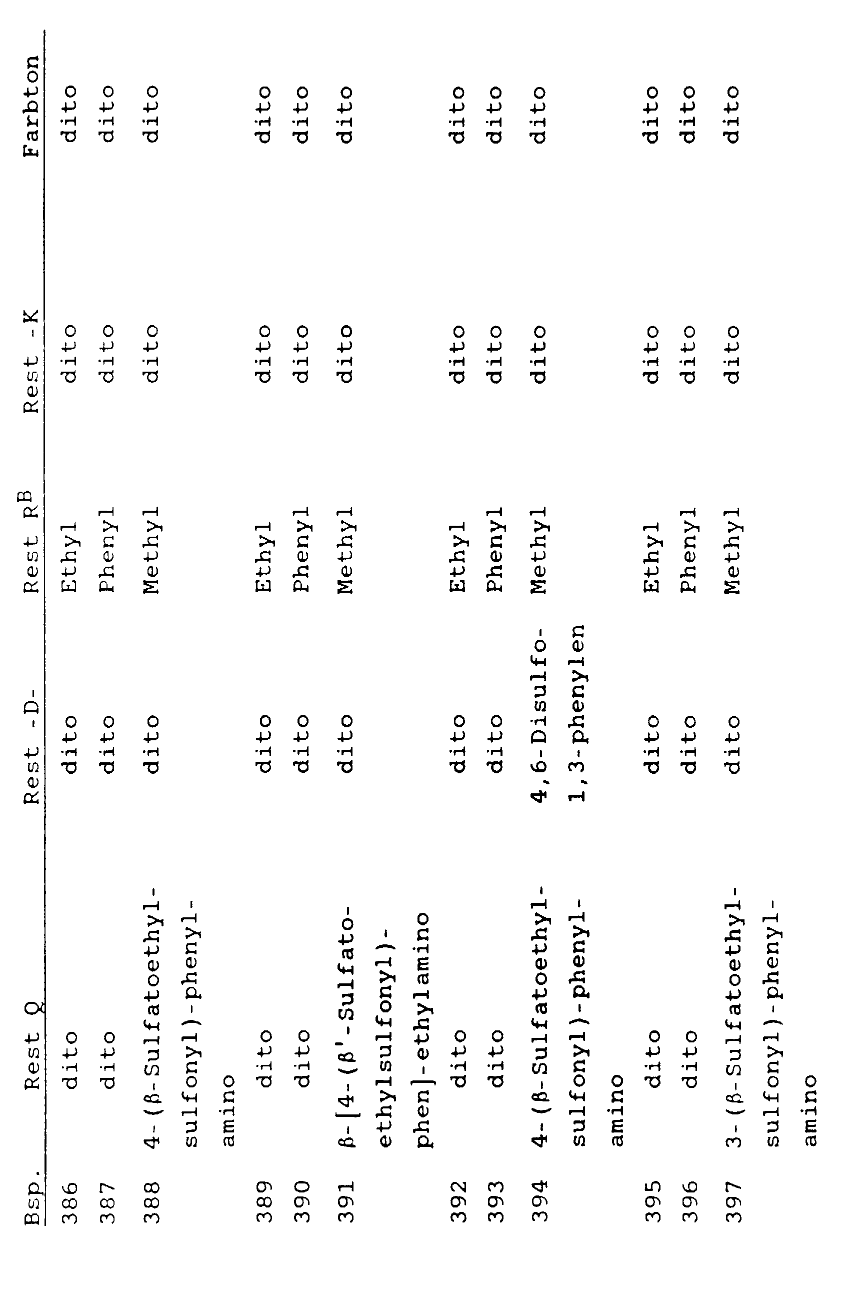

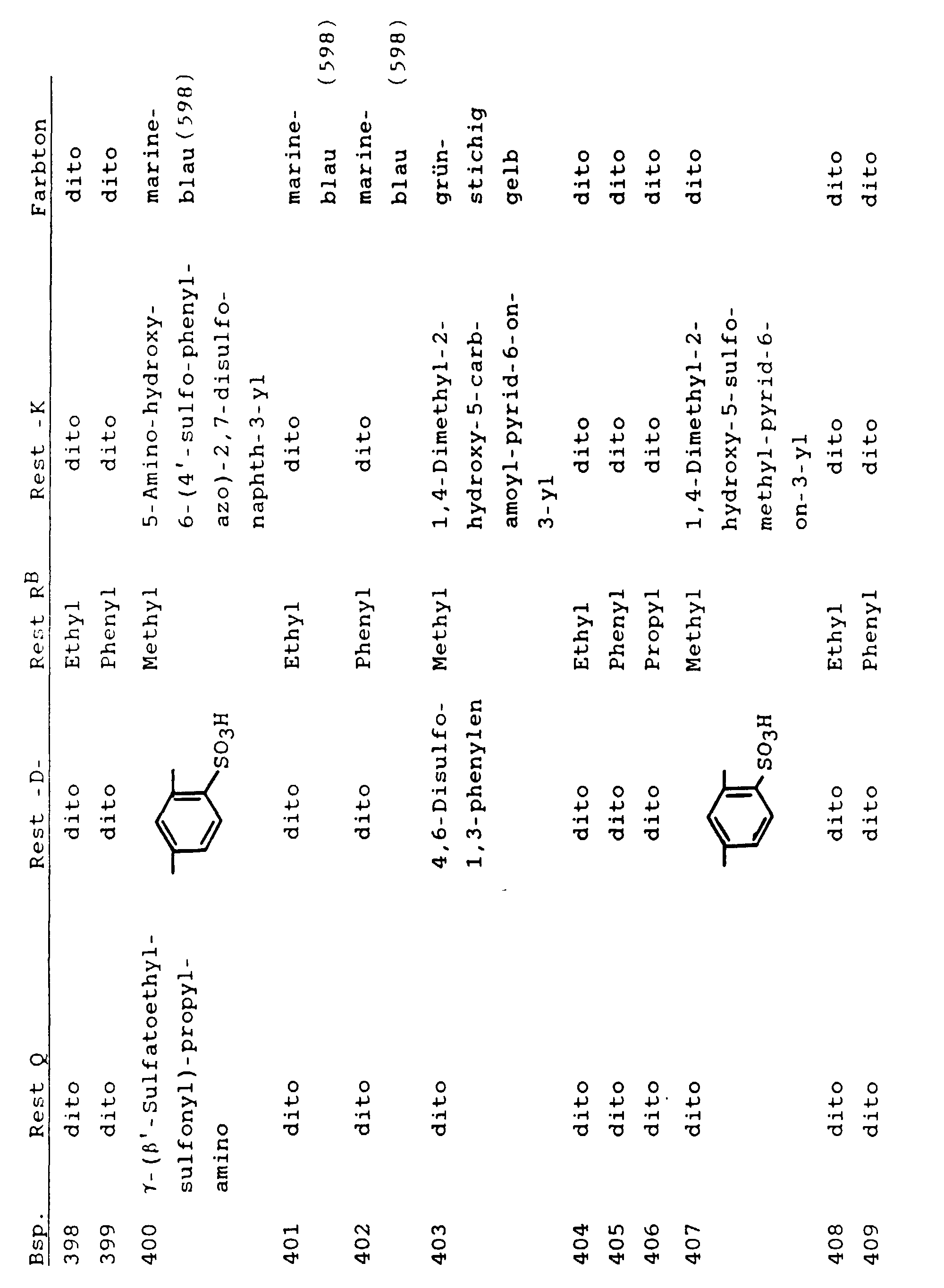

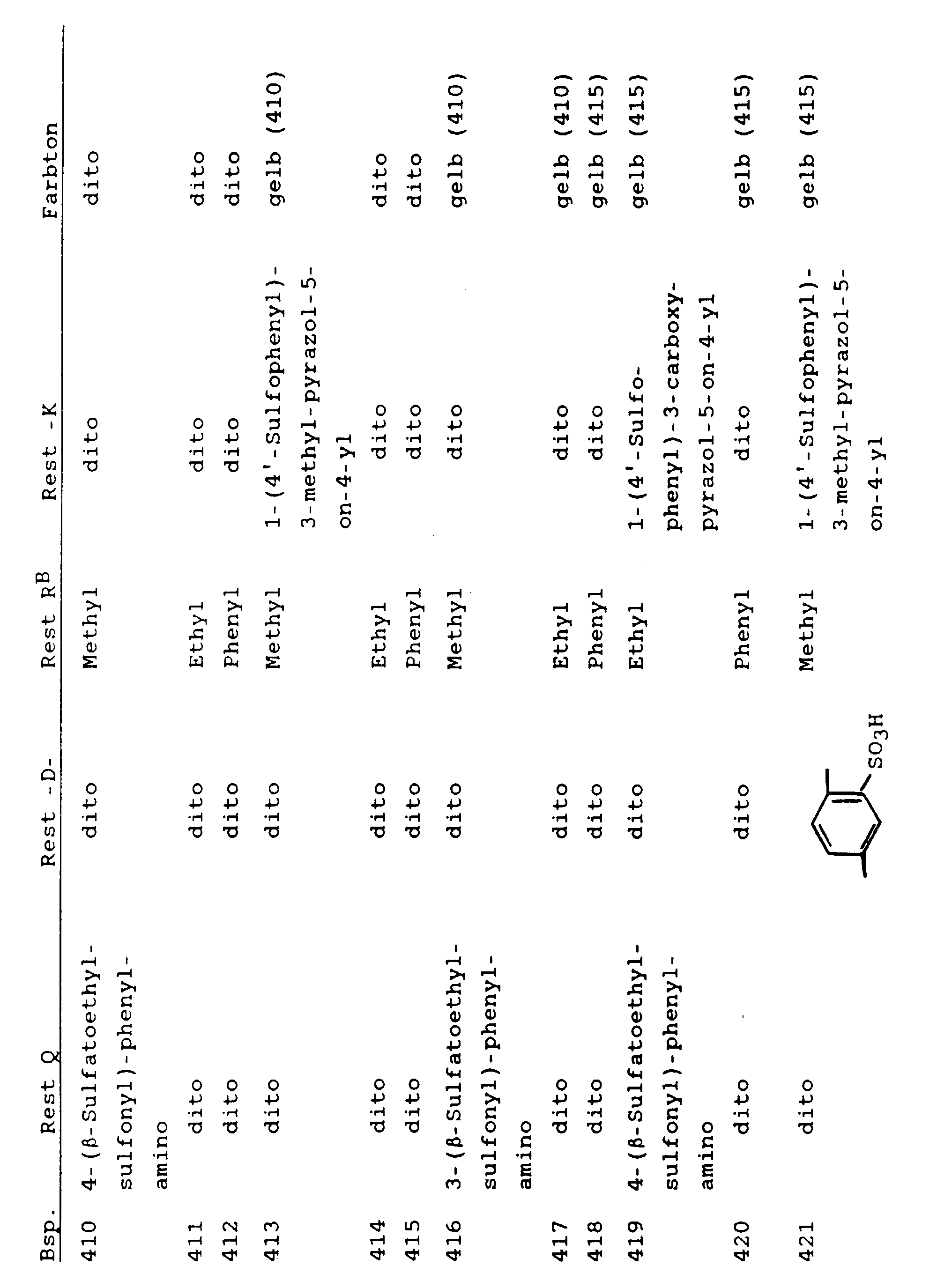

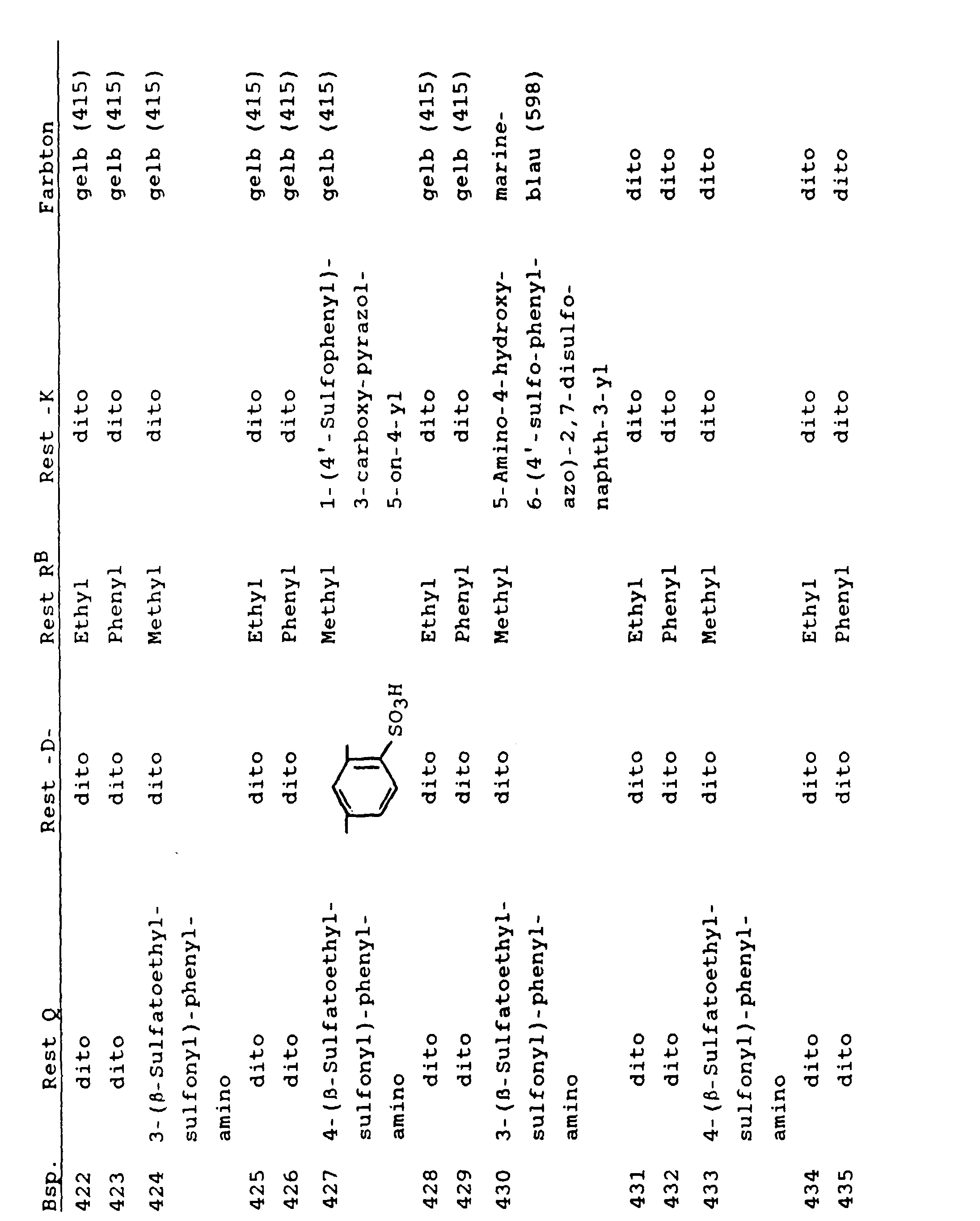

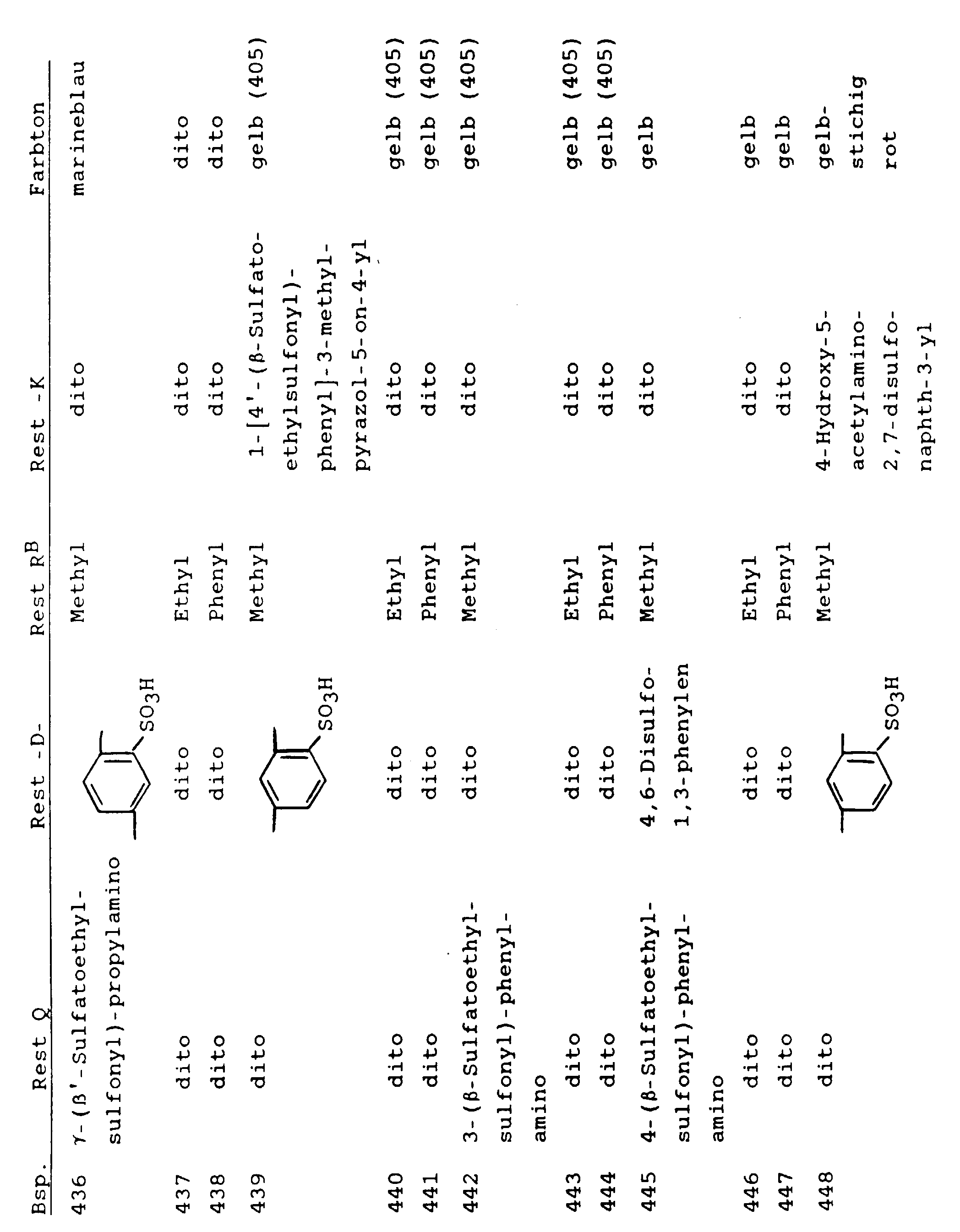

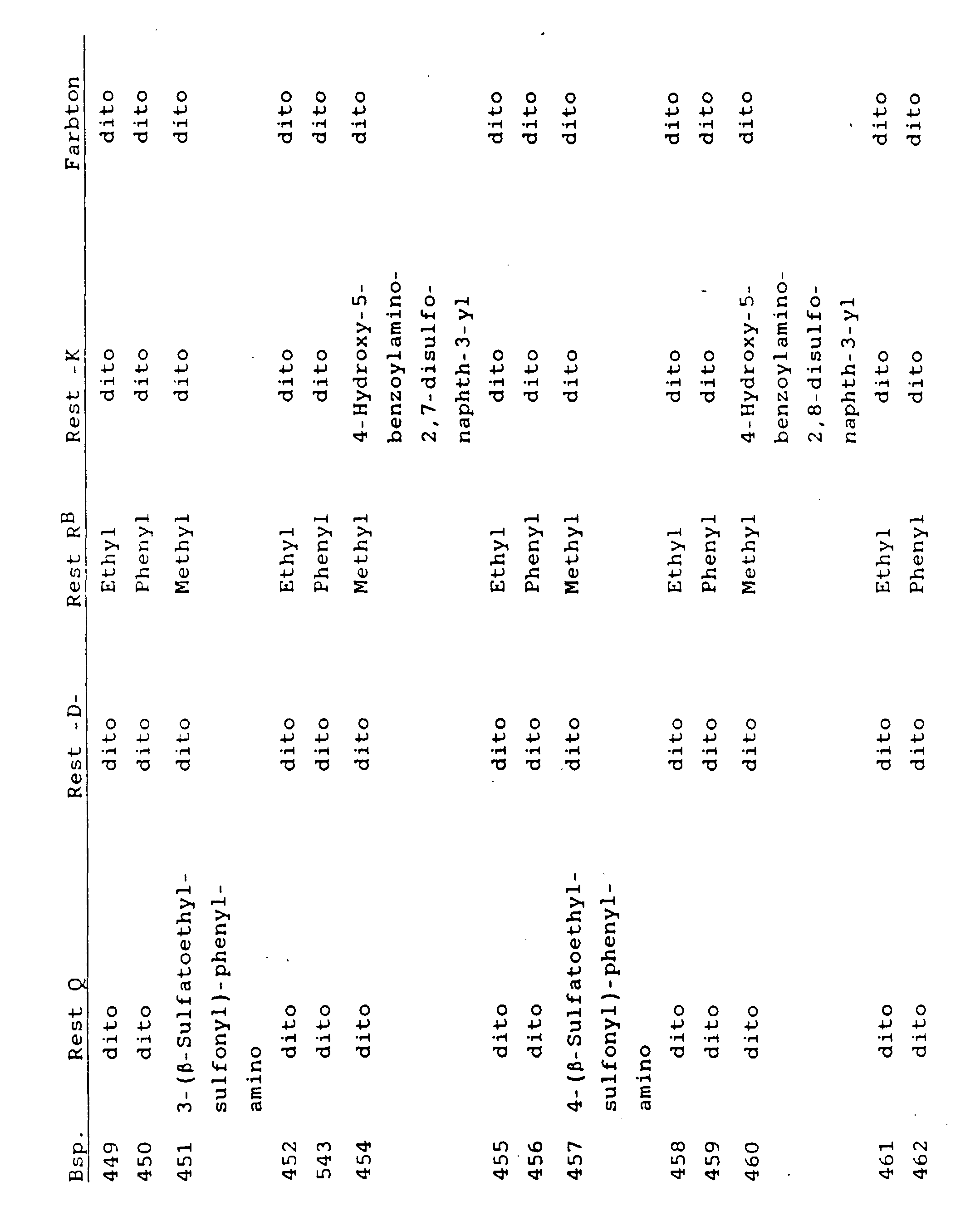

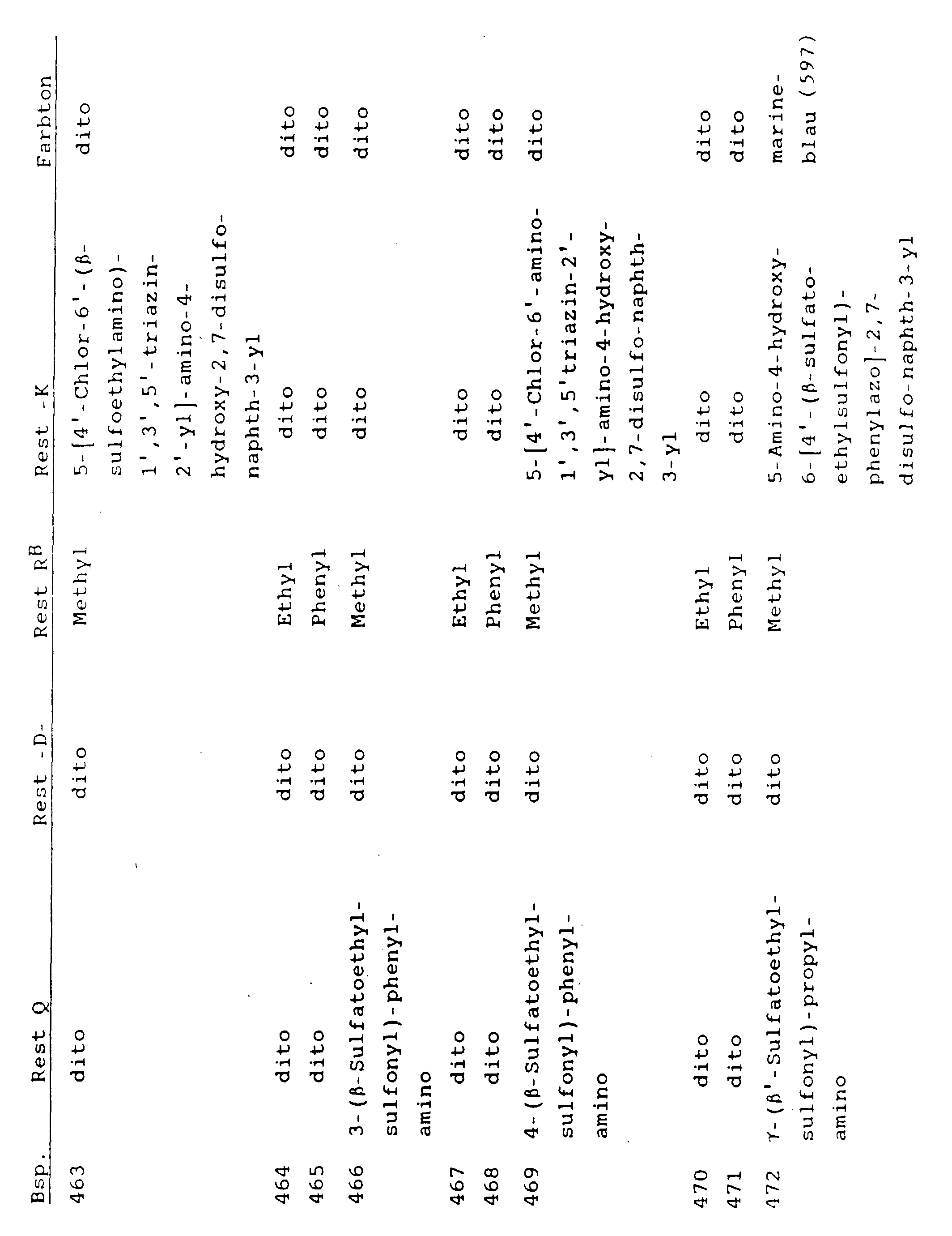

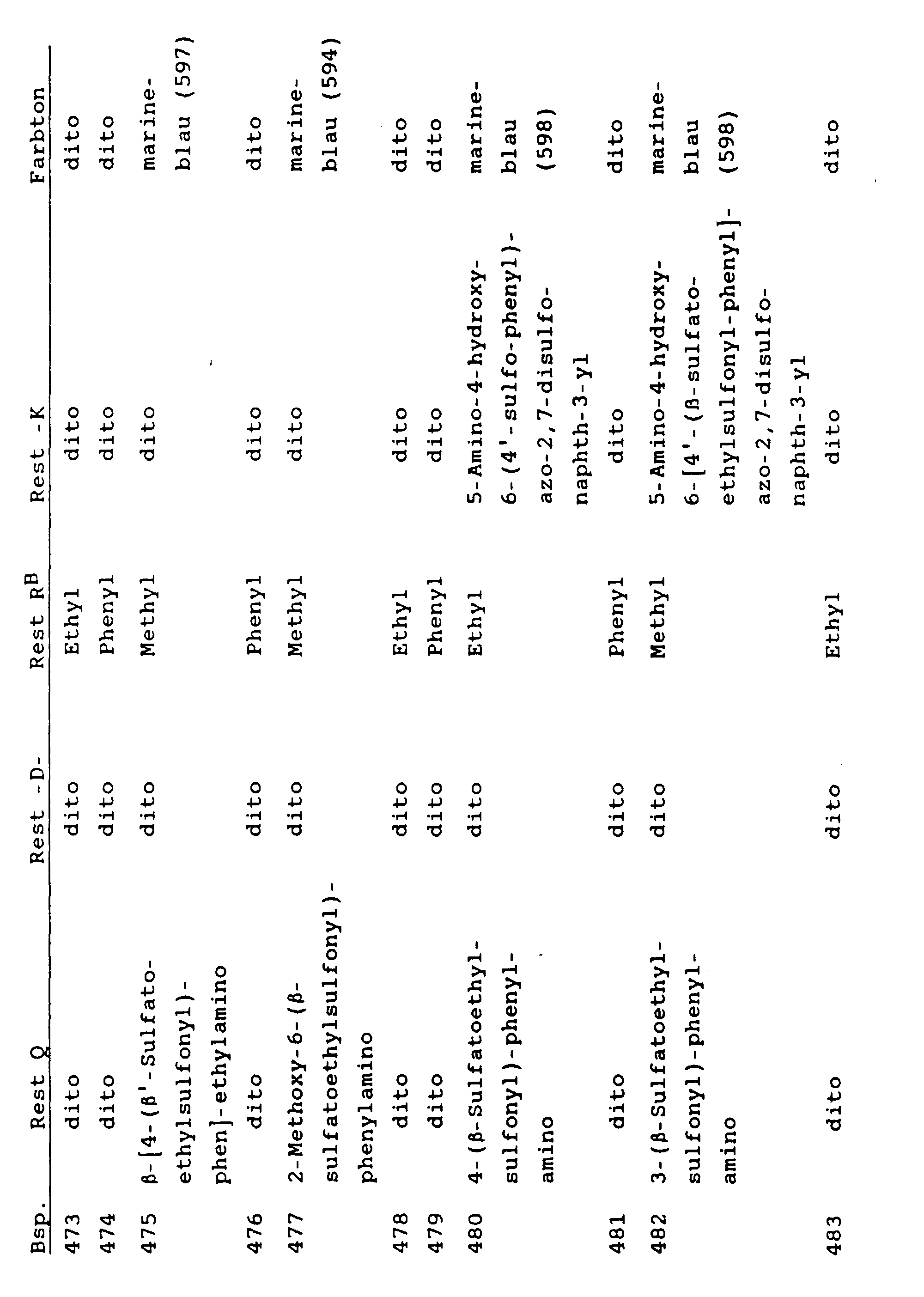

### Beispiel 484

49 Teile 1-Amino-2-sulfo-4-(3'-amino-4'-sulfo-phenyl)-amino-9,10-anthrachinon werden in wäßriger Lösung bei 0 bis 5°C und einem pH-Wert von 3,5 bis 4 mit 19 Teilen Cyanurchlorid umgesetzt. Anschließend gibt man 9,7 Teile Methansulfonsäureamid hinzu, stellt mittels wäßriger Natronlauge einen pH-Wert von 11 ein und erhöht die Temperatur des Ansatzes langsam auf 50 bis 60°C. Man rührt noch einige Zeit in diesem Temperaturbereich weiter und stellt nach beendeter Kondensationsreaktion mit wäßriger Salzsäure einen pH-Wert von 5 ein, gibt 29,5 Teile 3-(β-Sulfatoethylsulfonyl)anilin hinzu und führt die dritte Kondensationsreaktion bei 85°C und einem pH-Wert von 3,5 bis 4 durch.

Nach üblicher Klärung des Syntheselösung erhält man den erfindungsgemäßen Farbstoff der Formel (in Form der freien Säure geschrieben) 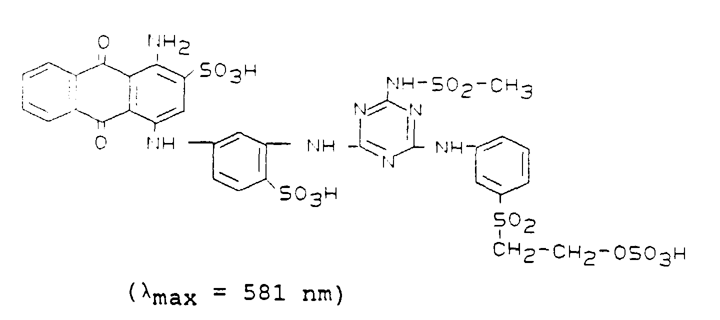 als Alkalimetallsalz (Natriumsalz) durch Eindampfen des Filtrats. Er färbt die in der Beschreibung genannten Materialien, wie insbesondere Cellulosefasermaterialien, beispielsweise Baumwolle, nach den für faserreaktive Farbstoffe üblichen Applikations und Fixierverfahren in farbstarken, brillanten blauen Tönen.

### Beispiel 485

Zur Herstellung eines erfindungsgemäßen Anthrachinonfarbstoffes verfährt man gemäß der Verfahrensweise des Beispiels 484, setzt jedoch anstelle von 3-(β-Sulfatoethylsulfonyl)-anilin die gleiche Menge an 4-(β-Sulfatoethylsulfonyl)-anilin ein. Man erhält einen blauen Farbstoff mit gleich guten färberischen Eigenschaften, der beispielsweise auf Baumwolle farbstarke, brillante blaue Färbungen und Drucke liefert.

### Beispiel 486

Zur Herstellung eines erfindungsgemäßen Anthrachinonfarbstoffes verfährt man gemäß der Verfahrensweise des Beispiels 484, setzt jedoch als Ausgangs-Anthrachinonverbindung 49 Teile 1-Amino-2-sulfo-4-(3'-amino-2',4',6'-trimethyl-5'-sulfo-phenyl)-amino-9,10-anthrachinon ein. Der Farbstoff besitzt, in Form der freien Säure geschrieben, die Formel

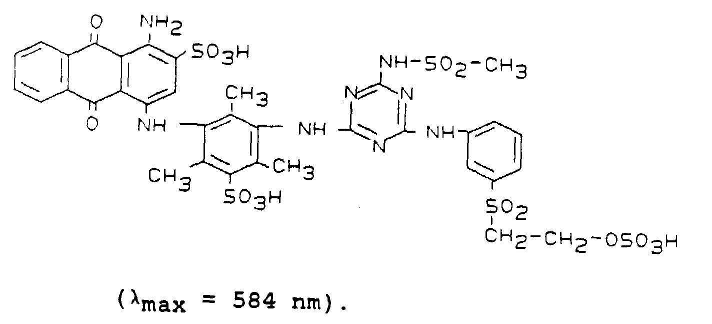

Er zeigt sehr gute faserreaktive Farbstoffeigenschaften und liefert beispielsweise auch Baumwolle nach den in der Technik üblichen Applikations- und Fixierverfahren Drucke und Färbungen in farbstarken, brillanten blauen Tönen.

### Beispiel 487

Etwa 3 000 Teile einer wäßrigen Lösung mit einem pH-Wert von 7 und einer Temperatur von 0 bis 5°C von 31,6 Teilen der Triphendioxazinverbindung der Formel 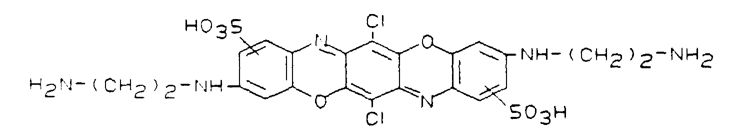 wird mit einer feinen Suspension von 19 Teilen Cyanurchlorid in 100 Teile Eiswasser versetzt. Man rührt den Ansatz noch etwa 1,5 Stunden bei 0 bis 5°C und einem pH-Wert von 6,5 bis 7 weiter und gibt nach beendeter Kondensationsreaktion eine Lösung von 11 Teilen Ethansulfonsäureamid in 30 Teilen Wasser hinzu, stellt mittels Natronlauge einen pH-Wert von 11 ein und erwärmt den Ansatz langsam auf 50 bis 60°C, rührt bei dieser Temperatur und diesem pH-Wert noch etwa zwei Stunden weiter, gibt sodann 29,5 Teile 3-(β-Sulfatoethylsulfonyl)-anilin hinzu und führt die dritte Kondensationsreaktion bei einem pH-Wert von 3,5 bis 4 und einer Temperatur von 80 bis 90°C durch.

Nach der üblichen Klärung der Syntheselösung erhält man aus dem Filtrat den erfindungsgemäßen Anthrachinonfarbstoff - beispielsweise durch Sprühtrocknung - als Alkalimetallsalz (Natriumsalz). Er besitzt, in Form der freien Säure geschrieben, die Formel 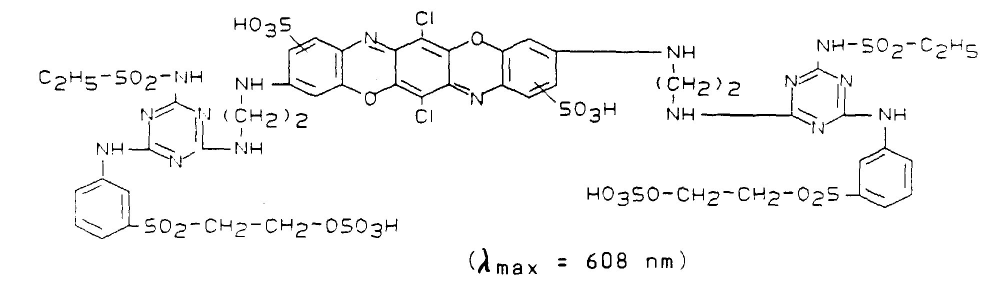 und liefert nach den in der Technik üblichen Applikations- und Fixierverfahren für faserreaktive Farbstoffe farbstarke, rotstichig blaue Färbungen und Drucke mit guten Echtheitseigenschaften.

### Beispiele 488 bis 496

In den nachfolgenden Tabellenbeispielen sind weitere erfindungsgemäße Triphendioxazinfarbstoffe mittels der Komponenten der allgemeinen Formel (C) beschrieben. 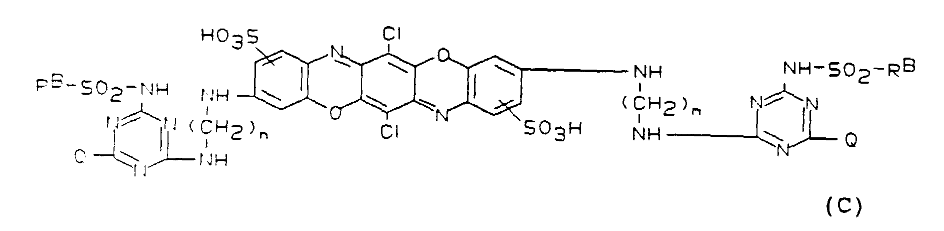 Sie lassen sich in erfindungsgemäßer Weise, wie beispielsweise gemäß dem obigen Beispiel 467, aus ihren Ausgangskomponenten, die aus der allgemeinen Formel (C) in Verbindung mit den Angaben der entsprechenden Tabellenbeispiele ersichtlich sind (wie dem entsprechenden Dichlor-triphendioxazin-Ausgangsdiamin, Cyanurchlorid, dem Sulfonamid entsprechend der allgemeinen Formel H₂N-SO₂-R^{B} und dem Amin entsprechend der Formel H-Q) herstellen; sie besitzen sehr gute faserreaktive Farbstoffeigenschaften und färben die in der Beschreibung genannten Materialien, wie insbesondere Cellulosefasermaterialien, in dem für das jeweilige Tabellenbeispiel für Baumwolle angegebenen kräften, klaren Blau mit guten Echtheitseigenschaften.

| Bsp. | Index n | Rest Q | Farbton |
|---|---|---|---|
| 488 | 2 | β-[4-(β'-Sulfatoethylsulfonyl)-phen]-ethylamino | blau (608) |
| 489 | 2 | γ-(β'-Sulfatoethylsulfonyl)-propylamino | blau (608) |
| 490 | 2 | 2-Methoxy-6-(β-sulfatoethylsulfonyl)-phenylamino | blau (608) |
| 491 | 3 | 3-(β-Sulfatoethylsulfonyl)-phenylamino | blau (608) |
| 492 | 3 | 4-(β-Sulfatoethylsulfonyl)-phenylamino | blau (608) |
| 493 | 3 | N-Ethyl-N-[4-(β-sulfatoethylsulfonyl)-phenyl]-amino | blau (608) |
| 494 | 3 | γ-(Vinylsulfonyl)-propylamin | blau (608) |
| 495 | 3 | β-[4-(β-'Sulfatoethylsulfonyl)-phen]-ethylamino | blau (608) |
| 496 | 2 | 4-(β-Sulfatoethylsulfonyl)-phenylamino | blau (608) |

### Beispiel 497

58,5 Teile der Kupferphthalocyaninverbindung der Formel 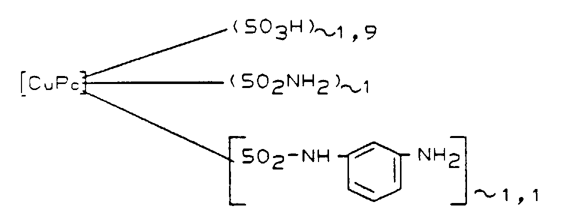 werden in einer Mischung aus 600 Teilen Eis und 600 Teilen Wasser homogen verrührt, und diese wird mit Natronlauge auf einen pH-Wert von 7 eingestellt. Man-gibt 19 Teile Cyanurchlorid, in wenig Aceton gelöst, hinzu und führt unter weiterem Rühren die Kondensationsreaktion bei 0 bis 5°C und einem pH-Wert von 3,5 bis 4 durch. Sodann gibt man 11 Teile Methansulfonsäureamid hinzu, erhöht die Temperatur langsam auf 50 bis 60°C und stellt mittels Natronlauge den pH-Wert 11 ein, rührt bis zur Beendigung dieser zweiten Kondensationsreaktion weiter und neutralisiert anschließend mit wäßriger Salzsäure bis auf einen pH-Wert von 5. Man gibt 29,5 Teile 3-(β-Sulfatoethylsulfonyl)-anilin hinzu und rührt den Ansatz etwa 2,5 Stunden bei 80 bis 90°C und einem pH-Wert von 3,5 bis 4. Die Syntheselösung wird bei einem pH-Wert von 5,5 noch in der Wärme mit Kieselgur geklärt, und das Filtrat wird unter reduziertem Druck eingedampft.

Man erhält ein blaues, elektrolythaltiges Pulver des Alkalimetallsalzes (Natriumsalzes) der Verbindung der Formel

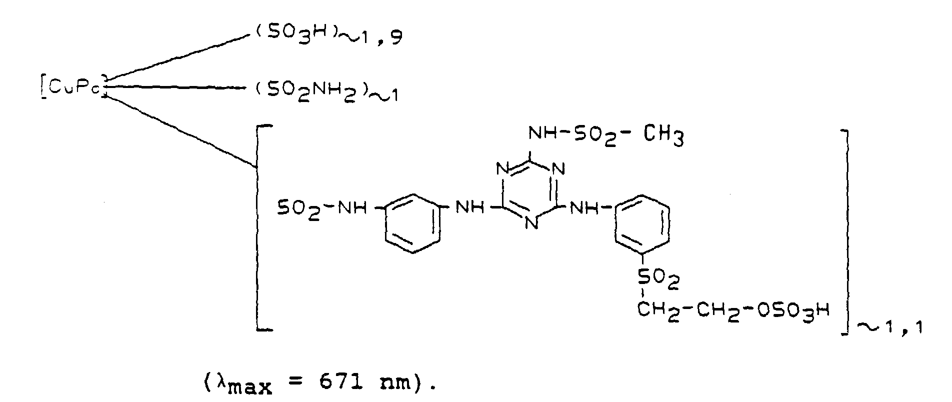

Der erfindungsgemäße Kupferphthalocyaninfarbstoff besitzt sehr gute faserreaktive Farbstoffeigenschaften und färbt die in der Beschreibung genannten Materialien, wie insbesondere Cellulosefasermaterialien, nach den üblichen Applikations- und Fixierverfahren in farbstarken, echten, türkisblauen Tönen.

### Beispiel 498

Zur Herstellung einer erfindungsgemäßen Kupferphthalocyanin-Verbindung verfährt man gemäß der Verfahrensweise des Beispiels 497, setzt jedoch anstelle von 3-(β-Sulfatoethylsulfonyl)-anilin die gleiche Menge an 4-(β-Sulfatoethylsulfonyl)-anilin ein. Der erfindungsgemäße Farbstoff zeigt die gleichen guten färberischen Eigenschaften wie der des Beispiels 497 und liefert ebenfalls echte, türkisblaue Färbungen und Drucke.

### Beispiel 499

Eine homogen verrührte Mischung von 58 Teilen der Kupferphthalocyaninverbindung entsprechend der Formel 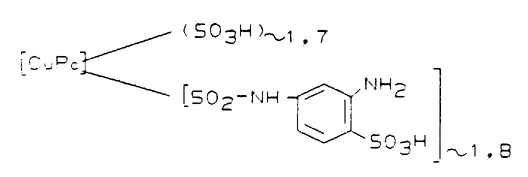 in 300 Teilen Wasser und 125 Teilen Eis wird mit Natronlauge auf einen pH-Wert von 7 eingestellt. Man gibt eine feine Suspension von 16,6 Teilen Cyanurchlorid in 170 Teilen Eiswasser hinzu und hält die Temperatur bei 0 bis 5°C und mittels Natriumbicarbonat einen pH-Wert von 5 bis 5,5. Nach Beendigung der Kondensationsreaktion gibt man 11 Teile Methansulfonsäureamid hinzu, stellt mittels wäßriger Natronlauge einem pH-Wert von 11 ein, erwärmt den Ansatz langsam auf 50 bis 60°C, rührt ihn noch etwa zwei Stunden bei 60°C und einen pH-Wert von 10 bis 11 und setzt nach beendigter Reaktion die erhaltene Monochlortriazin-Verbindung mit 25,8 Teilen 4-(β-Sulfatoethylsulfonyl)-anilin bei einem pH-Wert von 3,5 bis 4 und bei 80 bis 90°C um. Nach beendeter Reaktion wird die Syntheselösung in üblicher Weise mit Kieselgur geklärt.

Durch Eindampfen des Filtrats erhält man ein blaues elektrolythaltiges Pulver des Alkalimetallsalzes (Natriumsalzes) der Kupferphthalocyaninverbindung der Formel

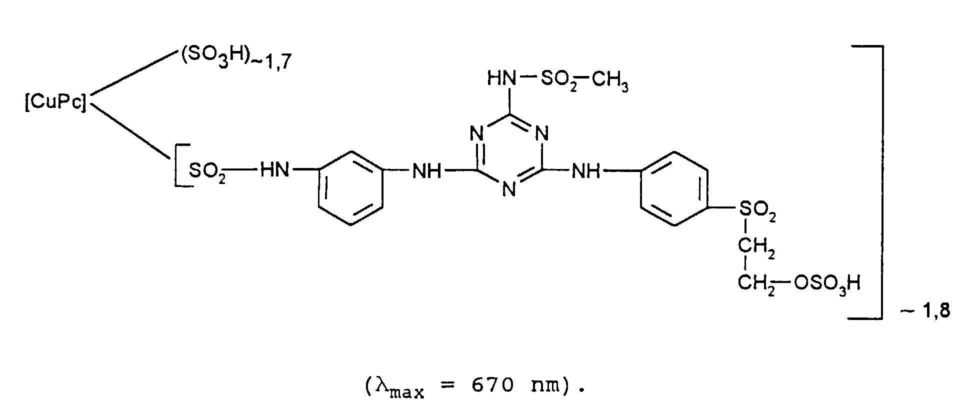

Der erfindungsgemäße Kupferphthalocyaninfarbstoff färbt die in der Beschreibung genannten Materialien, wie insbesondere Cellulosefasermaterialien, nach den üblichen Anwendungsverfahren in farbstarken, echten, türkisblauen Tönen.

### Beispiel 500

Zur Herstellung einer erfindungsgemäßen KupferphthalocyaninVerbindung verfährt man gemäß der Verfahrensweise des Beispiels 499, setzt jedoch anstelle von 4-(β-Sulfatoethylsulfonyl)-anilin die gleiche Menge an 3-(β-Sulfatoethylsulfonyl)-anilin ein. Der erfindungsgemäße Farbstoff zeigt die gleichen guten färberischen Eigenschaften wie der des Beispiels 499 und liefert ebenfalls echte, türkisblaue Färbungen und Drucke.

### Beispiel 501

Eine homogene Mischung von 106,2 Teilen der Nickelphthalocyaninverbindung der Formel 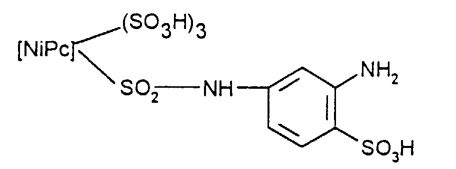 in 300 Teilen Eis und 600 Teilen Wasser wird mit Natronlauge auf einen pH-Wert von 7 eingestellt. Man gibt eine feine Suspension von 19 Teilen Cyanurchlorid in 200 Teilen Eiswasser hinzu und führt die Umsetzung bei 0 bis 5°C und einem pH-Wert von 4,5 durch. Anschließend gibt man 9,7 Teile Methansulfonsäureamid hinzu, stellt mittels Natronlauge einen pH-Wert von 11 ein, erwärmt den Ansatz langsam auf 60°C, rührt ihn noch etwa zwei Stunden bei 60°C und einem pH-Wert von 10 bis 11 und gibt nach Beendigung diese zweiten Kondensationsreaktion 29,5 Teile 3-(β-Sulfatoethylsulfonyl)-anilin hinzu. Die dritte Kondensationsreaktion wird bei 80 bis 90°C und einem pH-Wert von 3,5 bis 4 durchgeführt. Die Syntheselösung wird anschließend in üblicher Weise bei einem pH-Wert von 5,5 geklärt und der erfindungsgemäße Farbstoff der Formel (in Form der freien Säure geschrieben) 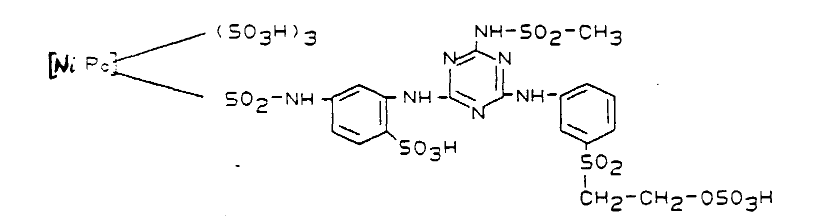 als Alkalimetallsalz (Natriumsalz) in Form eines elektrolythaltigen Pulvers isoliert. Nach den üblichen Applikations- und Fixierverfahren erhält man beispielsweise auch Cellulosefasermaterialien, wie Baumwolle, farbstarke, blaustichig grüne Färbungen und Drucke mit guten Echtheitseigenschaften.

### Beispiel 502

Zur Herstellung einer erfindungsgemäßen Kupferphthalocyanin-Verbindung verfährt man gemäß der Verfahrensweise des Beispiels 501, setzt jedoch anstelle von 3-(β-Sulfatoethylsulfonyl)-anilin die gleiche Menge an 4-(β-Sulfatoethylsulfonyl)-anilin ein. Der erfindungsgemäße Farbstoff zeigt die gleichen guten färberischen Eigenschaften wie der des Beispiels 501 und liefert ebenfalls echte, blaustichig grüne Färbungen und Drucke.

### Beispiel 503

a) Eine wäßrige, neutrale Lösung des Natriumsalzes von 32,0 Teilen des Hydrazons aus 2-Carboxy-5-sulfophenylhydrazin und Benzaldehyd in etwa 160 Teilen Wasser gibt man unter Rühren bei 5 bis 15°C mit einer durch übliche Diazotierung erhaltenen wäßrigen Lösung des Diazoniumsalzes aus 24,6 Teilen 6-Acetylamino-4-sulfo-2-aminophenol zusammen, gibt sodann 25,0 Teile Kupfersulfat-pentahydrat hinzu und hält einen pH-Wert von 5 mittels Natriumcarbonat. Man rührt den Reaktionsansatz bei 15 bis 25°C noch nach, bis keine Diazoniumverbindung mehr nachweisbar ist.
b) In der unter a) synthetisierten Kupferkomplex-Formazan-wird die Acetylaminogruppe zur Aminogruppe direkt in der Syntheselösung nach Zugabe einer 6- bis 10-fach molaren Menge einer konzentrierten wäßrigen Natronlauge bei einer Temperatur zwischen 90 und 100°C während 5 bis 10 Stunden hydrolysiert (die Acetylamino-Kupferformazanverbindung kann auch zuvor aus der Syntheselösung mittels Natriumchlorid ausgesalzen und isoliert und sodann in etwa 3 %iger wäßriger Natronlauge hydrolysiert werden). Die erhaltene aminogruppenhaltige Kupferkomplex-Formazanverbindung kann nach Rückstellung des pH auf einen Wert von etwa 4 durch Aussalzen mit Natriumchlorid isoliert werden.
c) Die unter b) erhaltene Formazanverbindung wird mit Cyanurchlorid umgesetzt. Zweckmäßig geht man hierzu von einer Lösung von b) mit dem pH-Wert von 4 aus, indem man die Lösung unter gutem Rühren bei einer Temperatur von 0 bis 5°C und einem pH-Wert zwischen 3 und 4, der mittels einer wäßrigen Natriumcarbonatlösung eingehalten wird, mit 16,6 Teilen Cyanurchlorid zur 2,4-Dichlor-s-triazin-6-yl-amino-Kupferkomplexformazanverbindung innerhalb von 3 bis 4 Stunden umsetzt.
d) Zu der Syntheselösung von c) gibt man eine wäßrige Lösung von 16 Teilen Benzolsulfonsäureamid in etwa 100 Teilen Wasser hinzu, erwärmt auf 40 bis 50°C und hält mittels einer wäßrigen Natriumhydroxidlösung einen pH-Wert von 9 bis 10 ein, bis nach etwa 3 bis 4 Stunden die Umsetzung beendet ist. Die erhaltene Syntheselösung wird sodann bei 40 bis 50°C geklärt und die synthetisierte Monochlortriazinverbindung, entweder nach Zwischenisolierung aus dem Filtrat durch Zugabe von Natriumchlorid oder Kaliumchlorid oder direkt in dieser Lösung, mit 28 Teilen 3-(β-Sulfatoethylsulfonyl)-anilin während 5 bis 10 Stunden bei einem pH-Wert zwischen 3 und 4 und einer Temperatur zwischen 60 und 80°C zur erfindungsgemäßen Kupferkomplex-Formazanverbindung umgesetzt.

Nach einer Klärfiltration wird die erfindungsgemäße Verbindung aus dem Filtrat mittels Natriumchlorid oder Kaliumchlorid ausgesalzen oder durch Eindampfen oder Sprühtrocknung isoliert. Es wird das Alkalimetallsalz (Natrium- oder Kaliumsalz) der Verbindung der Formel 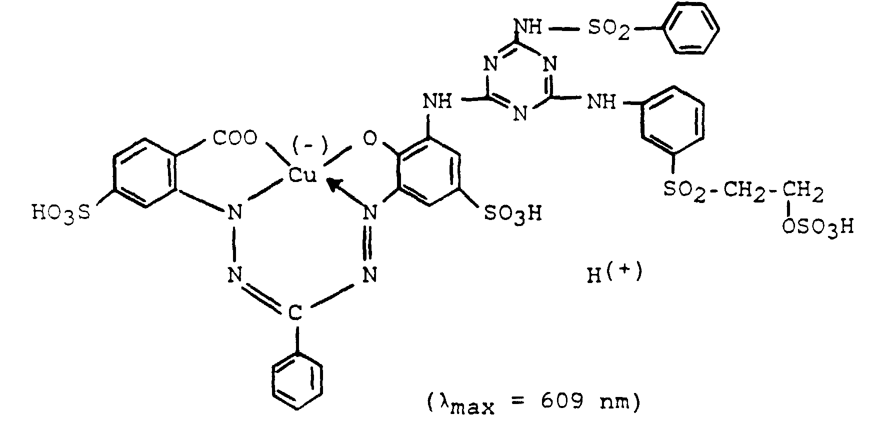 als elektrolytsalzhaltiges dunkles Pulver erhalten. Die erfindungsgemäße Verbindung zeigt sehr gute Farbstoffeigenschaften und färbt die in der Beschreibung genannten Materialien in blauen Farbtönen mit schwach rotstichiger Nuance. Insbesondere Cellulosefasermaterialien, wie Baumwolle und ebenso regenerierte Cellulosefasermaterialien, werden gemäß den in der Technik für faserreaktive Farbstoffe üblichen Applikations- und Fixiermethoden, so beispielsweise aus wäßriger, langer Flotte bei 40° bis 80°C in Gegenwart eines säurebindenden Mittels in farbstarken Tönen gefärbt. Auch bei den Klotz-Kaltverweil-Verfahren werden sehr hohe Farbausbeuten erhalten. Nach der üblichen Nachbehandlung, beispielsweise durch 10-minütiges Seifen und Spülen mit Wasser, zeichnen sich die erfindungsgemäß erhaltenen Färbungen durch sehr gute Lichtechtheiten in trockenen sowie in mit Trinkwasser oder einer alkalischen oder sauren Schweißlösung befeuchtetem Zustand und durch gute Naßechtheiten, wie Wasch-, Chlorbadewasser-, Chlorbleich-, Alkali-, Schweiß- und Peroxid-Echtheiten, aus. Des weiteren zeigen sie eine gute Säurelagerstabilität, und die Färbungen sind gut ätzbar. Besonders bemerkenswert sind das sehr hohe Aufbauvermögen und die hohen Fixierraten im Auszieh- und Klotzverfahren.

### Beispiel 504

a) Man suspendiert 18,4 Teile Cyanurchlorid, gegebenenfalls unter Zugabe eines nicht-ionischen Hilfsmittels, in einem Gemisch aus 50 Teilen Wasser und 50 Teilen Eis, gibt sodann unter Einhaltung einer Temperatur von 0 bis 5°C und eines pH-Wertes von 10 bis 11 eine wäßrige Lösung von 16 Teilen Benzolsulfonamid in 100 Teilen Wasser hinzu und rührt noch einige Zeit nach, bis kein freies Cyanurchlorid mehr nachweisbar ist.
b) Zu der nach a) erhaltenen und gegebenenfalls geklärten Lösung des Monokondensationsproduktes gibt man eine gemäß Beispiel 503a bis 503b hergestellte wäßrige, auf einen pH-Wert von 5 eingestellte Lösung der Amino-Kupferkomplex-formazanverbindung, erwärmt den Ansatz auf 30 bis 40°C und hält ihn bei dieser Temperatur bei einem pH-Wert von 5 bis 7 mittels wäßriger 10 %iger Natriumcarbonatlösung, bis die Kondensationsreaktion der Dichlortriazinylaminoverbindung mit der Aminogruppe der Kupferkomplex-Formazanverbindung beendet ist.

Die erhaltene Monochlortriazinverbindung ist mit der des Beispieles 503d identisch und kann analog den Angaben des vorherigen Beispieles durch weitere Umsetzung mit 3-(β-Sulfatoethylsulfonyl)-anilin zur erfindungsgemäßen Kupferkomplex-Formazanverbindung des Beispieles 503 umgesetzt werden. Die so erhaltene erfindungsgemäße Formazanverbindung besitzt die gleichen guten Farbstoffeigenschaften.

### Beispiel 505

a) Man suspendiert 18,4 Teile Cyanurchlorid, gegebenenfalls unter Zugabe eines nicht-ionischen Hilfsmittels, in einem Gemisch aus 100 Teilen Wasser und 100 Teilen Eis, gibt sodann unter Einhaltung einer Temperatur von 0 bis 5°C und eines pH-Wertes von 10 bis 11 16 Teile Benzolsulfonamid hinzu und rührt etwa eine Stunde nach, bis kein freies Cyanurchlorid mehr nachweisbar ist. Anschließend stellt man den Ansatz auf einen pH-Wert von 6.
b) Zu der nach a) erhaltenen und gegebenenfalls geklärten Lösung des Monokondensationsprodukts gibt man eine Lösung von 28 Teilen 3-(β-Sulfatoethylsulfonyl)-anilin in 200 Teilen Wasser und heizt den Ansatz auf eine Temperatur von 40 bis 60°C unter Einhaltung eines pH-Wertes von 5. Sodann gibt man eine gemäß dem vorherigen Beispiel 503a bis 503b hergestellte wäßrige, auf einen pH-Wert von 5 eingestellte Lösung der Amino-Kupferkomplexformazan-Verbindung und hält den pH-Wert bei 3,5 bis 5 während 4 Stunden.

Die so erhaltene erfindungsgemäße Formazanverbindung besitzt die gleichen guten Farbstoffeigenschaften wie die gemäß Beispiel 503d erhaltene Kupferkomplex-Formazanverbindung.

### Beispiel 506

Man verfährt zur Herstellung eines erfindungsgemäßen Kupferkomplex-Formazanverbindung analog der Verfahrensweise des Beispiels 503, geht jedoch anstelle des im Beispiel 503a eingesetzten Hydrazons von der äquivalenten Menge des Hydrazons aus 2-Hydroxy-5-sulfo-phenylhydrazin und Benzaldehyd aus.

Man erhält das Alkalimetallsalz (Natrium- oder Kaliumsalz) der Verbindung der Formel 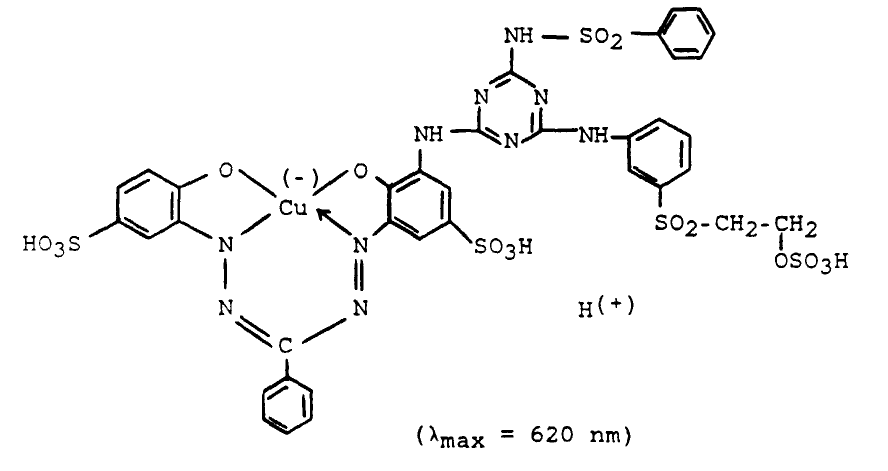 als elektrolytsalzhaltiges dunkles Pulver. Die erfindungsgemäße Verbindung zeigt ebenfalls sehr gute faserreaktive Farbstoffeigenschaften und färbt die in der Beschreibung genannten Materialien, insbesondere Cellulosefasermaterialien, in farbstarken blauen Farbtönen mit guten Echtheitseigenschaften.

### Beispiele 507 bis 570

In den nachfolgenden Tabellenbeispielen sind weitere erfindungsgemäße Kupferkomplexformazanverbindungen mit Hilfe der allgemeinen Formel (D) 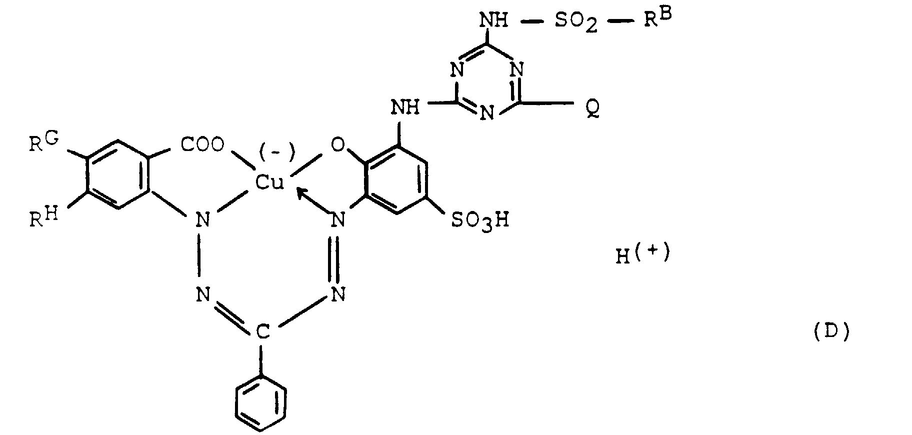 beschrieben. Sie lassen sich in erfindungsgemäßer Weise, beispielsweise analog den Ausführungsbeispielen 503, 504 und 505 mit Hilfe der aus Formel (D) und den aus dem jeweiligen Tabellenbeispiel ersichtlichen Komponenten (Cyanurchlorid, 2-Carboxy-5-sulfo- oder -4-sulfo-phenylhydrazin, Benzaldehyd, dem Diazoniumsalz des 6-Acetylamino-4-sulfo-2-aminophenols, dem Amin entsprechend der allgemeinen Formel H-Q und dem Sulfonamid der allgemeinen Formel H₂N-SO₂-R^{B} mit den in dem jeweiligen Tabellenbeispiel angegebenen Bedeutungen) herstellen. Sie besitzen ebenfalls sehr gute faserreaktive Farbstoffeigenschaften und liefern nach den für faserreaktive Farbstoffe üblichen Färbe- und Druckverfahren, insbesondere auf Cellulosefasermaterialien, farbstarke echte Färbungen und Drucke mit dem in dem jeweiligen Tabellenbeispiel angegebenen Farbton auf Baumwolle.

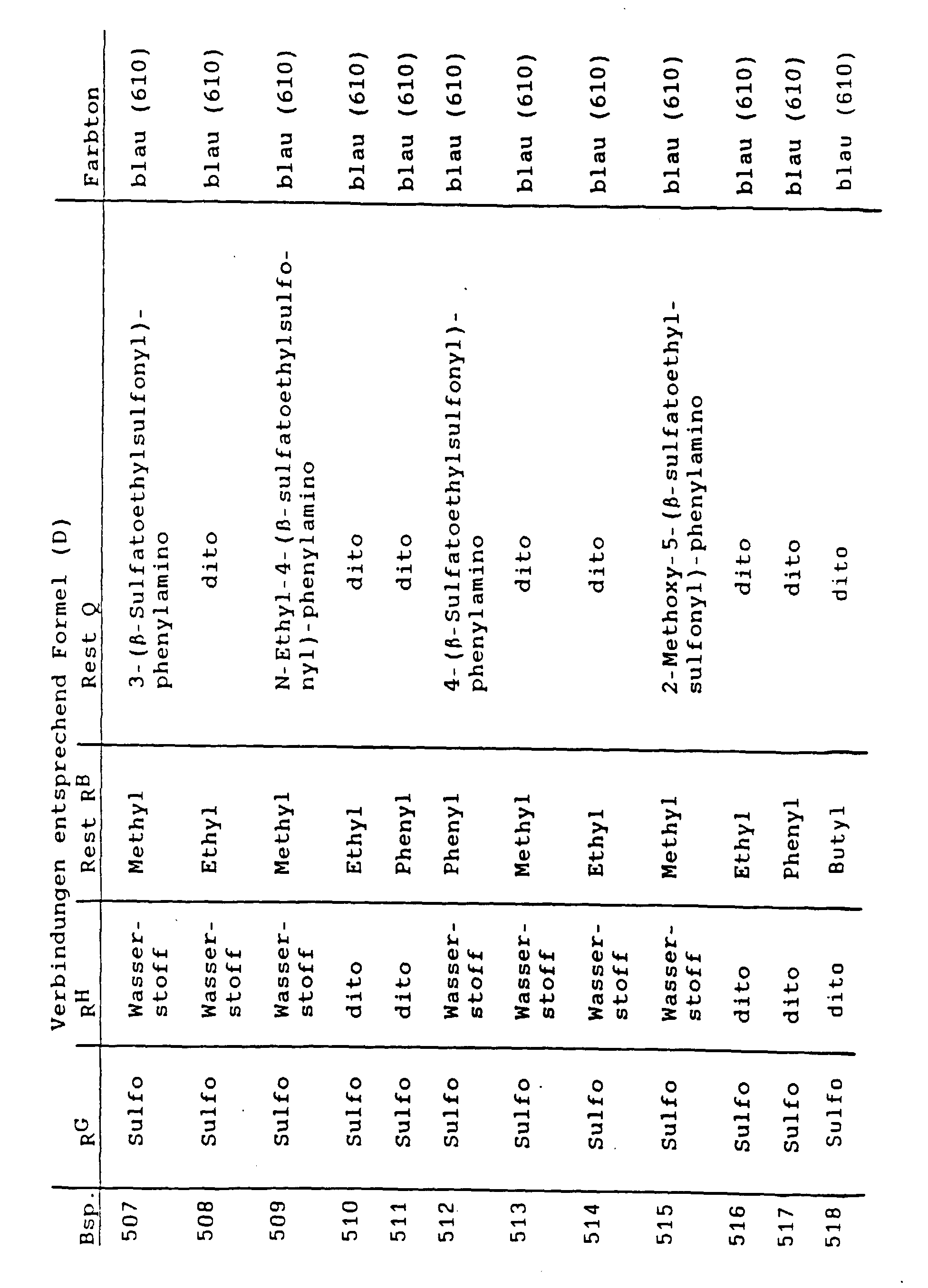

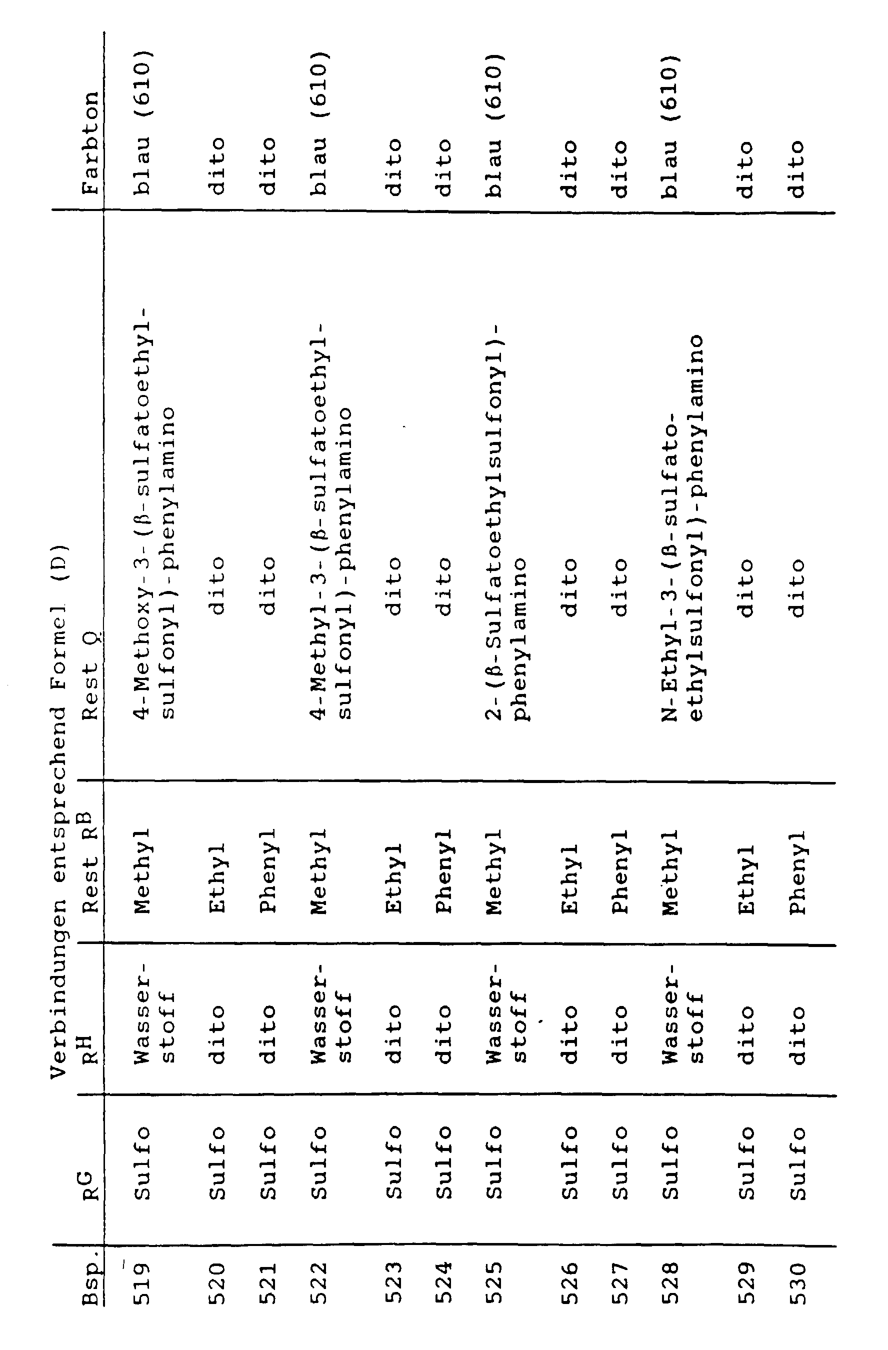

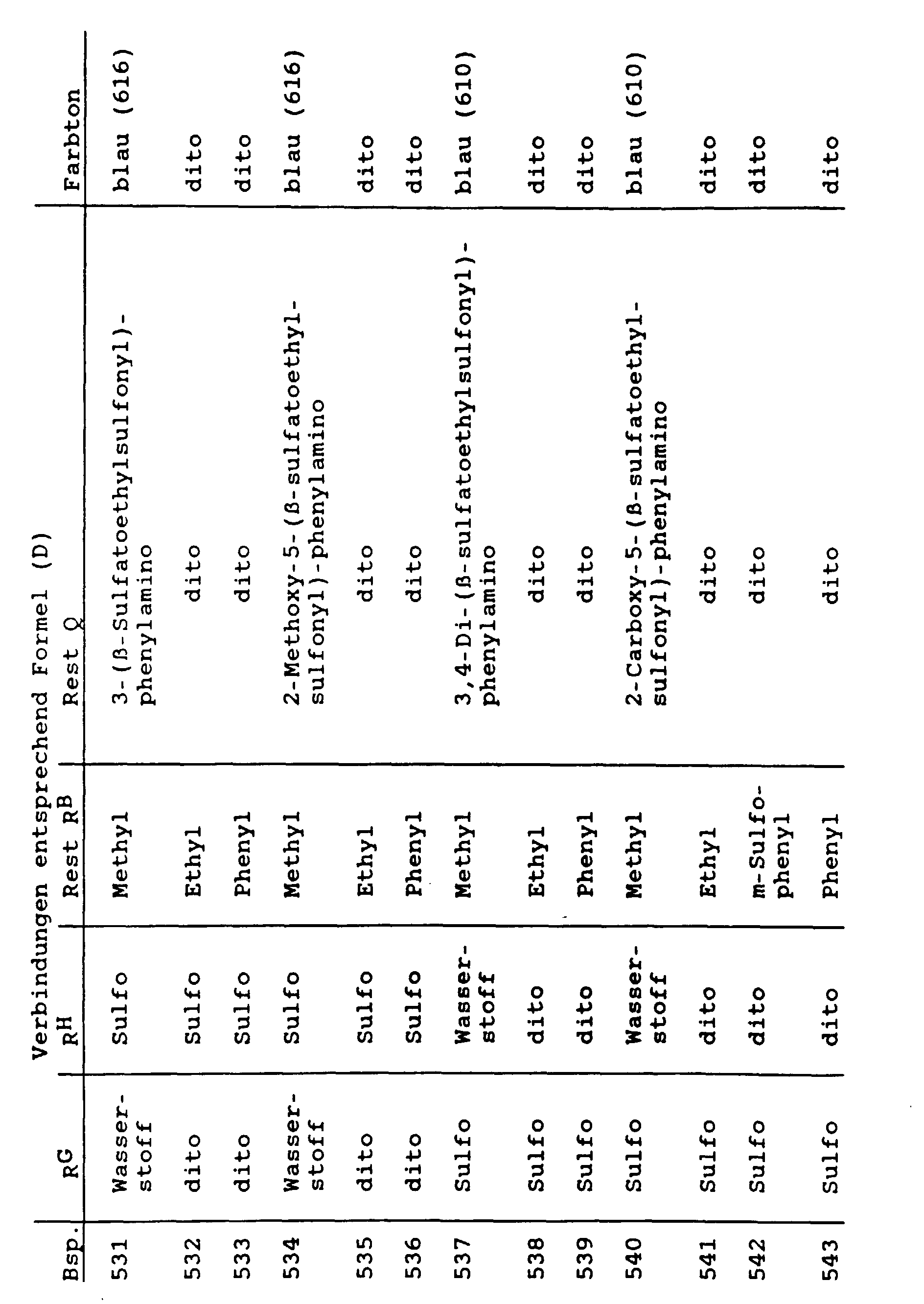

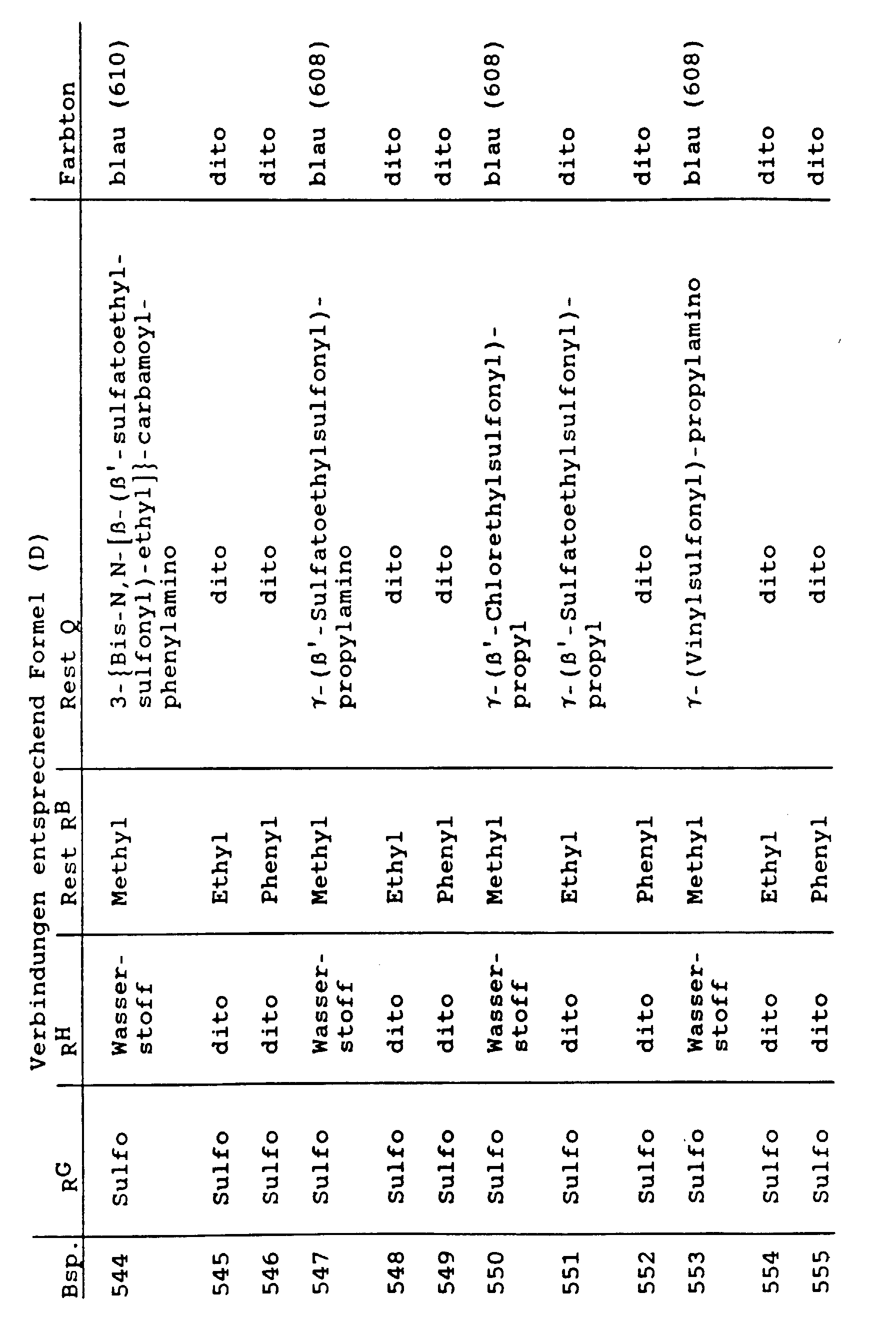

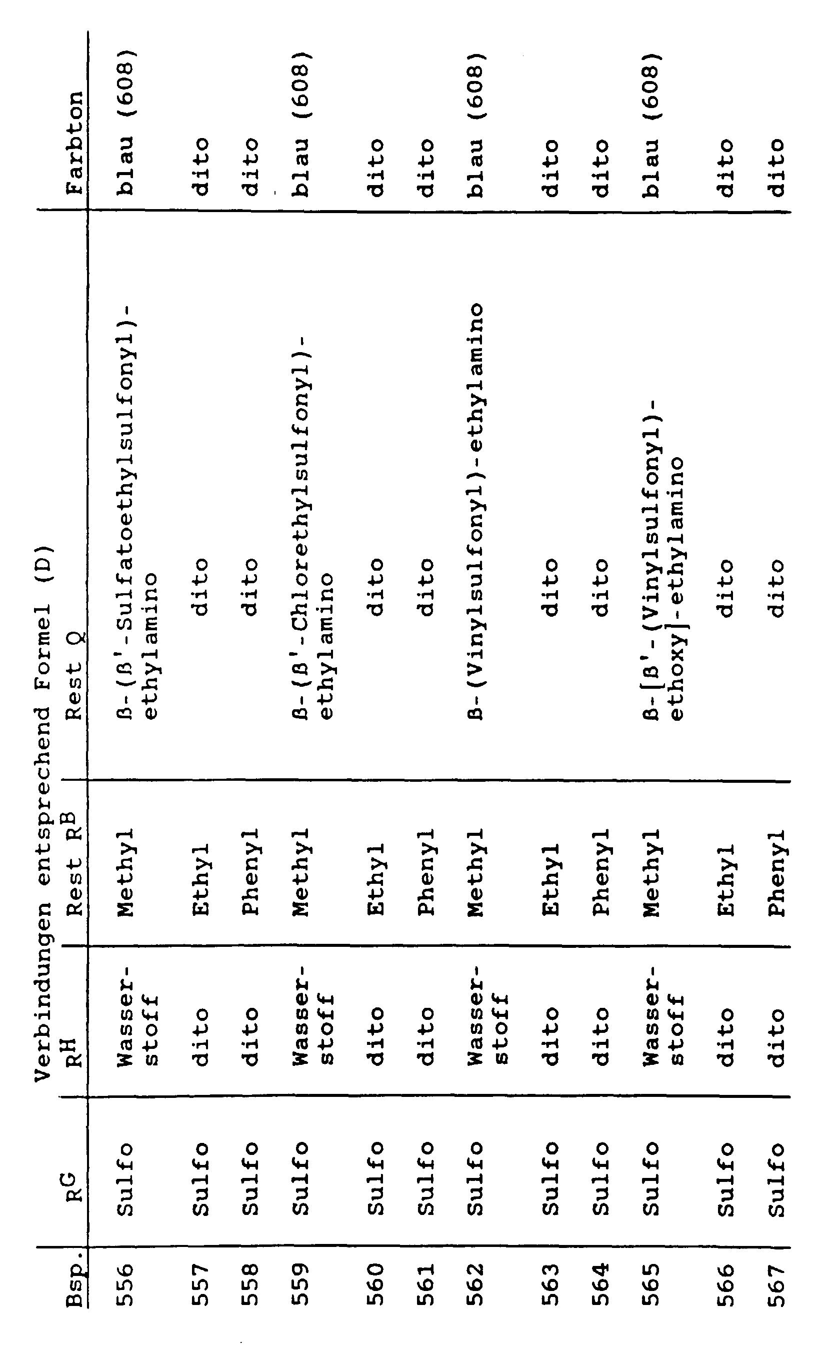

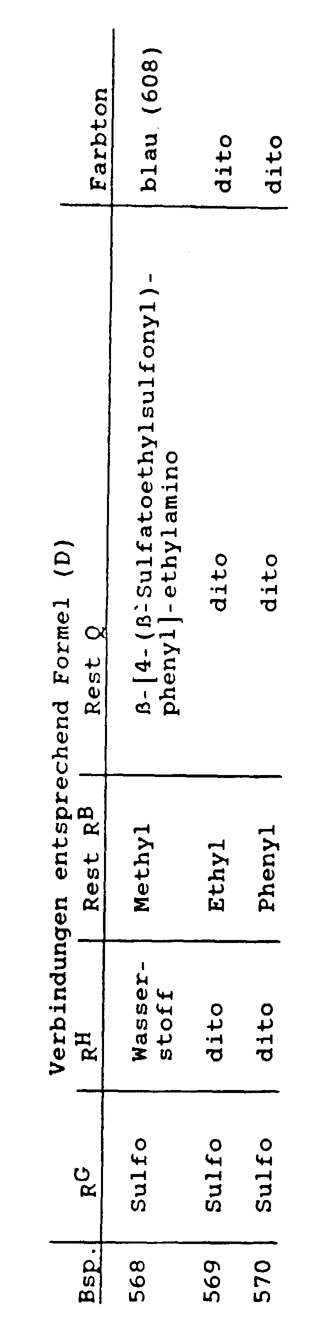

### Beispiel 571

a) Man suspendiert 18,4 Teile Cyanurchlorid, gegebenenfalls unter Zugabe eines nicht-ionischen Hilfsmittels, in einem Gemisch aus 100 Teilen Wasser und 100 Teilen Eis, gibt sodann unter Einhaltung einer Temperatur von 0 bis 5°C und eines pH-Wertes von 10 bis 11 16 Teile Benzolsulfonamid hinzu und rührt etwa eine Stunde nach, bis kein freies Cyanurchlorid mehr nachweisbar ist. Anschließend stellt man den Ansatz auf einen pH-Wert von 6.
b) Zu der nach a) erhaltenen und gegebenenfalls geklärten Lösung des Monokondensationsprodukts gibt man eine Lösung von 28 Teilen 3-(ß-Sulfatoethylsulfonyl)-anilin in 200 Teilen Wasser und heizt den Ansatz auf eine Temperatur von 40 bis 60°C unter Einhaltung eines pH-Wertes von 5. Sodann gibt man eine gemäß dem vorherigen Beispiel 503a bis 503b hergestellte wäßrige, auf einen pH-Wert von 5 eingestellte Lösung der Amino-Kupferkomplexformazan-Verbindung und hält den pH-Wert bei 3,5 bis 5 während 4 Stunden.

Die so erhaltene erfindungsgemäße Formazanverbindung besitzt die gleichen guten Farbstoffeigenschaften wie die gemäß Beispiel 503d erhaltene Kupferkomplex-Formazanverbindung.

### Beispiel 572

Man verfährt zur Herstellung eines erfindungsgemäßen Kupferkomplex-Formazanverbindung analog der Verfahrensweise des Beispiel 503, geht jedoch anstelle des im Beispiel 503a eingesetzten Hydrazons von der äquivalenten Menge des Hydrazons aus 2-Hydroxy-5-sulfo-phenylhydrazin und Benzaldehyd aus.

Man erhält das Alkalimetallsalz (Natrium- oder Kaliumsalz) der Verbindung der Formel 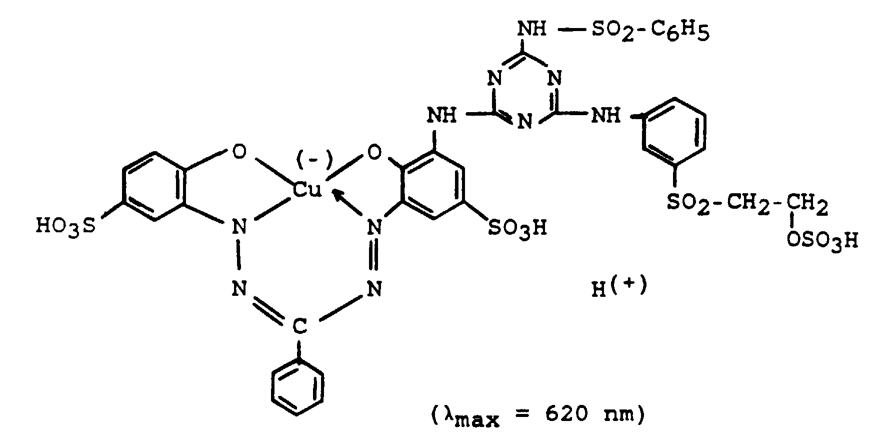 als elektrolytsalzhaltiges dunkles Pulver. Die erfindungsgemäße Verbindung zeigt ebenfalls sehr gute faserreaktive Farbstoffeigenschaften und färbt die in der Beschreibung genannten Materialien, insbesondere Cellulosefasermaterialien, in farbstarken blauen Farbtönen mit guten Echtheitseigenschaften.

## Patentansprüche

1. Wasserlöslicher Farbstoff der allgemeinen Formel 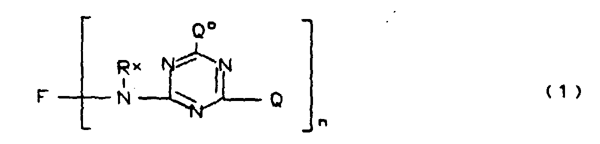 in welcher bedeuten:
F ist der Rest eines Monoazo-, Disazo- oder Polyazofarbstoffes oder eines Schwermetallkomplex-Azofarbstoffes oder eines Anthrachinon-, Phthalocyanin-, Formazan-, Azomethin-, Dioxazin-, Phenazin-, Stilben-, Triphenylmethan-, Xanthen-, Thioxanthen-, Nitroaryl-, Naphthochinon-, Pyrenchinon- oder Perylentetracarbimid-Farbstoffes;
R^{x} ist ein Wasserstoffatom oder eine Alkylgruppe von 1 bis 4 C-Atomen, die durch Halogen, Hydroxy, Cyano, Alkoxy von 1 bis 4 C-Atomen, Alkoxycarbonyl von 2 bis 5 C-Atomen, Carboxy, Sulfamoyl, Sulfo oder Sulfato substituiert sein kann;
n ist die Zahl 1 oder 2, bevorzugt 1;
Q ist eine Gruppe der allgemeinen Formel (2a) oder (2b) 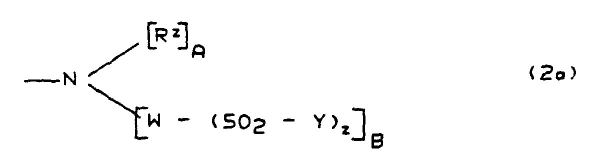 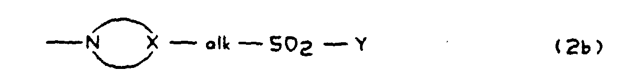 in welchen
R^{z} ein Wasserstoffatom oder eine Alkylgruppe von 1 bis 4 C-Atomen ist, die durch Halogen, Hydroxy, Cyano, Alkoxy von 1 bis 4 C-Atomen, Carboxy, Sulfamoyl, Sulfo oder Sulfato oder durch einen gegebenenfalls durch Substituenten aus der Gruppe Halogen, Alkoxy von 1 bis 4 C-Atomen, Alkyl von 1 bis 4 C-Atomen, Sulfo und Carboxy substituierten Phenylrest substituiert sein kann, oder ein Cyclohexylrest oder ein gegebenenfalls durch Substituenten aus der Gruppe Halogen, Alkoxy von 1 bis 4 C-Atomen, Alkyl von 1 bis 4 C-Atomen, Sulfo und Carboxy substituierter Phenylrest ist,
W ein gegebenenfalls substituierter Arylenrest oder ein Alkylen-arylen- oder Arylen-alkylen- oder Alkylen-arylen-alkylen- oder Arylen-alkylen-arylen-Rest ist, wobei die Alkylenreste solche von 1 bis 8 C-Atomen sind und substituiert sein können und die Arylenreste gegebenenfalls substituierte Phenylen- oder Naphthylenreste sind, und wobei die Alkylenreste durch 1 oder mehrere Heterogruppen (wie Gruppen der Formeln -NH- , -N(R)- mit R gleich Alkyl von 1 bis 4 C-Atomen, das durch Sulfo, Sulfato, Carboxy oder Phosphato substituiert sein kann, -SO₂- , -CO- , -NH-SO₂- , -NH-CO- , -SO₂-NH- und -CO-NH- ) unterbrochen sein können und die Alkylen- und Arylenanteile in den kombinierten Alkylen/Arylen-Resten durch eine solche Gruppe voneinander getrennt sein können,
Y die Vinylgruppe oder eine β-Sulfatoethyl-, β-Thiosulfatoethyl- oder β-Phosphatoethyl-Gruppe oder eine β-Alkanoyloxy-ethyl-Gruppe mit 2 bis 5 C-Atomen im Alkanoylrest oder die β-Benzoyloxy-ethyl-, β-(Sulfobenzoyloxy)-ethyl- oder β-(p-Toluolsulfonyloxy)-ethyl-Gruppe oder eine β-Halogenethyl-Gruppe, oder β-Chlorethyl-Gruppe, ist,
z die Zahl 1 oder 2 ist,
A die Zahl Null oder 1 bedeutet und
B die Zahl 1 oder 2 bedeutet,
wobei die Summe von (A + B) gleich der Zahl 2 ist und wobei im Falle von B gleich 2 die Gruppen der Formel -W-(SO₂-Y)_{z} zueinander die gleiche Bedeutung oder voneinander eine verschiedene Bedeutung haben können,
X zusammen mit dem N-Atom den bivalenten Rest eines aus 1 oder 2 Alkylengruppen von 1 bis 5 C-Atomen und gegebenenfalls 1 oder 2 Heterogruppen bestehenden heterocyclischen Ringes bildet, und
alk einen Alkylenrest von 1 bis 4 C-Atomen bedeutet;
Q^{o} ist eine Gruppe der allgemeinen Formel (2A) 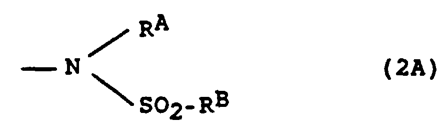 in welcher
R^{A} ein Wasserstoffatom oder eine Alkylgruppe von 1 bis 4 C-Atomen ist, die substituiert sein kann, oder ein Arylrest ist, der substituiert sein kann, und
R^{B} ein gegebenenfalls substituierter Aryl-, Alkylenaryl-, Arylen-alkyl-, Alkylen-arylen-alkyl- oder Arylen-alkylen-aryl-Rest ist, wobei die gegebenenfalls substituierten Alkylenreste solche von 1 bis 8 C-Atomen sind, die gegebenenfalls substituierten Alkylreste solche von 1 bis 6 C-Atomen sind und die Arylenreste bzw. Arylreste gegebenenfalls substituierte Phenylen- oder Naphthylen- bzw. Phenyl- oder Naphthylreste sind, und wobei die Alkylenreste oder Alkylreste durch 1 oder mehrere Heterogruppen unterbrochen sein können und wobei die Alkylen- bzw. Alkyl- und Arylen- bzw. Arylanteile in den kombinierten Alkyl(en)/Aryl(en)-Resten durch eine solche Heterogruppe voneinander getrennt sein können, oder R^{B} eine Aminogruppe der allgemeinen Formel -NR^{C}R^{D} ist, in welcher R^{C} und R^{D} unabhängig voneinander, jedes Wasserstoff oder Alkyl von 1 bis 4 C-Atomen ist, das durch Sulfo, Carboxy, Sulfato, Phenyl, Cyano, Nitro, Chlor oder Brom substituiert sein kann, oder ein gegebenenfalls durch 1 bis 3 Methylgruppen substituierter Cycloalkylrest von 5 bis 8 C-Atomen ist, wie beispielsweise Cyclopentylen und Cyclohexylen, oder ein gegebenenfalls durch 1 bis 3 Sulfogruppen substituierter Naphthylrest oder ein Phenylrest ist, der durch 1 bis 3 Substituenten, bevorzugt 1 oder 2 Substituenten, substituiert sein kann, die aus der Gruppe der Substituenten Alkyl von 1 bis 4 C-Atomen, wie Methyl und Ethyl, Alkoxy von 1 bis 4 C-Atomen, wie Methoxy und Ethoxy, Halogen, wie Chlor und Brom, Carboxy, Nitro und Sulfo ausgewählt sind.

2. Farbstoff nach Anspruch 1, dadurch gekennzeichnet, daß R^{x} Methyl oder Ethyl oder bevorzugt Wasserstoff ist.

3. Farbstoff nach Anspruch 1 oder 2, dadurch gekennzeichnet, daß Q eine Gruppe der Formel -NH-W¹-SO₂-Y ist, in welcher W¹ eine Alkylengruppe von 2 bis 4 C-Atomen bedeutet oder ein Phenylenrest ist, der durch 1 oder 2 Substituenten aus der Gruppe Methyl, Methoxy, Ethoxy und Chlor substituiert sein kann.

4. Farbstoff nach mindestens einem der Ansprüche 1 bis 3, dadurch gekennzeichnet, daß Y eine β-Sulfatoethyl-Gruppe ist.

5. Verfahren zur Herstellung eines Farbstoffes von Anspruch 1, dadurch gekennzeichnet, daß man für den jeweiligen Farbstoff typische Vorprodukte, von denen mindestens eines eine Gruppe der allgemeinen Formel (3) 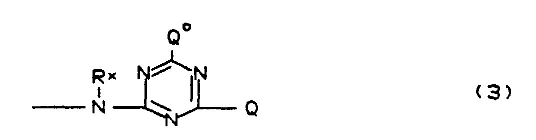 enthält (in welcher R^{x}, Q und Q^{o} die in Anspruch 1 genannten Bedeutungen haben), miteinander umsetzt, oder daß man eine aminogruppenhaltige Ausgangsverbindung der allgemeinen Formel (60) 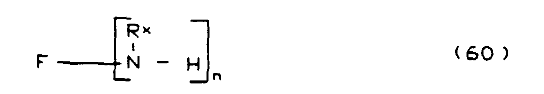 in welcher F, R^{x} und n die in Anspruch 1 genannten Bedeutungen haben, mit einem Trihalogen-s-triazin der allgemeinen Formel (61) 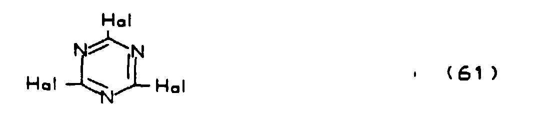 in welcher Hal für ein Halogenatom steht, mit einem Sulfonamid der allgemeinen Formel H-Q^{o} mit Q^{o} der in Anspruch 1 genannten Bedeutung oder einem Alkalimetallsalz davon und mit einem Amin der allgemeinen Formel H-Q mit Q der in Anspruch 1 genannten Bedeutung in stöchometrischen Mengen in beliebiger Reihenfolge miteinander umsetzt und gegebenenfalls anschließend weitere, dem Fachmann geläufige, erforderliche Umwandlungsreaktionen durchführt.

6. Verfahren nach Anspruch 5, dadurch gekennzeichnet, daß man eine Verbindung der allgemeinen Formel (62) 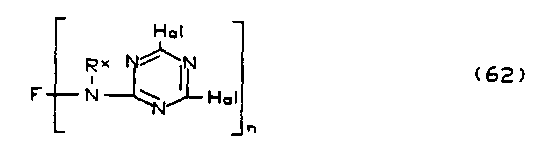 in welcher F, R^{x} und n die in Anspruch 1 genannten Bedeutungen haben und Hal für ein Halogenatom steht, mit einer Verbindung H-Q^{o} der in Anspruch 1 genannten Bedeutung oder einem Alkalimetallsalz davon umsetzt und die so erhaltene Verbindung der allgemeinen Formel (63) 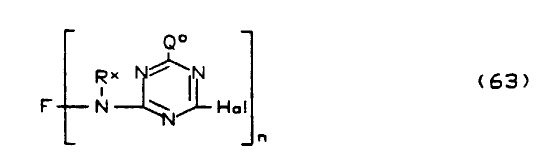 in welcher F, Q^{o}, R^{x} und Hal die in Anspruch 1 genannten Bedeutungen haben, mit einem Amin der allgemeinen Formel H-Q mit Q der in Anspruch 1 genannten Bedeutung umsetzt,
oder daß man eine Verbindung der allgemeinen Formel (64) 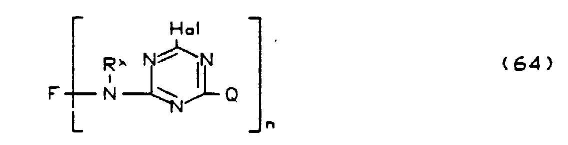 in welcher F, R^{x}, Hal, Q und n die in Anspruch 1 genannten Bedeutungen haben, mit einer Verbindung H-Q^{o} der in Anspruch 1 genannten Bedeutung oder einem Alkalimetallsalz davon umsetzt,
oder daß man eine Verbindung der allgemeinen Formel (60) mit einer Verbindung der allgemeinen Formel (65) 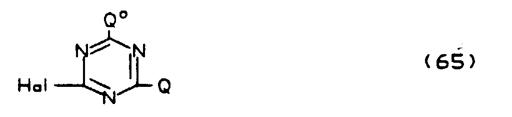 mit Hal, Q^{o} und Q der in Anspruch 1 genannten Bedeutung umsetzt.

7. Verwendung eines Farbstoffes von Anspruch 1 oder eines nach Anspruch 5 hergestellten Farbstoffes der allgemeinen Formel (1) zum Färben (einschließlich Bedrucken) von hydroxy- und/oder carbonamidgruppenhaltigem Material, insbesondere Fasermaterial.

8. Verfahren zum Färben von hydroxy- und/oder carbonamidgruppenhaltigem Material, insbesondere Fasermaterial, bei welchem man einen Farbstoff auf das Material aufbringt oder ihn in das Material einbringt und ihn mittels Wärme oder mittels eines säurebindenden Mittels oder mittels beider Maßnahmen fixiert, dadurch gekennzeichnet daß man als Farbstoff einen Farbstoff gemäß Anspruch 1 oder einen gemäß Anspruch 1 hergestellten Farbstoff einsetzt.

## Claims

1. A water-soluble dyestuff of the general formula 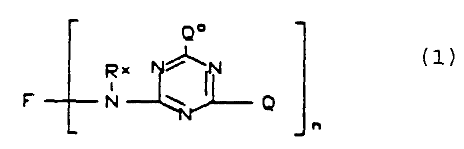 in which:
F is the radical of a monoazo, disazo or polyazo dyestuff or of a heavy metal complex azo dyestuff or of an anthraquinone, phthalocyanine, formazan, azomethine, dioxazine, phenazine, stilbene, triphenylmethane, xanthene, thioxanthene, nitroaryl, naphthoquinone, pyrenequinone or perylenetetracarbimide dyestuff;
R^{x} is a hydrogen atom or an alkyl group having 1 to 4 carbon atoms, which can be substituted by halogen, hydroxyl, cyano, alkoxy having 1 to 4 carbon atoms, alkoxycarbonyl having 2 to 5 carbon atoms, carboxyl, sulfamoyl, sulfo or sulfato;
n is the number 1 or 2, preferably 1;
Q is a group of the general formula (2a) or (2b) 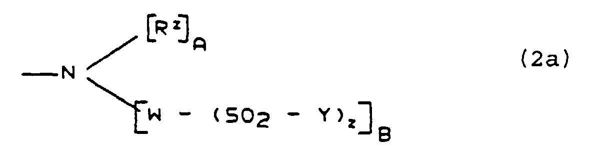 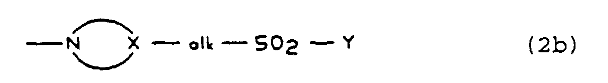 in which
R^{z} is a hydrogen atom or an alkyl group having 1 to 4 carbon atoms, which can be substituted by halogen, hydroxyl, cyano, alkoxy having 1 to 4 carbon atoms, carboxyl, sulfamoyl, sulfo or sulfato, or by a phenyl radical which is optionally substituted by substituents selected from the group consisting of halogen, alkoxy having 1 to 4 carbon atoms, alkyl having 1 to 4 carbon atoms, sulfo and carboxyl, or is a cyclohexyl radical or a phenyl radical which is optionally substituted by substituents selected from the group consisting of halogen, alkoxy having 1 to 4 carbon atoms, alkyl having 1 to 4 carbon atoms, sulfo and carboxyl,
W is an optionally substituted arylene radical or an alkylene-arylene or arylene-alkylene or alkylene-arylenealkylene or arylene-alkylene-arylene radical, in which the alkylene radicals are those having 1 to 8 carbon atoms and can be substituted and the arylene radicals are optionally substituted phenylene or naphthylene radicals, and in which the alkylene radicals can be interrupted by 1 or more hetero groups (such as groups of the formulae -NH-, -N(R)-with R being alkyl having 1 to 4 carbon atoms which can be substituted by sulfo, sulfato, carboxyl or phosphato, -SO₂-, -CO-, -NH-SO₂-, -NH-CO-, -SO₂-NH- and -CO-NH-) and the alkylene and arylene moieties in the combined alkylene/ arylene radicals can be separated from one another by such a group,
Y is vinyl, β-sulfatoethyl, β-thiosulfatoethyl, β-phosphatoethyl, β-alkanoyloxyethyl having 2 to 5 carbon atoms in the alkanoyl radical, β-benzoyloxyethyl, β-(sulfobenzoyloxy)ethyl, β-(p-toluenesulfonyloxy)ethyl, β-halogenoethyl or β-chloroethyl,
z is the number 1 or 2,
A is the number zero or 1 and
B is the number 1 or 2, in which the sum of (A + B) equals the number 2, and in which, in the case where B is 2, the groups of the formula -W-(SO₂-Y)_{z} can have the same meaning as one another or a different meaning from one another,
X, together with the N atom, forms the bivalent radical of a heterocyclic ring consisting of 1 or 2 alkylene groups having 1 to 5 carbon atoms and optionally 1 or 2 hetero groups and
alk is an alkylene radical having 1 to 4 carbon atoms;
Q° is a group of the general formula (2A) 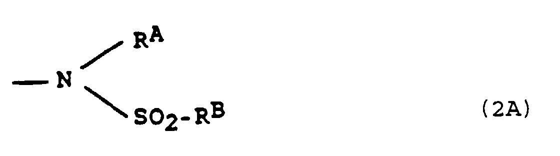 in which
R^{A} is a hydrogen atom or an alkyl group having 1 to 4 carbon atoms which can be substituted or is an aryl radical which can be substituted, and
R^{B} is an optionally substituted aryl, alkylenearyl, arylenealkyl, alkylenearylenealkyl or arylenealkylenearyl radical, wherein the optionally substituted alkylene radicals are those having 1 to 8 carbon atoms, the optionally substituted alkyl radicals are those having 1 to 6 carbon atoms, and the arylene radicals and aryl radicals are respectively optionally substituted phenylene or naphthylene radicals or phenyl or naphthyl radicals, and wherein the alkylene radicals or alkyl radicals can be interrupted by 1 or more hetero groups, and wherein the alkylene, alkyl, arylene and aryl moieties in the combined alkyl(ene)/aryl(ene) radicals can be separated from one another by such a hetero group, or R^{B} is an amino group of the general formula -NR^{C}R^{D}, where R^{C} and R^{D} are each independently of one another hydrogen or alkyl having 1 to 4 carbon atoms which can be substituted by sulfo, carboxyl, sulfato, phenyl, cyano, nitro, chlorine or bromine or is an optionally methyl-monosubstituted, -disubstituted or -trisubstituted cycloalkyl radical having 5 to 8 carbon atoms, such as, for example, cyclopentylene and cyclohexylene, or is an optionally sulfo-monosubstituted, -disubstituted or -trisubstituted naphthyl radical or a phenyl radical which can be substituted by 1 to 3 substituents, preferably 1 or 2 substituents, selected from the group consisting of the substituents alkyl having 1 to 4 carbon atoms, such as methyl or ethyl, alkoxy having 1 to 4 carbon atoms, such as methoxy or ethoxy, halogen, such as chlorine or bromine, carboxyl, nitro and sulfo.

2. A dyestuff as claimed in claim 1, charcterized in that R^{X} is methyl or ethyl or preferably hydrogen.

3. A dyestuff as claimed in claim 1 or 2, characterized in that Q is a group of the formula -NH-W¹-SO₂-Y, in which W¹ is an alkylene group having 2 to 4 carbon atoms or is a phenylene radical which can be substituted by 1 or 2 substituents selected from the group consisting of methyl, methoxy, ethoxy and chlorine.

4. A dyestuff as claimed in at least one of claims 1 to 3, characterized in that Y is β-sulfatoethyl.

5. A process for the preparation of a dyestuff as claimed in claim 1, characterized in that precursors typical for the particular dyestuff, at least one of which contains a group of the general formula (3) 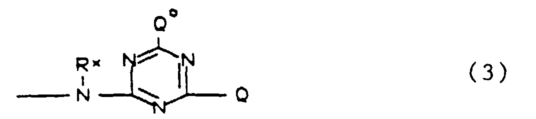 (in which R^{x}, Q and Q^{o} have the meanings mentioned in claim 1), are reacted with one another, or an amino-containing starting compound of the general formula (60) 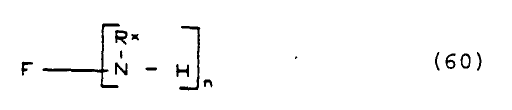 in which F, R^{x} and n have the meanings mentioned in claim 1, is reacted with a trihalogeno-s-triazine of the general formula (61) 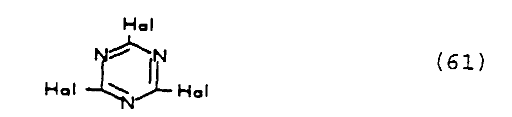 in which Hal is a halogen atom, with a sulfonamide of the general formula H-Q^{o} where Q^{o} has the meaning mentioned in claim 1 or an alkali metal salt thereof and with an amine of the general formula H-Q, where Q has the meaning mentioned in claim 1, in stoichiometric amounts in any desired sequence, and optionally further necessary conversion reactions customary to the person skilled in the art are carried out subsequently.

6. The process as claimed in claim 5, characterized in that a compound of the general formula (62) 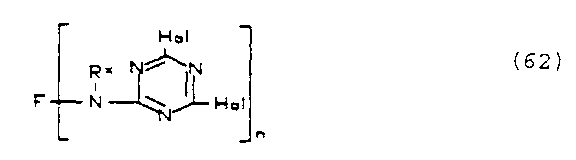 in which F, R^{x} and n have the meanings mentioned in claim 1 and Hal is a halogen atom, is reacted with a compound H-Q^{o} of the meaning mentioned in claim 1 or an alkali metal salt thereof, and the resulting compound of the general formula (63) 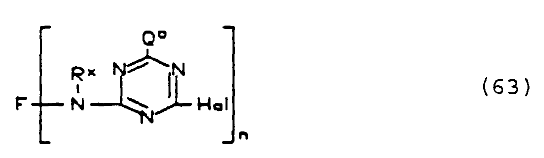 in which F, Q^{o}, R^{x} and Hal have the meanings mentioned in claim 1, is reacted with an amine of the general formula H-Q, where Q has the meaning mentioned in claim 1,
or in that a compound of the general formula (64) 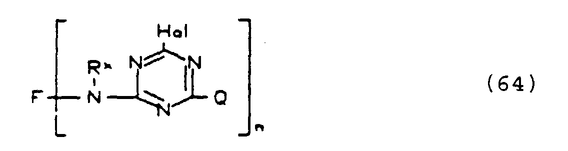 in which F, R^{x}, Hal, Q and n have the meanings mentioned in claim 1, is reacted with a compound H-Q^{o} of the meaning mentioned in claim 1 or an alkali metal salt thereof,
or in that a compound of the general formula (60) is reacted with a compound of the general formula (65) 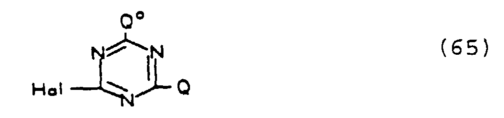 where Hal, Q^{o} and Q have the meaning mentioned in claim 1.

7. The use of a dyestuff as claimed in claim 1 or of a dyestuff prepared as claimed in claim 5 of the general formula (1) for dyeing (including printing) material, in particular fiber material, containing hydroxyl and/or carboxamide groups.

8. A process for dyeing material, in particular fiber material, containing hydroxyl and/or carboxamide groups, in which a dyestuff is applied on the material or it is introduced into the material and it is fixed by means of heat or by means of an acid-binding agent or by both measures, characterized in that a dyestuff as claimed in claim 1 or a dyestuff prepared as claimed in claim 1 is used as the dyestuff.

## Revendications

1. Colorants solubles dans l'eau de formule générale 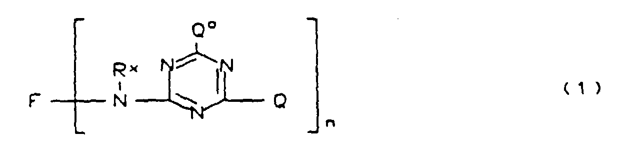 dans laquelle
F est un radical d'un colorant monoazoïque, disazoïque ou polyazoïque ou d'un colorant azoïque d'un complexe d'un métal lourd ou d'un colorant de l'anthraquinone, de la phtalocyanine, du formazane, de l'azométhine, de la dioxazine, de la phénazine, du stilbène, du triphénylméthane, du xanthène, du thioxanthène, du nitroaryle, de la naphtaquinone, de la pyrènequinone ou du pérylènetétracarbimide ;
R^{x} est un atome d'hydrogène ou un groupe alkyle avec 1 à 4 atomes de carbone qui peut être substitué par halogène, hydroxy, cyano, alcoxy avec 1 à 4 atomes de carbone, alcoxycarbonyle avec 2 à 5 atomes de carbone, carboxy, sulfamoyle, sulfo ou sulfato ;
n vaut 1 ou 2, de préférence 1 ;
Q est un groupe de formule générale (2a) ou (2b) 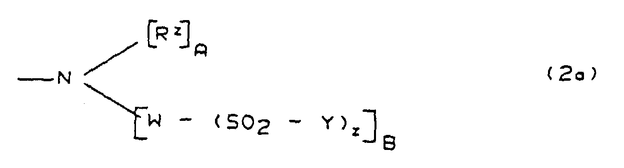 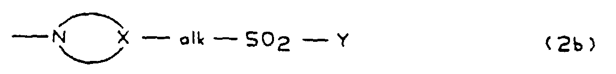 dans lesquels
R^{z} est un atome d'hydrogène ou un groupe alkyle avec 1 à 4 atomes de carbone, qui peut être substitué par halogène, hydroxy, cyano, alcoxy comportant 1 à 4 atomes de carbone, carboxy, sulfamoyle, sulfo ou sulfato ou par un radical phényle éventuellement substitué par des substituants pris dans le groupe comportant halogène, alcoxy avec 1 à 4 atomes de carbone, alkyle avec 1 à 4 atomes de carbone, sulfo et carboxy, ou représente un radical cyclohexyle ou un radical phényle éventuellement substitué par des substituants pris dans le groupe comportant halogènes, alcoxy avec 1 à 4 à atomes de carbone, alkyle avec 1 à 4 à atomes de carbone, sulfo et carboxy,
W représente un radical arylène ou alkylène-arylène ou arylène-alkylène ou alkylène-arylène-alkylène ou arylène-alkylène-arylène éventuellement substitué, les radicaux alkylène comportant 1 à 8 atomes de carbone et pouvant être substitués et les radicaux arylène étant des radicaux phénylène ou naphtylène éventuellement substitués, et les radicaux alkylène pouvant être interrompu par 1 ou plusieurs hétérogroupes (comme les groupes de formules -NH-, -N(R)- avec R étant alkyle avec 1 à 4 atomes de carbone, qui peut être substitué par des groupes sulfo, sulfato, carboxy ou phosphato, interrompu par -SO₂-, -CO-, -NH-SO₂-, -NH-CO-, -SO₂-NH- et -CO-NH-) et les fragments alkylène et arylène dans les radicaux combinés alkylène/arylène pouvant être séparés l'un de l'autre,
Y représente le groupe vinyle ou un groupe β-sulfatoéthyle, β-thiosulfatoéthyle ou β-phosphatoéthyle ou un groupe β-alcanoyloxyéthyle avec 2 à 5 atomes de carbone dans le radical alcanoyle ou le groupe β-benzoyloxyéthyle, β-(sulfobenzoyloxy)-éthyle ou β-(p-toluènesulfonyloxy)-éthyle ou un groupe β-halogéno-éthyle ou β-chloroéthyle,
z vaut 1 ou 2,
A vaut 0 ou 1, et
B vaut 1 ou 2, la somme de (A + B) étant égale à 2 et dans le cas où B est égal à 2, les groupes de formule -W-(SO₂-Y)_{z} peuvent avoir des significations identiques ou différentes,
X ensemble avec l'atome de N forme un radical bivalent d'un hétérocycle constitué de 1 ou 2 groupes alkylène avec 1 à 5 atomes de carbone et éventuellement de 1 ou 2 hétérogroupes, et
alk représente un radical alkylène avec 1 à 4 atomes de carbone ;
Q^{o} est un groupe de formule générale (2A) 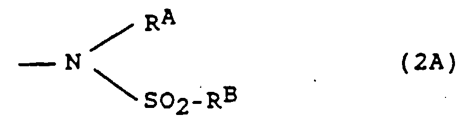 dans laquelle
R^{A} représente un atome d'hydrogène ou un groupe alkyle avec 1 à 4 atomes de carbone qui peut être substitué, ou un radical aryle qui peut être substitué,
et
R^{B} représente un radical aryle, alkylène-aryle, arylène-alkyle, alkylène-arylène-alkyle ou arylène-alkylènearyle éventuellement substitués, les radicaux alkylène éventuellement substitués comportant 1 à 8 atomes de carbone, les radicaux alkyle éventuellement substitués sont ceux qui comportent 1 à 6 atomes de carbone et les radicaux arylène, respectivement aryle sont des radicaux phénylène ou naphtylène, respectivement phényle ou naphtyle, éventuellement substitués, et les radicaux alkylène ou les radicaux alkyle pouvant être interrompus par 1 ou plusieurs hétérogroupes et les fragments alkylène, respectivement alkyle, et arylène, respectivement aryle, dans les radicaux combinés alkyl(ène)/aryl(ène) pouvant être séparés entre eux par un tel hétérogroupe, ou R^{B} est un groupe amino de formule générale -NR^{C}R^{D}, dans laquelle R^{C} et R^{D} chacun, indépendamment l'un de l'autre, représentent l'hydrogène ou alkyle avec 1 à 4 atomes de carbone, qui peut être substitué par sulfo, carboxy, sulfato, phényle, cyano, nitro, chlore ou brome, ou est un radical cycloalkyle avec 5 à 8 atomes de carbone substitué éventuellement par 1 à 3 groupes méthyle, comme par exemple cyclopentylène et cyclohexylène, ou un radical naphtyle éventuellement substitué par 1 à 3 groupes sulfo, ou un radical phényle qui peut être substitué par 1 à 3 substituants, de préférence par 1 ou 2 substituants, pris dans le groupe comportant des substituants alkyle avec 1 à 4 atomes de carbone, comme méthyle et éthyle, alcoxy avec 1 à 4 atomes de carbone, comme méthoxy et éthoxy, halogène, chlore et brome, carboxy, nitro et sulfo.

2. Colorant selon la revendication 1, caractérisé en ce que R^{x} est méthyle ou éthyle ou de préférence l'hydrogène.

3. Colorant selon la revendication 1 ou 2, caractérisé en ce que Q est un groupe de formule -NH-W¹-SO₂-Y, dans laquelle W¹ est un groupe alkylène avec 2 à 4 atomes de carbone ou un radical phénylène, qui peut être substitué par 1 ou 2 substituants pris dans le groupe comportant méthyle, méthoxy, éthoxy et chlore.

4. Colorant selon au moins l'une des revendications 1 à 3, caractérisé en ce que Y est un groupe β-sulfatoéthyle.

5. Procédé pour la préparation d'un colorant de la revendication 1, caractérisé en ce que, pour le colorant respectif, on fait réagir des précurseurs caractéristiques, dont au moins un comporte un groupe de formule générale (3) 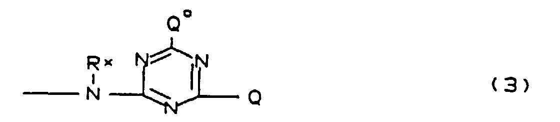 (dans laquelle R^{x}, Q et Q^{o} ont les significations indiquées dans la revendication 1), ou en ce qu'on fait réagir un composé de départ contenant un groupe amino de formule générale (60) 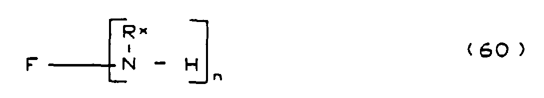 dans laquelle F, R^{x} et n ont les significations données dans la revendication 1, avec une trihalogéno-s-triazine de formule générale (61) 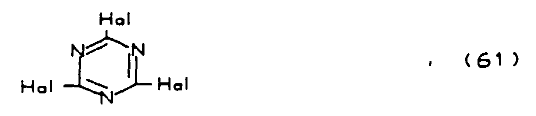 dans laquelle Hal représente un atome d'halogène, avec un sulfonamide de formule générale H-Q^{o} avec Q^{o} ayant la signification donnée dans la revendication 1, ou avec un sel de métal alcalin de celui-ci et avec une amine de formule générale H-Q avec Q ayant la signifcation donnée dans la revendication 1, en quantités stoechiométriques dans un ordre facultatif, et éventuellement, on met en oeuvre d'autres réactions de transformation couramment connues de l'homme du métier.

6. Procédé selon la revendication 5, caractérisé en ce qu'on fait réagir un composé de formule générale (62) 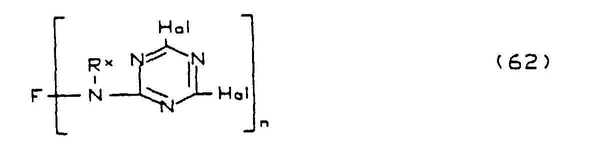 dans laquelle F, R^{x} et n ont la signifcation donnée dans la revendication 1 et Hal représente un atome d'halogène, avec un composé H-Q^{o} ayant la signification donnée dans la revendication 1 ou avec un sel de métal alcan de celui-ci, et on fait réagir le composé ainsi obtenu de formule générale (63) 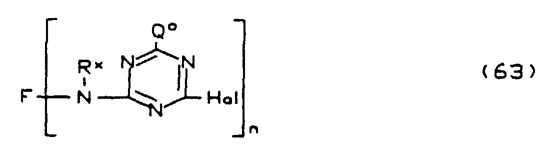 dans laquelle F, Q^{o}, R^{x} et Hal ont les significations données dans la revendication 1, avec une amine de formule générale H-Q avec Q ayant la signification donnée dans la revendication 1, ou en ce qu'on fait réagir un composé de formule générale (64) 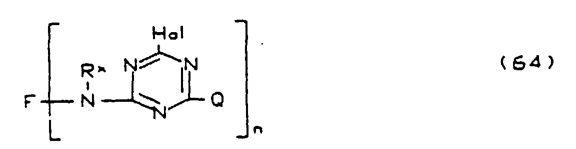 dans laquelle F, Rx, Hal, Q et n ont les significations données dans la revendication 1, avec un composé de formule H-Q^{o} ayant la signification donnée dans la revendication 1 ou un sel de métal alcalin de celui-ci,
ou en ce qu'on fait réagir un composé de formule générale (60) avec un composé de formule générale (65) 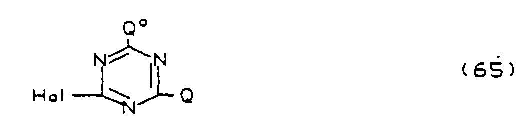 avec Hal, Q^{o} et Q ayant la signification donnée dans la revendication 1.

7. Utilisation d'un colorant de la revendication 1 ou d'un colorant de formule générale (1) préparé selon la revendication 5 pour la teinture (y compris l'impression) de matières contenant des groupes hydroxy et/ou carboxamido, plus particulièrement de matières fibreuses.

8. Procédé pour la teinture de matières contenant des groupes hydroxy et/ou carboxamido, plus particulièrement de matières fibreuses, dans lequel on applique le colorant à la matière ou on l'incorpore à la matière et on le fixe par la chaleur ou par un agent neutralisant l'acide, caractérisé en ce qu'on utilise comme colorant un colorant selon la revendication 1 ou un colorant préparé selon la revendication 1.
